# EUROPEAN PATENT APPLICATION

(11) **EP 4 672 774 A1**
(43) Date of publication of application: **31.12.2025**
(21) Application number: 24760666.8
(22) Date of filing: 19.02.2024
(51) Int. Cl.: H04N 23/68, H04N 23/54, H04N 23/55, H02K 41/035, G03B 5/06, G03B 17/12

(54) **CAMERA APPARATUS AND OPTICAL DEVICE**

(30) Priority: 20.02.2023 KR 20230022384; 29.03.2023 KR 20230041243; 05.04.2023 KR 20230044634
(71) Applicant: LG INNOTEK CO. LTD, Gangseo-gu Seoul 07796 (KR)
(72) Inventor: LEE, Sungguk, Seoul 07796 (KR)
(74) Representative: DREISS Patentanwälte PartG mbB
(86) International application number: PCT/KR2024/095404
(87) International publication number: WO 2024/177478

(57) **Abstract**

An embodiment includes a fixed unit, a moving unit including an image sensor and a lens arranged on the image sensor, a tilting guide unit arranged between the fixed unit and the moving unit, a first magnetic substance arranged on the fixed unit, and a second magnetic substance, which is arranged on the moving unit and had a repulsive force that acts on the first magnetic substance, wherein the tilting guide unit comes in close contact with the moving unit and the fixed unit by means of the repulsive force.

## Description

### [Technical Field]

Embodiments relate to a camera device and an optical instrument including the same.

### [Background Art]

Camera devices are devices that take pictures or videos of subjects, and are mounted in portable devices, drones, vehicles, and the like. In order to improve the quality of an image, a camera device may have an image stabilization (IS) function of correcting or preventing shaking of an image caused by movement of a user, e.g., an optical image stabilization (OIS) function, and an autofocus (AF) function.

### [Disclosure]

### [Technical Problem]

Embodiments provide a camera device capable of obtaining 100% image resolution without image distortion and performing hand-tremor compensation or shake compensation at wide angles and an optical instrument including the same.

Embodiments provide a camera device capable of performing broadband shake compensation and an optical instrument including the same.

Embodiments provide a camera device capable of reducing power consumption when OIS is performed and an optical instrument including the same.

Embodiments provide a camera device configured such that the height or length of the camera device in an optical-axis direction is reduced and an optical instrument including the same.

Embodiments provide a camera device capable of increasing repulsive force or retentive force necessary to support an OIS moving unit and an optical instrument including the same.

Embodiments may reduce drive force and power consumption required for hand-tremor compensation or shake compensation.

Embodiments may increase attractive force or retentive force necessary to support the OIS moving unit.

Embodiments may stably support the OIS moving unit, and may perform stable OIS driving.

### [Technical Solution]

A camera device according to an embodiment includes a stationary unit, a moving unit including an image sensor and a lens disposed on the image sensor, a tilting guide member disposed between the stationary unit and the moving unit, a first magnetic material disposed on the stationary unit, and a second magnetic material disposed on the moving unit, repulsive force acting between the first magnetic material and the second magnetic material, wherein the tilting guide member is brought into tight contact with the moving unit and the stationary unit by the repulsive force.

The moving unit may include a moving module including the lens and the image sensor and a support member coupled to the moving module.

The camera device may include a driving unit configured to tilt the moving module relative to a first axis intersecting an optical-axis direction or a second axis intersecting the optical-axis direction and the first axis.

At least a part of the support member may be coupled to the moving module through the stationary unit.

Each of the first magnetic material and the second magnetic material may be a magnet including an N pole and an S pole, and the first magnetic material and the second magnetic material may be disposed such that like polarities thereof face each other in the optical-axis direction.

The tilting guide member may include a through-hole, and at least a part of the first magnetic material may be disposed in the through-hole of the tilting guide member. The stationary unit may include a protrusion, at least part of the protrusion being disposed in the through-hole of the tilting guide member, and the first magnetic material may be disposed in the protrusion of the stationary unit.

The moving unit may be disposed above the stationary unit, and the support member may be disposed under the stationary unit. The driving unit may include a coil disposed on the moving unit and a magnet disposed on the stationary unit.

The support member may include a body disposed on the stationary unit and an extension portion extending from the body, the extension portion being coupled to the moving module through the stationary unit, and the second magnetic material may be disposed on the body.

The stationary unit may include a recess formed in a lower surface of the stationary unit, and the body of the support member may be disposed in the recess of the stationary unit.

The stationary unit may include an escape recess formed in a bottom surface of the recess of the stationary unit, and at least a part of the second magnetic material may be disposed in the escape recess. The stationary unit may include an opening through which the extension portion passes.

The stationary unit may include a first opening and a second opening, the extension portion may include a first extension portion extending from one side of the body, the first extension portion being coupled to the moving module through the first opening, and a second extension portion extending from the other side of the body, the second extension portion being coupled to the moving module through the second opening.

The body may extend in a direction from a first corner of the stationary unit to a second corner of the stationary unit, the second corner being diagonally opposite the first corner.

The tilting guide member may include first bosses protruding toward the moving unit, the first bosses being in contact with the moving unit, and second bosses protruding toward the stationary unit, the second bosses being in contact with the stationary unit.

A camera device according to another embodiment includes a stationary unit, a moving unit configured to be tilted relative to the stationary unit, a tilting guide member disposed between the stationary unit and the moving unit, a first magnetic material disposed on the stationary unit, and a second magnetic material configured such that repulsive force acts between the first magnetic material and the second magnetic material, wherein the moving unit includes a moving module including an image sensor and a lens disposed on the image sensor and a support member coupled to the moving module, and the second magnetic material is coupled to the support member.

A camera device according to another embodiment includes a housing, a moving module disposed in the housing, the moving module including a lens and an image sensor, a support member coupled to the moving module, a tilting guide member disposed between the housing and the moving module, a first magnetic material disposed on the housing, a second magnetic material disposed on the support member, and a driving unit configured to tilt the moving module relative to the housing, wherein opposite surfaces of the first magnetic material and the second magnetic material have the same polarity.

A camera device according to another embodiment includes a housing, a sensor base disposed in the housing, an image sensor coupled to the sensor base, a support member coupled to the sensor base, a tilting guide member disposed between the housing and the sensor base, a driving unit disposed in the housing, the driving unit being configured to tilt the image sensor, a first magnetic material disposed on the housing, and a second magnetic material disposed on the support member, wherein the tilting guide member is pressed against the sensor base by repulsive force generated between the first magnetic material and the second magnetic material.

A camera device according to another embodiment includes a housing, a tilting module disposed in the housing, and a tilting guide member disposed between the housing and the tilting module, wherein the tilting module includes an image sensor and a lens disposed on the image sensor, the tilting module is tiltable relative to a first axis intersecting an optical-axis direction or a second axis intersecting the optical-axis direction and the first axis, and the tilting guide member includes a first axis formed in a first surface opposite the tilting module and a second axis formed in a second surface opposite the housing.

A camera device according to another embodiment includes a housing, a moving unit disposed in the housing; a tilting guide member disposed between the housing and the moving unit, a first magnetic material disposed on the housing, and a second magnetic material disposed on the moving unit, wherein the moving unit includes a tilting module including an image sensor and a lens disposed on the image sensor, the tilting module is tiltable relative to a first axis intersecting an optical-axis direction or intersecting the optical-axis direction and the first axis, and the moving unit and the housing are pulled toward each other by repulsive force between the first magnetic material and the second magnetic material.

A camera device according to another embodiment includes a stationary unit, a moving unit including an image sensor and a lens disposed opposite the image sensor in an optical-axis direction, a tilting guide member disposed between the stationary unit and the moving unit, and a driving unit including a coil disposed on the stationary unit and a magnet disposed opposite the coil in a direction perpendicular to the optical-axis direction, wherein the driving unit tilts the moving unit relative to a first axis intersecting the optical-axis direction or a second axis intersecting the optical-axis direction and the first axis due to interaction between the coil and the magnet.

The tilting guide member may be disposed under the image sensor. At least a part of the tilting guide member may overlap the image sensor in the optical-axis direction. At least a part of the tilting guide member may overlap the lens in the optical-axis direction.

A circuit board disposed on the stationary unit may be included, and the coil may be conductively connected to the circuit board. The stationary unit may include a housing configured to receive the moving unit, and the coil may be disposed on a side portion of the housing.

The camera device may include a first magnetic material disposed on the stationary unit and a second magnetic material opposite the first magnetic material in the optical-axis direction, the second magnetic material being disposed on the moving unit. The first magnetic material may be disposed such that attractive force acts between the first magnetic material and the second magnetic material.

The tilting guide member may include a through-hole, and any one of the first magnetic material and the second magnetic material may be disposed in the through-hole of the tilting guide member. The through-hole may overlap the image sensor in the optical-axis direction. The through-hole may overlap the lens in the optical-axis direction.

The camera device may include first ball members disposed between the moving unit and the tilting guide member and second ball members disposed between the tilting guide member and the stationary unit, wherein the first ball members may form the first axis, and the second ball members may form the second axis. The first ball members and the second ball members may overlap the image sensor in the optical-axis direction.

The tilting guide member may include first bosses protruding toward the moving unit, the first bosses being in contact with the moving unit, and second bosses protruding toward the stationary unit, the second bosses being in contact with the stationary unit, wherein the first bosses may form the first axis, and the second bosses may form the second axis. The first bosses and the second bosses may overlap the image sensor in the optical-axis direction.

The coil may include a first coil unit and a second coil unit, and the magnet may include a first magnet unit opposite the first coil unit in a direction parallel to the first axis and a second magnet unit opposite the second coil unit in a direction parallel to the second axis.

A camera device according to another embodiment includes a stationary unit, a moving unit including an image sensor and a lens disposed opposite the image sensor in an optical-axis direction, a tilting guide member disposed between the stationary unit and the moving unit, and a driving unit including a coil and a first magnet disposed opposite the coil in the optical-axis direction, wherein the driving unit tilts the moving unit relative to a first axis or a second axis intersecting the first axis due to interaction between the coil and the first magnet, and the first axis is a diagonal direction of the moving unit when viewed from above.

The coil may be disposed on the moving unit, and the magnet may be disposed on the stationary unit. When viewed from above, the second axis may be another diagonal direction of the moving unit. The first axis may be parallel to a diagonal direction of the image sensor, and the second axis may be parallel to another diagonal direction of the image sensor. The first axis may be a diagonal direction of a sensor surface of the image sensor. The first axis and the second axis may be perpendicular to each other. The first axis and the second axis may pass through the center of the sensor surface.

The tilting guide member may include a first boss protruding toward the moving unit, the first boss being in contact with the moving unit, and a second boss protruding toward the stationary unit, the second boss being in contact with the stationary unit. When viewed from above, the first boss may overlap the first axis, and the second boss may overlap the second axis. When viewed from above, the first boss may include a 1-1 boss and a 1-2 boss that overlap the first axis, and the second boss may include a 2-1 boss and a 2-2 boss that overlap the second axis.

When viewed from above, the first magnet may include a first magnet unit overlapping the first axis and a second magnet unit overlapping the second axis, and the coil may include a first coil unit corresponding to the first magnet unit and a second coil unit corresponding to the second magnet unit. When viewed from above, the first coil unit may overlap the first axis, and the second coil unit may overlap the second axis.

The camera device may include a first ball member disposed between the tilting guide member and the moving unit, the first ball member overlapping the first axis, and a second ball member disposed between the tilting guide member and the stationary unit, the second ball member overlapping the second axis. The camera device may include a first magnetic material disposed on the stationary unit and a second magnetic material opposite the first magnetic material in the optical-axis direction, the second magnetic material being disposed on the moving unit, wherein attractive force may act between the first magnetic material and the second magnetic material.

The tilting guide member may include a through-hole, and at least a part of the first magnetic material may be disposed in the through-hole of the tilting guide member. The stationary unit may include a protrusion, at least part of the protrusion being disposed in the through-hole of the tilting guide member, and the first magnetic material may be disposed in the protrusion of the stationary unit. The camera device may include a first sensor overlapping the first magnet unit in the optical-axis direction and a second sensor overlapping the second magnet unit in the optical-axis direction.

When viewed from above, at least a part of the first sensor may overlap the first axis, and at least a part of the second sensor may overlap the second axis. The lens may be located higher than the image sensor, and the tilting guide member may be located lower than the image sensor.

A camera device according to another embodiment includes a stationary unit, a moving unit including an image sensor and a lens disposed opposite the image sensor in an optical-axis direction, a tilting guide member disposed between the stationary unit and the moving unit, a first driving unit configured to move the lens in the optical-axis direction, and a second driving unit configured to tilt the moving unit relative to a first axis or a second axis intersecting the first axis, wherein an upper surface of the image sensor is an XY coordinate plane perpendicular to an optical axis, the origin of the XY coordinate plane is the center of the upper surface of the image sensor, the second driving unit is disposed in two adjacent ones of four quadrants of the XY coordinate plane when viewed from above, and the first driving unit is disposed in the other two ones of the four quadrants when viewed from above.

The first driving unit may include a magnet and a coil opposite each other, the second driving unit may include first and second coil units and first and second magnet units opposite the first and second coil units, the first coil unit and the first magnet unit may be disposed in one of the two adjacent quadrants when viewed from above, the second coil unit and the second magnet unit may be disposed in the other of the two adjacent quadrants when viewed from above, and the magnet and the coil may be disposed in at least one of the other two quadrants when viewed from above.

Each of the first axis and the second axis may pass through the center of the upper surface of the image sensor, and may intersect each of the X-axis and the Y-axis of the XY coordinate plane. The tilting guide member may include a first boss protruding toward the moving unit, the first boss being in contact with the moving unit, and a second boss protruding toward the stationary unit, the second boss being in contact with the stationary unit, wherein the first boss may overlap the first axis and the second boss may overlap the second axis. The camera device may include a first ball member disposed between the tilting guide member and the moving unit, the first ball member overlapping the first axis, and a second ball member disposed between the tilting guide member and the stationary unit, the second ball member overlapping the second axis.

### [Advantageous Effects]

In an embodiment, an OIS moving unit may be supported by repulsive force acting between two magnetic materials, whereby stable OIS operation may be performed.

In an embodiment, since at least a part of a magnetic material for repulsive force disposed on a stationary unit is disposed in an opening of a tilting guide member, repulsive force or retentive force necessary to support the OIS moving unit may be increased, whereby stable OIS operation may be performed.

In an embodiment, since at least a part of a magnetic material for repulsive force disposed on a support member is disposed in a receiving portion of a housing, repulsive force or retentive force necessary to support the OIS moving unit may be increased, whereby stable OIS operation may be performed.

In an embodiment, since the OIS moving unit includes a lens module and an image sensor, the lens module and the image sensor may be simultaneously tilted or rotated when OIS is performed, 100% image resolution without image distortion may be obtained, and hand-tremor compensation or shake compensation at wide angles may be possible.

Furthermore, in an embodiment, since the OIS moving unit including the lens module and the image sensor is tilted or rotated for shake compensation, shaking of the camera device may not cause degradation of an image in the central part of the image sensor and the peripheral part of the image sensor (e.g., corners or corner regions of the image sensor). In the embodiment, therefore, broadband shake compensation may be possible.

Furthermore, in an embodiment, since distortion-free image compensation is mechanically possible, load during image processing may be low, whereby current consumption may be reduced.

Furthermore, in an embodiment, since the tilting guide member is used to tilt the OIS moving unit, the OIS moving unit may be stably, precisely, and accurately tilted, when compared to an example using only a ball member or a shaft member, thereby improving the reliability of OIS operation.

Furthermore, in an embodiment, a flexible substrate of a circuit board may include at least one bent portion, whereby power consumption required to perform OIS may be reduced.

Furthermore, in an embodiment, since the tilting guide member is disposed in a seating portion of the housing and a protrusion of the housing overlaps the opening of the tilting guide member, the height or length of a camera device in an optical-axis direction may be reduced.

Furthermore, in an embodiment, since a driving magnet for hand-tremor compensation can be disposed on a lower portion of a housing rather than on a side portion of the housing, the thickness of the side portion of the housing may be reduced, thereby enabling the camera device to be designed for mounting a large-aperture lens.

Furthermore, in an embodiment, since the driving magnet for hand-tremor compensation can be disposed on the lower portion of the housing, the camera device may be designed such that the length of the camera device in the optical-axis direction is reduced without being constrained by the length of the driving magnet in the optical-axis direction.

In an embodiment, since the width of a second substrate of the circuit board connecting the OIS moving unit and the stationary unit can be designed to be reduced, the elastic modulus and elastic force of the second substrate may be reduced and driving force and power consumption required to perform OIS may be reduced.

Furthermore, in an embodiment, since the tilting guide member is disposed in a seating portion of a sensor base and a protrusion of the sensor base overlaps the opening of the tilting guide member, the height or length of the camera device in the optical-axis direction may be reduced.

Furthermore, in an embodiment, since at least a part of the magnetic material is disposed in the opening of the tilting guide member, attractive force or retentive force necessary to support the OIS moving unit may be increased, whereby stable OIS operation may be performed.

Compared to the distance between bosses of the tilting guide member for X-axis or Y-axis driving, the distance between the bosses of the tilting guide member according to the embodiment may be designed to be large.

In an embodiment, since the distance between the bosses of the tilting guide member can be designed to be large, the distance (or area) for supporting the OIS moving unit may be increased, whereby stable OIS operation may be performed.

### [Description of Drawings]

FIG. 1 is a perspective view of a camera device according to an embodiment.
FIG. 2A is a first exploded perspective view of the camera device of FIG. 1.
FIG. 2B is a second exploded perspective view of the camera device of FIG. 1.
FIG. 3 is a perspective view of the camera device excluding a cover member.
FIG. 4A is a sectional view of the camera device in direction AB of FIG. 3.
FIG. 4B is a sectional view of the camera device in direction CD of FIG. 3.
FIG. 4C is a sectional view of the camera device in direction EF of FIG. 3.
FIG. 4D is a sectional view of the camera device in direction GH of FIG. 3.
FIG. 4E is a sectional view of the camera device in direction IJ of FIG. 3.
FIG. 5 is an exploded perspective view of a bobbin, a ball member, and a magnet.
FIG. 6 is a separated perspective view of the bobbin, a holder, a circuit board, a sensor base, and a housing.
FIG. 7A is a first separated perspective view of the holder, a filter, the circuit board, the sensor base, and a magnetic material.
FIG. 7B is a second separated perspective view of the holder, the filter, the circuit board, the sensor base, and the magnetic material.
FIG. 7C is a coupled perspective view of the sensor base and the circuit board.
FIG. 8 is a perspective view of the holder, the ball member, a coil, a position sensor, the circuit board, and the sensor base.
FIG. 9A is a front perspective view of a tilting guide member.
FIG. 9B is a rear perspective view of the tilting guide member.
FIG. 9C is a front perspective view of a tilting guide member according to another embodiment.
FIG. 9D is a rear perspective view of the tilting guide member of FIG. 9C.
FIG. 10A is a separated perspective view of the housing, magnets, and a movement inhibition portion.
FIG. 10B is a coupled perspective view of the housing, the magnets, and the movement inhibition portion.
FIG. 11 is a perspective view of the cover member, the holder, the sensor base, the circuit board, the magnetic material, the tilting guide member, and a reinforcement member.
FIG. 12 is a perspective view of the housing, the magnets, the movement inhibition portion, the tilting guide member, and a support member.
FIG. 13 is a perspective view of the support member and the magnetic material.
FIG. 14 is a bottom perspective view of the housing.
FIG. 15 is a bottom view of the housing and the support member.
FIG. 16 is a coupled view of the sensor base and the support member.
FIG. 17 is a cutaway perspective view of the camera device.
FIG. 18A is a view illustrating electromagnetic force due to interaction between magnet units and coil units and the motion of the tilting guide member.
FIG. 18B shows the motion of an OIS moving unit due to the electromagnetic force of FIG. 18A.
FIG. 19 is a perspective view of a camera device including a lens module.
FIG. 20A shows a first position of the OIS moving unit.
FIG. 20B shows a second position of the OIS moving unit.
FIG. 21A shows the disposition of a coil and a position sensor according to another embodiment.
FIG. 21B shows the disposition of a magnet corresponding to the coil of FIG. 21A.
FIG. 22A is a first exploded perspective view of a camera device according to another embodiment.
FIG. 22B is a second exploded perspective view of the camera device of FIG. 22A.
FIG. 23 is a perspective view of the camera device of FIG. 22A excluding a cover member.
FIG. 24A is a sectional view of the camera device of FIG. 22A in direction AB of FIG. 23.
FIG. 24B is a sectional view of the camera device of FIG. 22A in direction CD of FIG. 23.
FIG. 24C is a sectional view of the camera device of FIG. 22A in direction EF of FIG. 23.
FIG. 24D is a sectional view of the camera device of FIG. 22A in direction GH of FIG. 23.
FIG. 24E is a sectional view showing a boss of the cover member of FIG. 22A.
FIG. 25 is an exploded perspective view of a bobbin, a rolling member, and a magnet of FIG. 22A.
FIG. 26 is a separated perspective view of the bobbin, a holder, a circuit board, a sensor base, and a housing of FIG. 22A.
FIG. 27A is a first separated perspective view of the holder, a filter, the circuit board, the sensor base, and a magnetic material of FIG. 22A.
FIG. 27B is a second separated perspective view of the holder, the filter, the circuit board, the sensor base, and the magnetic material of FIG. 22A.
FIG. 27C is a coupled perspective view of the sensor base and the circuit board of FIG. 22A.
FIG. 28 is a perspective view of the holder, the ball member, a coil, a position sensor, the circuit board, and the sensor base of FIG. 22A.
FIG. 29A is a front perspective view of a tilting guide member of FIG. 22A.
FIG. 29B is a rear perspective view of the tilting guide member of FIG. 22A.
FIG. 29C is a front perspective view of a tilting guide member according to another embodiment.
FIG. 29D is a rear perspective view of the tilting guide member of FIG. 29C.
FIG. 29E is a sectional view of a camera device including the tilting guide member according to the embodiment of FIGs. 29C and 29D in direction AB of FIG. 24A.
FIG. 29F is a sectional view of the camera device including the tilting guide member according to the embodiment of FIGs. 29C and 29D in direction CD of FIG. 24B.
FIG. 30A is a perspective view of the housing of FIG. 22A.
FIG. 30B is an exploded perspective view of the housing, a coil, a magnetic material, a position sensor, a circuit board, and a movement inhibition portion of FIG. 22A.
FIG. 30C is a coupled perspective view of the housing, a rolling member, the coil, the circuit board, the position sensor, the magnetic material, and the movement inhibition portion of FIG. 22A.
FIG. 31A is a perspective view of the cover member, the sensor base, the holder, the circuit board, the magnetic material, the rolling member, the tilting guide member, and a reinforcement member of FIG. 22A.
FIG. 31B shows another embodiment of the reinforcement member of FIG. 31A.
FIG. 32 is a perspective view of the housing, the magnetic material, the coil, the movement inhibition portion, the tilting guide member, and the ball member of FIG. 22A.
FIG. 33A is a view illustrating electromagnetic force due to interaction between magnet units and coil units of FIG. 22A and the motion of an OIS moving unit.
FIG. 33B shows the motion of the OIS moving unit due to the electromagnetic force of FIG. 33A.
FIG. 34 is a perspective view of the camera device and a lens module of FIG. 22A.
FIG. 35A shows a first position of the OIS moving unit of FIG. 22A.
FIG. 35B shows a second position of the OIS moving unit of FIG. 22A.
FIG. 36 is a perspective view of a camera device including a circuit board according to another embodiment.
FIG. 37A is a first exploded perspective view of a camera device according to another embodiment.
FIG. 37B is a second exploded perspective view of the camera device of FIG. 37A.
FIG. 38 is a perspective view of the camera device of FIG. 37A excluding a cover member.
FIG. 39A is a sectional view of the camera device of FIG. 37A in direction AB of FIG. 38.
FIG. 39B is a sectional view of the camera device of FIG. 37A in direction CD of FIG. 38.
FIG. 39C is a sectional view of the camera device of FIG. 37A in direction EF of FIG. 38.
FIG. 39D is a sectional view of the camera device of FIG. 37A in direction GH of FIG. 38.
FIG. 39E is a sectional view of the camera device of FIG. 37A in direction IJ of FIG. 38.
FIG. 39F is a sectional view of the camera device of FIG. 37A in direction KM of FIG. 38.
FIG. 39G is a sectional view showing a boss of the cover member of FIG. 37A.
FIG. 40 is an exploded perspective view of a bobbin, a ball member, and a magnet of FIG. 37A.
FIG. 41 is a separated perspective view of the bobbin, a holder, a sensor base, and a housing of FIG. 37A.
FIG. 42A is a first separated perspective view of the holder, a filter, a circuit board, the sensor base, and a magnetic material of FIG. 37A.
FIG. 42B is a second separated perspective view of the holder, the filter, the circuit board, the sensor base, and the magnetic material of FIG. 42A.
FIG. 42C is a coupled perspective view of the sensor base and the circuit board of FIG. 37A.
FIG. 43 is a perspective view of the holder, the ball member, a coil, a position sensor, the circuit board, and the sensor base of FIG. 37A.
FIG. 44A is a front perspective view of a tilting guide member of FIG. 37A.
FIG. 44B is a rear perspective view of the tilting guide member of FIG. 44A.
FIG. 44C is a front perspective view of a tilting guide member and first ball members according to another embodiment.
FIG. 44D is a rear perspective view of the tilting guide member and second ball members of FIG. 44C.
FIG. 45A is a separated perspective view of the housing, magnets, the magnetic material, and a movement inhibition portion of FIG. 37A.
FIG. 45B is a coupled perspective view of the housing, the magnets, the magnetic material, and the movement inhibition portion of FIG. 37A.
FIG. 46A is a perspective view of the cover member, the holder, the sensor base, the circuit board, magnetic materials, the tilting guide member, and a reinforcement member of FIG. 37A.
FIG. 46B shows a reinforcement member according to another embodiment.
FIG. 47 is a perspective view of the housing, the magnets, the movement inhibition portion, the magnetic material, and the tilting guide member of FIG. 37A.
FIG. 48A is a view illustrating electromagnetic force due to interaction between magnet units and coil units of FIG. 37A and the motion of an OIS moving unit.
FIG. 48B shows the motion of the OIS moving unit due to the electromagnetic force of FIG. 48A.
FIG. 49 is a perspective view of the camera device and a lens module of FIG. 37A.
FIG. 50A shows a first position of the OIS moving unit.
FIG. 50B shows a second position of the OIS moving unit.
FIG. 50C shows a third position of the OIS moving unit.
FIG. 51A is a plan view of an image sensor, the tilting guide member, the magnet, the coil, and the position sensor of FIG. 37A.
FIG. 51B shows a first axis and a second axis according to another embodiment.
FIG. 52A is a perspective view of an optical instrument according to an embodiment.
FIG. 52B is a perspective view of an optical instrument according to another embodiment.
FIG. 53 is a block diagram of the optical instrument shown in FIGs. 52A and 52B.

### [Best Mode]

Reference will now be made in detail to embodiments, examples of which are illustrated in the accompanying drawings.

In the following description of the embodiments, it will be understood that, when each element is referred to as being "on" or "under" another element, it can be directly on or under the other element, or can be indirectly formed such that one or more intervening elements are also present. In addition, when an element is referred to as being "on or under," "under the element" as well as "on the element" may be included based on the element.

In addition, the relational terms "first," "second," "on/upper part/above," and "under/lower part/below" are used herein only to distinguish between one subject or element and another subject or element without necessarily requiring or involving any physical or logical relationship or sequence between such subjects or elements. Wherever possible, the same reference numerals will be used throughout the drawings to refer to the same parts.

Additionally, the terms "includes," "includes," and "has" described herein should be interpreted not to exclude other elements but to further include such other elements, since the corresponding elements may be inherent unless mentioned otherwise. In addition, the term "corresponding to" described herein may encompass at least one of the meanings of "facing" and "overlapping."

Hereinafter, a camera device according to an embodiment and an optical instrument including the same will be described with reference to the accompanying drawings. For convenience of description, a camera device according to an embodiment will be described using the Cartesian coordinate system (x,y,z), to which embodiments are not limited, and may be described using other coordinate systems. In the respective drawings, the X-axis and the Y-axis may be directions perpendicular to the Z-axis, which is an optical-axis (OA) direction. In addition, the Z-axis direction, which is the optical-axis (OA) direction, may be referred to as a "first direction," the X-axis direction may be referred to as a "second direction," and the Y-axis direction may be referred to as a "third direction."

In addition, the X-axis (or the Y-axis) may be referred to as a "first axis," the X-axis (or the Y-axis) direction may be referred to as a "first-axis direction," the Y-axis (or the X-axis) may be referred to as a "second axis," and the Y-axis (or the X-axis) direction may be referred to as a "second-axis direction." For example, the optical-axis direction may be a direction of the optical axis or a direction parallel to the optical axis.

In addition, for example, the optical axis may be an optical axis of a lens mounted in a lens barrel. Alternatively, for example, the optical axis may be an axis perpendicular to an image-capturing area of the image sensor and passing through the center of the image-capturing area. Hereinafter, the term "terminal" may alternatively be referred to as a pad, an electrode, or a conductive layer.

Also, in embodiments, in coupling between a boss and a hole to couple two configurations to each other, one of the configurations may be a coupling boss (or a coupling hole) and the other configuration may be a coupling hole (or a coupling boss) corresponding thereto.

A camera device according to an embodiment may perform a hand-tremor compensation function and an autofocus function. The hand-tremor compensation function may be a function of moving a lens in a direction perpendicular to the optical-axial direction or tilting the lens with respect to the optical axis so as to cancel vibration (or motion) caused by shaking of the user's hand. In addition, the autofocus function may be a function of automatically focusing on a subject by moving a lens in the optical-axis direction according to the distance to the subject such that an image sensor obtains a clear image of the subject. Hereinafter, the "camera device" may alternatively be referred to as a "camera," an "actuator," a "camera module," an "image-capturing device," or a "photographing device."

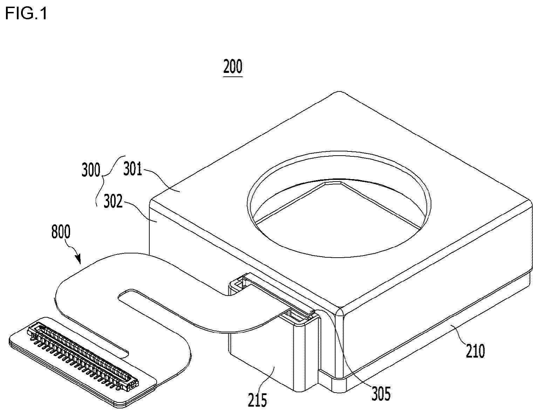

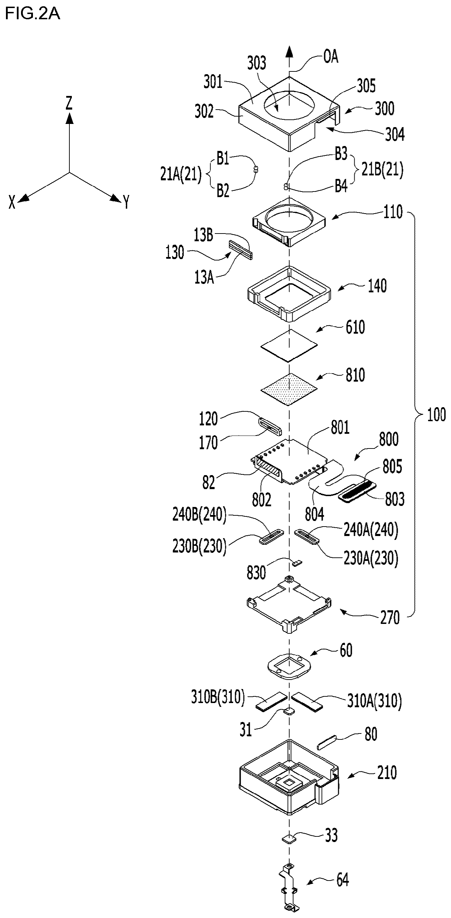

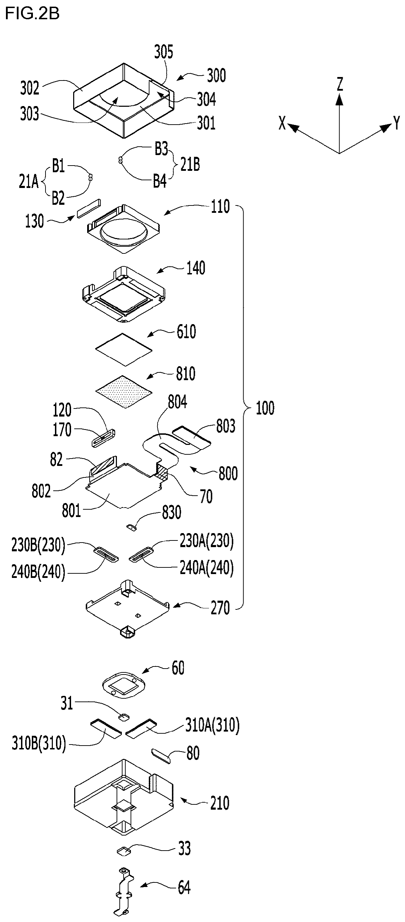

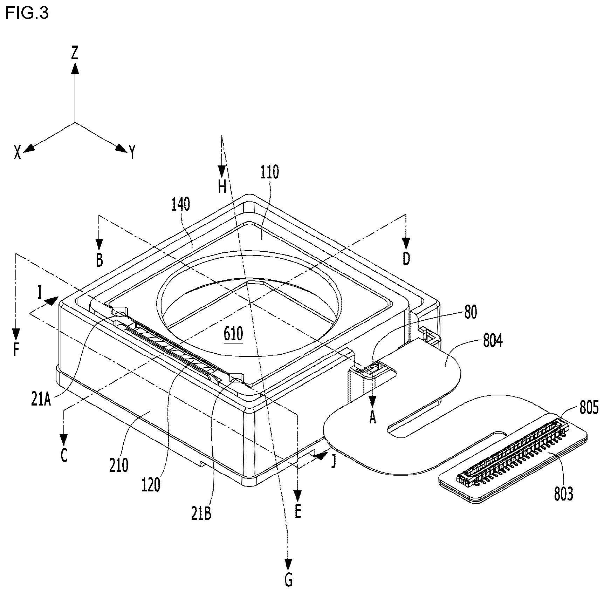

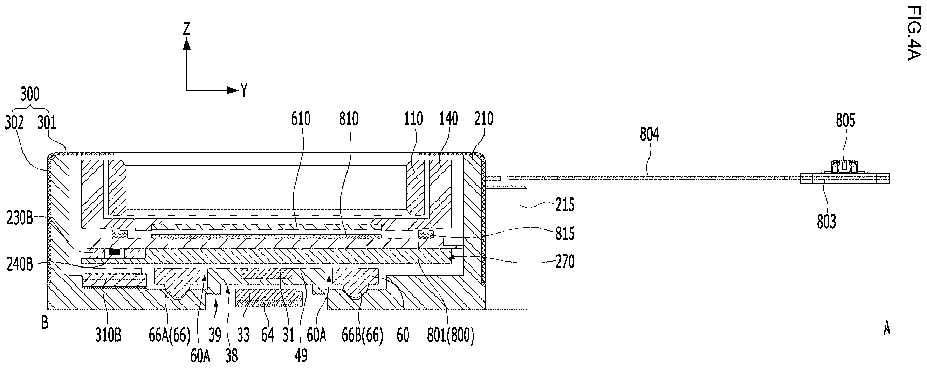

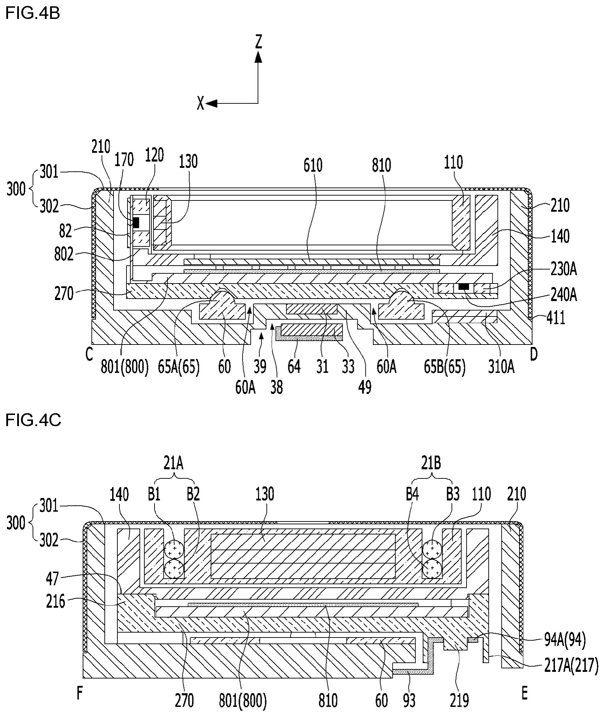

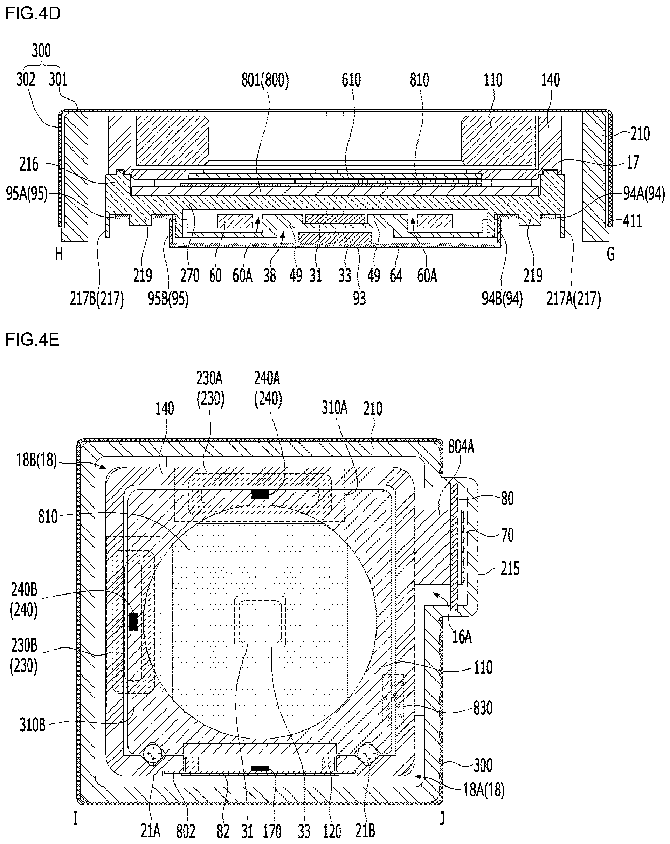

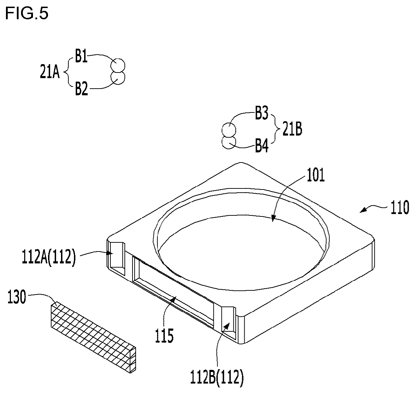

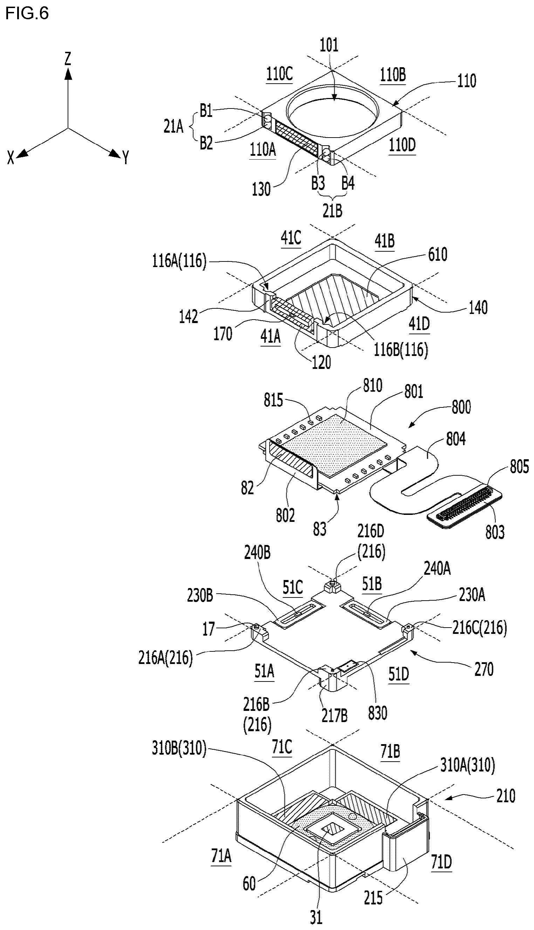

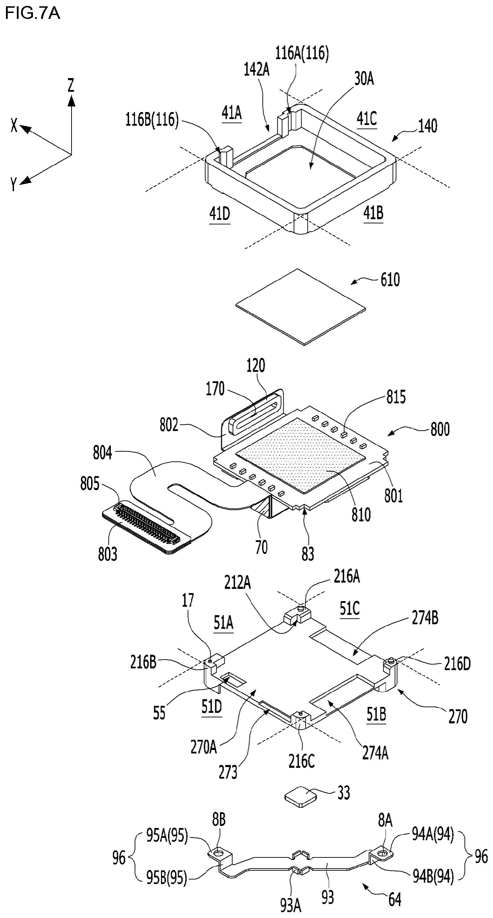

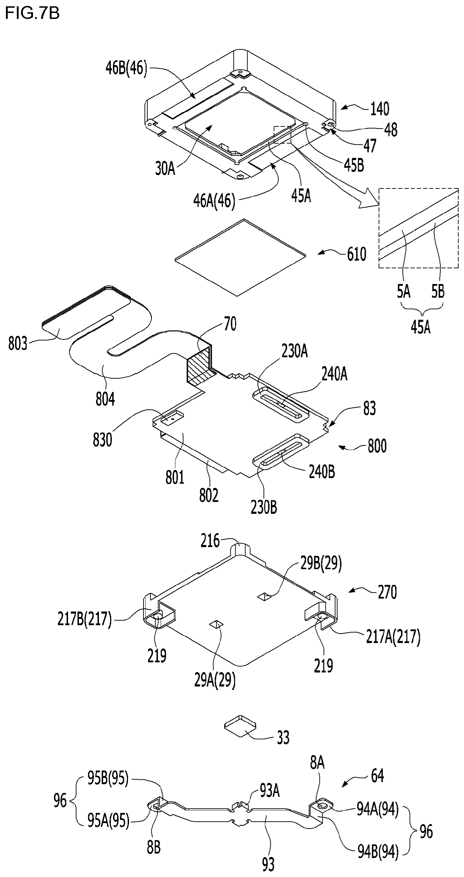

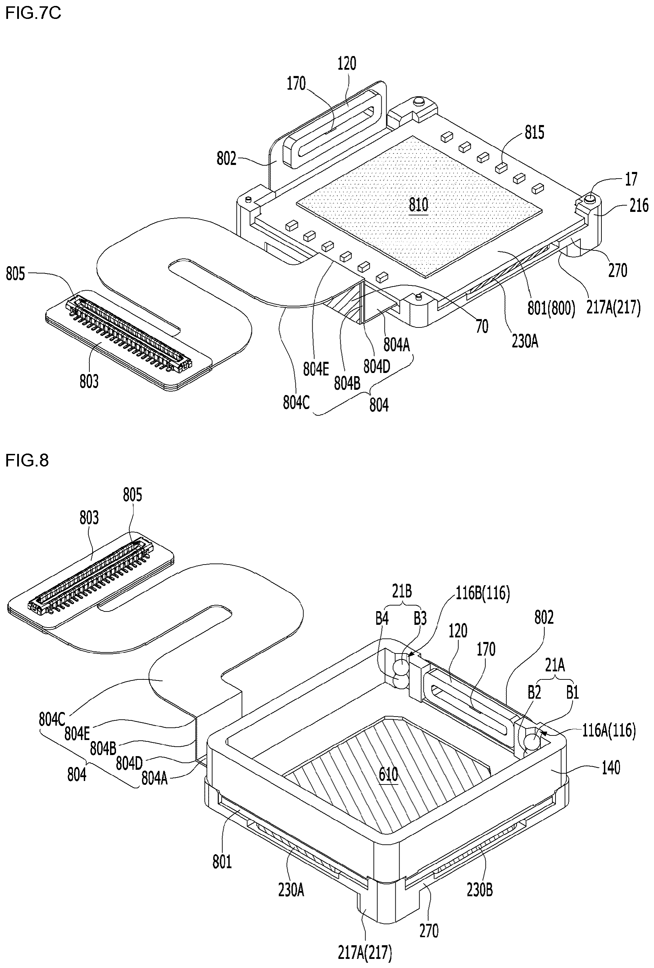

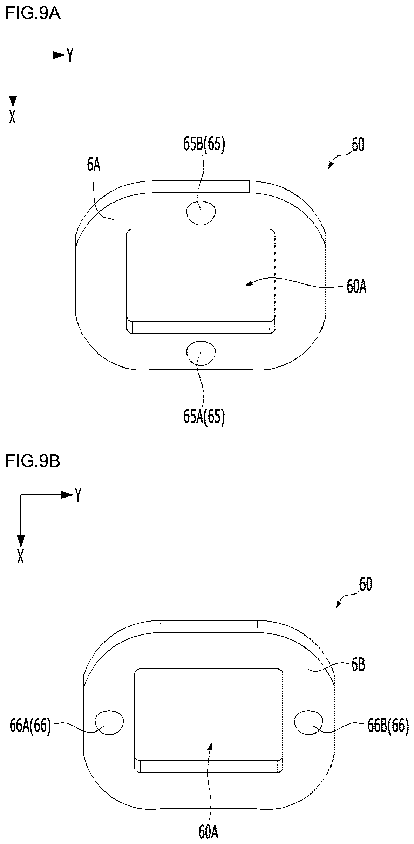

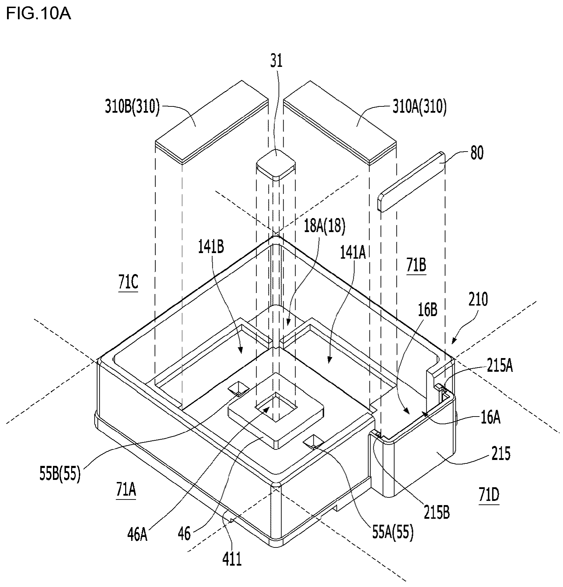

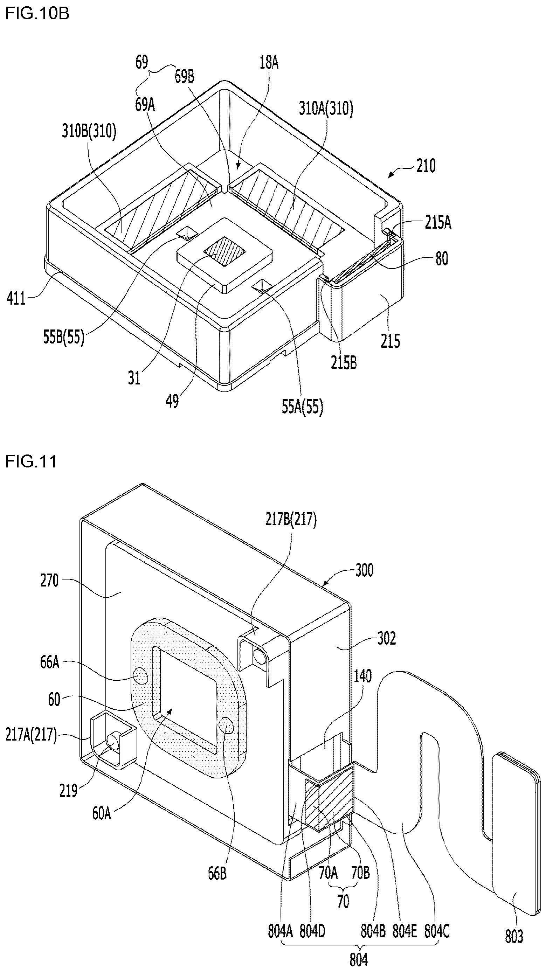

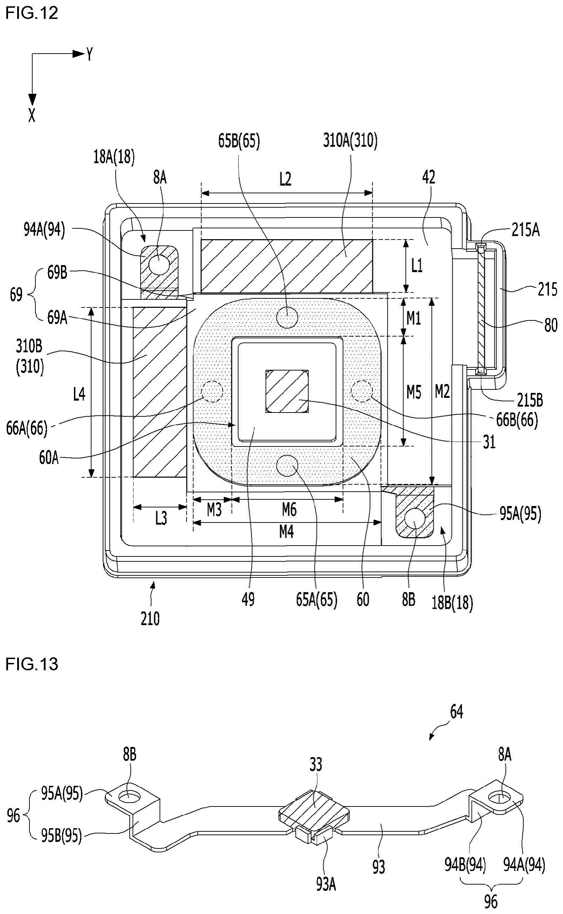

FIG. 1 is a perspective view of a camera device 200 according to an embodiment, FIG. 2A is a first exploded perspective view of the camera device 200 of FIG. 1, FIG. 2B is a second exploded perspective view of the camera device 200 of FIG. 1, FIG. 3 is a perspective view of the camera device 200 excluding a cover member 300, FIG. 4A is a sectional view of the camera device 200 in direction AB of FIG. 3, FIG. 4B is a sectional view of the camera device 200 in direction CD of FIG. 3, FIG. 4C is a sectional view of the camera device 200 in direction EF of FIG. 3, FIG. 4D is a sectional view of the camera device 200 in direction GH of FIG. 3, FIG. 4E is a sectional view of the camera device 200 in direction IJ of FIG. 3, FIG. 5 is an exploded perspective view of a bobbin 110, a ball member 21, and a magnet 130, FIG. 6 is a separated perspective view of the bobbin 110, a holder 140, a sensor base 270, and a housing 210, FIG. 7A is a first separated perspective view of the holder 140, a filter 610, the circuit board 800, and the sensor base 270, and a magnetic material 33, FIG. 7B is a second separated perspective view of the holder 140, the filter 610, the circuit board 800, the sensor base 270, and the magnetic material 33, FIG. 7C is a coupled perspective view of the sensor base 270 and the circuit board 800, FIG. 8 is a perspective view of the holder 140, the ball member 21, a coil 120, a position sensor 170, the circuit board 800, and the sensor base 270, FIG. 9A is a front perspective view of a tilting guide member 60, FIG. 9B is a rear perspective view of the tilting guide member 60, FIG. 10A is an isolated perspective view of the housing 210, magnets 310A and 310B, and 31, and a movement inhibition portion 80, FIG. 10B is a coupled perspective view of the housing 210, the magnets 310A and 310B, and 31, and the movement inhibition portion 80, FIG. 11 is a perspective view of the cover member 300, the holder 140, the sensor base 270, the circuit board 800, the magnetic material 31, the tilting guide member 60, and a reinforcement member 70, and FIG. 12 is a perspective view of the housing 210, the magnets 310A and 310B, and 31, the movement inhibition portion 80, the tilting guide member 60, and a support member 64.

Referring to FIGs. 1 to 12, the camera device 200 may include a stationary unit, an AF moving unit, an OIS moving unit 100, and a support unit. The OIS moving unit 100 may alternatively be referred to as a "moving unit," a "motion unit," or a "shaking unit."

The stationary unit may be a stationary element. That is, the stationary unit may not be moved in the optical-axis direction. Alternatively, the stationary unit may not be moved or tilted in a direction perpendicular to the optical axis. In addition, a configuration coupled to the stationary unit may be a stationary unit.

The stationary unit may include a housing 210. The stationary unit may include a cover member 300. For example, the stationary unit may include a configuration disposed on or coupled to the housing 210 or the cover member 300. For example, the stationary unit may include at least one of a magnet 310, a magnetic material 31, and a movement inhibition portion 80 disposed on the housing 210.

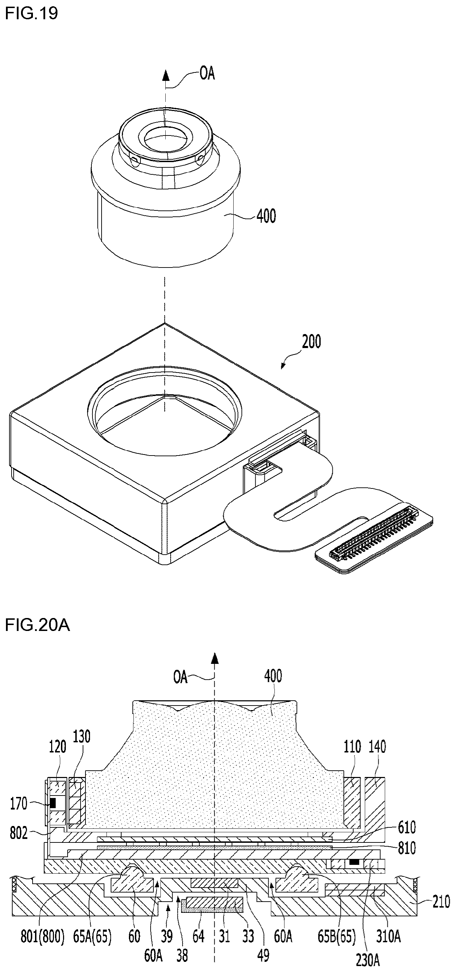

The AF moving unit may move relative to the stationary unit in the optical-axis direction. For example, the AF moving unit may include a bobbin 110. In another embodiment, the AF moving unit may further include a configuration (e.g., a magnet 130) coupled to the bobbin 110. In another embodiment, the AF moving unit may further include a lens module 400 (see FIG. 19) coupled to the bobbin 110.

The OIS moving unit 100 (see FIG. 2A) may be moved and/or tilted leftward or rightward about the first axis (e.g., the X-axis (e.g., pitch)) that intersects the optical axis (or the optical-axis direction) with respect to the stationary unit. In addition, the OIS moving unit 100 may be moved and/or tilted leftward or rightward about the second axis (e.g., the Y-axis (e.g., yaw)) that intersects the optical axis (or the optical-axis direction) with respect to the stationary unit. For example, the first axis may be perpendicular to the optical-axis direction, and the second axis may be perpendicular to the optical-axis direction and the first axis.

For example, the OIS moving unit 100 may include the AF moving unit. In addition, the OIS moving unit may include an image sensor 810. The OIS moving unit may include a lens module 400. The OIS moving unit 100 may include a circuit board 800 on which the image sensor 810 is disposed. In addition, the OIS moving unit 100 may include a sensor base 270 on which at least a part of the circuit board 800 is disposed.

In addition, the OIS moving unit may include a holder 140 coupled to the sensor base 270. In addition, the OIS moving unit may include a support member 64 coupled to the sensor base 270.

In addition, for example, the OIS moving unit 100 may include a configuration disposed on or coupled to at least one of the holder 140, the sensor base 270, the circuit board 800, the circuit board 800, and the support member 64.

For example, the OIS moving unit may include a coil 230 disposed on the holder 140. For example, the OIS moving unit 100 may include a magnetic material 33 disposed on the support member 64. For example, the OIS moving unit may include at least one of an image sensor 810, sensors 170 and 240, coils 120 and 230, a circuit element 815, and a controller 830 disposed on the circuit board 800.

In addition, the OIS moving unit 100 may include a moving module (or a tilting module) and a support member 64. For example, the moving module (or the tilting module) may include at least one of the configurations of the OIS moving unit 100 excluding the support member 64.

For example, the moving module (or the tilting module) may include the lens module 400 and the image sensor 810. Also, for example, the moving module (or the tilting module) may include the sensor base 270. Also, for example, the moving module (or the tilting module) may further include at least one of the holder 140 and the circuit board 800. For example, the moving module (or the tilting module) may be tilted about the first axis intersecting the optical-axis direction or the second axis intersecting the optical-axis direction and the first axis.

The OIS moving unit may be referred to as a first moving unit (or a first motion unit), and the AF moving unit may alternatively be referred to as a second moving unit (or a second motion unit).

The support unit may support the OIS moving unit 100 with respect to the stationary unit. For example, the support unit may include a tilting guide member 60. For example, the support unit may include a ball member, a ball member, or a sliding member (e.g., a shaft).

The bobbin 110 is configured to receive a lens or a lens barrel and may be disposed in the holder 140. The bobbin 110 may alternatively be referred to as a "lens holder" or a "lens carrier."

The bobbin 110 may move in the optical-axis direction. For example, the bobbin 110 may be moved in the first direction (e.g., the z-axis direction) by electromagnetic interaction between the coil 120 and the magnet 130. The coil 120 and the magnet 130 may be an AF driving unit configured to move or drive the AF moving unit.

In addition, the bobbin 110 may be included in the OIS moving unit, and the bobbin 110 may be tilted about the first axis or the second axis or may be rotated by a predetermined angle.

Referring to FIG. 5, the bobbin 110 may include an opening 101 for coupling to the lens module 400. The shape of the opening 101 of the bobbin 110 may match the shape of the lens module 400 mounted thereto, and may be, without being limited to, circular, oval, or polygonal.

Although not shown in FIG. 1, the bobbin 110 may include at least one stopper disposed on at least one of an upper surface and a lower surface thereof. The stopper of the bobbin 110 may protrude from the upper surface (or the lower surface) of the bobbin 110 in the first direction or an upward direction (or a downward direction), and may prevent the upper surface of the bobbin 110 from directly colliding with an inner surface of an upper plate 301 of the cover member 300 or a lower portion of the holder 140.

The bobbin 110 may include a seating portion 115 configured to allow the magnet 130 to be seated or disposed thereon. For example, the seating portion 115 may be a recess depressed from an outer surface of the bobbin 110.

Referring to FIG. 6, the bobbin 110 may include a plurality of side surfaces 110A to 110D or outer surfaces. For example, the bobbin 110 may include a first side surface 110A, a second side surface 110B, a third side surface 110C, and a fourth side surface 110D.

For example, the second side surface 110B may face the first side surface 110A or may be opposite the first side surface 110A with respect to the optical axis OA. The third side surface 110C and the fourth side surface 110D may be located between the first side surface 110A and the second side surface 110B. For example, the fourth side surface 110D may face the third side 110C or may be opposite the third side surface 110C with respect to the optical axis OA. In FIG. 6, the bobbin 110 is shown as including four side surfaces, but in another embodiment, the bobbin may include three side surfaces or five or more side surfaces.

For example, the seating portion 115 may be formed on the first side surface 110A of the bobbin. For example, a lower portion of the seating portion 115 may be closed rather than open to a lower surface of the bobbin 110. In addition, an upper portion of the seating portion 115 may be closed rather than open to the upper surface of the bobbin 110. In another embodiment, for example, the seating portion 115 may include an opening that opens to at least one of the upper surface and the lower surface of the bobbin 110.

The bobbin 110 may include a receiving portion 112 configured to receive at least a part of the ball member 21. For example, at least a part of the receiving portion 112 may be disposed on the first side surface 110A of the bobbin 110. The receiving portion 112 may be a recess depressed from an outer surface (e.g., the first side surface 110A) of the bobbin 110. The receiving portion 112 may alternatively be referred to as a "receiving recess," a "recess," or a "guide recess." A lubricant (e.g., grease) may be disposed in the receiving portion 112 of the bobbin 110 in order to reduce friction with the ball member 21.

For example, the bobbin 110 may include a first receiving portion 112A configured to receive a ball member 21A and a second receiving portion 112B configured to receive a ball member 21B. For example, the seating portion 115 may be disposed between the first receiving portion 112A and the second receiving portion 112B.

For example, the first receiving portion 112A (or the second receiving portion 112B) may include an opening that opens to the upper surface of the bobbin 110. In another embodiment, upper portions of the receiving portions 112A and 112B may be closed rather than open to the upper surface of the bobbin 110. For example, lower portions of the receiving portions 112A and 112B may be closed rather than open to the lower surface of the bobbin 110.

For example, the receiving portion 112 may be formed so as to extend in the optical-axis direction. For example, the receiving portion 112 may extend in the optical-axis direction so as to be formed between the upper surface and the lower surface of the bobbin 110.

For example, when viewed from above, the shape of the receiving portion 112 may be, without being limited to, triangular, and the shape of the receiving portion may be polygonal (e.g., quadrangular or pentagonal). Alternatively, for example, when viewed from above, the receiving portion 112 may have a "V" or "U" shape.

The magnet 130 may be disposed on, coupled to, or fixed to the bobbin 110. For example, the magnet 130 may be disposed on or coupled to the first side surface 110A of the bobbin 110. For example, the magnet 130 may be disposed in the seating portion 115 of the bobbin 110, or may be coupled to the seating portion 115. For example, the magnet 130 may be disposed between the first ball member 21A and the second ball member 21B.

The shape of the magnet 130 may have a shape corresponding to the first side surface 110A of the bobbin 110, such as a cuboidal shape. In another embodiment, for example, at least one of opposite ends of the magnet 130 may be tapered.

For example, the magnet 130 may include a first side surface 13A facing the coil 120 and a second side surface 13B opposite the first side surface 13A. The first side surface 13A of the magnet 130 may be exposed from the first side surface 110A of the bobbin 110.

Also, in order to enhance electromagnetic force, the magnet 130 may be a four-pole magnet. For example, the magnet 130 may include two N poles and two S poles. For example, the magnet 130 may include a first magnet including an N pole and an S pole, a second magnet including an S pole and an N pole, and a partition wall disposed between the first magnet and the second magnet. The partition wall, which is a substantially non-magnetic part, may include a section with almost no polarity, which may be filled with air or made of a non-magnetic material, and may be referred to as a "neutral zone." For example, the first magnet and the second magnet may face each other in the optical-axis direction, and the first magnet and the second magnet may be disposed so as to face different polarities in the optical-axis direction.

In another embodiment, the magnet 130 may be a two-pole magnet with two different polarities and an interface naturally formed between the different polarities. For example, in another embodiment, the magnet 130 may include one N pole and one S pole. For example, the magnet 130 may be a two-pole magnet with an N pole and an S pole separated or disposed in the optical-axis direction. In another embodiment, the magnet 130 may be a two-pole magnet with an N pole and an S pole separated or disposed in a direction perpendicular to the optical axis.

The holder 140 may be disposed in the cover member 300. The holder 140 may include a cavity configured to receive the bobbin 110. The holder 140 may include an opening 30A corresponding to the opening 101 of the bobbin 110. For example, the opening 30A may be a through-hole or a hollow configured to expose at least a part of the bobbin 110 (or the lens module 400). In addition, for example, the opening 30A of the holder 140 may expose an image-capturing area of the image sensor 810. The holder 140 may alternatively be referred to as a "housing."

For example, the opening 30A may be located in the center or a central region of the holder 140. For example, the opening 30A of the holder 140 may be a through-hole or a hollow formed through the holder 140 in the optical-axis direction. The opening 30A of the holder 140 may have a shape corresponding to the shape of the bobbin 110, such as, but not limited to, a polygonal shape (e.g., a quadrangular shape or an octagonal shape) or a circular shape (or an oval shape), and may have a variety of shapes.

The holder 140 may include a plurality of side portions 41A to 41D. The holder 140 may include a corner located between two adjacent side portions and connecting the two adjacent side portions to each other.

The holder 140 may include a first side portion 41A corresponding to or opposite the first side surface 110A of the bobbin 110, a second side portion 41B corresponding to or opposite a second side surface 110B of the bobbin 110, a third side portion 41C corresponding to or opposite a third side surface 110C of the bobbin 110, and a fourth side portion 41D corresponding to or opposite a fourth side surface 110D of the bobbin 110.

The first side portion 41A (or a first side surface or a first outer surface) of the holder 140 may be located opposite the second side portion 41B (or a second side surface or a second outer surface) of the holder 140 with respect to the optical axis, and the third side portion 41C (or a third side surface or a third outer surface) of the holder 140 may be located opposite the fourth side portion 41D (or a fourth side surface or a fourth outer surface) of the holder 140 with respect to the optical axis.

Each of the first to fourth side portions 41A to 41D of the holder 140 may be disposed parallel to a corresponding one of side plates 302 of the cover member 300.

Referring to FIGs. 7A and 7B, the holder 140 may include a seating portion 142A on which the coil 120 is disposed. For example, the seating portion 142A may be disposed or formed on the first side portion 41A of the holder 140. For example, the seating portion 142A may be a through-hole formed through the first side portion 41A of the holder 140. Since the seating portion 142A is a through-hole, a part of the holder 140 may not be interposed between the coil 120 and the magnet 130, which may increase electromagnetic force between the magnet 130 and the coil 120. In addition, since a part of the holder 140 may not be interposed between the position sensor 170 and the magnet 130, the output of the position sensor 170 may be increased, and sensitivity of the position sensor 170 may be improved.

In another embodiment, the seating portion 142A may be a recess depressed from an outer surface (or an inner surface) of the first side portion 41A of the holder 140.

For example, the holder 140 may include a recess 142 in which at least a part of the circuit board 800, e.g., at least a part of a second substrate 802, is disposed. Since at least a part of the second substrate 802 is disposed in the recess 142 of the holder 140, the second substrate 802 and a magnetic material 82 may not protrude from the outer surface of the first side portion 41A of the holder 140, or may not protrude excessively from the outer surface of the first side portion 41A. That is, the second substrate 802 and the magnetic material 82 may protrude less than the sum of the thickness of the second substrate 802 and the thickness of the magnetic material 82 with respect to the outer surface of the first side portion 41A of the holder 140. This may prevent an increase in the size of the camera device 200 in a direction perpendicular to the optical axis.

Referring to FIGs. 7A and 7B, the holder 140 may include a receiving portion 116 configured to allow at least another part of the ball member 21 to be disposed or received therein. For example, at least a part of the receiving portion 116 may be disposed on the first side portion 41A of the holder 140. The receiving portion 116 may be a recess depressed from the inner surface of the holder 140 (e.g., the inner surface of the first side portion 41A). The receiving portion 116 may alternatively be referred to as a "receiving recess," a "recess," or a "guide recess."

At least a part of the receiving portion 116 of the holder 140 may correspond to, may be opposite, or may overlap the receiving portion 112 of the bobbin 110.

For example, the holder 140 may include a first receiving portion 116A configured to receive at least another part of a first ball member B1 and B2 and a second receiving portion 116B configured to receive at least another part of a second ball member B3 and B4. For example, the seating portion 142A of the holder 140 may be disposed between the first receiving portion 116A and the second receiving portion 116B of the holder 140.

For example, the first receiving portion 116A (or the second receiving portion 116B) may include an opening that opens to the upper surface of the holder 140. In another embodiment, an upper portion of the receiving portion 116 may be closed rather than open to the upper surface of the holder 140. For example, a lower portion of the receiving portion 116 may be closed rather than open to the lower surface of the holder 140.

For example, the receiving portion 116 may be formed so as to extend in the optical-axis direction. For example, the receiving portion 116 may extend in the optical-axis direction so as to be formed between the upper surface and the lower surface of the holder 140.

For example, when viewed from above, the shape of the receiving portion 116 of the holder 140 may be, without being limited to, triangular, and the shape of the receiving portion may be polygonal (e.g., quadrangular or pentagonal). Alternatively, for example, when viewed from above, the receiving portion 116 may have a "V" or "U" shape.

For example, when viewed in the optical-axis direction or from above, the receiving portion 116 may be opposite or may overlap the upper plate 301 of the cover member 300. For example, at least a part of the upper plate 301 of the cover member 300 may cover the receiving portion 116.

The camera device 200 may include a ball member 21 disposed between the bobbin 110 and the holder 140. The ball member 21 may alternatively be referred to as a "rolling member," a "support member," a "sliding member," a "ball," or a "ball bearing."

At least a part of the ball member 21 may contact the bobbin 110 and the holder 140, and may be rolled or rotated between the bobbin 110 and the holder 140 to support movement of the bobbin 110 in the optical-axis direction. When the bobbin 110 is moved in the optical-axis direction, the ball member 21 may reduce friction between the bobbin 110 and the holder 140. Due to rolling or rotation of the ball member 21, the bobbin 110 may slide in the optical-axis direction in contact with the ball member 21.

For example, the ball member 21 may be made of, but not limited to, a metal material, a plastic material, or a resin material. The ball member 21 may have a circular shape, and may have a diameter of sufficient size to support the movement of the bobbin 110 in the optical-axis direction.

For example, the ball member 21 may be disposed between the outer surface of the bobbin 110 and the inner surface of the holder 140. For example, the ball member 21 may be disposed between the first side surface 110A of the bobbin 110 and the first side portion 41A of the holder 140. For example, the ball member 21 may be disposed between the receiving portion 112 of the bobbin 110 and the receiving portion 116 of the holder 140.

For example, at least a part of the ball member 21 may be in contact with the receiving portion 112 of the bobbin 110, and at least another part of the ball member 21 may be in contact with the receiving portion 116 of the holder 140.

The ball member 21 may include at least one ball member. For example, the ball member 21 may include two or more ball members B1 to B4.

For example, the ball member 21 may include a first ball member 21A disposed between the first receiving portion 112A of the bobbin 110 and the first receiving portion 116A of the holder 140 and a second ball member 21B disposed between the second receiving portion 112B of the bobbin 110 and the second receiving portion 116B of the holder 140. For example, the first ball member 21A may include at least one ball. For example, the first ball member 21A may include a plurality of balls B1 and B2.

The second ball member 21B may include at least one ball. For example, the second ball member 21B may include a plurality of balls B3 and B4. In another embodiment, each of the first ball member 21A and the second ball member 21B may include one ball.

For example, each of the first ball member 21A and the second ball member 21B may include three or more balls. For example, each of the first ball member 21A and the second ball member 21B may include a top ball located at the uppermost side, a bottom ball located at the lowermost side, and at least one intermediate ball located between the top ball and the bottom ball. For example, the diameter of the top ball may be greater than the diameter of the intermediate ball, and the diameter of the bottom ball may be greater than the diameter of the intermediate ball. In addition, for example, the diameter of the top ball and the diameter of the bottom ball may be equal to each other. In another embodiment, the diameter of the top ball, the diameter of the bottom ball, and the diameter of the intermediate ball may be equal to each other.

For example, each of the first ball member 21A and the second ball member 21B may include a first ball (a top ball), a second ball (a bottom ball), and a third ball (an intermediate ball) disposed in the optical-axis direction, wherein the diameter of the first ball may be greater than the diameter of the third ball. In addition, the diameter of the second ball may be greater than the diameter of the third ball. For example, the diameter of the first ball and the diameter of the third ball may be equal to each other. In another embodiment, the diameter of the first ball may be greater than the diameter of the second ball. In another embodiment, the diameter of the first ball may be less than the diameter of the second ball. In another embodiment, the diameter of the first ball, the diameter of the second ball, and the diameter of the third ball may be equal to each other.

For example, each of the diameter of the first ball and the diameter of the second ball may be 0.85 mm to 0.95 mm, and the diameter of the third ball may be 0.75 mm to 0.85 mm.

In another embodiment, each of the first ball member 21A and the second ball member 21B may include four balls, wherein each of the diameter of the top ball and the diameter of the bottom ball may be 0.85 mm to 0.95 mm, and the diameter of each of the two intermediate balls may be 0.75 mm to 0.85 mm.

When viewed from above, the coil 120 and the magnet 130 may be located between the first ball member 21A and the second ball member 21B. This serves to improve the reliability of autofocus by ensuring that, when the bobbin 110 moves in the optical-axis direction, the ball member 21 stably supports the bobbin 110 without causing the bobbin 110 to be tilted and moved.

In another embodiment, each of the first ball member 21A and the second ball member 21B may be in the form of a shaft or a roller. Alternatively, another embodiment may include a sliding member (e.g., a shaft or a roller) in place of the ball members 21A and 21B.

The camera device 200 may include a magnetic material 82 configured such that attractive force acts between the magnet 130 and the magnetic material. For example, attractive force may act between the magnetic material 82 and the magnet 130 in a direction perpendicular to the optical axis (or the second direction). For example, the magnetic material 82 may be disposed on the holder 140. In another embodiment, the magnetic material 82 may be disposed on the housing 210.

The magnetic material 82 may be a material that sticks to a magnet. For example, the magnetic material 82 may be a metal material that sticks to a magnet. Alternatively, for example, the magnetic material 82 may be a metal material that is magnetic. Alternatively, for example, the magnetic material 82 may be a magnet. The magnetic material 82 may alternatively be referred to as a "yoke." The magnetic material 82 may serve to enhance or increase electromagnetic force between the magnet 130 and the coil 120.

Since the magnet 130 is disposed on the bobbin 110 and the magnetic material 82 is disposed on the holder 140, the bobbin 110 may be pulled in a direction toward the holder 140 on which the magnetic material 82 is disposed by attractive force acting between the magnetic material 82 and the magnet 130. Due to attractive force between the magnetic material 82 and the magnet 130, the bobbin 110 and the holder 140 may press the ball member 21, and the bobbin 110 may be stably supported. The magnetic material 82 and the magnet 130 may be a "pressing unit" or a "pressing member." When the bobbin 110 is moved in the optical-axis direction by the pressing unit, contact between the bobbin 110 and the ball member 21 and between the holder 140 and the ball member 21 may be maintained. That is, the ball member 21 may stably support the bobbin 110 against the holder 140 due to attractive force between the magnet 130 and the magnetic material 82.

In another embodiment, the magnet 130 may be disposed on the holder 140, and the coil 120 may be disposed on the bobbin 110. For example, the magnetic material 82 may be disposed on the holder 140 along with the magnet 130. For example, the magnet 130 may be disposed between the magnetic material 82 and the coil 110. In another embodiment, the magnetic material 82 may be disposed on the bobbin 110 along with the coil 120 while being opposite the magnet 130 disposed on the holder 140. In addition, the camera device 200 may further include an energizing member, such as a conductive member, configured to conductively connect the coil 120 disposed on the bobbin 110 and a second substrate 802 of the circuit board 800 to each other.

Referring to FIG. 7B, the holder 140 may include a seating portion 45A on which the filter 610 is seated or disposed. The seating portion 45A may be disposed or formed on the lower surface of the holder 140. For example, the seating portion 45A may be a recess depressed from the lower surface of the holder 140. For example, the seating portion 45A may include a bottom surface 5A having a step formed from the lower surface of the holder 140 in the optical-axis direction and a side surface 5B connecting the lower surface of the holder 140 and the bottom surface 5A of the seating portion 45A to each other. For example, the opening 30A may be formed through the bottom surface 5A of the seating portion 45A.

The holder 140 may include a depressed portion 45B disposed or formed on a corner region of an inner surface of the seating portion 45A. The depressed portion 45B may have a structure depressed in a direction from the optical axis toward the corner region of the inner surface of the seating portion 45A. The depressed portion 45B may prevent an adhesive (e.g., UV epoxy) configured to attach or couple the filter 610 to the seating portion 45A from overflowing out of the seating portion 45A.

The holder 140 may include an escape recess 46 configured to avoid spatial interference with the circuit element 815. For example, the escape recess 46 may be disposed or formed on the lower surface of the holder 140. For example, the escape recess 46 may be depressed from the lower surface of the holder 140.

The escape recess 46 may correspond to, may be opposite, or may overlap the circuit element 815 in the optical-axis direction. For example, the escape recess 46 may be located between the seating portion 45A and a side of the lower surface of the holder 140. For example, the escape recess 46 may include a first escape recess 46A and a second escape recess 46B located opposite each other with respect to the seating portion 45A or the filter 610. In another embodiment, the escape recess 46 may include four escape recesses disposed between the opening 30A and four sides of the holder 140.

The holder 140 may include a recess 47 corresponding to a protrusion 216 of the sensor base 270. The protrusion 216 of the sensor base 270 and the recess 47 of the holder 140 may serve as a guide configured to facilitate assembly of the sensor base 270 and the holder 140, and may increase the coupling area between the sensor base 270 and the holder 140 to improve coupling force between the sensor base and the holder.

For example, the recess 47 may be depressed from the lower surface of the holder 140. For example, the recess 47 may be disposed or formed on the corner or the corner region of the lower surface of the holder 140. The recess 47 of the holder 140 may have a shape corresponding to the protrusion 216 of the sensor base 270. In addition, the holder 140 may include a recess 48 or a hole corresponding to a boss 17 of the sensor base 270. For example, the boss 17 of the sensor base 270 may be inserted into or coupled to the recess 48 of the holder 140. For example, the recess 48 may be disposed or formed on a bottom surface of the recess 47 of the holder 140. For example, the recess 48 may be depressed from the bottom surface of the recess 47 of the holder 140.

In another embodiment, the holder 140 may include a protrusion protruding from the lower surface of the holder 140 instead of the recess 47, and the sensor base 270 may include a recess depressed from an upper surface of the sensor base 270 and coupled to the protrusion of the holder 140 instead of the protrusion 216. Also, in another embodiment, the boss 17 may be formed on the holder 140, and the recess 48 may be formed in the sensor base 270.

The camera device 200 may include a filter 610 disposed on or coupled to the holder 140. For example, the filter 610 may be disposed under the holder 140. For example, the filter 610 may be coupled to the lower surface of the holder 140. For example, the filter 610 may be disposed on the seating portion 45A of the holder 140.

The filter 610 may serve to block a specific frequency band component of light passing through the lens module 400 from being incident on the image sensor 810. For example, the filter 610 may be an infrared cutoff filter. For example, the filter 610 may be disposed parallel to a plane perpendicular to the optical axis OA.

The filter 610 may be coupled to the holder 140 (or the seating portion 45A) via an adhesive (not shown). For example, an edge region of the filter 610 may be coupled to the bottom surface of the seating portion 45A. For example, the adhesive may be epoxy, a thermohardening adhesive, or a UV hardening adhesive. For example, at least a part of the filter 610 may correspond to, may be opposite, or may overlap the lens module 400 and/or the image sensor 810 in the optical-axis direction.

The sensor base 270 may be disposed under the holder 140. The sensor base 270 may be disposed in the housing 210. The sensor base 270 may be coupled to the holder 140. The sensor base 270 may alternatively be referred to as a "holder." In addition, the holder 140 may be referred to as a "first housing" (or a "first holder"), and the sensor base 270 may be referred to as a "second housing" (or a "second holder"). Alternatively, the holder 140 and the sensor base 270 may not be represented separately and may alternatively be referred to by a single term, e.g., a "housing," a "sensor base," or a "holder." In another embodiment, the sensor base 270 and the holder 140 may be integrally formed. In another embodiment, at least one of the sensor base 270, the holder 140, and the support member 64 may be integrally formed.

For example, the sensor base 270 may include a protrusion 216 protruding from the upper surface thereof. The protrusion 216 may alternatively be referred to as a "pillar portion."

For example, the protrusion 216 may correspond to, may be opposite, or may overlap the recess 47 of the holder 140 in the optical-axis direction. At least a part of the protrusion 216 of the sensor base 270 may be inserted into the recess 47 of the holder 140. For example, at least a part of the protrusion 216 may be coupled to the recess 47 of the holder 140. For example, at least a part of the protrusion 216 may be coupled to the recess 47 of the holder 140 via an adhesive.

For example, the sensor base 270 may include a body 270A and a protrusion 216 protruding from an upper surface of the body 270A. For example, the body 270A may have a shape corresponding to a first substrate 801 of the circuit board 810. For example, the body 270A may have a polyhedral shape, such as a hexahedral shape. For example, the protrusion 216 may be disposed on a corner region of the upper surface of the body 270A. For example, the protrusion 216 may include four protrusions 216A to 216D disposed on four corner regions of the upper surface of the body 270A. In addition, for example, the holder 140 may include four recesses 47 corresponding to the four protrusions 216A to 216D. In another embodiment, the housing 210 may include at least one protrusion disposed on at least one of the four corner regions of the body 270A, and the holder 140 may include at least one recess 48 corresponding to the at least one protrusion of the housing 210.

The sensor base 270 or the body 270A may include side portions 51A to 51D corresponding to, opposite, or overlapping the side portions 41A to 41D of the holder 140.

The camera device 200 may include a gyro sensor (not shown) disposed on the circuit board 800. For example, the gyro sensor may be disposed on the first substrate 801 of the circuit board 800. For example, the gyro sensor may be disposed on, coupled to, or fixed to a lower surface of the first substrate 801. For example, the gyro sensor may output rotational angular velocity information caused by movement of the camera device 200. For example, the gyro sensor may be implemented as a 2-axis or 3-axis gyro sensor or an angular velocity sensor. For example, the gyro sensor may be conductively connected to the first substrate 801.

In another embodiment, the sensor base 270 may include a receiving portion configured to allow the gyro sensor to be disposed therein or to avoid spatial interference with the gyro sensor 820. For example, the receiving portion 56 may be a through-hole formed through the sensor base 270 in the optical-axis direction or a recess depressed from the upper surface of the sensor base 270 or the upper surface of the body 270A. In this case, the receiving portion may include an opening that opens to an outer surface of the sensor base 270.

The sensor base 270 may include a receiving portion 55 in which the controller 830 is disposed or received. The receiving portion 55 may be a recess depressed from the upper surface of the sensor base 270 or the upper surface of the body 270A. In another embodiment, the receiving portion 55 may be a through-hole formed through the sensor base 270 or the body 270A in the optical-axis direction.

The sensor base 270 may include seating portions 274A and 274B configured to allow the coil 230 to be disposed thereon. The seating portions 274A and 274B may be disposed or formed on the upper surface of the sensor base 270. For example, the seating portions 274A and 274B may be recesses depressed from the upper surface of the sensor base 270.

For example, the sensor base 270 may include a first seating portion 274A configured to allow a first coil unit 230A to be disposed thereon and a second seating portion 274B configured to allow a second coil unit 230B to be disposed thereon.

For example, the first seating portion 274A may be formed adjacent to or abutting a second side portion 51B of the sensor base 270. For example, the first seating portion 274A may be a recess formed in the upper surface of the sensor base 270 adjacent to the second side portion 51B of the sensor base 270. For example, the first seating portion 274A may include an opening that opens to an outer surface of the second side portion 51B of the sensor base 270. In another embodiment, the first seating portion 274A may be spaced apart from the outer surface of the second side portion 51B of the sensor base 270, and may not include an opening that opens to the outer surface of the second side portion 51B.

For example, the second seating portion 274B may be formed adjacent to or abutting a third side portion 51C of the sensor base 270. For example, the second seating portion 274B may be a recess formed in the upper surface of the sensor base 270 adjacent to the third side portion 51C of the sensor base 270. For example, the second seating portion 274B may include an opening that opens to an outer surface of the third side portion 51C of the sensor base 270. In another embodiment, the second seating portion 274B may be spaced apart from the outer surface of the third side portion 51C of the sensor base 270, and may not include an opening that opens to the outer surface of the third side portion 51C.

In another embodiment, each of the seating portions 274A and 274B may be in the form of a through-hole. For example, at least one of the first and second seating portions 274A and 274B may be a hole or through-hole formed through the sensor base 270 in the optical-axis direction. In this case, a part of the sensor base 270 may not be interposed between the coil 230 and the magnet 310, which may increase electromagnetic force between the magnet 310 and the coil 230. In addition, a part of the sensor base 270 may not be interposed between the position sensor 240 and the magnet 310, which may increase the output of the position sensor 240 and may improve the sensitivity of the position sensor 240.

The sensor base 270 may include a recess 29 in which at least a part (e.g., a boss 65) of the tilting guide member 60 is disposed or received. The recess 29 may be formed in a lower surface of the sensor base 270. For example, the recess 29 may be depressed from the lower surface of the sensor base 270. The number of the recesses 29 may be equal to the number of bosses 65 of the tilting guide member 60.

For example, the recess 29 may include two recesses 29A and 29B spaced apart from each other. For example, the two recesses 29A and 29B may be disposed spaced apart from each other in the X-axis direction.

The recess 29 may contact the boss 65 of the tilting guide member 60 at at least one point. For example, the recess 29 may include a bottom surface and at least one side surface connected to the bottom surface. The at least one side surface may be an inclined surface. For example, the recess 29 may include a bottom surface and a plurality of inclined surfaces. The inclined surfaces of the recess 29 may have the same shape. In another embodiment, at least one of the inclined surfaces of the recess 29 may have a different shape from the others.

Referring to FIG. 7A, the protrusion 216 of the sensor base 270 may have a recess 212A in which at least a part of the first substrate 801 of the circuit board 800 is inserted or disposed. For example, a corner of the first substrate 801 may be inserted into or coupled to the recess 212A of the protrusion 216 of the sensor base 270. For example, the recess 212A may be formed in the side surface of the protrusion 216 opposite the corner of the circuit board 800. In addition, for example, at least one corner of the circuit board 800 may have a recess 83 configured to be inserted into or be coupled to the recess 212A of the protrusion 216. The recess 212A of the protrusion 216 of the sensor base 270 may serve as a coupling guide for coupling between the first substrate 801 and the sensor base 270, and may serve to inhibit the first substrate 801 from being rotated and/or separated from the sensor base 270.

The OIS moving unit may include a support member 64 coupled to the moving module.

For example, the support member 64 may be coupled to the sensor base 270. The magnetic material 33 may be disposed on or coupled to the support member 64. The tilting guide member 60 may be disposed between the stationary unit (e.g., the housing 210) and the support member 64. For example, the support member 64 may be disposed spaced apart from the tilting guide member 60, and a part of the support member 64 may be coupled to the sensor base 270.

For example, the support member 64 may be coupled to the sensor base 270 through a part of the housing 210. The support member 64 may alternatively be referred to as a "magnetic material support member," a "support portion," a "mover rigid," a "holding rigid," or a "coupling portion."

The circuit board 800 may be disposed on, coupled to, or fixed to the sensor base 270. For example, the circuit board 800 may be coupled to the sensor base 270 via an adhesive or a fixing member.

The circuit board 800 may be disposed on, coupled to, or fixed to the body 270A of the sensor base 270. The circuit board 800 may include at least one of a rigid printed circuit board (rigid PCB), a flexible printed circuit board (flexible PCB), and a rigid-flexible printed circuit board (rigid-flexible PCB). For example, the circuit board 800 can include a rigid printed circuit board and a flexible printed circuit board. The circuit board 800 may alternatively be referred to as a "substrate unit," a "substrate," or a "printed circuit board."

For example, the circuit board 800 may include a first substrate 801 (or a "first region") disposed on, coupled to, or fixed to the sensor base 270. For example, the first substrate 801 may be disposed on, coupled to, or fixed to the body 270A of the sensor base 270. For example, a lower side of the first substrate 801 may be coupled to the upper surface of the sensor base 270 or the upper surface of the body 270A. For example, the lower surface of the first substrate 801 may be coupled to the upper surface of the sensor base 270 or the upper surface of the body 270A via an adhesive.

The circuit board 800 may include a second substrate 802 (or a "second region") connected to the first substrate 801 and disposed on, coupled to, or fixed to the holder 140. For example, the second substrate 802 may be disposed on, coupled to, or fixed to the first side portion 41A of the holder 140.

In FIG. 7A, the circuit board 800 includes a single second substrate, but in another embodiment, the circuit board 800 may include a plurality of second substrates disposed on at least one of the side portions of the holder 140.

For example, the second substrate 802 may be connected to a first side surface of the first substrate 801. For example, the second substrate 802 may be bent from the first side surface of the first substrate 801 toward the first side portion 41A of the holder 140. For example, the second substrate 802 may extend from the first substrate 801 in an upward direction.

The circuit board 800 may include a third substrate 803 on which a connector 805 is disposed or provided and a fourth substrate 804 connecting the first substrate 802 and the third substrate 803 to each other.

For example, the first substrate 801 may be a rigid printed circuit board. For example, the second substrate 802 may be a flexible printed circuit board. For example, the third substrate 803 may be a rigid printed circuit board. For example, the fourth substrate 804 may be a flexible printed circuit board.

For example, the rigid printed circuit board may include a plurality of conductive layers (or circuit patterns) disposed spaced apart from each other in the optical-axis direction and an insulating layer disposed between two neighboring ones of the plurality of conductive layers. For example, the flexible circuit board may include one conductive layer (or a circuit pattern), a first insulating layer disposed on the conductive layer, and a second insulating layer disposed under the conductive layer. In another embodiment, the flexible circuit board may include a first conductive layer, a second conductive layer, a first insulating layer disposed between the first and second conductive layers, a second insulating layer disposed on the first conductive layer, and a third insulating layer disposed under the second conductive layer.

The image sensor 810 may be disposed on the first substrate 801. The image sensor 810 may be disposed so as to correspond to, to be opposite, or to overlap the lens module 400 and/or the filter 610 in the optical-axis direction.

The image sensor 810 may include an image-capturing area configured to detect light. Here, the image-capturing area may alternatively be referred to as an effective area, a light receiving area, or an active area. For example, the image-capturing area may include a plurality of pixels from which an image is formed. The image sensor 810 may be conductively connected to the first substrate 801. The image-capturing area may correspond to, may be opposite, or may overlap the lens module 400 and/or the filter 610 in the optical-axis direction.

The camera device 200 may include a circuit element 815 disposed on the first substrate 801. For example, the circuit element 815 may include at least one of a passive element (e.g., a capacitor or a resistor), an active element (e.g., a sensor, a memory, or a driver IC), or a circuit pattern. For example, in order to avoid spatial interference with the image sensor 810, the circuit element 815 may be disposed between the image sensor 810 and an edge (e.g., a side) of the first substrate 801.

The camera device 200 may include a controller 830 disposed on the circuit board 800. For example, the controller 830 may be a driver IC. For example, the controller 830 may be disposed on the first substrate 801. For example, the controller 830 may be disposed under the first substrate 801. For example, the controller 830 may be disposed on, coupled to, or fixed to the lower surface of the first substrate 801. For example, the controller 830 may be conductively connected to the first substrate 801.

For example, the controller 830 may be conductively coupled to the coil 120, and may supply a drive signal to the first coil 120. The controller 830 may be conductively connected to the coil units 230A and 230B, may supply a first drive signal to the first coil unit 230A, and may supply a second drive signal to the second coil unit 230B.

The controller 830 may be conductively connected to the position sensor 170. In addition, the controller 830 may be conductively connected to the position sensor 240.

For example, the controller 830 may receive an output signal from the position sensor 170, and may control a drive signal (e.g., drive current) that is supplied to the coil 120 using the output signal from the position sensor 170.

For example, the controller 830 may receive an output signal from the position sensor 240, and may control a drive signal (e.g., drive current) that is supplied to the coil 230 using the output signal from the position sensor 240. For example, the controller 830 may receive an output signal from the first sensor 240A, and may control a first drive signal (e.g., first drive current) that is supplied to the first coil unit 230A using the output signal from the first sensor 240A. In addition, the controller 830 may receive an output signal from the second sensor 240B, and may control a second drive signal (e.g., second drive current) that is supplied to the second coil unit 230B using the output signal from the second sensor 240B.

The coils 120 and 230 may be disposed on, coupled to, or fixed to the circuit board 800 (e.g., the second substrate 802). For example, the coil 120 may be conductively connected to the circuit board 800 (e.g., the second substrate 802) via a conductive adhesive or a solder. For example, the coil 230 may be conductively connected to the circuit board 800 (e.g., the first substrate 801) via a conductive adhesive or a solder.

The first coil unit 230A and the second coil unit 230B may be disposed on or coupled to the first substrate 801, and may be conductively connected to the first substrate 801. Referring to FIG. 7B, for example, the first coil unit 230A and the second coil unit 230B may be disposed on, coupled to, or fixed to the lower surface of the first substrate 801. For example, the first coil unit 230A and the second coil unit 230B may be disposed between the first substrate 801 and the sensor base 270.

For example, the first and second coil units 230A and 230B may be disposed adjacent to two neighboring ones of four side surfaces of the first substrate 801.

For example, the first coil unit 230A may be disposed adjacent to a second side surface of the first substrate 801 corresponding to the second side portion 51B of the holder 27, and the second coil unit 230B may be disposed adjacent to a third side surface of the first substrate 801 corresponding to the third side portion 51C of the holder 27. For example, at least a part of the first coil unit 230A may be disposed between the two protrusions 216C and 216D of the sensor base 270, and at least a part of the second coil unit 230B may be disposed between the two protrusions 216A and 216D of the sensor base 270.

The coil 120 may move the AF moving unit (e.g., the bobbin) in the optical-axis direction by interaction with the magnet 130. The coil 120 may be disposed on the holder 140.

The coil 120 may be disposed so as to correspond to, to be opposite, or to overlap the magnet 130 in a direction perpendicular to the optical axis. For example, the coil 120 may be disposed on the holder 140 so as to correspond to, to be opposite, or to overlap the magnet 130 in the second direction (e.g., the X-axis direction) or in a direction from the first side portion 41A to the second side portion 41B of the holder 140. For example, the coil 120 may be disposed on the first side portion 41A of the housing 130. The coil 120 may be disposed in the seating portion 142A of the holder 140.

For example, the coil 120 may include a hollow or a hole. For example, the coil 120 may have a ring shape or a closed curved shape. For example, the coil 120 may have a ring shape wound around a straight line perpendicular to the optical axis OA and perpendicular to the outer surface of the first side portion 41A of the holder 140 as an axis. For example, the coil 120 may have a ring shape configured such that the length thereof in a transverse direction (or the third direction) is greater than the length thereof in a longitudinal direction (or the optical-axis direction).

A drive signal may be applied to the coil 120 in order to generate electromagnetic force by electromagnetic interaction with the magnet 130. For example, a drive signal from the circuit board 800 or the controller 830 may be applied to the coil 120. The drive signal supplied to the coil 120 may be direct current, and may be in the form of voltage or current. Alternatively, in another embodiment, for example, the drive signal provided to the coil 120 may include at least one of a direct current signal and an alternating current signal.

The coil 120, to which the drive signal has been provided, may electromagnetically interact with the magnet 130 disposed on the bobbin 110, and the AF moving unit may be moved in the first direction by electromagnetic force due to electromagnetic interaction between the coil 120 and the magnet 130. The magnitude and/or the direction of the drive signal (e.g., drive current) may be adjusted by the controller 830, whereby movement of the AF moving unit in the first direction may be controlled, and therefore the autofocus function may be performed.

For AF feedback driving, the camera device 200 may include a position sensor 170. The position sensor 170 may detect the position or displacement of the bobbin 110 in the optical-axis direction. For example, the position sensor 170 may detect the magnet 130 disposed on the bobbin 110. In another embodiment, a sensing magnet separate from the magnet 130 and opposite the position sensor 170 may be disposed on the bobbin, and the position sensor 170 may detect the sensing magnet or a magnetic field of the sensing magnet to detect the displacement of the bobbin.

For example, the position sensor 170 may be disposed on the holder 140. For example, the position sensor 170 may be disposed on the first side portion 41A of the holder 140. For example, the position sensor 170 may be disposed in the seating portion 142A of the holder 140. For example, the position sensor 170 may be disposed in a hollow of the coil 120. In another embodiment, the position sensor 170 may be disposed outside the hollow of the coil 120.

For example, the position sensor 170 may be coupled to the circuit board 800. For example, the position sensor 170 may be coupled to the circuit board 800 via a conductive adhesive or a solder. For example, the position sensor 170 may be conductively connected to the second substrate 802. For example, the position sensor 170 may be conductively connected to the second substrate 802 via a conductive adhesive or a solder.

For example, the position sensor 170 may be disposed on, coupled to, or fixed to a first surface of the second substrate 802. For example, the position sensor 170 may correspond to, may be opposite, or may overlap the magnet 130 in a direction perpendicular to the optical axis or in the second direction.

The position sensor 170 may detect the displacement of the bobbin 110 in the optical-axis direction.

For example, the position sensor 170 may detect a magnetic field of the magnet 130 mounted on the bobbin 110 or the intensity of the magnetic field based on movement of the bobbin 110, and may output an output signal.

For example, the position sensor 170 may be a Hall sensor. In this case, the position sensor 170 may include two input terminals to which a drive signal is applied and two output terminals from which an output signal is output. The circuit board 800 may be conductively connected to the two input terminals and two output terminals of the position sensor 170. The circuit board 800 or the controller 830 may supply a drive signal to the two input terminals of the position sensor 170, and an output signal from the two output terminals of the position sensor 170 may be transmitted to the circuit board 800 or the controller 830.

In another embodiment, the position sensor 170 may be implemented in the form of a driver IC including a Hall sensor. For example, when the position sensor 170 is a driver IC including a Hall sensor, the position sensor 170 may transmit and receive data to and from the outside through data communication using a protocol, such as I2C communication.

For example, when the position sensor 170 is a driver IC including a Hall sensor, the position sensor 170 may include first and second terminals to which power or a drive signal is input, a third terminal for a clock signal, a fourth terminal for a data signal, and fifth and sixth terminals configured to supply a drive signal to the coil 120. The first to sixth terminals of the position sensor 170 may be conductively connected to the circuit board 800.

The coil 230 may tilt the OIS moving unit about the first axis (e.g., the X-axis) or the second axis (e.g., the Y-axis), or may rotate the OIS moving unit by a predetermined angle, due to interaction with the magnet 310 disposed on the housing 210, which is a stationary unit.

The coil 230 may include a first coil unit 230A that corresponds to, is opposite, or overlaps the first magnet unit 310A in the optical-axis direction and a second coil unit 230B that corresponds to, is opposite, or overlaps the second magnet unit 310B in the optical-axis direction. For example, the coil 230 may not overlap the magnet 310 in a direction perpendicular to the optical axis.

For example, the coil 230 may be disposed lower than the coil 120. For example, the first coil unit 230A may be disposed in the first seating portion 274A of the sensor base 270, and the second coil unit 230B may be disposed in the second seating portion 274B of the sensor base 270.

For example, each of the first and second coil units 230A and 230B may include a hollow or a hole. For example, each of the first and second coil units 230A and 230B may have a ring shape or a closed curved shape. For example, each of the first coil unit 230A and the second coil unit 230B may have a ring shape wound around a straight line parallel to the optical axis OA and perpendicular to the upper surface of the sensor base 270 or the upper surface of the body 270A as an axis.

For example, the first coil unit 230A may have a ring shape configured such that the length thereof in the transverse direction (or the third direction) is greater than the length thereof in the longitudinal direction (or the second direction). For example, the second coil unit 230B may have a ring shape configured such that the length thereof in the longitudinal direction (or the second direction) is greater than the length thereof in the transverse direction (or the third direction).

For OIS feedback driving, the camera device 200 may include a position sensor 240. The position sensor 240 may detect displacement or angular displacement of the OIS moving unit 100 due to tilting or rotation of the OIS moving unit.

For example, the position sensor 240 may include a first sensor 240A and a second sensor 240B. For example, at least a part of the first sensor 240A may correspond to, may be opposite, or may overlap the first magnet unit 310A in the optical-axis direction. For example, the center of the first sensor 240A may overlap the first magnet unit 310A in the optical-axis direction. For example, the first sensor 240A may detect the first magnet unit 310A (or a magnetic field of the first magnet unit 310A). For example, the first sensor 240A may detect a tilted angle of the OIS moving unit 100 relative to the second axis (Y-axis).

At least a part of the second sensor 240B may correspond to, may be opposite, or may overlap the second magnet unit 310B in the optical-axis direction. For example, the center of the second sensor 240B may overlap the second magnet unit 310B in the optical-axis direction. For example, the second sensor 240B may detect the second magnet unit 310B (or a magnetic field of the second magnet unit 310B). For example, the second sensor 240B may detect a tilted angle of the OIS moving unit 100 relative to the first axis (X-axis).

For example, the first and second sensors 240A and 240B may be disposed on, coupled to, or fixed to the first substrate 801 of the circuit board 800. For example, the first and second sensors 240A and 240B may be conductively connected to the first substrate 801.

For example, the first sensor 240A may be disposed in the hollow (or the hole) of the first coil unit 230A, and the second sensor 240B may be disposed in the hollow (or the hole) of the second coil unit 230B. In another embodiment, the first sensor 240A may be disposed outside the hollow (or the hole) of the first coil unit 230A, and the second sensor 240B may be disposed outside the hollow (or the hole) of the second coil unit 230B.

For example, each of the first sensor 240A and the second sensor 240B may be a Hall sensor including first and second input terminals and first and second output terminals. For example, the first and second input terminals and the first and second output terminals of the first sensor 240A may be conductively connected to the first substrate 801, and the first and second input terminals and the first and second output terminals of the second sensor 240B may be conductively connected to the first substrate 801.

For example, the first substrate 801 or the controller 830 may supply or apply a first drive signal to the first and second input terminals of the first sensor 240A. The first sensor 240A may output a first output signal, and the first output signal may be transmitted to the first substrate 801 or the controller 830. The first output signal may be output to the first and second output terminals of the first sensor 240A.

For example, the first substrate 801 or the controller 830 may supply or apply a second drive signal to the first and second input terminals of the second sensor 240B. The second sensor 240B may output a second output signal, and the second output signal may be transmitted to the first substrate 801 or the controller 830. The second output signal may be output to the first and second output terminals of the second sensor 240B.

In another embodiment, each of the first sensor 240A and the second sensor 240B may be a driver IC including a Hall sensor. A description of an embodiment in which the position sensor 170 is a driver IC including a Hall sensor may be applied or analogically applied to an embodiment in which each of the first and second sensors 240A and 240B is a driver IC including a Hall sensor.

The camera device 200 may include a magnetic material 82 disposed opposite the coil 120 and the magnet 130. For example, the magnetic material 82 may be disposed on the holder 140 or on the second substrate 802 of the circuit board 800. For example, the magnetic material 82 may be disposed so as to correspond to, to be opposite, or to overlap the magnet 130 in the second direction. In addition, for example, the magnetic material 82 may be disposed so as to correspond to, to be opposite, or to overlap the coil 120 in the second direction. For example, the coil 120 may be disposed on the first surface of the second substrate 802 that faces the magnet 130, and the magnetic material 82 may be disposed on a second surface of the second substrate 802, which is opposite the first surface of the second substrate 802. The magnetic material 82 may be coupled, attached, or fixed to the second substrate 802 via an adhesive.

Referring to FIGs. 10A and 10B, the housing 210 may include a cavity configured to receive the OIS moving unit 100. For example, the housing 210 may have a shape corresponding to the OIS moving unit 100, e.g., the holder 140 or the sensor base 270, such as, but not limited to, a polygonal shape (e.g., a quadrangular shape or an octagonal shape) or a circular shape (or an oval shape), and may have a variety of shapes. The housing 210 may alternatively be referred to as a "base."

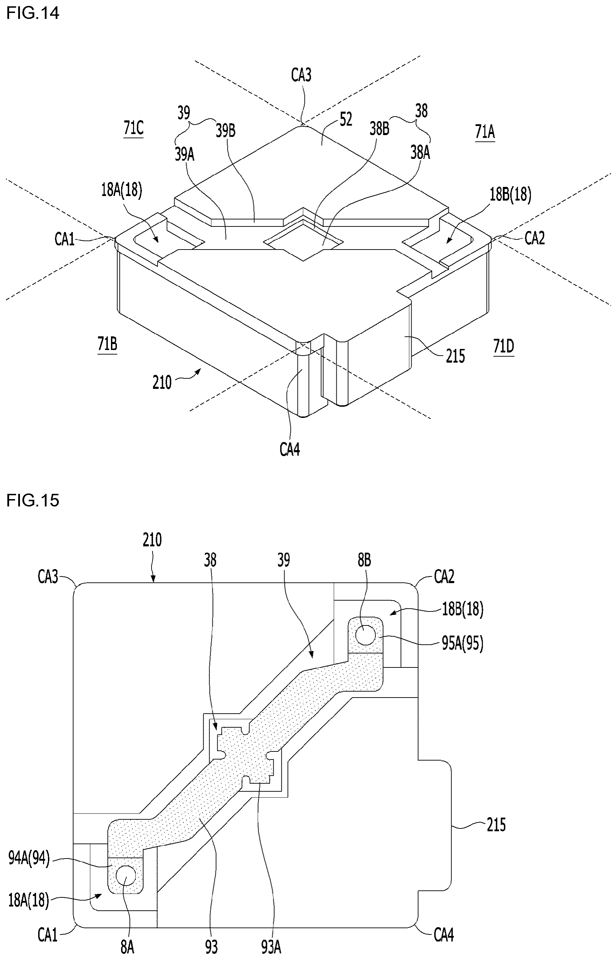

The housing 210 may include a plurality of side portions 71A to 71D corresponding to the side portions 41A to 41D of the holder 140 or the side portions 51A to 51D of the sensor base 270. The housing 210 may include corners CA1 to CA$ (see FIG. 14) located between two adjacent side portions.

In addition, the housing 210 may include a lower portion 42 (or a lower plate) located under the side portions 71A to 71D. The lower portion 42 may be connected to a lower side of each of the side portions 71A to 71D. For example, the lower portion 42 may alternatively be referred to as a "bottom portion," a "bottom surface," or a "body." For example, the side portions 71A to 71D may protrude upward from the lower portion 42.

The housing 210 has a first side portion 71A corresponding to, opposite, or overlapping the first side portion 41A of the holder 140, a second side portion 71B corresponding to, opposite, or overlapping the second side portion 41B of the holder 140, a third side portion 71C corresponding to, opposite, or overlapping the third side portion 41C of the holder 140, and a fourth side portion 71D corresponding to, opposite, or overlapping the fourth side portion 41D of the holder 140.

The first side portion 71A (or a first side surface or a first outer surface) of the housing 210 may be located opposite the second side portion 71B (or a second side surface or a second outer surface) of the housing 210, and the third side portion 71C (or a third side surface or a third outer surface) of the housing 210 may be located opposite the fourth side portion 71D (or a fourth side surface or a fourth outer surface) of the housing 210.

For example, each of the first to fourth side portions 71A to 71D of the housing 210 may be disposed parallel to a corresponding one of the side plates 302 of the cover member 300.

The housing 210 may include a step 411 disposed on a lower portion of at least one of the side portions 71A to 71D. For example, the step 411 may protrude from an outer surface of each of the side portions 71A to 71D of the housing 210 in a direction perpendicular to the optical axis. For example, the step 411 may be opposite or may overlap the side plate 302 of the cover member 300 in the optical-axis direction. For example, the step 411 may be coupled to the side plate 302 of the cover member 300 via an adhesive.

The housing 210 may include seating portions 141A and 141B on which the magnet 310 is disposed. For example, each of the seating portions 141A and 141B may be a recess formed in the lower portion 42 of the housing 210. In another embodiment, each of the seating portions 141A and 141B may be a through-hole formed through the lower portion 42 of the housing 210.

The housing 210 may include a first seating portion 141A on which the first magnet unit 310A is disposed and a second seating portion 141B on which the second magnet unit 310B is disposed. For example, the first seating portion 141A may be disposed or formed in a first region of the lower portion 42 of the housing 210 adjacent to the second side portion 71B of the housing 210. For example, the second seating portion 141B may be disposed or formed in a second region of the lower portion 42 of the housing 210 adjacent to the third side portion 71C of the housing 210.

The magnet 310 may include a first magnet unit 310A and a second magnet unit 310B disposed on the lower portion 42 of the housing 210. For example, the magnet 310 may be disposed under the coil 230.

For example, the first magnet unit 310A may be disposed so as to correspond to, to be opposite, or to overlap the first coil unit 230A in the optical-axis direction. The second magnet unit 310B may be disposed so as to correspond to, to be opposite, or to overlap the second coil unit 230B in the optical-axis direction.

For example, the first magnet unit 310A and the second magnet unit 310B may be disposed so as to be misaligned with each other in the second direction or the third direction. For example, when viewed from above or in the optical-axis direction, the first magnet unit 310A and the second magnet unit 310B may be disposed on the housing 210 so as not to overlap each other in the second direction or the third direction. For example, the first magnet unit 310A and the second magnet unit 310B may be disposed on the lower portion 42 of the housing 210 so as not to overlap each other in the second direction or the third direction.

In another embodiment, the magnet 310 may be disposed on the holder 140, and the coil 230 may be disposed on the housing 210. For example, in FIG. 3, the magnet 310 and the coil 230 may be disposed such that the positions thereof are reversed. In this case, the camera device 200 may include a separate energizing portion configured to conductively connect the second coil 230 and the circuit board 800 to each other, such as a circuit board, a circuit member, or a conductive member.

Each of the first magnet unit 310A and the second magnet unit 310B may be a two-pole magnet including one N pole and one S pole. For example, each of the first magnet unit 310A and the second magnet unit 310B may be a two-pole magnet with an N pole and an S pole separated or disposed in the optical-axis direction. For example, the N pole (or the S pole) of each of the first magnet unit 310A and the second magnet unit 310B may be located above the S pole (or the N pole) thereof.

For example, a first surface of the magnet 310 that faces or is opposite the coil 230 in the optical-axis direction may have an S pole (or an N pole). A second surface of the magnet 310, which is opposite the first surface, may have an N pole (or an S pole).

In another embodiment, each of the first magnet unit 310A and the second magnet unit 310B may be a two-pole magnet with one N pole and one S pole separated or disposed in a direction perpendicular to the optical-axis direction. In another embodiment, each of the first magnet unit 310A and the second magnet unit 310B may be a four-pole magnet including two N poles and two S poles. In another embodiment, electromagnetic force may be generated between the first and second magnet units 310A and 310B and the first and second coil units 230A and 230B, and the generated electromagnetic force may cause X-axis tilting or Y-axis tilting of the OIS moving unit.

The housing 210 may include a receiving portion 49A configured to receive the magnetic material 31. The receiving portion 49A may be disposed or formed in the lower portion 42 of the housing 210. The receiving portion 49A may be disposed or formed in an upper surface of the lower portion 42 of the housing 210. For example, the receiving portion 49A may be a recess depressed from the upper surface of the lower portion 42 of the housing 210. The receiving portion 49A may have a shape corresponding to the magnetic material 31, such as a quadrangular shape or a circular shape. For example, the receiving portion 49A of the housing 210 may correspond to, may be opposite, or may overlap the seating portion 93A of the support member 64 in the optical-axis direction.

Referring to FIG. 10B, the housing 210 may include a seating portion 69 in which at least a part of the tilting guide member 60 is disposed or at least a part of the tilting guide member 60 is received. For example, the seating portion 69 may be a recess depressed from the upper surface of the housing 210 or the upper surface of the lower portion 42.

For example, the seating portion 69 may have a shape that corresponds to or coincides with the shape of the tilting guide member 60. For example, the seating portion 69 may include a bottom surface 69A having a step formed from the upper surface of the lower portion 42 of the housing 210 in the optical-axis direction and a side surface 69B connecting the bottom surface 69A and the upper surface of the lower portion 42 to each other. For example, the bottom surface 69A of the seating portion 69 may be located lower than the upper surface of the lower portion 42 of the housing 210.

Referring to FIGs. 4A and 4B, since the housing 210 is provided at the upper surface of the lower portion 42 thereof with a seating portion 69 in which at least a part of the tilting guide member 60 is inserted or disposed, the lower portion 42 of the housing 210 may include a partition wall 272 (or a guide portion) disposed around the tilting guide member 60. The tilting guide member 60 may be spaced apart from the partition wall 272 of the housing 210, and the partition wall 272 may be disposed so as to surround the tilting guide member 60. The partition wall 272 of the housing 210 may prevent the tilting guide member 60 from being separated or dislodged from the housing 210.

The housing 210 may include a protrusion 49 (or a boss) protruding from the lower portion 42. For example, the protrusion 49 may protrude from the upper surface of the lower portion 42 of the housing 210. For example, the protrusion 49 may protrude from the bottom surface 69A of the seating portion 69 of the housing 210. For example, the protruding length of the protrusion 49 of the housing 210 may be greater than the depth of the seating portion 69 of the housing 210. For example, the protruding length of the protrusion 49 may be the distance (or the shortest distance) from the bottom surface 69A of the seating portion 69 to a lower surface (or the lowermost end) of the protrusion 69. In addition, the depth of the seating portion 69 may be the distance (or the shortest distance) from the upper surface of the lower portion 42 of the housing 210 to the bottom surface 69A of the seating portion 69. In another embodiment, for example, the protruding length of the protrusion 49 may be less than or equal to the depth of the seating portion 69. For example, the protrusion 49 may have a shape that corresponds to or coincides with an opening 60A of the tilting guide member 60.

For example, the protrusion 49 of the housing 210 may correspond to, may be opposite, or may overlap the opening 60A of the tilting guide member 60 in the optical-axis direction. For example, at least a part of the protrusion 49 of the housing 210 may be disposed in the opening 60A of the tilting guide member 60.

For example, the receiving portion 49A may be disposed or formed in the protrusion 49 of the housing 210. For example, the receiving portion 49A may be a recess depressed from the upper surface of the protrusion 49 of the housing 210.

For example, the protrusion 49 may be disposed between recesses 55A and 55B of the housing 210. For example, the protrusion 49 may be disposed between bosses 66A and 66B of the tilting guide member 60. For example, the protrusion 49 (or the magnetic material 31) may overlap the bosses 66A and 66B of the tilting guide member 60 in a direction perpendicular to the optical axis, e.g., the third direction.

For example, at least a part of the first magnet unit 310A may correspond to, may be opposite, or may overlap the tilting guide member 60 in a direction parallel to the first axis. In addition, at least a part of the second magnet unit 310B may correspond to, may be opposite, or may overlap the tilting guide member 60 in a direction parallel to the second axis.

The housing 210 may include a recess 55 in which at least a part of the boss 66 of the tilting guide member 60 is disposed or in which at least a part of the boss 66 is received. The recess 55 of the housing 210 may be formed in the upper surface of the lower portion 42 of the housing 210. For example, the recess 55 may be depressed from the upper surface of the lower portion 42 of the housing 210. For example, the recess 55 may be formed in the bottom surface 69A of the seating portion 69 of the housing 210. For example, the recess 55 may be depressed from the bottom surface 69A of the seating portion 69 of the housing 210. The number of the recesses 55 of the housing 210 may be equal to the number of the bosses 66 of the tilting guide member 60.

For example, the recess 55 may include two recesses 55A and 55B spaced apart from each other. For example, the two recesses 55A and 55B may be disposed spaced apart from each other in the Y-axis direction. For example, the direction in which the recesses 55A and 55B of the housing 210 are spaced apart from each other and the direction in which the two recesses 29A and 29B of the sensor base 270 are spaced apart from each other may be intersect or perpendicular to each other. For example, the receiving portion 49A may be disposed between the two recesses 55A and 55B of the housing 210.

The recess 55 of the housing 210 may contact the boss 66 of the tilting guide member 60 at at least one point. For example, the recess 55 may include a bottom surface and at least one side surface connected to the bottom surface. The at least one side surface of the recess 55 may be an inclined surface. For example, the recess 55 may include a bottom surface and a plurality of inclined surfaces. The inclined surfaces of the recess 55 may have the same shape. In another embodiment, at least one of the inclined surfaces of the recess 55 may have a different shape from the others.

The housing 210 may include a protrusion 215 protruding in a direction perpendicular to the optical axis. For example, the protrusion 215 may protrude from the side portion of the housing 210.

For example, the protrusion 215 may protrude from an outer surface of the fourth side portion 71D of the housing 210. For example, the protrusion 215 may be formed by at least a part of the fourth side portion 71D protruding in a direction parallel to a straight line that passes through the optical axis and is perpendicular to the optical axis. For example, the protrusion 215 may include a recess 16A (or a cavity) in which at least a part of the fourth substrate 804 is disposed or received. For example, the recess 16A of the protrusion 215 may include an opening that opens upward.

Referring to FIG. 10A, the recess 16A of the protrusion 215 may be provided with coupling recesses 215A and 215B for insertion, coupling, or fixing of the movement inhibition portion 80. For example, the coupling recesses 215A and 215B may be formed in two facing inner surfaces of the recess 16A of the protrusion 215. For example, the coupling recesses 215A and 215B may extend in the optical-axis direction. For example, for easy insertion or coupling of the movement inhibition portion 80 from above, each of the coupling recesses 215A and 215B may include an opening that opens to an upper surface of the protrusion 215.

The maximum length of the protrusion 215 in the optical-axis direction may be less than the maximum length of the housing 210 in the optical-axis direction. In this configuration, space for the circuit board 800 to extend outward may be easily secured, and a compact camera device may be implemented.

The camera device 200 may include a movement inhibition portion 80 coupled to at least a part of the housing 210. The movement inhibition portion 80 may inhibit movement or motion of at least a part of the fourth substrate 804 to inhibit deformation of the shape of at least a part of the fourth substrate 804.

Referring to FIGs. 7C, 8, and 11, the fourth substrate 804 of the circuit board 800 may include a first portion 804A (or a "first region") connected to the first substrate 801, a second portion 804B connected to the first portion 804A and bent from the first portion 804A, and a third portion 804C connected to the second portion 804B and bent from the second portion 804B. In another embodiment, at least one of the first portion 804A and the second portion 804B may be omitted.

For example, the first portion 804B may extend in a direction parallel to the first substrate 801. For example, the second portion 804B may be bent from the first portion 804B and may extend from the first portion 804B in the upward direction. For example, the third portion 804C may extend from the second portion 804B in a direction opposite the first portion 804A.

For example, the fourth substrate 804 may include a first bent portion 804D connecting the first portion 804A and the second portion 804B to each other. In addition, the fourth substrate 804 may include a second bent portion 804E connecting the second portion 804B and the third portion 804C to each other. The first bent portion 804D and the second bent portion 804E may be angled, and for example, the first portion 804A and the second portion 804B may be perpendicular to each other. In another embodiment, the first bent portion 804D and the second bent portion 804E may be rounded. In another embodiment, the interior angle between the first portion 804A and the second portion 804B may be an acute angle or an obtuse angle.

The first bent portion 804D and the second bent portion 804E may prevent an increase in the length of the camera device 200 in a direction perpendicular to the optical-axis direction. In addition, since the first bent portion 804D and the second bent portion 804E are located between the upper surface of the camera device 200 (e.g., the upper surface of the cover member 300) and the lower surface of the camera device 200 (e.g., the lower surface of the housing 210), an increase in the length of the camera device 200 in the optical-axis direction may be prevented, whereby it is possible to implement miniaturization of the camera device.

For example, the third portion 804C may be in the form of a plate or plane perpendicular to the optical axis. For example, the third portion 804C may include a meandering shape or a serpentine shape. For example, the third portion 804C may include at least one bent or curved region. For example, the bent or curved region of the third portion 804C may be bent in the second direction or the third direction, which is perpendicular to the optical axis. Alternatively, the bent or curved region of the third portion 804C may extend in a direction perpendicular to the optical axis. For example, when viewed from above, the third portion 804C may include a region having a U shape or a V shape.

For example, the third portion 804C may be spaced apart from the housing 210. For example, the third portion 804C may be spaced apart from the protrusion 215 of the housing 210. In another embodiment, for example, at least a part of the third portion 804C may be in contact with the protrusion 215 of the housing 210.

At least a part of the second portion 804B of the fourth substrate 804 may be disposed in the protrusion 215 of the housing 210. At least a part of the second portion 804B of the fourth substrate 804 may be disposed in the recess 16A of the protrusion 215 of the housing 210. For example, at least a part of the first portion 804A of the fourth substrate 804 may be disposed in the recess 16A of the protrusion 215. The third portion 804B of the fourth substrate 804 may be located outside the protrusion 215 of the housing 210. For example, the third portion 804B of the fourth substrate 804 may be located higher than the protrusion 215 of the housing 210. A lower surface of the third portion 804B of the fourth substrate 804 may be located higher than the upper surface of the protrusion 215 of the housing 210.

Referring to FIG. 7A, the sensor base 270 may include a recess 273 formed in the part at which the fourth substrate 804 and the first substrate 801 are joined or connected to each other, e.g., at the position corresponding to the first portion 804A of the fourth substrate 804. The recess 273 may be disposed adjacent to or abutting an outer surface of the fourth side portion 71D of the sensor base 270 on which the fourth substrate 804 is disposed. The recess 273 may serve to prevent the first portion 804A of the fourth substrate 804 from being damaged by friction with the sensor base 270.

The connector 805 may be coupled or connected to another external connector of the camera device 200 or to an external device. The connector 805 connected to the other external connector may correspond to a stationary unit that does not move when OIS is performed. Since the third portion 804C of the fourth substrate 804 includes at least one bent or curved region, it is possible to flexibly support the camera device 200 or the OIS moving unit 100 and to cushion external impact. That is, the third portion 804C of the fourth substrate 804 may serve as a spring configured to cushion impact. In addition, since the third portion 804C of the fourth substrate 804 may serve to flexibly support the OIS moving unit, it is possible to reduce drive force or drive power required to perform OIS.

The camera device 200 may include a reinforcement member 70 disposed on, coupled to, or attached to at least a part of the fourth substrate 804. The reinforcement member 70 may be disposed on, coupled to, or attached to at least one of the first portion 804A and the second portion 804B of the fourth substrate 804. For example, the reinforcement member 70 may be disposed on, coupled to, or attached to at least a part of the first portion 804A of the fourth substrate 804 and at least a part of the second portion 804B of the fourth substrate 804.

Referring to FIG. 11, for example, the reinforcement member 70 may be disposed on, coupled to, or attached to a lower surface of the first portion 804A of the fourth substrate 804 and a lower surface of the second portion 804B of the fourth substrate 804. For example, the reinforcement member 70 may include a first region 70A disposed on, coupled to, or attached to the first portion 804A and a second region 70B disposed on, coupled to, or attached to the second portion 804B. The second region 70B may be bent upward from the first region 70A. For example, a bent portion may be formed between the first region 70A and the second region 70B.

For example, the area of the second region 70B may be greater than the area of the first region 70A. In another embodiment, both may be equal, or the area of the former 70B may be less than the area of the latter 70A.

For example, the reinforcement member 70 may be spaced apart from the third portion 804C of the fourth substrate 804. For example, the second region 70B of the reinforcement member 70 may be spaced apart from the third portion 804C of the fourth substrate 804. In another embodiment, at least a part of the second region 70B of the reinforcement member 70 may be in contact with the third portion 804C of the fourth substrate 804.

In another embodiment, the reinforcement member 70 may be disposed on, coupled to, or attached to an upper surface of the first portion 804A of the fourth substrate 804 and an upper surface of the second portion 804B of the fourth substrate 804. For example, in another embodiment, the reinforcement member 70 may include a first region disposed on the upper surface of the first portion 804A of the fourth substrate 804 and a second region disposed on the upper surface of the second portion 804B of the fourth substrate 804.

In another embodiment, the reinforcement member 70 may be disposed on, coupled to, or attached to at least a part of the second portion 804B of the fourth substrate 804 and at least a part of the third portion 804C of the fourth substrate 804. For example, in another embodiment, the reinforcement member 70 may be disposed on, coupled to, or attached to the second portion 804B and the third portion 804C of the fourth substrate 804. For example, the reinforcement member 70 may include a first region disposed on, coupled to, or attached to the second portion 804B of the fourth substrate 804 and a second region disposed on, coupled to, or attached to the third portion 804C, and a bent portion may be formed between the first region and the second region. The first region of the reinforcement member 70 may be disposed on the lower surface (or the upper surface) of the second portion 804B, and the second region of the reinforcement member 70 may be disposed on the lower surface (or the upper surface) of the third portion 804C.

The reinforcement member 70 may prevent the fourth substrate 804 from being damaged, deformed, or broken by impact or external force. In addition, the reinforcement member 70 may serve to inhibit deformation and restoration of the shape of the fourth substrate 804 as the fourth substrate 804 is forced by tilting of the OIS moving unit 100. For example, the reinforcement member 70 may include at least one of a metal material and an injection-molded material.

For example, the reinforcement member 70 may be disposed in the recess 16A of the protrusion 215 of the housing 210. For example, at least a part of the reinforcement member 70 may be in contact with the recess 16A of the protrusion 215 of the housing 210. For example, the reinforcement member 70 may not be coupled to the housing 210 (e.g., the protrusion 215). In another embodiment, for example, the reinforcement member 70 may be coupled to the housing 210 (e.g., the protrusion 215) via an adhesive.

Referring to FIGs. 1, 10A, and 10B, the movement inhibition portion 80 may be coupled to the protrusion 215 of the housing 210. For example, the movement inhibition portion 80 may be coupled to the coupling recesses 215A and 215B of the protrusion 215 of the housing 210.

Referring to FIG. 3, at least a part of the second portion 804B of the fourth substrate 804 may be disposed between the movement inhibition portion 80 and an inner surface of the protrusion 215 of the housing 210. For example, at least a part of the reinforcement member 70 may be disposed between the movement inhibition portion 80 and the inner surface of the protrusion 215 of the housing 210.

The movement inhibition portion 80 may be spaced apart from the circuit board 800 in the second direction (the X-axis direction) or the third direction (the Y-axis direction). For example, the movement inhibition portion 80 may be disposed spaced apart from the circuit board 800 in the optical-axis direction or in a direction perpendicular to the optical-axis direction. That is, the movement inhibition portion 80 may serve to maintain the shape of the bent portions 804D and 804E of the fourth substrate 804, which is a flexible substrate. For example, the movement inhibition portion 80 may be formed by injection-molding a non-magnetic material or a resin. In another embodiment, the movement inhibition portion 80 may be in contact with at least a part of the fourth substrate 804 of the circuit board 800.

Movement or motion of at least a part of the second portion 804B of the fourth substrate 804 disposed in the recess 16A of the protrusion 215 may be restricted by the movement inhibition portion 80, and the second portion 804B may be inhibited or prevented from moving out of the recess 16A of the protrusion 215. This may inhibit or prevent the OIS moving unit from being affected by restoring force of the fourth substrate 804 when OIS is performed, thereby enabling OIS to be accurately performed and improving reliability of OIS operation. The movement inhibition portion 80 may alternatively be referred to as a "clamp."

The cover member 300 may form a receiving space with the housing 210, and the OIS moving unit may be disposed in the receiving space. For example, the cover member 300 may be in the form of a box having an open lower portion. For example, the cover member 300 may include an upper plate 301 and a side plate 302 connected to the upper plate 301.

A lower end of the side plate 302 of the cover member 300 may be coupled to the housing 210. The shape of the upper plate 302 of the cover member 300 may be polygonal (e.g., quadrangular or octagonal) or circular. The upper plate 302 of the cover member 300 may include an opening 303 configured to expose the lens (not shown) to external light. The opening 303 may be a through-hole formed through the upper plate 302 of the cover member 300 in the optical-axis direction. For example, the cover member 300 may include a plurality of side plates. The material of the cover member 300 may be a non-magnetic material. In another embodiment, the cover member 300 may be made of a magnetic material. For example, the material of the cover member 300 may be an injection-molded material, such as a resin, or a metal material.

Referring to FIGs. 1 and 2A, the cover member 300 may include an opening 304 disposed or formed in the side plate 302 to avoid spatial interference with the protrusion 215 of the housing 210. For example, the protrusion 216 of the housing 210 may extend through the opening 304 of the cover member 300 and may protrude from the side plate 302 of the cover member 300.

The cover member 300 may include a protrusion 305 disposed above the opening 304 and protruding from the side plate 302. For example, the protrusion 305 may be in the shape of a plate. For example, the protrusion 305 of the cover member 300 may be disposed on the protrusion 215 of the housing 210. For example, the protrusion 305 may be disposed above the recess 16A of the protrusion 215 of the housing 210. For example, the protrusion 305 may be disposed above the movement inhibition portion 80. For example, the protrusion 305 may overlap the movement inhibition portion 80 in the optical-axis direction. In addition, for example, the protrusion 305 may overlap the first portion 804A of the fourth substrate 804 in the optical-axis direction. The protrusion 305 may inhibit or prevent separation of the movement inhibition portion 80, and may protect the movement inhibition portion 80 and the fourth substrate 804 from impact.

The cover member 300 may include a boss (not shown) protruding from the upper plate 301. In this case, the boss of the cover member 300 may project from an inner surface of the upper plate 301 of the cover member 300 toward the bobbin 110 or the ball member 21. For example, the boss of the cover member 300 may be opposite or may overlap the receiving portion 116 of the bobbin 110 in the optical-axis direction. At least a part of the boss of the cover member 300 may be inserted or disposed in the receiving portion 116 of the bobbin 110. The boss of the cover member 300 may be disposed on the ball member 21. For example, the cover member 300 may include a first boss (not shown) corresponding to, opposite, or overlapping the first ball member 21A or the first receiving portion 116A of the bobbin 110. For example, the cover member 300 may include a second boss (not shown) corresponding to, opposite, or overlapping the second ball member 21B or the second receiving portion 116B of the bobbin 110. For example, the boss of the cover member 300 may include a recess depressed from the upper surface of the upper plate 301 of the cover member 330. In another embodiment, the boss of the cover member 300 may not include a recess. As the cover member 300 is provided with the boss, the embodiment may prevent the ball member 21 from being separated from the receiving portion 116 of the bobbin 110. In addition, the boss of the cover member 300 may serve as a stopper configured to prevent further movement of the bobbin 110 within a limited range in the upward direction.

Next, the support unit will be described.

The support unit may be disposed between the stationary unit and the moving unit. For example, the support unit may be disposed between the sensor base 270 and the housing 210. The support unit may support the sensor base 270 with respect to the housing 210. The support unit may include a tilting guide member 60 disposed between the stationary unit and the OIS moving unit. For example, the tilting guide member 60 may be disposed between the sensor base 270 and the housing 210.

The tilting guide member 60 may alternatively be referred to as a "moving plate," a "driving plate," a "driving board," a "moving board," a "mover," a "mover plate," a "drive board," a "plate," a "rotating board," a "tilting plate," a "movement plate," or a "support plate."

The tilting guide member 60 may be tiltable about the first axis or the second axis or rotatable by a predetermined angle. For example, the tilting guide member 60 may include a first axis formed on a first surface opposite the OIS moving unit and a second axis formed on a second surface opposite the stationary unit (e.g., the housing 210).

For example, the tilting guide member 60 may be disposed between the lower portion (or the lower surface) of the sensor base 270 and the lower portion 42 of the housing 210. For example, at least a part of the tilting guide member 60 may be disposed in the seating portion 69 of the housing 210. Since the tilting guide member 60 is disposed in the seating portion 69 of the housing 210, the length or height of the camera device 200 in the optical-axis direction may be reduced.

Referring to FIGs. 4B, 9A, and 12, the tilting guide member 60 may include a body or main body. The body of the tilting guide member 60 may be in the form of a plate. For example, the length of the tilting guide member 60 in a horizontal direction perpendicular to the optical axis (e.g., in the transverse direction or the longitudinal direction) may be greater than the length of the tilting guide member 60 in the optical-axis direction.

Referring to FIGs. 9A and 9B, the tilting guide member 60 may include at least one first guide member disposed on a first surface (or an upper surface) opposite the OIS moving unit (or the moving module (e.g., the sensor base 270)) and at least one second guide member disposed on a second surface (or a lower surface) opposite the stationary unit (e.g., the housing 210).

For example, a first axis may be formed by the first guide member, and a second axis may be formed by the second guide member. For example, the first guide member may include a plurality of first guide members spaced apart in a direction parallel to the first axis. The second guide member may include a plurality of second guide members spaced apart in a direction parallel to the second axis. For example, the first axis may be formed by the plurality of first guide members, and the second axis may be formed by the plurality of second guide members.

For example, the first guide member may include a first boss 65. For example, the second guide member may include a second boss 66.

For example, the first boss 65 may be coupled to the sensor base 270 or may be in contact with sensor base 270. The second boss 66 may be coupled to the housing 210 or may be in contact with the housing 210.

The first boss 65 may be disposed on a first surface 6A (e.g., an upper surface) of the tilting guide member 60, and the second boss 66 may be disposed on a second surface 6B (or a lower surface) of the tilting guide member 60, which is opposite the first side 6A. For example, the first boss 65 may protrude from the first surface 6A (e.g., the upper surface) of the tilting guide member 60, and the second boss 66 may protrude from the second surface 6B (e.g., the lower surface) of the tilting guide member 60.

The first boss 65 may alternatively be referred to as an "upper boss (or a front boss)" or a "first protrusion," and the second boss 66 may alternatively be referred to as a "lower boss (or a rear boss)" or a "second protrusion." The number of each of the first boss 65 and the second boss 66 may be one, two, or three or more.

At least a part of the first boss 65 may be disposed in the recess 29 of the sensor base 270. The first boss 65 may include at least two bosses 65A and 65B. For example, the at least two bosses 65A and 65B may be spaced apart from each other in the second direction. Each of the two bosses 65A and 65B may be inserted into and disposed in a corresponding one of the first and second recesses 29A and 29B of the sensor base 270.

At least a part of the second boss 66 may be disposed in the recess 55 of the housing 210.

The second boss 66 may include at least two bosses 66A and 66B. For example, the two bosses 66A and 66B may be spaced apart from each other in the third direction. Each of the two bosses 66A and 66B may be inserted into and disposed in a corresponding one of the first and second recesses 55A and 55B of the housing 210.

In another embodiment, the two bosses 65A and 65B may be disposed spaced apart from each other in the third direction, the first and second recesses 29A and 29B of the sensor base 270 may be disposed spaced apart from each other in the third direction, the two bosses 66A and 66B may be disposed spaced apart from each other in the second direction, and the first and second recesses 55A and 55B of the housing 210 may be disposed spaced apart from each other in the second direction.

For example, each of the first boss 65 and the second boss 66 may have a curved shape, a hemispherical shape, a dome shape, or a polyhedral shape, but the present disclosure is not limited thereto. For example, the shape of the first boss 65 when viewed from the front or above and the shape of the second boss 66 when viewed from the rear or below may be circular, oval, or polygonal.

The tilting guide member 60 may include an opening 60A corresponding to, opposite, or overlapping the magnetic material 31 and/or the magnetic material 33. For example, the opening 60A may correspond to, may be opposite, or may overlap the protrusion 49 of the housing 210. The weight of the tilting guide member 60 may be reduced by the opening 60A, which may result in a lighter camera device 200.

For example, the opening 60A of the tilting guide member 60 may be disposed at the position corresponding to the protrusion 49 of the housing 210 in order to avoid spatial interference with the protrusion 49. In addition, the opening 60A of the tilting guide member 60 may be formed to avoid spatial interference with the magnetic material 31 and the protrusion 49 of the housing 210.

For example, the opening 60A of the tilting guide member 60 may be a through-hole. For example, the opening 60A may be formed through the tilting guide member 60 in the first direction (the Z-axis direction) or the optical-axis direction. For example, at least a part of the opening 60A of the tilting guide member 60 may include a shape corresponding to the protrusion 49 of the housing 210. For example, the opening 60A may include a circular shape, an oval shape, and a polygonal shape, such as a quadrangular shape.

For example, the transverse length of the opening 60A of the tilting guide member 60 may be greater than the transverse length of the protrusion 49 of the housing 210. In another embodiment, the transverse length of the opening 60A may be equal to the transverse length of the protrusion 49 of the housing 210. The longitudinal length of the opening 60A may be greater than the longitudinal length of the protrusion 49 of the housing 210. In another embodiment, the longitudinal length of the opening 60A may be equal to the longitudinal length of the protrusion 49 of the housing 210.

At least a part of the protrusion 49 of the housing 210 may be disposed in the opening 60A of the tilting guide member 60. For example, the protrusion 49 of the housing 210 may overlap the opening 60A of the tilting guide member 60 in the optical-axis direction. In addition, for example, the protrusion 49 of the housing 210 may overlap the tilting guide member 60 in a direction perpendicular to the optical-axis direction. This may reduce the length or height of the camera device 200 in the optical-axis direction.

For example, at least a part of the opening 60A may be disposed between the two bosses 65A and 65B of the first boss 65 of the tilting guide member 60. In addition, at least a part of the opening 60A may be disposed between the bosses 66A and 66B of the second boss 66 of the tilting guide member 60.

For example, the tilting guide member 60 may be made of an injection-molded material. For example, the tilting guide member 60 may be made of a plastic, resin, or ceramic material. In another embodiment, the tilting guide member 60 may include a metal, such as SUS. In addition, the tilting guide member 60 may be made of a non-magnetic material. In another embodiment, the tilting guide member 60 may be made of a magnetic material.

The bosses 65A and 65B of the first boss 65 and the bosses 66A and 66B of the second boss 66 may be disposed side by side in directions that intersect or are perpendicular to each other. The first boss 65 of the tilting guide member 60 may rotate, pivot, or tilt the OIS moving unit in any one of the second direction and the third direction. The second boss 66 of the tilting guide member 60 may rotate, pivot, or tilt the OIS moving unit in the other of the second direction and the third direction.

A lubricant may be disposed on the first boss 66 of the tilting guide member 60 and in the recess 29 of the sensor base 270 or the second boss 66 of the tilting guide member 60 and in the recess 55 of the housing 210 in order to reduce frictional force and to protect the tilting guide member 60.

The first boss 65 of the tilting guide member 60 may slide in the recess 29 of the sensor base 270, and the second boss 66 may slide in the recess 55 of the housing 210. As a result, it is possible to reduce frictional force between the tilting guide member 60 and the sensor base 270 and/or frictional force between the tilting guide member 60 and the housing 210 and to reduce current consumption or power consumption necessary for OIS operation.

Referring to FIGs. 4D and 12, the ball member 21 may not overlap the tilting guide member 60 in the optical-axis direction. For example, as shown in FIG. 4C, the ball member 21 may not overlap the tilting guide member 60 in a direction perpendicular to the optical axis.

For example, the direction in which the first ball member 21A and the second ball member 21B are spaced apart from each other may intersect or may be perpendicular to the direction in which the boss 65A and the boss 65B of the tilting guide member 60 are spaced apart from each other. In another embodiment, the former and the latter may be parallel to each other.

For example, the direction in which the first ball member 21A and the second ball member 21B are spaced apart from each other may be parallel to or may intersect the direction in which the boss 66A and the boss 66B of the tilting guide member 60 are spaced apart from each other. In another embodiment, the former and the latter may be perpendicular to each other.

For example, when viewed from above, the distance between the boss 65A and the boss 65B of the tilting guide member 60 may be less than the distance between the first ball member 21A and the second ball member 21B. In another embodiment, the distance between the boss 65A and the boss 65B of the tilting guide member 60 may be equal to or greater than the distance between the first ball member 21A and the second ball member 21B.

For example, when viewed from above, the distance between the boss 66A and the boss 66B of the tilting guide member 60 may be less than the distance between the first ball member 21A and the second ball member 21B. In another embodiment, the distance between the boss 66A and the boss 66B of the tilting guide member 60 may be equal to or greater than the distance between the first ball member 21A and the second ball member 21B.

In another embodiment, at least one of the first boss 65 and the second boss 66 of the tilting guide member 60 may be omitted, and a rolling member or a ball member may be disposed in place of the omitted boss.

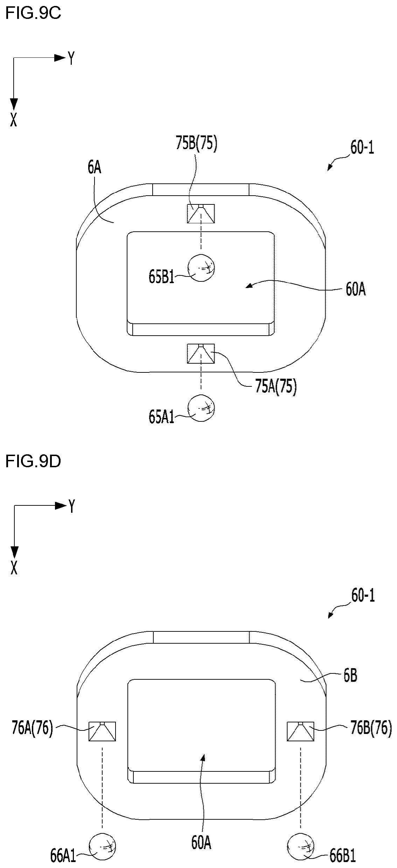

FIG. 9C is a front perspective view of a tilting guide member 60-1 according to another embodiment, and FIG. 9D is a rear perspective view of the tilting guide member 60-1 of FIG. 9C.

Referring to FIGs. 9C and 9D, the tilting guide member 60-1 may include a first recess 75 formed in a first surface (or an upper surface) of the tilting guide member 60 and a second recess 76 formed in a second surface (or a lower surface) of the tilting guide member 60-1. For example, the first recess 75 may be disposed on a first surface of a body of the tilting guide member 60-1, and the second recess 76 may be disposed on a second surface of the body of the tilting guide member 60-1.

The tilting guide member 60-1 may include at least one first guide member 65A1 and 65B1 disposed between the moving unit and the tilting guide member 60-1 and at least one second guide member 66A1 and 66A2 disposed between the stationary unit and the tilting guide member 60-1. The first and second guide members may be provided in plural. The number of first recesses 75 may be equal to the number of first guide members, and the number of second recesses 76 may be equal to the number of second guide members.

For example, the first guide members 65A1 and 65B1 may be disposed between the recess 29 of the sensor base 270 and the first recess 75 of the tilting guide member 60. The second guide members 66A1 and 66B1 may be disposed between the recess 55 of the housing 210 and the second recess 76 of the tilting guide member 60-1.

Each of the first and second guide members 65A1, 65B1, 66A1, and 66A2 may be a ball member, a rolling member, or a sliding member.

For example, the first recess 75 of the tilting guide member 60-1 may include two first recesses 75A and 75B, and the second recess 76 of the tilting guide member 60-1 may include two second recesses 76A and 76B. The first guide member may include two ball members 65A1 and 65B1, and the second guide member may include two ball members 66A1 and 66B1. A description of the shape of the recess 29 of the holder 260 or the recess 55 of the housing 210 may be applied or analogically applied to the shape of the first recess 75 and the second recess 76 of the tilting guide member 60-1.

The first guide members 75A and 75B may form a first axis (e.g., an X-axis), and the second guide members 76A and 76B may form a second axis (e.g., a Y-axis).

The tilting guide member 60 of FIGs. 9A and 9B may include a plate-shaped body and boss-shaped guide members 65 and 66. In addition, the tilting guide member 60-1 of FIGs. 9C and 9D may include a plate-shaped body and ball-shaped guide members 65A1, 65B1, 66A1, and 66B1.

However, a tilting guide member according to another embodiment may include only first and second guide members with a body omitted. For example, in another embodiment, the first and second guide members may be ball members 65A1, 65B1, 66A1, and 66B1. In this case, the sensor base 270 may have additional recesses that correspond to, are opposite, or overlap the first guide members 65A1 and 65B1, and the housing 210 may have additional recesses that correspond to, are opposite, or overlap the second guide members 66A1 and 66B1.

In another embodiment, the first and second guide members may be rolling members, sliding members (e.g., shafts), or rotating members.

The support unit may include a magnetic material 31 disposed on the stationary unit and a magnetic material 33 disposed on the OIS moving unit.

For example, the support unit may further include a support member 64. For example, the support member 64 may be coupled to the OIS moving unit 100. For example, the support member 64 may be coupled to the sensor base 270. In another embodiment, the support member 64 may be coupled to the holder 140 or the circuit board 800. For example, the magnetic material 33 may be disposed on the support member 64, and the magnetic material 31 may be disposed on the housing 210.

Repulsive force may act between the magnetic material 31 and the magnetic material 33. Each of the magnetic materials 31 and 33 may be a material with magnetic properties. For example, each of the magnetic materials 31 and 33 may be a metal material with magnetic properties. Alternatively, for example, each of the magnetic materials 31 and 33 may be a magnetized metal material. Alternatively, for example, each of the magnetic materials 31 and 33 may be a magnet. For example, each of the magnetic materials 31 and 33 may alternatively be referred to as a "holding magnet." Alternatively, for example, the magnetic materials 31, 33 may alternatively be referred to as "repulsive magnets." The tilting guide member 60 may be brought into tight contact with or brought into simple contact with the OIS moving unit and the stationary unit by the repulsive force acting between the magnetic material 31 and the magnetic material 33. That is, the OIS moving unit (or the moving module (e.g., the sensor base 270)) and the stationary unit (e.g., the housing 210) may be pulled against each other by the repulsive force acting between the magnetic material 31 and the magnetic material 33.

For example, the magnetic material 31 may be disposed in the recess 49A of the protrusion 49 of the housing 210 or coupled to the recess 49A. At least a part of the magnetic material 31 may be disposed in the opening 60A of the tilting guide member 60. For example, the magnetic material 31 may be opposite or may overlap the opening 60A of the tilting guide member 60 in the optical-axis direction. For example, the magnetic material 31 may not overlap the tilting guide member 60 in the optical-axis direction. In addition, for example, at least a part of the magnetic material 31 may overlap the tilting guide member 60 in a direction perpendicular to the optical axis.

The magnetic material 31 may correspond to, may be opposite, or may overlap the magnetic material 33 in the optical-axis direction. The magnetic material 31 may be a two-pole magnet including an N pole and an S pole. For example, the magnetic material 31 may be a two-pole magnet with an N pole and an S pole separated or disposed in the optical-axis direction. In another embodiment, the magnetic material 31 may be a two-pole magnet with an N pole and an S pole separated or disposed in a direction perpendicular to the optical-axis direction. In another embodiment, the magnetic material 31 may be a four-pole magnet including two N poles and two S poles.

The magnetic material 33 may be disposed under the magnetic material 31. The magnetic material 33 may be disposed on the OIS moving unit 100. For example, the magnetic material 33 may be disposed in the seating portion 93A of the support member 64. For example, the magnetic material 33 may be coupled to the seating portion 93A of the support member 64. For example, the magnetic material 33 may be coupled, attached, or fixed to the seating portion 93A of the support member 64 by an adhesive.

The magnetic material 33 may overlap the opening 60A of the tilting guide member 60 in the optical-axis direction. The magnetic material 33 may not overlap the tilting guide member 60 in the optical-axis direction. The magnetic material 33 may not overlap the tilting guide member 60 in a direction perpendicular to the optical axis. In another embodiment, at least a part of the magnetic material 33 may overlap the tilting guide member 60 in a direction perpendicular to the optical axis.

When viewed from above, the area of the opening 60A of the tilting guide member 60 may be greater than the area of the upper surface (or the lower surface) of the magnetic material 31. In addition, when viewed from above, the area of the opening 60A of the tilting guide member 60 may be greater than the area of the upper surface (or the lower surface) of the magnetic material 33.

For example, repulsive force may act between the magnetic material 33 and the magnetic material 31 in the optical-axis direction (or the first direction). For example, the magnetic material 33 and the magnetic material 31 may be disposed such that surfaces facing or opposite each other in the optical-axis direction have opposite polarities. For example, an N pole (or an S pole) of the magnetic material 33 and an N pole (or an S pole) of the magnetic material 31 may face or may be opposite each other in the optical-axis direction.

For example, a first surface of the magnetic material 33 and a first surface of the magnetic material 31 may face each other, and the first surface of the magnetic material 33 and the first surface of the magnetic material 31 may have the same polarity.

The tilting guide member 60 may be brought into tight contact with the OIS moving unit and the stationary unit by the repulsive force acting between the magnetic material 33 and the magnetic material 31. The tilting guide member 60 may be pressed against the sensor base 270 by the repulsive force acting between the magnetic material 33 and the magnetic material 31. The tilting guide member 60 may be pressed against the housing 210 by the repulsive force acting between the magnetic material 33 and the magnetic material 31.

The sensor base 270 and the housing 210 may press the tilting guide member 60 due to the repulsive force acting between the magnetic material 33 and the magnetic material 31. The first boss 65 and the second boss 66 of the tilting guide member 60 may be brought into tight contact with the sensor base 270 and/or the housing 210.

The tilting guide member 60 may stably support the OIS moving unit with respect to the stationary unit due to the repulsive force between the magnetic material 33 and the magnetic material 31, whereby stable OIS operation may be performed.

In addition, since at least a part of the magnetic material 31 is disposed in the opening 60A of the tilting guide member 60, the distance between the magnetic material 31 and the magnetic material 33 may be reduced, which may increase the repulsive force between the magnetic material 31 and the magnetic material 33, the OIS moving unit may be stably supported with respect to the stationary unit, and stable OIS operation may be performed.

In addition, since the magnetic material 31 is disposed on a central region of the lower portion 42 of the housing 210 and the magnetic material 33 is disposed in the center of support member 64, the repulsive force between the magnetic material 31 and the magnetic material 33 may be concentrated on the center of the sensor base 270 and the center of the housing 210, which may efficiently and stably support the OIS moving unit.

In another embodiment, the protrusion 49 of the housing 210 may be omitted, and the magnetic material 31 may be disposed on the upper surface of the lower portion 42 of the housing 210. In this case, the lower portion 42 of the housing 210 may have a seating portion, such as a recess, configured to allow the magnetic material 31 to be disposed therein.

In another embodiment, the tilting guide member 60 may be omitted, and the support unit may include a rolling member, such as a ball member, disposed between the sensor base 270 and the housing 210. In this case, the rolling member may include two first ball members disposed in a direction parallel to the first axis and two second ball members disposed in a direction parallel to the second axis, and the OIS moving unit may be tilted about the first ball members as an axis or may be rotated by a predetermined angle, and may be tilted about the second ball members as an axis or may be rotated by a predetermined angle, whereby a hand-tremor compensation operation may be performed.

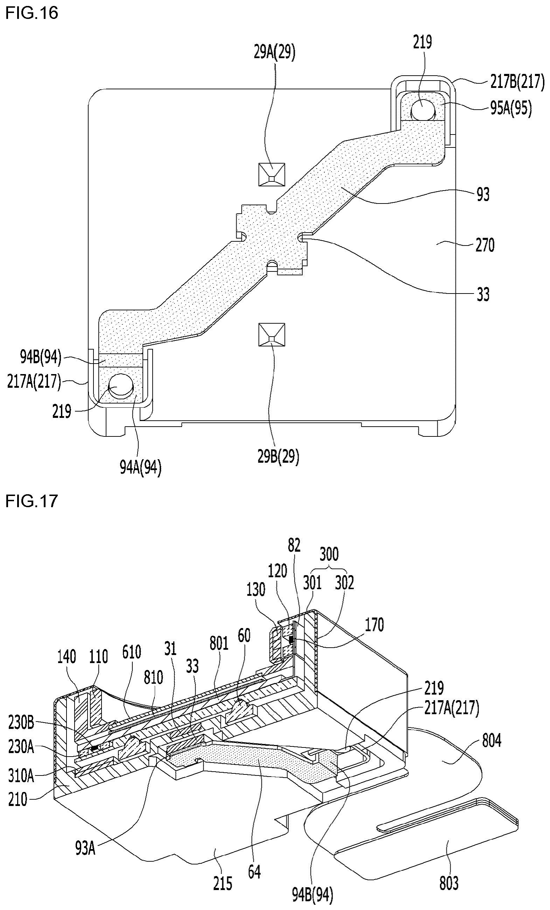

FIG. 13 is a perspective view of the support member 64 and the magnetic material 33, FIG. 14 is a bottom perspective view of the housing 210, FIG. 15 is a bottom perspective view of the housing 210 and the support member 64, FIG. 16 is a coupling view of the sensor base 270 and the support member 64, and FIG. 17 is a cutaway perspective view of the camera device 200.

Referring to FIGs. 13 to 17, the support member 64 may be disposed under the housing 210, and may be coupled to the sensor base 270 through at least a part of the housing 210. For example, the support member 64 may be coupled to the lower surface of the sensor base 270. The support member 64 may not be coupled to the stationary unit, such as the housing 210, or may not be fixed to the housing 210.

For example, the support member 64 may be made of an injection-molded material, plastic, or a resin material, or for example, the support member 64 may be made of a metal material.

The housing 210 may include an opening 18 configured to allow at least a part of the support member 64 to pass therethrough. The opening 18 may be a through-hole formed through the housing 210 in the optical-axis direction. For example, the opening 18 may be formed through the lower portion 42 of the housing 210. For example, the opening 18 may include a first opening 18A and a second opening 18B. For example, the first opening 18A and the second opening 18B may be spaced apart from each other, and may be located so as to face each other in a diagonal direction of the lower surface of the housing 210, or may be located so as to be opposite each other in the diagonal direction.

For example, the first opening 18A may be disposed adjacent to a first corner CA1 of the housing 210, and the second opening 18B may be disposed adjacent to a second corner CA2 of the housing 210, which is opposite the first corner CA1 of the housing 210 in the diagonal direction. In another embodiment, the first opening and the second opening may be disposed adjacent to the center of the side portion of the housing 210.

The support member 64 may include a body 93 on which the magnetic material 33 is disposed and an extension portion 96 extending from the body 93. For example, the body 93 may be disposed under the lower portion 42 of the housing 210. The body 93 may include a plate shape. For example, the shortest length of the body 93 in a direction perpendicular to the optical axis may be greater than the longest length of the body 93 in the optical-axis direction.

At least a part of the extension portion 96 may be coupled to the sensor base 270 through a part of the housing 210. For example, at least a part of the extension portion 96 may pass through the opening 18 of the housing 210.

The extension portion 96 may include a first extension portion 94 that extends from one side of the body 93 and is coupled to the sensor base 270 through a part of the housing 210 and a second extension portion 95 that extends from the other side of the body 93 and is coupled to the sensor base 270 through another part of the housing 210. For example, the first extension portion 94 may pass through the first opening 18A of the housing 210, and the second extension portion 95 may pass through the second opening 18B of the housing 210.

The first extension portion 94 may include at least one bent portion or curved region. In addition, the second extension portion 95 may include at least one bent portion or curved region.

The extension portion 96 may include coupling portions 94A and 95A (or "first portions") coupled to the housing 210 and connecting portions 94B and 95B (or "second portions") that connect the coupling portions 94A and 95A to the body 93. For example, the connecting portions 94B and 95B may be bent or curved from the body 93, and the coupling portions 94A and 95A may be bent or curved from the connecting portions 94B and 95B. For example, the connecting portions 94B and 95B may pass through the opening 18 of the housing 210.

In order to avoid spatial interference with the first and second magnet units 310A and 310B, a part of the support member 64 that extends through the housing 210, such as the extension portion 96, may not overlap the first and second magnet units 310A and 310B in the optical-axis direction.

The sensor base 270 may include bosses 219A and 219B, and the support member 64 may include through-openings 8A and 8B or through-holes coupled to the bosses 219A and 219B of the sensor base 270. For example, the first extension portion 94 may include a first through-opening 8A, and the second extension portion 95 may include a second through-opening. For example, the first through-opening 8A may be formed in the first connecting portion 94A, and the second through-opening 8B may be formed in the second connecting portion 95A.

For example, the bosses 219A and 219B may be formed on the lower surface of the sensor base 270 corresponding to the bosses 219A and 219B of the support member 64.

The sensor base 270 may include a protrusion 217 configured to guide coupling with the support member 64. The protrusion 217 may alternatively be referred to as a "guide portion". For example, the protrusion 217 may protrude from the lower surface of the sensor base 270. The protrusion 217 may be disposed so as to wrap around at least a part of each of the bosses 219A and 219B and/or at least a part of the extension portion 96 of the support member 64.

For example, the sensor base 270 may include a first protrusion 217A configured to wrap around the first boss 219A and at least a part of the first extension portion 94 (e.g., the coupling portion 94A) and a second protrusion 217B configured to wrap around the second boss 219B and at least a part of the second extension portion 95 (e.g., the coupling portion 95A). Based on the lower surface of the housing 210, the protruding length of the protrusion 217 may be greater than the protruding length of each of the bosses 219A and 219B. In another embodiment, the protruding length of the protrusion 217 may be equal to or less than the protruding length of each of the bosses 219A and 219B. For example, the bosses 219A and 219B and the through-openings 8A and 8B may be coupled to each other via an adhesive.

In another embodiment, the opening 18 of the support member 64 may be omitted, the bosses 219A and 219B of the sensor base 270 may be omitted, and the extension portion 96 of the support member 64 and the sensor base 270 may be coupled to each other via an adhesive.

In another embodiment, the opening 18 in the support member 64 may be omitted and a boss may be formed on the extension portion 96, or the bosses 219A and 219B may be omitted and the sensor base 270 may include a hole or recess coupled to the boss of the extension portion 96.

In another embodiment, the opening 18 of the support member 64 may be omitted, the bosses 219A and 219B of the sensor base 270 may be omitted, and the sensor base 270 may include a recess coupled to at least a part of the support member 64 (e.g., at least a part of the extension portion 96).

Referring to FIGs. 7A and 13, the support member 64 may include a seating portion 93A configured to allow the magnetic material 33 to be received or disposed therein. The seating portion 93A may be disposed or formed on the body 93. For example, the seating portion 93A may include at least one boss protruding from the upper surface of the body 93, and the at least one boss may support the side surface of the magnetic material 83. For example, the seating portion 93A may include a plurality of bosses protruding from the body 93, and the magnetic material 33 may be disposed inside the plurality of bosses. For example, the magnetic material 33 may be coupled to the body 93, e.g., the seating portion 93A, by an adhesive. For example, the seating portion 93A may be disposed in the center or a central region of the body 93.

In another embodiment, the seating portion 93A may not be in the form of a boss, but may be in the form of a recess depressed from the upper surface of the body 93, and the magnetic material 33 may be disposed in the recess of the body 93.

Referring to FIG. 14, the housing 210 may include a receiving portion 39 in which at least a part of the support member 64 is disposed or received. For example, the receiving portion 39 may be a recess depressed from the lower surface 52 of the housing 210. For example, the receiving portion 39 may be depressed from the lower surface 52 of the lower portion 42 of the housing 210.

For example, the receiving portion 39 may include a bottom surface 39A having a step formed from the lower surface 52 of the housing 210 in the optical-axis direction and a side surface 39B connecting the bottom surface 39A and the lower surface 52 of the housing 210 to each other. For example, the receiving portion 39 may have a shape that coincides with or corresponds to the shape of the support member 64. The opening 18 may be formed through the bottom surface 39A of the receiving portion 39. For example, the depth of the receiving portion 39 may be greater than the length of the support member 64 in the optical-axis direction. The support member 64 may be disposed in the receiving portion 39, and may not protrude out of the receiving portion 39. In another embodiment, the depth of the receiving portion 39 may be less than or equal to the length of the support member 64 in the optical-axis direction. In another embodiment, the support member 64 may protrude from the receiving portion 39. In another embodiment, the receiving portion 39 may be omitted.

The housing 210 may include an escape portion 38 configured to avoid spatial interference with the magnetic material 33 and/or the seating portion 93A. The escape portion 38 may correspond to, may be opposite, or may overlap the magnetic material 33 and/or the seating portion 93A in the optical-axis direction. For example, the escape portion 38 may be depressed from the lower surface 52 of the housing 210. For example, the escape portion 38 may be a recess depressed from the bottom surface 39A of the receiving portion 39 of the housing 210.

For example, the escape portion 38 may include a bottom surface 38A and a side surface 38B.

For example, the bottom surface 38A may have a step formed from the lower surface 52 of the housing 210 or the bottom surface 39A of the receiving portion 39 in the optical-axis direction. The side surface 38B may connect the bottom surface 39A of the receiving portion 39 (or the bottom surface 52 of the housing 210) and the bottom surface 38A. The escape portion 38 may have a shape that corresponds to or coincides with the shape of the magnetic material 33 and/or the seating portion 93A.

Referring to FIGs. 15 and 16, the support member 64 may be disposed so as to extend from the first corner of the housing 210 to the second corner of the housing 210, which is located opposite the first corner in the diagonal direction.

In another embodiment, the support member 64 may be disposed so as to extend from a first side of the housing 210 to a first side of the housing 210, which faces or is opposite the first side. In another embodiment, the support member 64 may be disposed so as to extend from one side of the housing 210 to one corner of the housing 210.

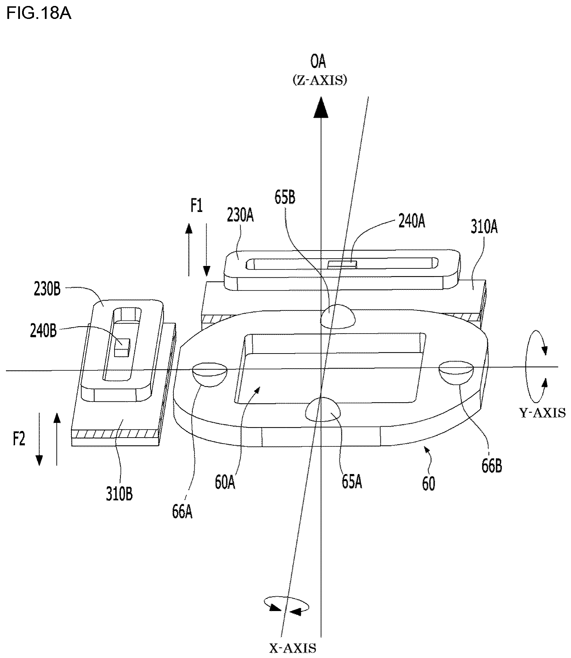

Referring to FIGs. 12 and 18A, when viewed from above or in the optical-axis direction, the first magnet unit 310A may overlap the bosses 65A and 65B of the tilting guide member 60 in the direction in which the bosses 65A and 65B face each other. In addition, when viewed from above or in the optical-axis direction, the second magnet unit 310B may overlap the bosses 66A and 66B of the tilting guide member 60 in the direction in which the bosses 66A and 66B face each other.

Referring to FIGs. 4A and 4B, the tilting guide member 60 may overlap the magnet 310 in a direction perpendicular to the optical axis. For example, the first magnet unit 310A may overlap the tilting guide member 60 in the second direction, and the second magnet unit 310B may overlap the tilting guide member 60 in the third direction.

For example, the magnet 310 may be disposed under the image sensor 810. For example, the magnet 310 may be disposed under the filter 610. For example, the magnet 310 may be located lower than the holder 140. For example, the magnet 310 may be disposed under the sensor base 270. For example, an upper surface of the magnet 310 may be located lower than the lower surface of the sensor base 270. The upper surface of the magnet 310 may be located lower than the lower surface of the holder 140. For example, the magnet 310 may be located lower than the ball member 21.

In addition, at least a part of the magnet 310 may overlap the magnetic material 31 in a direction perpendicular to the optical axis. For example, the upper surface of the magnet 310 may be located lower than the upper surface of the magnetic material 31. In another embodiment, the upper surface of the magnet 310 may be located higher than or flush with the upper surface of the magnetic material 31.

For example, the magnetic material 33 may be located lower than the magnet 310.

The magnetic material 33 may not overlap the magnet 310 in a direction perpendicular to the optical axis. In another embodiment, at least a part of the magnetic material 33 may overlap the magnet 310 in a direction perpendicular to the optical axis.

For example, an upper surface of the magnetic material 33 may be located than the upper surface of the magnet 310, such as the upper surfaces of the magnet units 310A and 310B. In another embodiment, the upper surface of the magnetic material 33 may be located higher than or flush with the upper surface of the magnet 310.

The magnetic material 33 may be located under the tilting guide member 60. For example, at least a part of the magnetic material 33 may overlap the tilting guide member 60 or the boss 66 of the tilting guide member 60 in a direction perpendicular to the optical axis. In another embodiment, for example, at least a part of the magnetic material 33 may not overlap the tilting guide member 60 or the boss 66 of the tilting guide member 60 in a direction perpendicular to the optical axis.

For example, the upper surface of the magnetic material 33 may be located lower than the lower surface of the tilting guide member 60. In another embodiment, the upper surface of the magnetic material 33 may be higher than or flush with the lower surface of the tilting guide member 60.

For example, the upper surface of the magnetic material 33 may be located higher than the lowest point of the boss 66 of the tilting guide member 60. In another embodiment, the upper surface of the magnetic material 33 may be located lower than or flush with the lowest point of the boss 66 of the tilting guide member 60.

Referring to FIGs. 12 and 13A, the first length L1 of the first magnet unit 310A in the second direction (the X-axis direction) may be less than the second length L2 of the first magnet unit 310A in the third direction (the Y-axis direction).

For example, the first length L1 may be less than the length M2 of the tilting guide member 60 in the second direction. For example, the first length L1 may be greater than the length M1 between an outer circumferential surface and an inner circumferential surface of the tilting guide member 60 in the second direction. For example, M1 may be the shortest distance between the outer surface of the tilting guide member 60 and the opening 60A of the tilting guide member 60 in the second direction. In another embodiment, L1 may be equal to or less than M1.

For example, the first length L1 may be less than the length M5 of the opening 60A of the tilting guide member 60 in the second direction. In addition, for example, the first length L1 may be less than the length of the protrusion 49 of the housing 210 in the second direction. In another embodiment, the first length L1 may be greater than or equal to a length of the opening 60A of the tilting guide member 60 in the second direction.

For example, the second length L2 may be less than the length M4 of the tilting guide member 60 in the third direction. In another embodiment, the second length L2 may be greater than or equal to the length of the tilting guide member 60 in the third direction.

For example, the second length L2 may be greater than the length M6 of the opening 60A of the tilting guide member 60 in the third direction. For example, the second length L2 may be greater than the length of the protrusion 49 of the housing 210 in the third direction. In another embodiment, the second length L2 may be less than or equal to the length M6 of the opening 60A of the tilting guide member 60 in the third direction.

Referring to FIGs. 12 and 13A, the third length L3 of the second magnet unit 310B in the third direction (the Y-axis direction) may be less than the fourth length L4 of the second magnet unit 310B in the second direction (the X-axis direction).

For example, the third length L3 may be less than the length M4 of the tilting guide member 60 in the third direction. For example, the third length L3 may be greater than the length M3 between the outer circumferential surface and the inner circumferential surface of the tilting guide member 60 in the third direction. For example, M3 may be the shortest distance between the outer surface of the tilting guide member 60 and the opening 60A of the tilting guide member 60 in the third direction. In another embodiment, L3 may be equal to or less than M3.

For example, the third length L3 may be less than the length M6 of the opening 60A of the tilting guide member 60 in the third direction. In addition, for example, the third length L3 may be less than the length of the protrusion 49 of the housing 210 in the third direction. In another embodiment, the third length L3 may be greater than or equal to the length of the opening 60A of the tilting guide member 60 in the third direction.

For example, the fourth length L4 may be less than the length M2 of the tilting guide member 60 in the second direction. In another embodiment, the fourth length L4 may be greater than or equal to the length of the tilting guide member 60 in the second direction.

For example, the fourth length L4 may be greater than the length M5 of the opening 60A of the tilting guide member 60 in the second direction. For example, the fourth length L4 may be greater than the length of the protrusion 49 of the housing 210 in the second direction. In another embodiment, the fourth length L4 may be less than or equal to the length of the opening 60A of the tilting guide member 60 in the second direction.

For example, the third length L3 may be equal to the first length L1. In another embodiment, L3 may be less than or greater than L1. For example, the second length L2 may be equal to the fourth length L4. In another embodiment, L2 may be less than or greater than L4.

For example, the upper surface of the magnet 310 may be located lower than the upper surface of the protrusion 49 of the housing 210. This serves to ensure that there is sufficient space to avoid spatial interference between the magnet 310 and the lower surface of the sensor base.

In another embodiment, the upper surface of the magnet 310 may be located higher than the upper surface of the protrusion 49 of the housing 210. In another embodiment, the upper surface of the magnet 310 and the upper surface of the protrusion 49 of the housing 210 may be flush with each other.

For example, the upper surface of the magnet 310 may be located lower than the highest point of the boss 65 of the tilting guide member 60.

When viewed from above or in the optical-axis direction, the bosses 65A and 65B, the magnet 31, and the first magnet unit 310A may overlap each other in the second direction. When viewed from above or in the optical-axis direction, the bosses 66A and 66B, the magnet 31, and the second magnet unit 310B may overlap each other in the third direction.

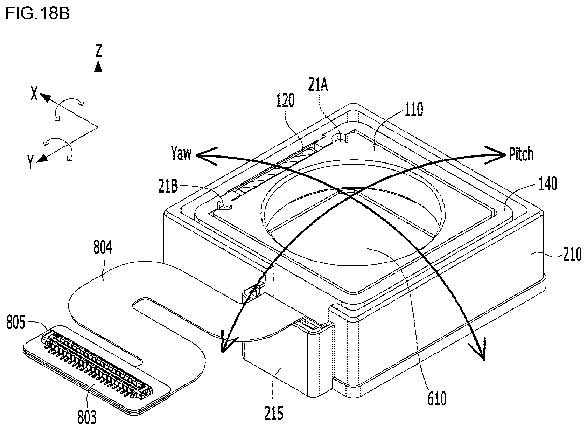

FIG. 18A is a view illustrating electromagnetic forces F1 and F2 due to interaction between the magnet units 310A and 310B and the coil units 230A and 230B and the motion of the tilting guide member 60, and FIG. 18B shows the motion of the OIS moving unit 100 due to the electromagnetic forces of FIG. 18A. FIG. 18A shows the electromagnetic force when each of the first and second magnet units 310A and 310B is a two-pole magnet having an N pole and an S pole.

The motion of the OIS moving unit by an OIS driving unit will be described with reference to FIGs. 18A and 18B. The "OIS driving unit" may be referred to as a driving unit. The OIS driving unit may tilt the OIS moving unit (e.g., the moving module) relative to the stationary unit (e.g., the housing 210). For example, the OIS driving unit may include a coil 230 and a magnet 310. In addition, the OIS driving unit may include a position sensor 240.

First electromagnetic force F1 may be generated by interaction between the first magnet unit 310A and the first coil unit 230A. For example, the first electromagnetic force F1 may be exerted in the optical-axis direction, such as the upward direction or the downward direction.

The OIS moving unit may be tilted about the second axis (e.g., the Y-axis) (or the second boss 66) by the first electromagnetic force F1. For example, the OIS moving unit may be second-axis tilted by the first electromagnetic force F1. Here, second-axis (Y-axis) tilting means that the OIS moving unit is tilted about the second axis (the Y-axis) or the OIS moving unit is rotated leftward and rightward about the second axis (the Y-axis) by a predetermined angle.

For example, the tilting guide member 60 may be tilted about the second axis (e.g., the Y-axis) (or the bosses 66A and 66B of the second boss 66) by the first electromagnetic force F1. For example, the tilting guide member 60 may be second-axis tilted by the first electromagnetic force F1.

Referring to FIG. 4B, a gap or space must be present between the tilting guide member 60 and the OIS moving unit (e.g., the sensor base 270) by the first boss 65 of the tilting guide member 60 in order for the OIS moving unit to be tilted about the second axis (or the second boss 66 of the tilting guide member 60). For example, a gap or space in which the tilting guide member 60 is movable may be present between the upper surface 6A of the tilting guide member 60 and the OIS moving unit (e.g., the sensor base 270). For example, the upper surface 6A of the tilting guide member 60 may be spaced apart from the OIS moving unit (e.g., the sensor base 270) or the lower surface of the sensor base 270.

Second electromagnetic force F2 may be generated by interaction between the second magnet unit 310B and the second coil unit 230B. For example, the second electromagnetic force F2 may be exerted in the upward direction or the downward direction.

The OIS moving unit may be tilted about the first axis (e.g., the X-axis) (or the ball member 62) by the second electromagnetic force F2. For example, the OIS moving unit may be first-axis tilted by the second electromagnetic force F2. Here, first-axis (X-axis) tilting means that the OIS moving unit is tilted about the first axis (the X-axis) or the OIS moving unit is rotated leftward and rightward about the first axis (the X-axis) by a predetermined angle.

For example, the tilting guide member 60 may be tilted about the first axis (e.g., the X-axis) (or the ball member 62) by the second electromagnetic force F2. For example, the tilting guide member 60 may be first-axis tilted by the second electromagnetic force F2.

Referring to FIG. 4A, a gap or space must be present between the tilting guide member 60 and the stationary unit (e.g., the housing 210) by the second boss 66 of the tilting guide member 60 in order for the OIS moving unit to be tilted about the first axis (or the ball member 62).

For example, a gap or space in which the tilting guide member 60 is movable may be present between the lower surface 6B of the tilting guide member 60 and the stationary unit (e.g., the housing 210). For example, the lower surface 6B of the tilting guide member 60 may be spaced apart from the stationary unit (e.g., the housing 210) or the upper surface of the lower portion 42 of the housing 210.

For example, the tilting guide member 60 may be brought into contact with the stationary unit (e.g., the housing 210) by first-axis or second-axis tilting. At this time, the stationary unit may serve as a stopper configured to inhibit tilting of the OIS moving unit.

In another embodiment, the first electromagnetic force due to the interaction between the first magnet unit and the first coil unit and the second electromagnetic force due to the interaction between the second magnet unit and the second coil unit may act in a direction different from the optical axis (e.g., a direction perpendicular to the optical axis, e.g., the X-axis direction or the Y-axis direction).

In a camera device configured such that an image sensor is stationary and a lens is moved in a direction perpendicular to the optical axis for hand-tremor compensation or shake compensation ("Comparative Example 1"), distortion of an image may occur. Also, in a camera device configured such that a lens is stationary and an image sensor is moved or tilted for hand-tremor compensation or shake compensation ("Comparative Example 2"), image distortion may occur at edges or corners of the image sensor. As such, in Comparative Example 1 and Comparative Example 2, the image sensor and the lens are separated and only one of the image sensor and the lens is moved or tilted, which may cause image distortion during hand-tremor compensation, and hand-tremor compensation at wide angles may be difficult.

In the embodiment, for hand-tremor compensation, the OIS driving unit may tilt the OIS moving unit about the first axis or the second axis or may rotate the OIS moving unit within a predetermined angular range. In the embodiment, since the OIS moving unit includes a lens module 400 and an image sensor 810, the tilting direction (or the rotating direction) and the tilting angle (or the rotating angle) of the lens module 400 (e.g., a lens or a lens module) (or the bobbin 110) may be the same or nearly the same as the tilting direction (or the rotating direction) and the tilting angle (or the rotating angle) of the image sensor 810 when OIS is performed.

In the embodiment, the lens module 400 (or the bobbin 110) and the image sensor 810 may be simultaneously tilted or rotated together when OIS is performed, 100% image resolution without image distortion may be obtained, and hand-tremor compensation or shake compensation at wide angles may be possible.

Also, in the embodiment, since the OIS moving unit including the lens module 400 (or the bobbin 110) and the image sensor 810 is tilted or rotated, broadband shake compensation may be possible. Also, in the embodiment, since distortion-free image compensation is mechanically possible, load during image processing is low, whereby current consumption may be reduced, when compared to Comparative Example 1 and Comparative Example 2.

Also, in the embodiment, since the tilting guide member 60 is used to tilt the OIS moving unit, the OIS moving unit may be stably, precisely, and accurately tilted, when compared to an example using only a ball member or a shaft member, thereby improving the reliability of OIS operation.

Also, in the embodiment, power consumption required to perform OIS may be reduced by the bent portions 804D and 804E and the third portion 804C of the fourth substrate 804, which is a flexible substrate, of the circuit board 800.

Also, in the embodiment, since the tilting guide member 60 is disposed in the seating portion 69 of the housing 210 and the protrusion 49 of the housing 210 overlaps the opening 60A of the tilting guide member 60, the height or length of the camera device 200 in the optical-axis direction may be reduced.

Also, in the embodiment, since at least a part of the magnetic material 31 is disposed in the opening 60A of the tilting guide member 60, the distance between the magnetic material 31 and the magnetic material 33 may be reduced, which may increase attractive force or retentive force necessary to support the OIS moving unit, whereby stable OIS operation may be performed.

Also, in the embodiment, since the first magnet unit 310A and the second magnet unit 310B, which are driving magnets for hand-tremor compensation, are disposed on the lower portion 42 of the housing 210 rather than on the side portions 71A to 71D of the housing 210, the thickness of the side portions 71A to 71D of the housing 210 (or the length thereof in a direction perpendicular to the optical axis) may be reduced, thereby enabling the camera device to be designed for mounting a large-aperture lens.

For example, each of the transverse length and the longitudinal length of the camera device 200 according to the embodiment may be 12 mm to 23 mm, and the height of the camera device 200 may be 4 mm to 12 mm. For example, the transverse length and the longitudinal length of the camera device 200 may be the transverse length and the longitudinal length of the cover member 300, and the height of the camera device 200 may be the distance from the lower surface of the housing 210 to the upper surface of the upper plate of the cover member 300. The lens mounted in the camera device 200 may have an aperture of 9 mm to 19 mm. In another embodiment, the lens mounted in the camera device 200 may have an aperture of 9 mm to 15 mm. If the lens has an aperture greater than 19 mm, the size of the coil 120 and the magnet 130 may be constrained to the extent that the coil 120 and the magnet 130 cannot be disposed or are not sufficient to perform AF.

Furthermore, if the driving magnet for hand-tremor compensation is disposed on the side portion of the housing 210, the length of the camera device 200 in the optical-axis direction may be constrained due to the length of the driving magnet in the optical-axis direction. In the embodiment, however, the driving magnet 310 is disposed on the lower portion 42 of the housing 210, whereby it is possible to design the camera device 200 such that the length of the camera device 200 in the optical-axis direction is reduced without being constrained by the length of the driving magnet in the optical-axis direction. Also, in the embodiment, the driving magnet 310 is disposed on the seating portions 141A and 141B of the housing 210, whereby it is possible to further reduce the length of the camera device 200 in the optical-axis direction.

FIG. 19 is a perspective view of the camera device 200 including the lens module 400.

Referring to FIG. 19, the lens module 400 may be coupled to the bobbin 100, and may be moved with the bobbin 110 in the optical-axis direction. For example, the lens module 400 may include at least one of a lens and a lens barrel.

In the embodiment, the lens module 400 and image sensor 810 may be simultaneously X-axis tilted or Y-axis tilted in the same direction and by the same angle during hand-tremor compensation or shake compensation.

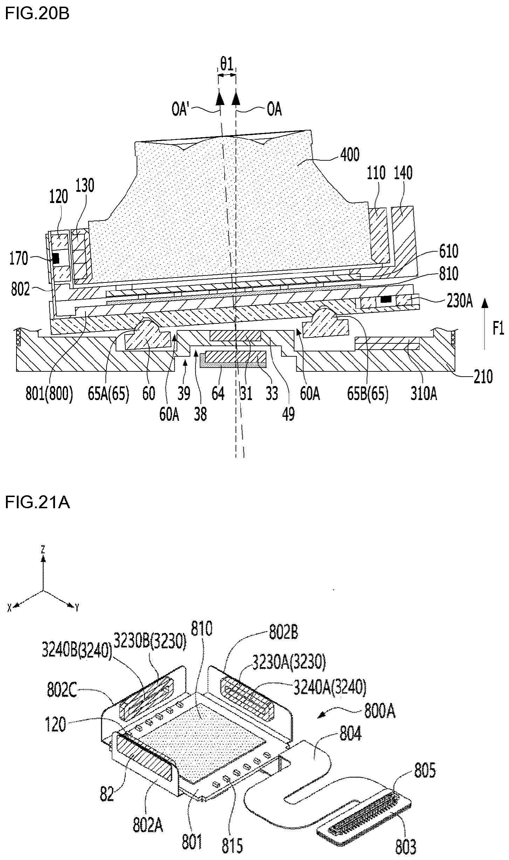

FIG. 20A shows a first position of the OIS moving unit 100, and FIG. 20B shows a second position of the OIS moving unit 100.

Referring to FIGs. 18A, 20A, and 20B, the OIS moving unit 100 may be tilted by a predetermined angle θ1 by force F1 due to interaction between the first magnet unit 310A and the first coil unit 230A. That is, when the OIS moving unit 100 is moved from the first position to the second position, both the image sensor 810 and the lens module 400 may be tilted simultaneously by the predetermined angle θ1. In addition, when the OIS moving unit 100 is moved from the first position to the second position, the tilting guide member 60 may be tilted by the predetermined angle θ1 together with the image sensor 810 and the lens module 400.

As a result, in the embodiment, it is possible to obtain 100% image resolution without image distortion and to perform hand-tremor compensation or shake compensation at wide angles. A description of FIGs. 20A and 20B may be applied or analogically applied to X-axis tilting of the OIS moving unit 100.

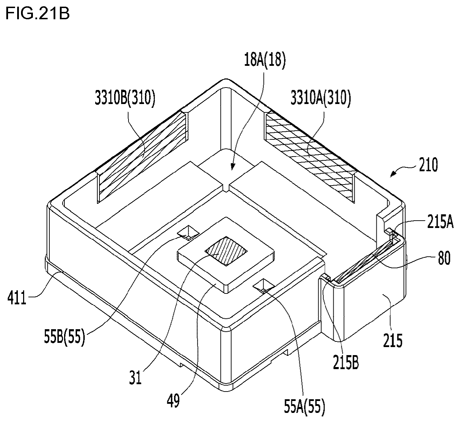

FIG. 21A shows the disposition of a coil 3230 and a position sensor 3240 according to another embodiment, and FIG. 21B shows the disposition of a magnet 3310 corresponding to the coil 3230 of FIG. 21A. The coil 3230 may be a configuration corresponding to the coil 230 of FIG. 2A, and the magnet 3310 may be a configuration corresponding to the magnet 310 of FIG. 2A. The position sensor 1240 may be a configuration corresponding to the position sensor 240 of FIG. 2A.

Referring to FIGs. 21A and 21B, for example, a first coil unit 3230A may correspond to, may be opposite, or may overlap a first magnet unit 3310A in the second direction (the X-axis direction). A second coil unit 3230B may correspond to, may be opposite, or may overlap a second magnet unit 3310B in the third direction (the Y-axis direction). For example, at least a part of the first coil unit 3230A may be opposite or may overlap the coil 120 in the second direction.

For example, a second substrate 802 of a circuit board 800A may include a first extension portion 802A that is disposed on, coupled to, or fixed to the first side portion 41A of the holder 140. In addition, the second substrate 802 may include a second extension portion 802B that is disposed on, coupled, or fixed to the second side portion 41B of the holder 140. In addition, the second substrate 802 may include a third extension portion 802C that is disposed on, coupled, or fixed to the third side portion 41C of the holder 140.

For example, the first extension portion 802A may be connected to a first side surface of a first substrate 801, the second extension portion 802B may be connected to a second side surface of the first substrate 801, which is opposite the first side surface, and the third extension portion 802C may be connected to a third side surface of the first substrate 801 located between the first and second side surfaces of the first substrate 801. For example, each of the first to third extension portions 802A to 802C may be bent from a corresponding one of the first to third side surfaces of the first substrate 801. Each of the first to third extension portions 802A to 802C may extend upwardly from the first substrate 801.

For example, the first coil unit 3230A may be disposed on the second side portion 41B of the holder 140, and the second coil unit 3230B may be disposed on the third side portion 41C of the holder 140. For example, the holder 140 of FIG. 21A may include a first seating portion (not shown) disposed on the second side portion 41B and configured to allow the first coil unit 3230A to be disposed thereon and a second seating portion (not shown) disposed on the third side portion 41C and configured to allow the second coil unit 3230B to be disposed thereon. For example, each of the first and second seating portions of the holder 140 may be in the form of a through-hole or a recess.

For example, the coil 120 may be disposed on or coupled to the first extension portion 802A of the second substrate 802, and may be conductively connected to the first extension portion 802A.

For example, the first coil unit 3230A may be disposed on or coupled to the second extension portion 802B of the second substrate 802, and may be conductively connected to the second extension portion 802B. The second coil unit 3230B may be disposed on or coupled to the third extension portion 802C of the second substrate 802, and may be conductively connected to the third extension portion 802C.

For example, each of the first and second coil units 3230A and 3230B may include a hollow or a hole. For example, each of the first and second coil units 3230A and 3230B may have a ring shape or a closed curved shape. For example, the first coil unit 3230A may have a ring shape wound around a straight line perpendicular to the optical axis OA and perpendicular to the outer surface of the second side portion 41B of the holder 140 as an axis, and the second coil unit 3230B may have a ring shape wound around a straight line perpendicular to the optical axis OA and perpendicular to the outer surface of the third side portion 41C of the holder 140 as an axis. For example, each of the first and second coil units 3230A and 3230B may have a ring shape configured such that the length thereof in the transverse direction (or the third direction) is greater than the length thereof in the longitudinal direction (or the optical-axis direction).

For example, a first sensor 3240A may be disposed in a hollow (or a hole) of the first coil unit 3230A, and a second sensor 3240B may be disposed in a hollow (or a hole) of the second coil unit 3230B. In another embodiment, the first sensor 3240A may be disposed outside the hollow (or the hole) of the first coil unit 3230A, and the second sensor 3240B may be disposed outside the hollow (or the hole) of the second coil unit 3230B.

For example, at least a part of the first sensor 3240A may correspond to, may be opposite, or may overlap at least a part of the first magnet unit 3310A in the second direction. For example, the center of the first sensor 3240A may overlap the first magnet unit 3310A in the second direction. At least a part of the second sensor 3240B may correspond to, may be opposite, or may overlap at least a part of the second magnet unit 3310B in the third direction. For example, the center of the second sensor 3240A may overlap the second magnet unit 3310B in the third direction.

The magnet 3310 may include a first magnet unit 3310A disposed on the second side portion 71B of the housing 210 and a second magnet unit 3310B disposed on the third side portion 71B of the housing 210.

For example, the first magnet unit 3310A and the second magnet unit 3310B may be disposed so as to be misaligned with each other in the second direction or the third direction. For example, the first magnet unit 3310A and the second magnet unit 3310B may be disposed on the housing 210 so as not to overlap each other in the second direction or the third direction. For example, the first magnet unit 3310A and the second magnet unit 3310B may be disposed on two different side portions of the housing 210 so as not to overlap each other in the second direction or the third direction.

In another embodiment, the magnet 1310 may be disposed on the holder 140, and the coil 1230 may be disposed on the housing 210. For example, in FIGs. 21A and 21B, the magnet 3310 and the coil 3230 may be disposed such that the positions thereof are reversed. In this case, the camera device 200 may include a separate energizing portion configured to conductively connect the second coil 2230 and the circuit board 800A to each other, such as a circuit board, a circuit member, or a conductive member.

The housing 210 may include a first seating portion (not shown) disposed on the second side portion 71B of the housing 210 and configured to allow the first magnet unit 3310A to be disposed thereon and a second seating portion (not shown) disposed on the third side portion 71C of the housing 210 and configured to allow the second magnet unit 3310B to be disposed thereon. For example, each of the first and second seating portions of the housing 210 may be in the form of a through-hole or a recess.

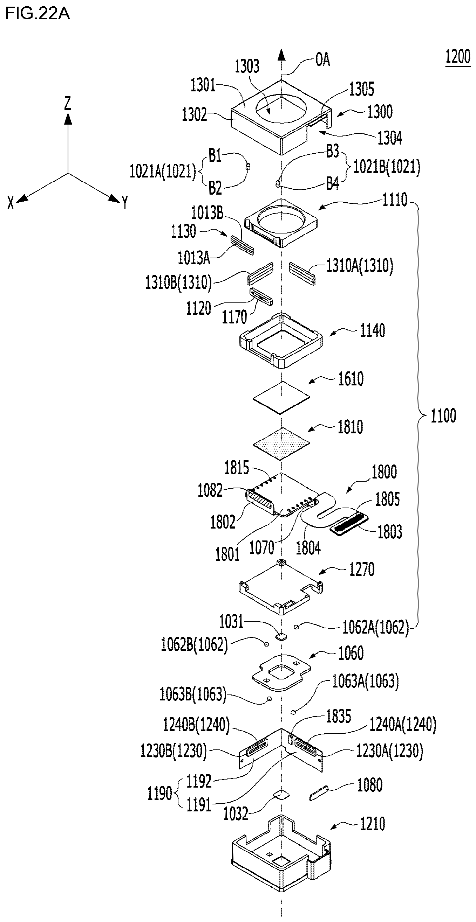

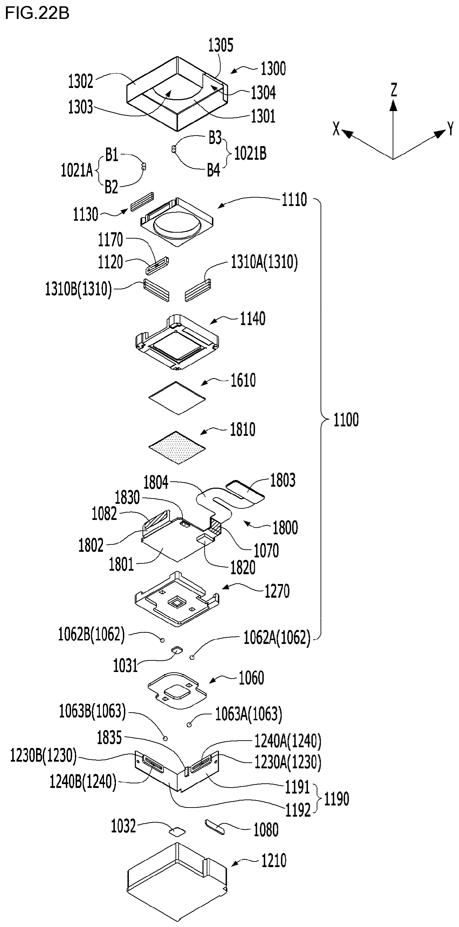

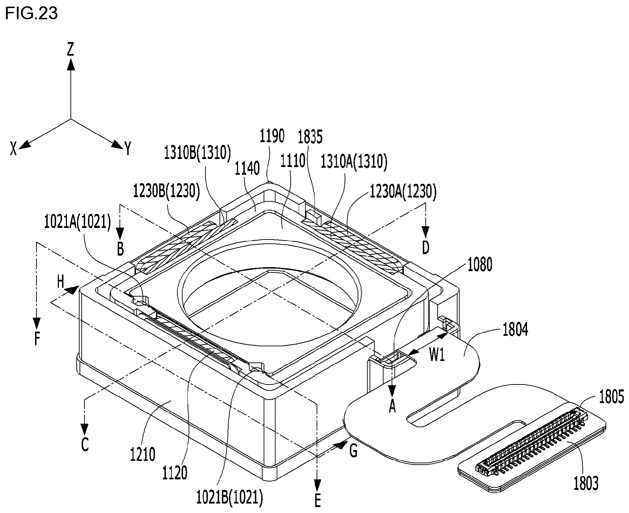

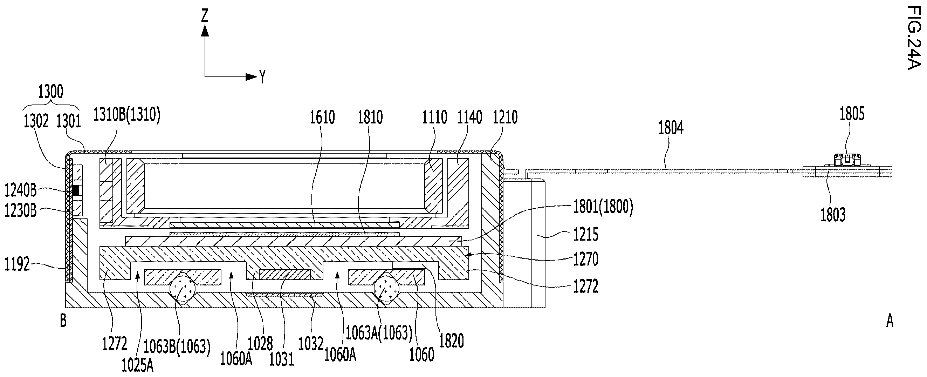

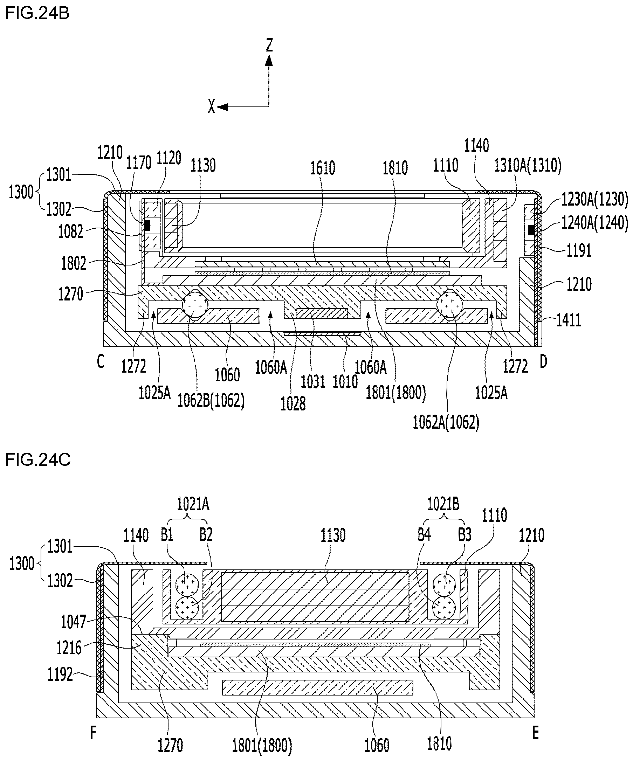

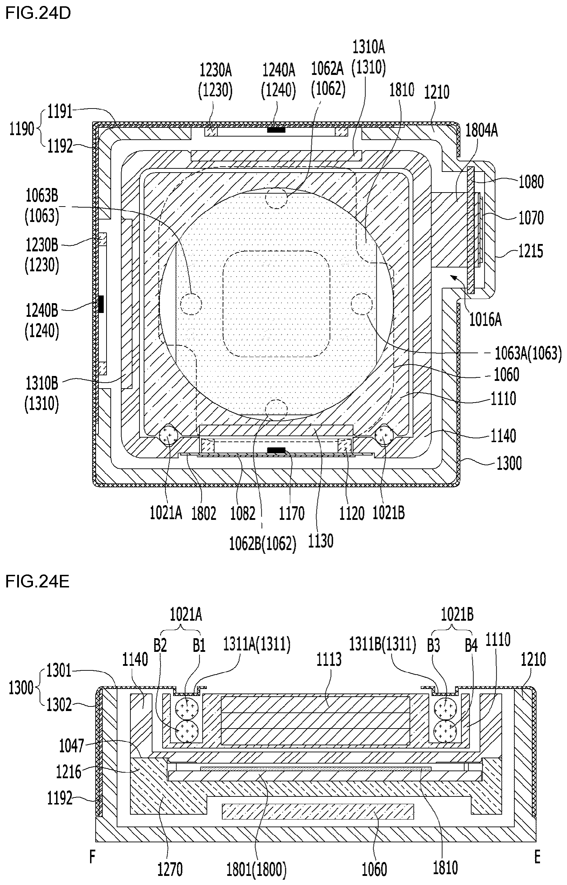

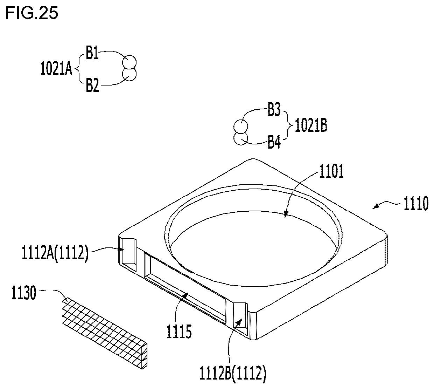

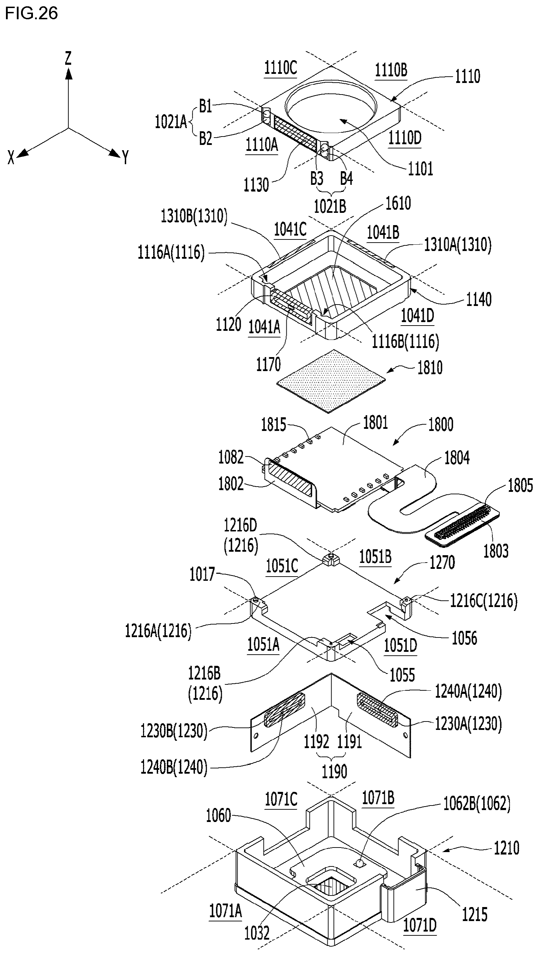

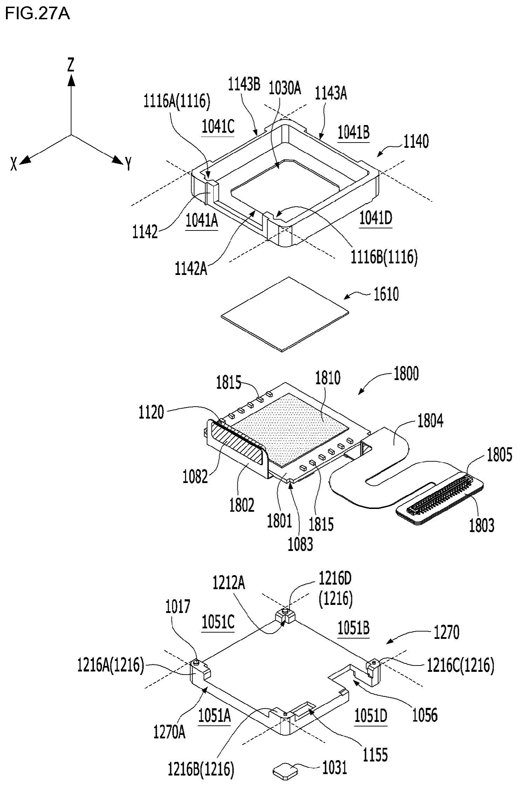

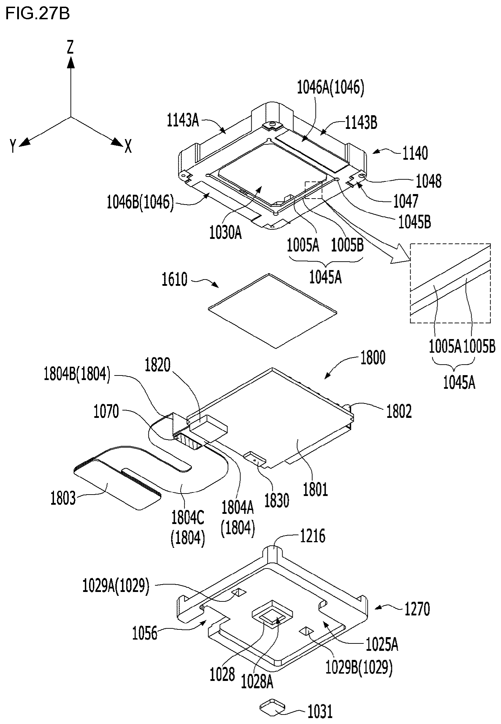

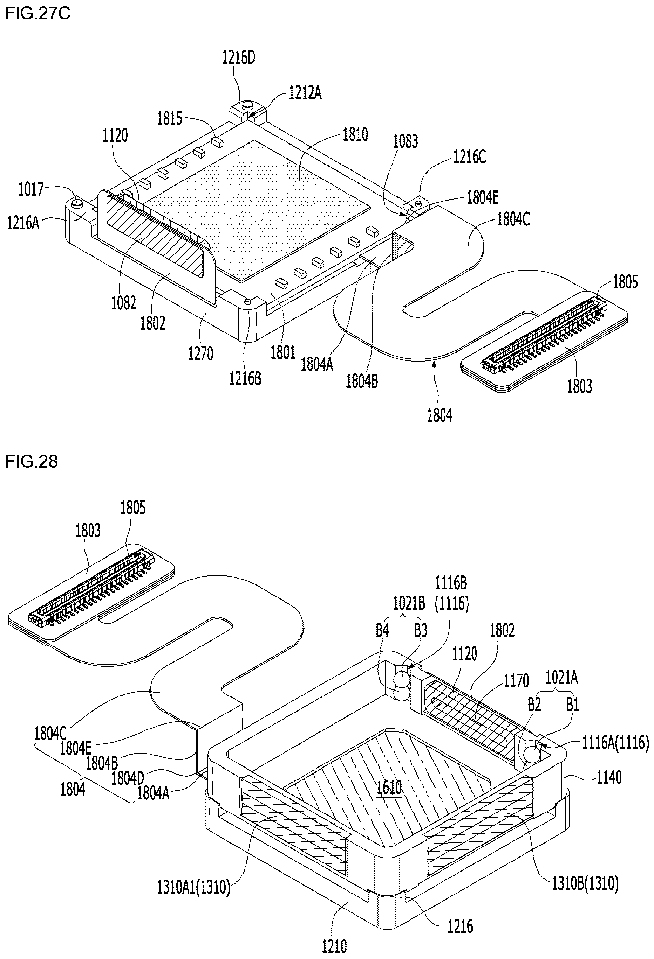

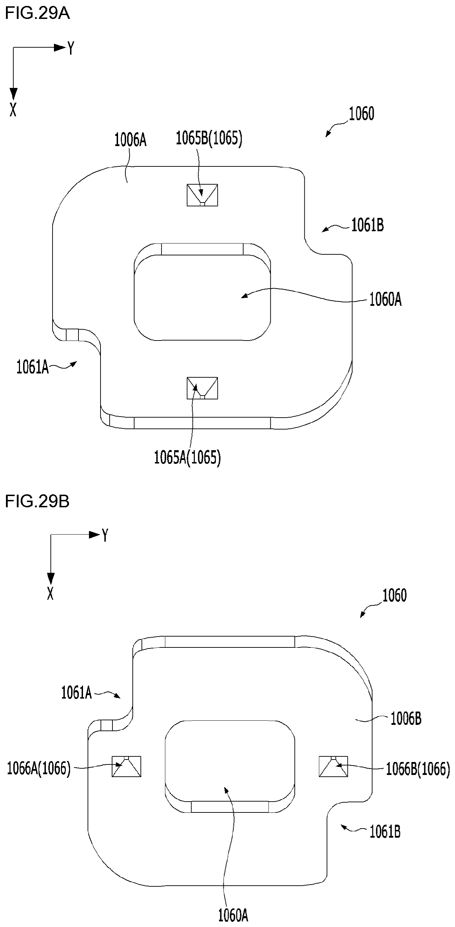

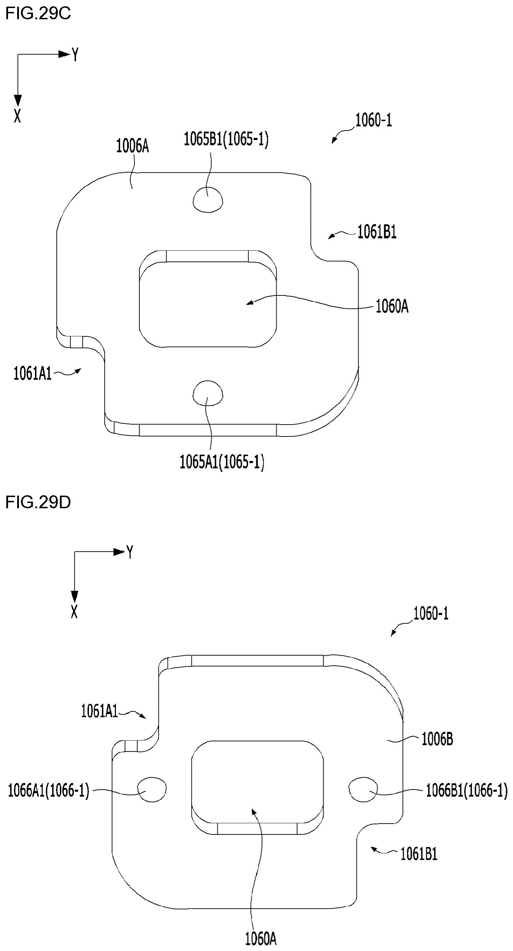

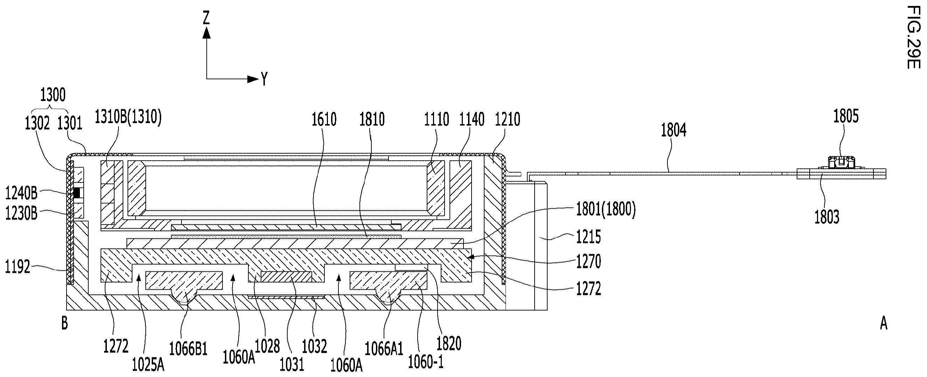

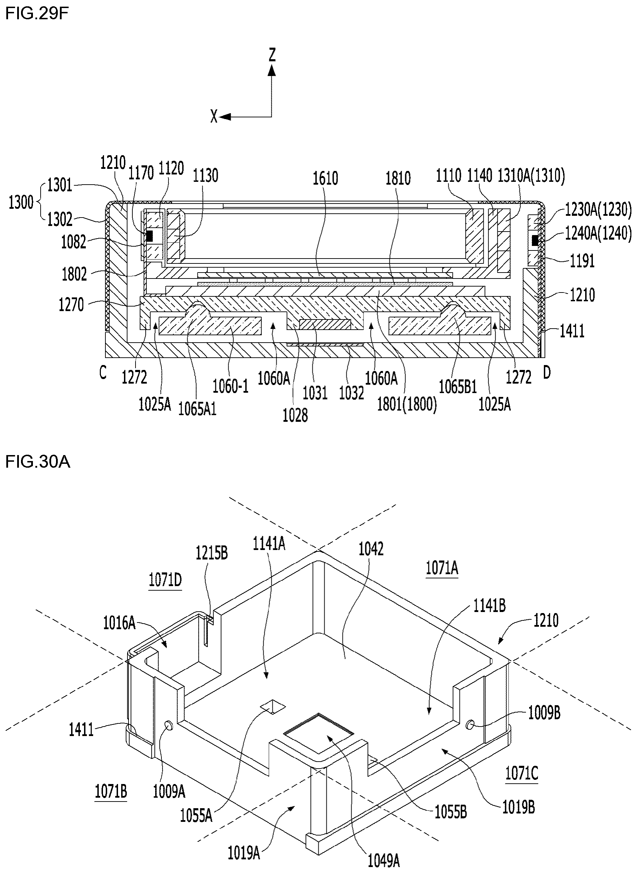

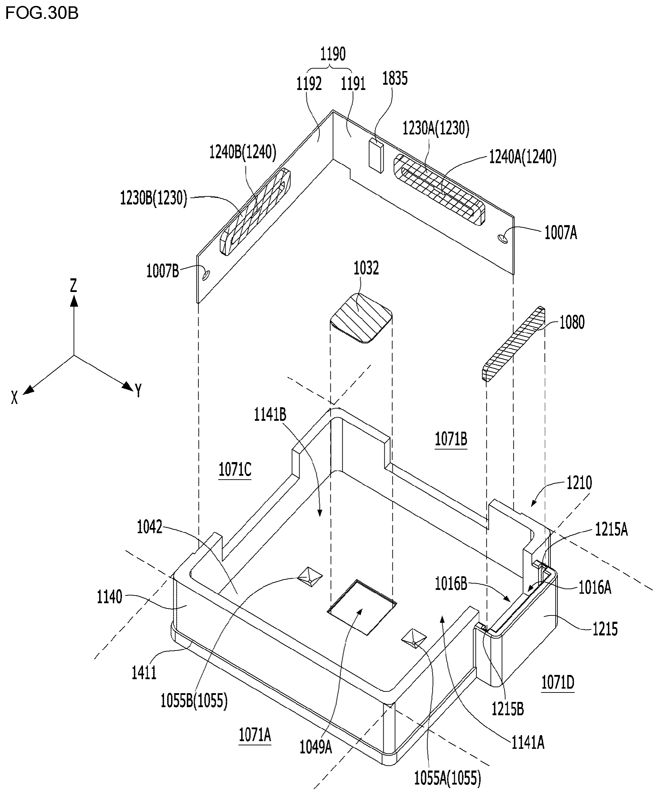

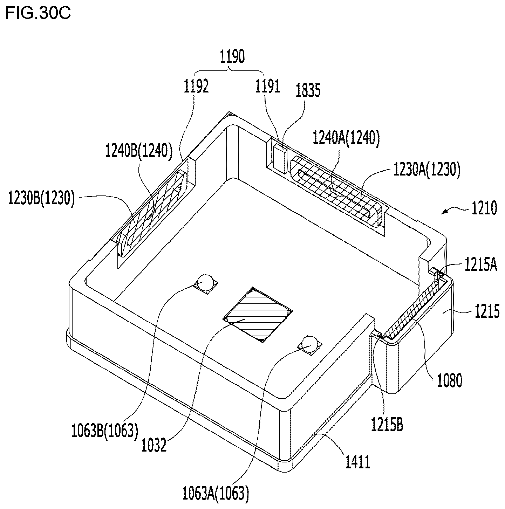

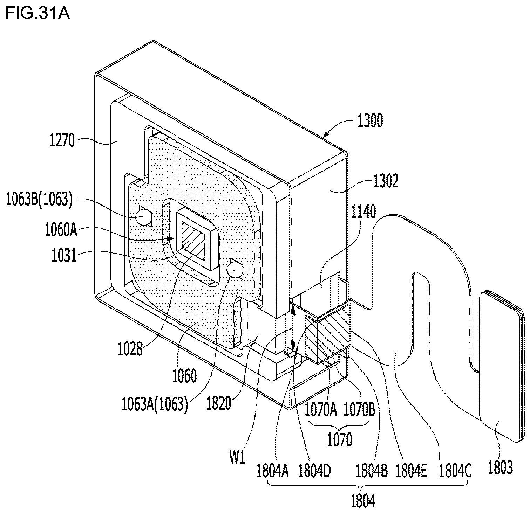

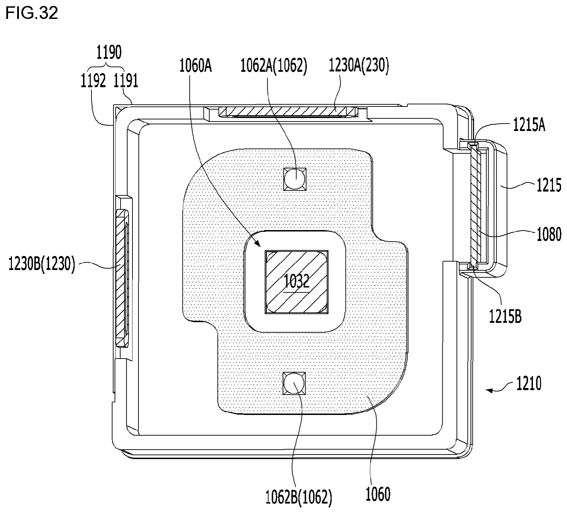

FIG. 22A is a first exploded perspective view of a camera device 1200 according to another embodiment, FIG. 22B is a second exploded perspective view of the camera device 1200 of FIG. 22A, FIG. 23 is a perspective view of the camera device 1200 of FIG. 22A excluding a cover member 1300, FIG. 24A is a sectional view of the camera device 1200 in direction AB of FIG. 23, FIG. 24B is a sectional view of the camera device 1200 in direction CD of FIG. 23, FIG. 24C is a sectional view of the camera device 1200 in direction EF of FIG. 23, FIG. 24D is a sectional view of the camera device 1200 in direction GH of FIG. 23, FIG. 24E is a sectional view showing a boss 1311 of the cover member 1300, FIG. 25 is an exploded perspective view of a bobbin 1110, a rolling member 1021, and a magnet 1130, FIG. 26 is a separated perspective view of the bobbin 1110, a holder 1140, a circuit board 1800, a sensor base 1270, and a housing 1210, FIG. 27A is a first separated perspective view of the holder 1140, a filter 1610, the circuit board 1800, the sensor base 1270, and a magnetic material 1031, FIG. 27B is a second separated perspective view of the holder 1140, the filter 1610, the circuit board 1800, the sensor base 1270, and the magnetic material 1031, FIG. 27C is a coupled perspective view of the sensor base 1270 and the circuit board 1800, FIG. 28 is a perspective view of the holder 1140, the rolling member 1021, a coil 1120, a position sensor 1170, the circuit board 1800, and the sensor base 1270, FIG. 29A is a front perspective view of a tilting guide member 1060, FIG. 29B is a rear perspective view of the tilting guide member 1060, FIG. 29C is a front perspective view of a tilting guide member 1060-1 according to another embodiment, FIG. 29D is a rear perspective view of the tilting guide member 1060-1 of FIG. 29C, FIG. 29E is a sectional view of a camera device including the tilting guide member 1060-1 according to the embodiment of FIGs. 29C and 29D in direction AB of FIG. 24A, FIG. 29F is a sectional view of the camera device including the tilting guide member 1060-1 according to the embodiment of FIGs. 29C and 29D in direction CD of FIG. 24B, FIG. 30A is a perspective view of the housing 1210, FIG. 30B is an exploded perspective view of the housing 1210, a coil 1230, a magnetic material 1032, a position sensor 1240, a circuit board 1190, and a movement inhibition portion, FIG. 30C is a coupled perspective view of the housing 1210, a rolling member 1063, the coil 1230, the circuit board 1190, the position sensor 1240, the magnetic material 1032, and the movement inhibition portion 1080, FIG. 31A is a perspective view of the cover member 1300, the sensor base 1270, the holder 140, the circuit board 1800, the magnetic material 1031, the rolling member 1063, the tilting guide member 1060, and a reinforcement member 1070, and FIG. 32 is a perspective view of the housing 1210, the magnetic material 1032, the coil 1230, the movement inhibition portion 1080, the tilting guide member 1060, and a rolling member 1062.

Referring to FIGs. 22A to 32, the camera device 1200 may include a stationary unit, an AF moving unit, an OIS moving unit 1100, and a support unit. The OIS motion unit 1100 may alternatively be referred to as a "motion unit," a "shaking unit," a "moving unit, a "moving module," or a "tilting module."

The stationary unit may be a stationary element. That is, the stationary unit may not be moved in the optical-axis direction. Alternatively, the stationary unit may not be moved or tilted in a direction perpendicular to the optical axis. In addition, a configuration coupled to the stationary unit may be a stationary unit.

The stationary unit may include a housing 1210. The stationary unit may include a cover member 1300. For example, the stationary unit may include a configuration disposed on or coupled to the housing 1210 or the cover member 1300. For example, the stationary unit may include at least one of a coil 1230, a magnetic material 1032, and a movement inhibition portion 1080 disposed on the housing 1210.

The AF moving unit may move relative to the stationary unit in the optical-axis direction. For example, the AF moving unit may include a bobbin 1110. In another embodiment, the AF moving unit may further comprise a configuration (e.g., a magnet 1130) coupled to the bobbin 1110. In another embodiment, the AF moving unit may further include a lens module 1400 (see FIG. 24) coupled to the bobbin 1110.

The OIS moving unit 100 (see FIG. 22A) may be moved and/or tilted leftward or rightward about the first axis (e.g., the X-axis (e.g., pitch)) that intersects the optical axis (or the optical-axis direction) with respect to the stationary unit. In addition, the OIS moving unit may be moved and/or tilted leftward or rightward about the second axis (e.g., the Y-axis (e.g., yaw)) that intersects the optical axis (or the optical-axis direction) with respect to the stationary unit.

For example, the first axis may intersect the optical axis (or the optical-axis direction), and the second axis may intersect the optical axis (or the optical-axis direction) and the first axis. For example, the first axis may be perpendicular to the optical-axis direction, and the second axis may be perpendicular to the optical-axis direction and the first axis.

For example, the OIS moving unit may include the AF moving unit. In addition, the OIS moving unit may include an image sensor 1810. The OIS moving unit may include a circuit board 1800 on which the image sensor 1810 is disposed. In addition, the OIS moving unit may include a sensor base 1270 on which at least a part of the circuit board 1800 is disposed. In addition, the OIS moving unit may include a holder 1140 coupled to the sensor base 1270. The OIS moving unit may alternatively be referred to as a first moving unit (or a first motion unit), and the AF moving unit may alternatively be referred to as a second moving unit (or a second motion unit). For example, the first moving unit may include a sensor base 1270 and a circuit board 1800.

For example, the OIS moving unit may include a configuration disposed on or coupled to at least one of the holder 1140, the sensor base 1270, and the circuit board 1800. For example, the OIS moving unit may include a magnet 1310 and a magnet 1130 disposed on the holder 1140. For example, the OIS moving unit may include a magnetic material 1031 disposed on the sensor base 1270. For example, the OIS moving unit may include at least one of an image sensor 1810, a position sensor 1170, a coil 1120, a gyro sensor 1820, a circuit element 1815, and a controller 1830 disposed on the circuit board 1800.

The support unit may support the OIS moving unit with respect to the stationary unit. For example, the support unit may include a tilting guide member 1060. For example, the support unit may further include rolling members 1062 and 1063.

The bobbin 1110 is configured to receive a lens or a lens barrel and may be disposed in the holder 1140. The bobbin 1110 may alternatively be referred to as a "lens holder" or a "lens carrier."

The bobbin 1110 may move in the optical-axis direction. For example, the bobbin 1110 may be moved in the first direction (e.g., the Z-axis direction) by electromagnetic interaction between the coil 1120 and the magnet 1130. The coil 1120 and the magnet 1130 may be an AF driving unit configured to move or drive the AF moving unit.

In addition, the bobbin 1110 may be included in the OIS moving unit, and the bobbin 1110 may be tilted about the first axis or the second axis or may be rotated by a predetermined angle.

Referring to FIG. 25, the bobbin 1110 may include an opening 1101 for coupling to the lens module 1400. The shape of the opening 1101 of the bobbin 1110 may match the shape of the lens module 1400 mounted thereto, and may be, without being limited to, circular, oval, or polygonal.

Although not shown in FIG. 22A, the bobbin 1110 may include at least one stopper disposed on at least one of an upper surface and a lower surface thereof. The stopper of the bobbin 1110 may protrude from the upper surface (or the lower surface) of the bobbin 1110 in the first direction or an upward direction (or a downward direction), and may prevent the upper surface of the bobbin 1110 from directly colliding with an inner surface of an upper plate 1301 of the cover member 1300 or a lower portion of the holder 1140.

The bobbin 1110 may include a seating portion 1115 configured to allow the magnet 1130 to be seated or disposed thereon. For example, the seating portion 1115 may be a recess depressed from an outer surface of the bobbin 1110.

Referring to FIG. 26, the bobbin 1110 may include a plurality of side surfaces 1110A to 1110D or outer surfaces. For example, the bobbin 1110 may include a first side surface 1110A, a second side surface 1110B, a third side surface 1110C, and a fourth side surface 1110D.

For example, the second side surface 1110B may face the first side surface 1110A or may be opposite the first side surface 1110A with respect to the optical axis OA. The third side surface 1110C and the fourth side surface 1110D may be located between the first side surface 1110A and the second side surface 1110B. For example, the fourth side surface 1110D may face the third side surface 1110C or may be opposite the third side surface 1110C with respect to the optical axis OA. In FIG. 6, the bobbin 1110 is shown as including four side surfaces, but in another embodiment, the bobbin may include three side surfaces or five or more side surfaces.

For example, the seating portion 1115 may be formed on the first side surface 1110A of the bobbin. For example, a lower portion of the seating portion 1115 may be closed rather than open to a lower surface of the bobbin 1110. In addition, an upper portion of the seating portion 1115 may be closed rather than open to the upper surface of the bobbin 1110. In another embodiment, for example, the seating portion 1115 may include an opening that opens to at least one of the upper surface and the lower surface of the bobbin 1110.

The bobbin 1110 may include a receiving portion 1112 configured to receive at least a part of the rolling member 1021. For example, at least a part of the receiving portion 1112 may be disposed on the first side surface 1110A of the bobbin 1110. The receiving portion 1112 may be a recess depressed from an outer surface (e.g., the first side surface 1110A) of the bobbin 1110. The receiving portion 1112 may alternatively be referred to as a "receiving recess," a "recess," or a "guide recess." A lubricant (e.g., grease) may be disposed in the receiving portion 1112 of the bobbin 1110 in order to reduce friction with the rolling member 1021.

For example, the bobbin 1110 may include a first receiving portion 1112A configured to receive a rolling member 1021A and a second receiving portion 1112B configured to receive a rolling member 1021B. For example, the seating portion 1115 may be disposed between the first receiving portion 1112A and the second receiving portion 1112B.

For example, the first receiving portion 1112A (or the second receiving portion 1112B) may include an opening that opens to the upper surface of the bobbin 1110. In another embodiment, upper portions of the receiving portions 1112A and 1112B may be closed rather than open to the upper surface of the bobbin 1110. For example, lower portions of the receiving portions 1112A and 1112B may be closed rather than open to the lower surface of the bobbin 1110.

For example, the receiving portion 1112 may be formed so as to extend in the optical-axis direction. For example, the receiving portion 1112 may extend in the optical-axis direction so as to be formed between the upper surface and the lower surface of the bobbin 1110.

For example, when viewed from above, the shape of the receiving portion 1112 may be, without being limited to, triangular, and the shape of the receiving portion may be polygonal (e.g., quadrangular or pentagonal). Alternatively, for example, when viewed from above, the receiving portion 1112 may have a "V" or "U" shape.

The magnet 1130 may be disposed on, coupled to, or fixed to the bobbin 1110. For example, the magnet 1130 may be disposed on or coupled to the first side surface 1110A of the bobbin 1110. For example, the magnet 1130 may be disposed in the seating portion 1115 of the bobbin 1110, or may be coupled to the seating portion 1115. For example, the magnet 1130 may be disposed between the first rolling member 1021A and the second rolling member 1021B.

The shape of the magnet 1130 may have a shape corresponding to the first side surface 1110A of the bobbin 1110, such as a cuboidal shape. In another embodiment, for example, at least one of opposite ends of the magnet 1130 may be tapered.

For example, the magnet 1130 may include a first side surface 13A facing the coil 1120 and a second side surface 13B opposite the first side surface 13A. The first side surface 13A of the magnet 1130 may be exposed from the first side surface 1110A of the bobbin 1110.

Also, in order to enhance electromagnetic force, the magnet 1130 may be a four-pole magnet. For example, the magnet 1130 may include two N poles and two S poles.

For example, the magnet 1130 may include a first magnet including an N pole and an S pole, a second magnet including an S pole and an N pole, and a partition wall disposed between the first magnet and the second magnet. The partition wall, which is a substantially non-magnetic part, may include a section with almost no polarity, which may be filled with air or made of a non-magnetic material, and may be referred to as a "neutral zone." For example, the first magnet and the second magnet may face each other in the optical-axis direction, and the first magnet and the second magnet may be disposed so as to face different polarities in the optical-axis direction.

In another embodiment, the magnet 1130 may be a two-pole magnet with two different polarities and an interface naturally formed between the different polarities. For example, in another embodiment, the magnet 1130 may include one N pole and one S pole.

For example, the magnet 1130 may be a two-pole magnet with an N pole and an S pole separated or disposed in the optical-axis direction. In another embodiment, the magnet 1130 may be a magnet with an N pole and an S pole separated or disposed in a direction perpendicular to the optical axis. In another embodiment, the magnet 1130 may be a two-pole magnet with an N pole and an S pole separated in a direction perpendicular to the optical axis.

The holder 1140 may be disposed in the cover member 1300. The holder 1140 may include a cavity configured to receive the bobbin 1110. The holder 1140 may include an opening 1030A corresponding to the opening 1101 of the bobbin 1110. For example, the opening 1030A may be a through-hole or a hollow configured to expose at least a part of the bobbin 1110 (or the lens module 1400). In addition, for example, the opening 1030A of the holder 1140 may expose an image-capturing area of the image sensor 1810. The holder 1140 may alternatively be referred to as a "housing."

For example, the opening 1030A may be located in the center or a central region of the holder 1140. For example, the opening 1030A of the holder 1140 may be a through-hole or a hollow formed through the holder 1140 in the optical-axis direction. The opening 1030A of the holder 1140 may have a shape corresponding to the shape of the bobbin 1110, such as, but not limited to, a polygonal shape (e.g., a quadrangular shape or an octagonal shape) or a circular shape (or an oval shape), and may have a variety of shapes.

The holder 1140 may include a plurality of side portions 1041A to 1041D. The holder 1140 may include a corner located between two adjacent side portions and connecting the two adjacent side portions to each other.

The holder 1140 may include a first side portion 1041A corresponding to or opposite the first side surface 1110A of the bobbin 1110, a second side portion 1041B corresponding to or opposite the second side surface 1110B of the bobbin 1110, a third side portion 1041C corresponding to or opposite the third side surface 1110C of the bobbin 1110, and a fourth side portion 1041D corresponding to or opposite the fourth side surface 1110D of the bobbin 1110.

The first side portion 1041A (or a first side surface or a first outer surface) of the holder 1140 may be located opposite the second side portion 1041B (or a second side surface or a second outer surface) of the holder 1140 with respect to the optical axis, and the third side portion 1041C (or a third side surface or a third outer surface) of the holder 1140 may be located opposite the fourth side portion 1041D (or a fourth side surface or a fourth outer surface) of the holder 1140 with respect to the optical axis.

Each of the first to fourth side portions 1041A to 1041D of the holder 1140 may be disposed parallel to a corresponding one of side plates 1302 of the cover member 1300.

Referring to FIGs. 27A and 27B, the holder 1140 may include a seating portion 1142A on which the coil 1120 is disposed. For example, the seating portion 1142A may be disposed or formed on the first side portion 1041A of the holder 1140. For example, the seating portion 1142A may be a through-hole formed through the first side portion 1041A of the holder 1140. Since the seating portion 1142A is a through-hole, a part of the holder 1140 may not be interposed between the coil 1120 and the magnet 1130, which may increase electromagnetic force between the magnet 1130 and the coil 1120. In addition, since a part of the holder 1140 may not be interposed between the position sensor 1170 and the magnet 1130, the output of the position sensor 1170 may be increased, and sensitivity of the position sensor 1170 may be improved.

In another embodiment, the seating portion 1142A may be a recess depressed from an outer surface (or an inner surface) of the first side portion 1041A of the holder 1140.

The holder 1140 may include seating portions 1143A and 1143B configured to allow the magnet 1310 to be disposed thereon. For example, the holder 1140 may include a first seating portion 1143A configured to allow a first magnet unit 1310A to be disposed thereon and a second seating portion 1143B configured to allow a second magnet unit 1310B to be disposed thereon.

For example, the first seating portion 1143A may be disposed or formed on the second side portion 1041B of the holder 1140. For example, the first seating portion 1143A may be a recess depressed from an outer surface (or an inner surface) of the second side portion 1041B of the holder 1140.

For example, the second seating portion 1143B may be disposed or formed on the third side portion 1041C of the holder 1140. For example, the second seating portion 1143B may be a recess depressed from an outer surface (or an outer surface) of the third side portion 1041C of the holder 1140.

In another embodiment, the first seating portion 1143A may be a through-hole formed through the second side portion 1041B of the holder 1140, and the second seating portion 1143B may be a through-hole formed through the third side portion 1041C of the holder 1140. In this case, since the seating portions 1143A and 1143B are in the form of a through-hole, a part of the holder 1140 may not be interposed between the coil 1230 and the magnet 1310, which may increase electromagnetic force between the magnet 1310 and the coil 1230. In addition, a part of the holder 1140 may not be interposed between the position sensor 1240 and the magnet 1310, which may increase the output of the position sensor 1240 and may improve the sensitivity of the position sensor 1240.

For example, the holder 1140 may include a recess 1142 in which at least a part of the circuit board 1800, e.g., a second substrate 1802, is disposed. Since at least a part of the second substrate is disposed in the recess 1142 of the holder 1140, the second substrate 1802 and a magnetic material 1082 may not protrude from the outer surface of the first side portion 1041A of the holder 1140, or may not protrude excessively from the outer surface of the first side portion 41.

That is, the second substrate 1802 and the magnetic material 1082 may protrude less than the sum of the thickness of the second substrate 1802 and the thickness of the magnetic material 1082 with respect to the outer surface of the first side portion 1041A of the holder 1140. This may prevent an increase in the size of the camera device 1200 in a direction perpendicular to the optical axis.

Referring to FIGs. 27A and 27B, the holder 1140 may include a receiving portion 1116 configured to allow at least another part of the rolling member 1021 to be disposed or received therein. For example, at least a part of the receiving portion 1116 may be disposed on the first side portion 1041A of the holder 1140. The receiving portion 1116 may be a recess depressed from the inner surface of the holder 1140 (e.g., the inner surface of the first side portion 1041A). The receiving portion 1116 may alternatively be referred to as a "receiving recess," a "recess," or a "guide recess."

At least a part of the receiving portion 1116 of the holder 1140 may correspond to, may be opposite, or may overlap the receiving portion 1112 of the bobbin 1110.

For example, the holder 1140 may include a first receiving portion 1116A configured to receive at least another part of a first rolling member B1 and B2 and a second receiving portion 1116B configured to receive at least another part of a second rolling member B3 and B4. For example, the seating portion 1142A of the holder 1140 may be disposed between the first receiving portion 1116A and the second receiving portion 1116B of the holder 1140.

For example, the first receiving portion 1116A (or the second receiving portion 1116B) may include an opening that opens to the upper surface of the holder 1140. In another embodiment, an upper portion of the receiving portion 1116 may be closed rather than open to the upper surface of the holder 1140. For example, a lower portion of the receiving portion 1116 may be closed rather than open to the lower surface of the holder 1140.

For example, the receiving portion 1116 may be formed so as to extend in the optical-axis direction. For example, the receiving portion 1116 may extend in the optical-axis direction so as to be formed between the upper surface and the lower surface of the holder 1140.

For example, when viewed from above, the shape of the receiving portion 1116 of the holder 1140 may be, without being limited to, triangular, and the shape of the receiving portion may be polygonal (e.g., quadrangular or pentagonal). Alternatively, for example, when viewed from above, the receiving portion 1116 may have a "V" or "U" shape.

For example, when viewed in the optical-axis direction or from above, the receiving portion 1116 may be opposite or may overlap the upper plate 1301 of the cover member 1300. For example, at least a part of the upper plate 1301 of the cover member 1300 may cover the receiving portion 1116.

The camera device 1200 may include a rolling member 1021 disposed between the bobbin 1110 and the holder 1140. The rolling member 1021 may alternatively be referred to as a "ball member," a "ball," or a "ball bearing."

At least a part of the rolling member 1021 may contact the bobbin 1110 and the holder 1140, and may be rolled or rotated between the bobbin 1110 and the holder 1140 to support movement of the bobbin 1110 in the optical-axis direction. When the bobbin 1110 is moved in the optical-axis direction, the rolling member 1021 may reduce friction between the bobbin 1110 and the holder 1140. Due to rolling or rotation of the rolling member 1021, the bobbin 1110 may slide in the optical-axis direction in contact with the rolling member 1021.

For example, the rolling member 1021 may be made of, but not limited to, a metal material, a plastic material, or a resin material. The rolling member 1021 may have a circular shape, and may have a diameter of sufficient size to support the movement of the bobbin 1110 in the optical-axis direction.

For example, the rolling member 1021 may be disposed between the outer surface of the bobbin 1110 and the inner surface of the holder 1140. For example, the rolling member 1021 may be disposed between the first side surface 1110A of the bobbin 1110 and the first side portion 1041A of the holder 1140. For example, the rolling member 1021 may be disposed between the receiving portion 1112 of the bobbin 1110 and the receiving portion 1116 of the holder 1140.

For example, at least a part of the rolling member 1021 may be in contact with the receiving portion 1112 of the bobbin 1110, and at least another part of the rolling member 1021 may be in contact with the receiving portion 1116 of the holder 1140.

The rolling member 1021 may include at least one ball member. For example, the rolling member 1021 may include two or more ball members B1 to B4.

For example, the rolling member 1021 may include a first rolling member 1021A disposed between the first receiving portion 1112A of the bobbin 1110 and the first receiving portion 1116A of the holder 1140 and a second rolling member 1021B disposed between the second receiving portion 1112B of the bobbin 1110 and the second receiving portion 1116B of the holder 1140. For example, the first rolling member 1021A may include at least one ball. For example, the first rolling member 1021A may include a plurality of balls B1 and B2.

The second rolling member 1021B may include at least one ball. For example, the second rolling member 1021B may include a plurality of balls B3 and B4. In another embodiment, each of the first rolling member 1021A and the second rolling member 1021B may include one ball.

For example, each of the first rolling member 1021A and the second rolling member 1021B may include three or more balls. For example, each of the first rolling member 1021A and the second rolling member 1021B may include a top ball located at the uppermost side, a bottom ball located at the lowermost side, and at least one intermediate ball located between the top ball and the bottom ball. For example, the diameter of the top ball may be greater than the diameter of the intermediate ball, and the diameter of the bottom ball may be greater than the diameter of the intermediate ball. In addition, for example, the diameter of the top ball and the diameter of the bottom ball may be equal to each other. In another embodiment, the diameter of the top ball, the diameter of the bottom ball, and the diameter of the intermediate ball may be equal to each other.

For example, each of the first rolling member 1021A and the second rolling member 1021B may include a first ball (a top ball), a second ball (a bottom ball), and a third ball (an intermediate ball) disposed in the optical-axis direction, wherein the diameter of the first ball may be greater than the diameter of the third ball. In addition, the diameter of the second ball may be greater than the diameter of the third ball. For example, the diameter of the first ball and the diameter of the third ball may be equal to each other. In another embodiment, the diameter of the first ball may be greater than the diameter of the second ball. In another embodiment, the diameter of the first ball may be less than the diameter of the second ball. In another embodiment, the diameter of the first ball, the diameter of the second ball, and the diameter of the third ball may be equal to each other.

For example, each of the diameter of the first ball and the diameter of the second ball may be 0.85 mm to 0.95 mm, and the diameter of the third ball may be 0.75 mm to 0.85 mm.

In another embodiment, each of the first rolling member 1021A and the second rolling member 1021B may include four balls, wherein each of the diameter of the top ball and the diameter of the bottom ball may be 0.85 mm to 0.95 mm, and the diameter of each of the two intermediate balls may be 0.75 mm to 0.85 mm.

When viewed from above, the coil 1120 and the magnet 1130 may be located between the first rolling member 1021A and the second rolling member 1021B. This serves to improve the reliability of autofocus by ensuring that, when the bobbin 1110 moves in the optical-axis direction, the rolling member 1021 stably supports the bobbin 1110 without causing the bobbin 1110 to be tilted and moved.

In another embodiment, each of the first ball member 1021A and the second ball member 1021B may be in the form of a shaft or a roller. In another embodiment, sliding members (e.g., shafts) or rollers may be included instead of the rolling members 1021A and 1021B.

The camera device 1200 may include a magnetic material 1082 configured such that attractive force acts between the magnet 1130 and the magnetic material. For example, attractive force may act between the magnetic material 1082 and the magnet 1130 in a direction perpendicular to the optical axis (or the second direction). For example, the magnetic material 1082 may be disposed on the holder 1140. In another embodiment, the magnetic material 1082 may be disposed on the housing 1210.

The magnetic material 1082 may be a material that sticks to a magnet. For example, the magnetic material 1082 may be a metal material that sticks to a magnet. Alternatively, for example, the magnetic material 1082 may be a metal material that is magnetic. Alternatively, for example, the magnetic material 1082 may be a magnet. The magnetic material 1082 may alternatively be referred to as a "yoke." The magnetic material 1082 may serve to enhance or increase electromagnetic force between the magnet 1130 and the coil 1120.

Since the magnet 1130 is disposed on the bobbin 1110 and the magnetic material 1082 is disposed on the holder 1140, the bobbin 1110 may be pulled in a direction toward the holder 1140 on which the magnetic material 1082 is disposed by attractive force acting between the magnetic material 1082 and the magnet 1130. Due to attractive force between the magnetic material 1082 and the magnet 1130, the bobbin 1110 and the holder 1140 may press the rolling member 1021, and the bobbin 1110 may be stably supported.

The magnetic material 1082 and the magnet 1130 may be a "pressing unit" or a "pressing member." When the bobbin 1110 is moved in the optical-axis direction by the pressing unit, contact between the bobbin 1110 and the rolling member 1021 and between the holder 1140 and the rolling member 1021 may be maintained. That is, the rolling member 1021 may stably support the bobbin 1110 against the holder 1140 due to attractive force between the magnet 1130 and the magnetic material 1082.

In another embodiment, the magnet 1130 may be disposed on the holder 1140, and the coil 1120 may be disposed on the bobbin 1110. For example, the magnetic material 1082 may be disposed on the holder 1140 along with the magnet 1130. For example, the magnet 1130 may be disposed between the magnetic material 1082 and the coil 1120. In another embodiment, the magnetic material 1082 may be disposed on the bobbin 1110 along with the coil 1120 while being opposite the magnet 1130 disposed on the holder 1140. In addition, the camera device 1200 may further include an energizing member, such as a conductive member, configured to conductively connect the coil 1120 disposed on the bobbin 1110 and the second substrate 1802 of the circuit board 1800 to each other.

Referring to FIG. 27B, the holder 1140 may include a seating portion 1045A on which the filter 1610 is seated or disposed. The seating portion 1045A may be disposed or formed on the lower surface of the holder 1140. For example, the seating portion 1045A may be a recess depressed from the lower surface of the holder 1140. For example, the seating portion 1045A may include a bottom surface 1005A having a step formed from the lower surface of the holder 1140 in the optical-axis direction and a side surface 1005B connecting the lower surface of the holder 1140 and the bottom surface 1005A of the seating portion 1045A to each other. For example, the opening 1030A may be formed through the bottom surface 1005A of the seating portion 1045A.

The holder 1140 may include a depressed portion 1045B disposed or formed on a corner region of an inner surface of the seating portion 1045A. The depressed portion 1045B may have a structure depressed in a direction from the optical axis toward the corner region of the inner surface of the seating portion 1045A. The depressed portion 1045B may prevent an adhesive (e.g., UV epoxy) configured to attach or couple the filter 1610 to the seating portion 1045A from overflowing out of the seating portion 1045A.

The holder 1140 may include an escape recess 1046 configured to avoid spatial interference with the circuit element 1815. For example, the escape recess 1046 may be disposed or formed on the lower surface of the holder 1140. For example, the escape recess 1046 may be depressed from the lower surface of the holder 1140.

The escape recess 1046 may correspond to, may be opposite, or may overlap the circuit element 1815 in the optical-axis direction. For example, the escape recess 1046 may be located between the seating portion 1045A and a side of the lower surface of the holder 1140. For example, the escape recess 1046 may include a first escape recess 1046A and a second escape recess 1046B located opposite each other with respect to the seating portion 1045A or the filter 1610. In another embodiment, the escape recess 1046 may include four escape recesses disposed between the opening 1030A and four sides of the holder 1140.

The holder 1140 may include a recess 1047 corresponding to a protrusion 1216 of the sensor base 1270. The protrusion 1216 of the sensor base 1270 and the recess 1047 of the holder 1140 may serve as a guide configured to facilitate assembly of the sensor base 1270 and the holder 1140, and may increase the coupling area between the sensor base 1270 and the holder 1140 to improve coupling force between the sensor base and the holder.

For example, the recess 1047 may be depressed from the lower surface of the holder 1140. For example, the recess 1047 may be disposed or formed on the corner or the corner region of the lower surface of the holder 1140. The recess 1047 of the holder 1140 may have a shape corresponding to the protrusion 1216 of the sensor base 1270. In addition, the holder 1140 may include a recess 1048 or a hole corresponding to a boss 1017 of the sensor base 1270. For example, the boss 1017 of the sensor base 1270 may be inserted into or coupled to the recess 1048 of the holder 1140. For example, the recess 1048 may be disposed or formed on a bottom surface of the recess 1047 of the holder 1140. For example, the recess 1048 may be depressed from the bottom surface of the recess 1047 of the holder 1140.

In another embodiment, the holder 1140 may include a protrusion protruding from the lower surface of the holder 1140 instead of the recess 1047, and the sensor base 1270 may include a recess depressed from an upper surface of the sensor base 1270 and coupled to the protrusion of the holder 1140 instead of the protrusion 1216. Also, in another embodiment, the boss 1017 may be formed on the holder 1140, and the recess 1048 may be formed in the sensor base 1270.

The camera device 1200 may include a filter 1610 disposed on or coupled to the holder 1140. For example, the filter 1610 may be disposed under the holder 1140. For example, the filter 1610 may be coupled to the lower surface of the holder 1140. For example, the filter 1610 may be disposed on the seating portion 1045A of the holder 1140.

The filter 1610 may serve to block a specific frequency band component of light passing through the lens module 1400 from being incident on the image sensor 1810. For example, the filter 1610 may be an infrared cutoff filter. For example, the filter 1610 may be disposed parallel to a plane perpendicular to the optical axis OA.

The filter 1610 may be coupled to the holder 1140 (or the seating portion 1045A) via an adhesive (not shown). For example, an edge region of the filter 1610 may be coupled to the bottom surface of the seating portion 1045A.

For example, the adhesive may be epoxy, a thermohardening adhesive, or a UV hardening adhesive. For example, at least a part of the filter 1610 may correspond to, may be opposite, or may overlap the lens module 1400 and/or the image sensor 1810 in the optical-axis direction.

The sensor base 1270 may be disposed under the holder 1140. The sensor base 1270 may be disposed in the housing 1210. The sensor base 1270 may be coupled to the holder 1140. The sensor base 1270 may alternatively be referred to as a "holder." In addition, the holder 1140 may be referred to as a "first housing" (or a "first holder"), and the sensor base 1270 may be referred to as a "second housing" (or a "second holder"). Alternatively, the holder 1140 and the sensor base 1270 may not be represented separately and may alternatively be referred to by a single term, e.g., a "housing," a "holder," or a "sensor base." In another embodiment, the sensor base 1270 and the holder 1140 may be integrally formed.

For example, the sensor base 1270 may include a protrusion 1216 protruding from the upper surface thereof. The protrusion 1216 may alternatively be referred to as a "pillar portion."

For example, the protrusion 1216 may correspond to, may be opposite, or may overlap the recess 1047 of the holder 1140 in the optical-axis direction. At least a part of the protrusion 1216 of the sensor base 1270 may be inserted into the recess 1047 of the holder 1140. For example, at least a part of the protrusion 1216 may be coupled to the recess 1047 of the holder 1140. For example, at least a part of the protrusion 1216 may be coupled to the recess 1047 of the holder 1140 via an adhesive.

For example, the sensor base 1270 may include a body 1270A and a protrusion 1216 protruding from an upper surface of the body 1270A. For example, the body 1270A may have a shape corresponding to a first substrate 1801 of the circuit board 1800. For example, the body 1270A may have a polyhedral shape, such as a hexahedral shape. For example, the protrusion 1216 may be disposed on a corner region of the upper surface of the body 1270A. For example, the protrusion 1216 may include four protrusions 1216A to 1216D disposed on four corner regions of the upper surface of the body 1270A. In addition, for example, the holder 1140 may include four recesses 1047 corresponding to the four protrusions 1216A to 1216D. In another embodiment, the housing 1210 may include at least one protrusion disposed on at least one of the four corner regions of the upper surface of the body 270, and the holder 1140 may include at least one recess 1048 corresponding to the at least one protrusion of the housing 1210.

The sensor base 1270 or the body 1270A may include side portions 1051A to 1051D corresponding to, opposite, or overlapping the side portions 1041A to 1041D of the holder 1140.

In another embodiment, the sensor base 1270 may include a receiving portion 1056 configured to allow the gyro sensor 1820 to be disposed therein or to avoid spatial interference with the gyro sensor 1820. For example, the receiving portion 1056 may be formed through the sensor base 1270 in the optical-axis direction. For example, the receiving portion 1056 may be formed through the body 1270A in the optical-axis direction. In another embodiment, the receiving portion 1056 may be a recess depressed from the upper surface of the body 1270A. The receiving portion 1056 may include an opening that opens to an outer surface of the sensor base 1270.

The sensor base 1270 may include a receiving portion 1155 in which the controller 1830 is disposed or received. The receiving portion 1155 may be a recess depressed from a lower surface of the sensor base 1270 or a lower surface of the body 1270A. In another embodiment, the receiving portion 1155 may be a through-hole formed through the sensor base 1270 or the body 1270A in the optical-axis direction.

The sensor base 1270 may include a receiving portion 1028A configured to receive the magnetic material 1031. The receiving portion 1028A may be disposed or formed in a lower portion or the lower surface of the sensor base 1270. For example, the receiving portion 1028A may be a recess depressed from the lower portion or the lower surface of the sensor base 1270. For example, the receiving portion 1028A may be disposed or formed in the lower surface of the body 1270A. For example, the receiving portion 1028A may have a shape corresponding to the magnetic material 1031.

The sensor base 1270 may include a seating portion 1025A in which at least a part of the tilting guide member 1060 is disposed or at least a part of the tilting guide member 1060 is received. For example, the seating portion 1025A may be a recess depressed from the lower surface of the sensor base 1270. For example, the seating portion 1025A may have a shape that corresponds to or coincides with the shape of the tilting guide member 1060. For example, the seating portion 1025A may include a bottom surface having a step formed from the lower surface of the sensor base 1270 in the optical-axis direction and a side surface connecting the bottom surface to the lower surface of the sensor base 1270. For example, the bottom surface of the seating portion 1025A may be located higher than the lower surface of the sensor base 1270.

Referring to FIGs. 24A and 24B, since the seating portion 1025A, in which at least a part of the tilting guide member 1060 is inserted or disposed, is formed in the lower surface of the sensor base 1270, the sensor base 1270 may include a partition wall 1272 (or a guide portion) disposed on the lower surface thereof and disposed around the tilting guide member 1060. The tilting guide member 1060 may be spaced apart from the partition wall 1272, and the partition wall 1272 may be disposed so as to surround the tilting guide member 1060. The partition wall 1272 may prevent the tilting guide member 1060 from being separated or dislodged from the sensor base 1270.

The sensor base 1270 may include a protrusion 1028 (or a boss) protruding from the lower portion or the lower surface of the sensor base 1270. For example, the protrusion 1028 may protrude from the bottom surface of the seating portion 1025A of the sensor base 1270. For example, the protruding length of the protrusion 1028 may be greater than the depth of the seating portion 1025A. For example, the protruding length of the protrusion 1028 may be the distance (or the shortest distance) from the bottom surface of the seating portion 1025A to a lower surface (or the lowermost end) of the protrusion 1028. In addition, the depth of the resting portion 1025A may be the distance (or the shortest distance) from the lower surface of the sensor base 1270 to the bottom surface of the resting portion 1025A.

In another embodiment, for example, the protruding length of the protrusion 1028 may be less than or equal to the depth of the seating portion 1025A. For example, the protrusion 1028 may have a shape that corresponds to or coincides with the shape of the opening 1060A of the tilting guide member 1060.

For example, the protrusion 1028 of the sensor base 1270 may correspond to, may be opposite, or may overlap the opening 1060A of the tilting guide member 1060 in the optical-axis direction. For example, at least a part of the protrusion 1028 of the sensor base 1270 may be disposed in the opening 1060A of the tilting guide member 1060.

For example, the receiving portion 1028A may be disposed or formed in the protrusion 1028 of the sensor base 1270. For example, the receiving portion 1028A may be a recess depressed from a lower surface of the protrusion 1028 of the sensor base 1270.

For example, the protrusion 1028 may be disposed between ball members 1062A and 1062B. For example, the protrusion 1028 (or the magnetic material 1031) may overlap the ball members 1062A and 1062B in a direction perpendicular to the optical axis, e.g., the second direction.

The sensor base 1270 may include a recess 1029 in which the rolling member 1062 is disposed or the rolling member 1062 is received. The recess 1029 may be formed in the lower surface of the sensor base 1270. For example, the recesses 1029 may be depressed from the lower surface of the sensor base 1270. The number of recesses 1029 may be equal to the number of rolling members 1062.

For example, the recess 1029 may include two recesses 1029A and 1029B spaced apart from each other. For example, the two recesses 1029A and 1029B may be disposed spaced apart from each other in the X-axis direction. For example, the protrusion 1028 of the sensor base 1270 may be disposed between the two recesses 1029A and 1029B of the sensor base 1270.

The recess 1029 may contact the boss 1065 of the rolling member 1062 at at least one point. For example, the recess 1029 may include a bottom surface and at least one side surface connected to the bottom surface. The at least one side surface may be an inclined surface. For example, the recess 1029 may include a bottom surface and a plurality of inclined surfaces. The inclined surfaces of the recess 1029 may have the same shape. In another embodiment, at least one of the inclined surfaces of the recess 1029 may have a different shape from the others.

Referring to FIG. 7C, the protrusion 1216 of the sensor base 1270 may have a recess 1212A in which at least a part of the first substrate 1801 of the circuit board 1800 is inserted or disposed. For example, a corner of the first substrate 1801 may be inserted into or coupled to the recess 1212A of the protrusion 1216 of the sensor base 1270. For example, the recess 1212A may be formed in the side surface of the protrusion 1216 opposite the corner of the circuit board 1800. In addition, at least one corner of the circuit board 1800 may have a recess 83 configured to be inserted into or be coupled to the recess 1212A of the protrusion 1216. The recess 1212A of the protrusion 1216 of the sensor base 1270 may serve as a coupling guide for coupling between the first substrate 1801 and the sensor base 1270, and may serve to inhibit the first substrate 1801 from being rotated and/or separated from the sensor base 1270.

The circuit board 1800 may be disposed on, coupled to, or fixed to the sensor base 1270. For example, the circuit board 1800 may be coupled to the sensor base 1270 via an adhesive or a fixing member. For example, at least a part of the circuit board 1800 may be coupled or fixed to the holder 1140.

The circuit board 1800 may be disposed on, coupled to, or fixed to the body 1270A of the sensor base 1270. The circuit board 1800 may include at least one of a rigid printed circuit board (rigid PCB), a flexible printed circuit board (flexible PCB), and a rigid-flexible printed circuit board (rigid-flexible PCB). For example, the circuit board 1800 may include a rigid printed circuit board and a flexible printed circuit board. The circuit board 1800 may alternatively be referred to as a "substrate unit," a "substrate," or a "printed circuit board."

For example, the circuit board 1800 may include a first substrate 1801 (or a "first region") disposed on, coupled to, or fixed to sensor base 1270. For example, the first substrate 1801 may be disposed on, coupled to, or fixed to the body 1270A of the sensor base 1270. For example, a lower surface of the first substrate 1801 may be coupled to the upper surface of the sensor base 1270 or the upper surface of the body 1270A. For example, the lower surface of the first substrate 1801 may be coupled to the upper surface of the sensor base 1270 or the upper surface of the body 1270A via an adhesive.

The circuit board 1800 may include a second substrate 1802 (or a "second region") connected to first substrate 1801 and disposed on the side portion of the holder 1140. For example, the second substrate 1802 may be disposed on, coupled to, or fixed to at least one of the side portions (e.g., the first side portion 1041A) of the holder 1140.

In FIG. 27A, the circuit board 1800 includes one second substrate, but in another embodiment, the circuit board 1800 may include a plurality of second substrates disposed on the side portions of the holder 1140.

For example, the second substrate 1802 may be connected to a first side surface of the first substrate 1801. For example, the second substrate 1802 may be bent from the first side surface of the first substrate 1801 toward the first side portion 1041A of the holder 1140. For example, the second substrate 1802 may extend upward from the first substrate 1801.

The circuit board 1800 may include a third substrate 1803 on which a connector 1805 is disposed or provided and a fourth substrate 1804 connecting the first substrate 1802 and the third substrate 1803 to each other.

For example, the first substrate 1801 may be a rigid printed circuit board. For example, the second substrate 1802 may be a flexible printed circuit board. For example, the third substrate 1803 may be a rigid printed circuit board. For example, the fourth substrate 1804 may be a flexible printed circuit board.

For example, the rigid printed circuit board may include a plurality of conductive layers (or circuit patterns) disposed spaced apart from each other in the optical-axis direction and an insulating layer disposed between two neighboring ones of the plurality of conductive layers. For example, the flexible circuit board may include one conductive layer (or a circuit pattern), a first insulating layer disposed on the conductive layer, and a second insulating layer disposed under the conductive layer. In another embodiment, the flexible circuit board may include a first conductive layer, a second conductive layer, a first insulating layer disposed between the first and second conductive layers, a second insulating layer disposed on the first conductive layer, and a third insulating layer disposed under the second conductive layer.

The image sensor 1810 may be disposed on the first substrate 1801. The image sensor 1810 may be disposed so as to correspond to, to be opposite, or to overlap the lens module 1400 and/or the filter 1610 in the optical-axis direction.

The image sensor 1810 may include an image-capturing area configured to detect light. Here, the image-capturing area may alternatively be referred to as an effective area, a light receiving area, or an active area. For example, the image-capturing area may include a plurality of pixels from which an image is formed. The image sensor 1810 may be conductively connected to the first substrate 1801. The image-capturing area may correspond to, may be opposite, or may overlap the lens module 1400 and/or the filter 1610 in the optical-axis direction.

The camera device 1200 may include a circuit element 1815 disposed on the first substrate 1801. For example, the circuit element 1815 may include at least one of a passive element (e.g., a capacitor or a resistor), an active element (e.g., a sensor, a memory, or a driver IC), or a circuit pattern. For example, in order to avoid spatial interference with the image sensor 1810, the circuit element 1815 may be disposed between the image sensor 1810 and an edge (e.g., a side) of the first substrate 1801.

The camera device 1200 may include a controller 1830 disposed on the circuit board 1800. For example, the controller 1830 may be a driver IC. For example, the controller 1830 may be disposed on the first substrate 1801. For example, the controller 1830 may be disposed under the first substrate 1801. For example, the controller 1830 may be disposed on, coupled to, or fixed to the lower surface of the first substrate 1801. For example, the controller 1830 may be conductively connected to the first substrate 1801. In another embodiment, the controller 1830 may be disposed on the second substrate 1802.

For example, the controller 1830 may be conductively connected to the coil 1120, and may supply a drive signal to the coil 1120. For example, the controller 1830 may be conductively connected to the position sensor 1170. For example, the position sensor 1170 may be a Hall sensor, and may include two input terminals and two output terminals. In this case, the controller 1830 may supply power to the two input terminals of the position sensor 1170. The controller 1830 may receive an output signal of the position sensor 1170 output from the two output terminals of the position sensor 1170, and may control a drive signal (e.g., drive current) that is supplied to the coil 1120 using the output signal of the position sensor 1170.

The position sensor 1170 may be a driver IC including a Hall sensor. If the position sensor 1170 is a driver IC including a Hall sensor, the controller 1830 may be omitted. If the position sensor 1170 is a driver IC including a Hall sensor, the position sensor 1170 may include first to sixth terminals conductively connected to the circuit board 1800. The first and second terminals of the position sensor 1170 may be terminals configured to receive a power signal, the third terminal may be a terminal configured to transmit or receive a clock signal (SCL), and the fourth terminal may be a terminal configured to transmit or receive a data signal (SDA). The fifth and sixth terminals of the position sensor 1170 may be conductively connected to the coil 1120, and may supply a drive signal to the first coil 1120.

The camera device 1200 may include a gyro sensor 1820 disposed on the circuit board 1800. For example, the gyro sensor 1820 outputs rotational angular velocity information caused by movement of the camera device 1200. For example, the gyro sensor 1820 may be implemented as a 2-axis or 3-axis gyro sensor or an angular velocity sensor.

For example, the gyro sensor 1820 may be disposed on the first substrate 1801. For example, the gyro sensor 1820 may be disposed under the first substrate 1801. For example, the gyro sensor 1820 may be disposed on, coupled to, or fixed to the lower surface of the first substrate 1801. For example, the gyro sensor 1820 may be conductively connected to the first substrate 1801.

For example, at least one of the gyro sensor 1820 and the controller 1830 may be disposed close to the third substrate 1803. For example, at least one of the gyro sensor 1820 and the controller 1830 may be disposed close to the first side surface of the first substrate 1801 adjacent or connected to the third substrate 1803. The gyro sensor 1820 and the controller 1830 may be disposed closer to the first side surface of the first substrate 1801 than a second side surface of the first substrate 1801, and the second side surface of the first substrate 1801 may be opposite the first side surface of the first substrate 1801.

The coil 1120 may be disposed on, coupled to, or fixed to the circuit board 1800 (e.g., the second substrate 1802). For example, the coil 1120 may be conductively connected to the circuit board 1800 (e.g., the second substrate 1802). For example, the coil 1120 may be conductively connected to the circuit board 1800 (e.g., the second substrate 1802) via a conductive adhesive or a solder. For example, the coil 1120 may be disposed on or coupled to the second substrate 1802, and may be conductively connected to the second substrate 1802.

The coil 1120 may move the AF moving unit (e.g., the bobbin) in the optical-axis direction by interaction with the magnet 1130. The coil 1120 may be disposed on the holder 1140.

The coil 1120 may be disposed so as to correspond to, to be opposite, or to overlap the magnet 1130 in a direction perpendicular to the optical axis. For example, the coil 1120 may be disposed on the holder 1140 so as to correspond to, to be opposite, or to overlap the magnet 1130 in the second direction (e.g., the X-axis direction) or in a direction from the first side portion 1041A to the second side portion 1041B of the holder 1140. For example, the coil 1120 may be disposed on the first side portion 1041A of the holder 1140. The coil 1120 may be disposed in the seating portion 1142A of the holder 1140.

For example, the coil 1120 may include a hollow or a hole. For example, the coil 1120 may have a ring shape or a closed curved shape. For example, the coil 1120 may have a ring shape wound around a straight line perpendicular to the optical axis OA and perpendicular to the outer surface of the first side portion 1041A of the holder 1140 as an axis. For example, the coil 1120 may have a ring shape configured such that the length thereof in the transverse direction (or the third direction) is greater than the length thereof in the longitudinal direction (or the optical-axis direction).

A drive signal may be applied to the coil 1120 in order to generate electromagnetic force by electromagnetic interaction with the magnet 1130. For example, a drive signal from the circuit board 1800 or the controller 1830 may be applied to the coil 1120. The drive signal supplied to the coil 1120 may be direct current, and may be in the form of voltage or current. Alternatively, in another embodiment, for example, the drive signal provided to the coil 1120 may include at least one of a direct current signal and an alternating current signal.

The coil 1120, to which the drive signal has been provided, may electromagnetically interact with the magnet 1130 disposed on the bobbin 1110, and the AF moving unit may be moved in the first direction by electromagnetic force due to electromagnetic interaction between the coil 1120 and the magnet 1130. The magnitude and/or the direction of the drive signal (e.g., drive current) may be adjusted by the controller 1830, whereby movement of the AF moving unit in the first direction may be controlled, and therefore the autofocus function may be performed.

For AF feedback driving, the camera device 1200 may include a position sensor 1170. The position sensor 1170 may detect the position or displacement of the bobbin 1110 in the optical-axis direction. For example, the position sensor 1170 may detect the magnet 1130 disposed on the bobbin 1110. In another embodiment, a sensing magnet separate from the magnet 1130 and opposite the position sensor 1170 may be disposed on the bobbin 1110, and the position sensor 1170 may detect the sensing magnet or a magnetic field of the sensing magnet to detect the displacement of the bobbin.

For example, the position sensor 1170 may be disposed on the holder 1140. For example, the position sensor 1170 may be disposed on the first side portion 1041A of the holder 1140. For example, the position sensor 1170 may be disposed in the seating portion 1142A of the holder 1140. For example, the position sensor 1170 may be disposed in a hollow of the coil 1120. In another embodiment, the position sensor 1170 may be disposed outside the hollow of the coil 1120.

For example, the position sensor 1170 may be disposed on the circuit board 1800. The position sensor 1170 may be coupled to the circuit board 1800. For example, the position sensor 1170 may be coupled to the circuit board 1800 via a conductive adhesive or a solder. For example, the position sensor 1170 may be conductively connected or coupled to the second substrate 1802. For example, the position sensor 1170 may be conductively connected to the second substrate 1802 via a conductive adhesive or a solder.

For example, the position sensor 1170 may be disposed on, coupled to, or fixed to a first surface of the second substrate 1802. For example, the position sensor 1170 may correspond to, may be opposite, or may overlap the magnet 1130 in a direction perpendicular to the optical axis or in the second direction.

The position sensor 1170 may detect the displacement of the bobbin 1110 in the optical-axis direction.

For example, the position sensor 1170 may detect a magnetic field of the magnet 1130 mounted on the bobbin 1110 or the intensity of the magnetic field based on movement of the bobbin 1110, and may output an output signal.

For example, the position sensor 1170 may be a Hall sensor. In this case, the position sensor 1170 may include two input terminals to which a drive signal is applied and two output terminals from which an output signal is output. The circuit board 1800 may be conductively connected to the two input terminals and two output terminals of the position sensor 1170. The circuit board 1800 or the controller 1830 may supply a drive signal to the two input terminals of the position sensor 1170, and an output signal from the two output terminals of the position sensor 1170 may be transmitted to the circuit board 1800 or the controller 1830.

In another embodiment, the position sensor 1170 may be implemented in the form of a driver IC including a Hall sensor. For example, when the position sensor 1170 is a driver IC including a Hall sensor, the position sensor 1170 may transmit and receive data to and from the outside through data communication using a protocol, such as I2C communication.

For example, when the position sensor 1170 is a driver IC including a Hall sensor, the position sensor 1170 may include first and second terminals to which power or a drive signal is input, a third terminal for a clock signal, a fourth terminal for a data signal, and fifth and sixth terminals configured to supply a drive signal to the coil 1120. The first to sixth terminals of the position sensor 1170 may be conductively connected to the circuit board 1800.

The magnet 1310 may be disposed on or coupled to the moving unit. For example, the magnet 1310 may be disposed on or coupled to the holder 1140. The magnet 1310 may include a first magnet unit 1310A disposed on the second side portion 1041B of the holder 1140 and a second magnet unit 1310B disposed on the third side portion 1041C of the holder 1140.

For example, the first magnet unit 1310A may be disposed on the first seating portion 1143A of the holder 1140, and the second magnet unit 1310B may be disposed on the second seating portion 1143B of the holder 1140.

For example, the first magnet unit 1310A and the second magnet unit 1310B may be disposed so as to be misaligned with each other in the second direction or the third direction. For example, the first magnet unit 1310A and the second magnet unit 1310B may be disposed on the moving unit, e.g., the holder 1140, so as not to overlap each other in the second or the third direction. For example, the first magnet unit 1310A and the second magnet unit 1310B may be disposed on two different side portions of the holder 1140 so as not to overlap each other in the second or the third direction.

In another embodiment, the magnet 1310 may be disposed on the housing 1210, and the coil 1230 may be disposed on the holder 1140. For example, in FIG. 23, the magnet 1310 and the coil 1230 may be disposed such that the positions thereof are reversed. In this case, the camera device 1200 may include a separate energizing portion configured to conductively connect the second coil 1230 and the circuit board 1800 to each other, such as a circuit board, a circuit member, or a conductive member.

Each of the first magnet unit 1310A and the second magnet unit 1310B may be a two-pole magnet including one N pole and one S pole. For example, each of the first magnet unit 1310A and the second magnet unit 1310B may be a two-pole magnet with an N pole and an S pole separated or disposed in the optical-axis direction. For example, the N pole (or the S pole) of each of the first magnet unit 1310A and the second magnet unit 1310B may be located higher than the S pole (or the N pole) thereof.

In another embodiment, each of the first magnet unit 1310A and the second magnet unit 1310B may be a two-pole magnet with an N pole and an S pole separated or disposed in a direction perpendicular to the optical-axis direction. In another embodiment, each of the first magnet unit 1310A and the second magnet unit 1310B may be a four-pole magnet including two N poles and two S poles.

The camera device 1200 may include a magnetic material 1082 disposed opposite the coil 1120 and the magnet 1130. For example, the magnetic material 1082 may be disposed on the OIS moving unit. For example, the magnetic material 1082 may be disposed on the holder 1140 or on the second substrate 1802 of the circuit board 1800. For example, the magnetic material 1082 may be disposed so as to correspond to, to be opposite, or to overlap the magnet 1130 in the second direction. In addition, for example, the magnetic material 1082 may be disposed so as to correspond to, to be opposite, or to overlap the coil 1120 in the second direction. For example, the magnetic material 1082 may be disposed on or coupled to the second substrate 1802. For example, the coil 1120 may be disposed on the first surface of the second substrate 1802 that faces the magnet 1130, and the magnetic material 1082 may be disposed on a second surface of the second substrate 1802 that is opposite the first surface of the second substrate 1802. The magnetic material 1082 may be coupled, attached, or fixed to the second substrate 1802 via an adhesive.

Referring to FIGs. 10A and 10B, the housing 1210 may include a cavity configured to receive the OIS moving unit. For example, the housing 1210 may have a shape corresponding to the OIS moving unit, e.g., the holder 1140 or the sensor base 1270, such as, but not limited to, a polygonal shape (e.g., a quadrangular shape or an octagonal shape) or a circular shape (or an oval shape), and may have a variety of shapes. The housing 1210 may alternatively be referred to as a "base."

The housing 1210 may include a plurality of side portions 1071A to 1071D corresponding to the side portions 1041A to 1041D of the holder 1140 or the side portions 1051A to 1051D of the sensor base 1270. The housing 1210 may include a corner located between two adjacent side portions.

In addition, the housing 1210 may include a lower portion 1042 (or a lower plate) located under the side portions 1071A to 1071D. The lower portion 1042 may be connected to a lower side of each of the side portions 1071A to 1071D. For example, the lower portion 1042 may alternatively be referred to as a "bottom portion," a "bottom surface," or a "body." For example, the side portions 1071A to 1071D may extend or protrude upward from the lower portion 1042.

Referring to FIG. 30A, the housing 1210 has a first side portion 1071A corresponding to, opposite, or overlapping the first side portion 1041A of the holder 1140, a second side portion 1071B corresponding to, opposite, or overlapping the second side portion 1041B of the holder 1140, a third side portion 1071C corresponding to, opposite, or overlapping the third side portion 1041C of the holder 1140, and a fourth side portion 1071D corresponding to, opposite, or overlapping the fourth side portion 1041D of the holder 1140.

The first side portion 1071A (or a first side surface or a first outer surface) of the housing 1210 may be located opposite the second side portion 1071B (or a second side surface or a second outer surface) of the housing 1210, and the third side portion 1071C (or a third side surface or a third outer surface) of the housing 1210 may be located opposite the fourth side portion 1071D (or a fourth side surface or a fourth outer surface) of the housing 1210.

For example, each of the first to fourth side portions 1071A to 1071D of the housing 1210 may be disposed parallel to a corresponding one of the side plates 1302 of the cover member 1300.

The housing 1210 may include a step 1411 disposed on a lower portion of at least one of the side portions 1071A to 1071D. For example, the step 1411 may protrude from an outer surface of each of the side portions 1071A to 1071D of the housing 1210 in a direction perpendicular to the optical axis. For example, the step 1411 may be opposite or may overlap the side plate 1302 of the cover member 1300 in the optical-axis direction. For example, the step 1411 may be coupled to the side plate 1302 of the cover member 1300 via an adhesive.

The housing 1210 may include seating portions 141A and 141B in which the coil 1230 is disposed or received. For example, each of the seating portions 141A and 141B may be a through-hole formed through the side portion of the housing 1210. In another embodiment, each of the seating portions 1141A and 1141B may be a recess depressed from the side portion of the housing 1210.

The housing 1210 may include a first seating portion 1141A on which a first coil unit 1230A is disposed and a second seating portion 1230A on which a second coil unit 1310B is disposed. For example, the first seating portion 1141A may be disposed or formed on the second side portion 1071B of the housing 1210, and the second seating portion 1141B may be disposed or formed on the third side portion 1071C of the housing 1210. For example, the first seating portion 1141A may be formed through the second side portion 1071B of the housing 1210, and the second seating portion 1141B may be formed through the third side portion 1071C of the housing 1210. The first seating portion 1141A may include an opening that opens to an upper surface of the second side portion 1071B of the housing 1210, and the second seating portion 1141B may include an opening that opens to an upper surface of the third side portion 1071C of the housing 1210. In another embodiment, the first seating portion (or the second seating portion) may not include an opening that opens to the upper surface of the second side portion (or the third side portion) of the housing 1210.

The housing 1210 may include a receiving portion 1049A configured to receive the magnetic material 1032. The receiving portion 1049A may be disposed or formed in the lower portion 1042 of the housing 1210. The receiving portion 1049A may be disposed or formed in an upper surface of the lower portion 1042 of the housing 1210. For example, the receiving portion 1049A may be a recess depressed from the upper surface of the lower portion 1042 of the housing 1210. The receiving portion 1049A may have a shape corresponding to the magnetic material 1032, such as a quadrangular shape or a circular shape. For example, the receiving portion 1049A of the housing 1210 may correspond to, may be opposite, or may overlap the receiving portion 1028A of the sensor base 1270 in the optical-axis direction.

Although not shown in FIG. 30B, the housing 1210 may include a recess in which at least another part of the tilting guide member 1060 is disposed or at least another part of the tilting guide member 1060 is received.

The housing 1210 may include a recess 1055 in which the rolling member 1063 is disposed or the rolling member 1063 is received. The recess 1055 may be formed in the upper surface of the lower portion 1042 of the housing 1210. For example, the recess 1055 may be depressed from the upper surface of the lower portion 1042 of the housing 1210. The number of the recesses 1055 of the housing 1210 may be equal to the number of the rolling members 1063.

For example, the recess 1055 may include two recesses 1055A and 1055B spaced apart from each other. For example, the two recesses 1055A and 1055B may be disposed spaced apart from each other in the Y-axis direction. For example, the direction in which the recesses 1055A and 1055B of the housing 1210 are spaced apart from each other and the direction in which the two recesses 1029A and 1029B of the sensor base 1270 are spaced apart from each other may be perpendicular to each other. For example, the receiving portion 1049A may be disposed between the two recesses 1055A and 1055B of the housing 1210.

The recess 1055 of the housing 1210 may contact the rolling member 1063 at at least one point. For example, the recess 1055 may include a bottom surface and at least one side surface connected to the bottom surface. The at least one side surface of the recess 1055 may be an inclined surface. For example, the recess 1055 may include a bottom surface and a plurality of inclined surfaces. The inclined surfaces of the recess 1055 may have the same shape. In another embodiment, at least one of the inclined surfaces of the recess 1055 may have a different shape from the others.

The housing 1210 may include a protrusion 1215 protruding in a direction perpendicular to the optical axis. For example, the protrusion 1215 may protrude from the side portion of the housing 1210.

For example, the protrusion 1215 may protrude from an outer surface of the fourth side portion 1071D of the housing 1210. For example, the protrusion 1215 may be formed by at least a part of the fourth side portion 1071D protruding in a direction parallel to a straight line that passes through the optical axis and is perpendicular to the optical axis. For example, the protrusion 1215 may include a recess 1016A (or a hollow) in which at least a part of the fourth substrate 1804 is disposed or received. For example, the recess 1016A of the protrusion 1215 may include an opening that opens upward.

Referring to FIG. 30B, the recess 1016A of the protrusion 1215 may be provided with coupling recesses 1215A and 1215B for insertion, coupling, or fixing of the movement inhibition portion 1080. For example, the coupling recesses 1215A and 1215B may be formed in two facing inner surfaces of the recess 1016A of the protrusion 1215. For example, the coupling recesses 1215A and 1215B may extend in the optical-axis direction. For example, for easy insertion or coupling of the movement inhibition portion 1080 from above, each of the coupling recesses 1215A and 1215B may include an opening that opens to an upper surface of the protrusion 1215.

The maximum length of the protrusion 1215 in the optical-axis direction may be less than the maximum length of the housing 1210 in the optical-axis direction. In this configuration, space for the circuit board 1800 to extend outward may be easily secured, and a compact camera device may be implemented.

The coil 1230 may be disposed on the stationary unit. For example, the coil 1230 may be disposed on the housing 1210. The coil 1230 may tilt the OIS moving unit about the first axis (e.g., the X-axis) or the first axis (e.g., the Y-axis), or may rotate the OIS moving unit by a predetermined angle, due to interaction with the magnet 1310 disposed on the OIS moving unit.

The coil 1230 may include a first coil unit 1230A that corresponds to, is opposite, or overlaps the first magnet unit 1310A and a second coil unit 1230B that corresponds to, is opposite, or overlaps the second magnet unit 1310B.

For example, the first coil unit 1230A may correspond to, may be opposite, or may overlap the first magnet unit 1310A in the second direction, and the second coil unit 1230B may correspond to, may be opposite, or may overlap the second magnet unit 1310B in the third direction. For example, the first coil unit 1230A may be opposite or may overlap the coil 1120 in the second direction.

For example, the first coil unit 1230A may be disposed on the second side portion 1071B of the housing 1210, and the second coil unit 1230B may be disposed on the third side portion 1071C of the housing 1210.

For example, each of the first and second coil units 1230A and 1230B may include a hollow or a hole. For example, each of the first and second coil units 1230A and 1230B may have a ring shape or a closed curved shape. For example, the first coil unit 1230A may have a ring shape wound around a straight line perpendicular to the optical axis OA and perpendicular to an outer surface of the second side portion 1041B of the holder 1140 as an axis, and the second coil unit 1230B may have a ring shape wound around a straight line perpendicular to the optical axis OA and perpendicular to an outer surface of the third side portion 1041C of the holder 1140 as an axis. For example, each of the first and second coil units 1230A and 1230B may have a ring shape configured such that the length thereof in the transverse direction (or the third direction) is greater than the length thereof in the longitudinal direction (or the optical-axis direction).

The camera device 1200 may include a circuit board 1190 disposed on or coupled to the stationary unit. For example, the circuit board 1190 may be disposed on or coupled to the housing 1210. For example, the circuit board 1190 may be disposed on the side portion of the housing 1210. For example, the circuit board 1190 may be disposed on or coupled to at least one of the side portions 1071A to 1071D of the housing 1210.

Referring to FIG. 30B, for example, the circuit board 1190 may include a first substrate 1191 disposed on the second side portion 1071B of the housing 1210 and a second substrate 1192 disposed on the third side portion 1071C of the housing 1210. The second substrate 1192 may be bent from the first substrate 1191. The circuit board 1190 may be conductively connected to the second coil 1230. The circuit board 1190 may be conductively connected to the position sensor 1240.

The housing 1210 may include a recess 1019 in which the circuit board 1190 is disposed or the circuit board 1190 is received. The recess 1019 may be depressed from the outer surface of the side portion of the housing 1210. The recess 1019 may be formed in at least one of the side portions 1071A to 1071D of the housing 1210. For example, the recesses 1019 may include a first recess 1019A formed in the second side portion 1071B of the housing 1210 and a second recess 1019B formed in the third side portion 1071C of the housing 1210.

For example, the first substrate 1191 of the circuit board 1190 may be disposed in the first recess 1019A of the housing 1210, and the second substrate 1192 of the circuit board 1190 may be disposed in the first recess 1019B of the housing 1210.

For example, the second recess 1019B may be disposed on the step 1411 of the housing 1210. The first recess 1019A may extend to the lower surface of the second side portion 1071B of the housing 1210. For example, the step 1411 may not be formed under the first recess 1019A. For example, referring to FIG. 13B, the first substrate 1191 of the circuit board 1190 may extend to the lower portion, the lower end, or the lower surface of the second side portion 1071B of the housing 1210. For example, at least some of terminals P1 to Pn disposed on a lower portion of the first substrate 1191 of the circuit board 1190 may be disposed so as to overlap the step 1411 of the housing 1210 in a direction perpendicular to the optical axis. In addition, the terminals P1 to Pn may not protrude beyond the step 1411 of the housing 1210. This serves to facilitate electrical connection, e.g., soldering, between the terminals P1 to Pn and an external device.

The housing 1210 may include at least one boss 1009A and 1009B. The at least one boss 1009A and 1009B may be disposed on the side portion of the housing 1210. For example, the at least one boss 1009A and 1009B may protrude from bottom surfaces of the recesses 1019A and 1019B of the housing 1210.

The circuit board 1190 may include at least one hole 1007A and 1007B coupled to the bosses 1009A and 1009B of the housing 1210. For example, the holes 1007A and 1007B may be through-holes.

For example, the housing 1210 may include a first boss 1009A disposed on the second side portion 1071B. The housing 1210 may include a second boss 1009B disposed on the third side portion 1071C. The first substrate 1191 of the circuit board 1190 may include a first hole 7A coupled to the first boss 1009A. The second substrate 1192 of the circuit board 1190 may include a second hole 7B coupled to the second boss 1009B.

The coil 1230 may be disposed on or coupled to the circuit board 1190. For example, the first coil unit 1230A may be disposed on the first substrate 1191 of the circuit board 1190, and the second coil unit 1230B may be disposed on the second substrate 1192 of the circuit board 1190. For example, the first coil unit 1230A may be conductively connected to the first substrate 1191 of the circuit board 1190, and the second coil unit 1230B may be conductively connected to the second substrate 1192 of the circuit board 1190.

For example, the first substrate 1191 may correspond to, may be opposite, or may overlap the first magnet unit 1310A in the second direction, and the second substrate 1192 may correspond to, may be opposite, or may overlap the second magnet unit 1310B in the third direction.

For OIS feedback driving, the camera device 1200 may include a position sensor 1240. The position sensor 1240 may detect displacement or angular displacement of the OIS moving unit due to tilting or rotation of the OIS moving unit.

For example, the position sensor 1240 may include a first sensor 1240A and a second sensor 1240B. For example, the first sensor 1240A may correspond to, may be opposite, or may overlap the first magnet unit 1310A, and the second sensor 1240B may correspond to, may be opposite, or may overlap the second magnet unit 1310B. For example, at least a portion of the first sensor 1240A may correspond to, may be opposite, or may overlap at least a portion of the first magnet unit 1310A in the second direction. For example, the center of the first sensor 1240A may overlap the first magnet unit 1310A in the second direction. At least a part of the second sensor 1240B may correspond to, may be opposite, or may overlap at least a part of the second magnet unit 1310B in the third direction. For example, the center of the second sensor 1240A may overlap the second magnet unit 1310B in the third direction.

For example, the first sensor 1240A may detect the first magnet unit 1310A (or a magnetic field of the first magnet unit 1310A). For example, the second sensor 1240B may detect the second magnet unit 1310B (or a magnetic field of the second magnet unit 1310B).

The position sensor 1240 may be disposed on the circuit board 1190. The position sensor 1240 may be conductively connected to the circuit board 1190.

For example, the first sensor 1240A may be disposed on, coupled to, or fixed to the first substrate 1191 of the circuit board 1190, and the second sensor 1240B may be disposed on, coupled to, or fixed to the second substrate 1192 of the circuit board 1190. For example, the first sensor 1240A may be conductively connected to the first substrate 1191 of the circuit board 1190, and the second sensor 1240B may be conductively connected to the second substrate 1192 of the circuit board 1190.

For example, the first sensor 1240A may be disposed in a hollow (or a hole) of the first coil unit 1230A, and the second sensor 1240B may be disposed in a hollow (or a hole) of the second coil unit 1230B. In another embodiment, the first sensor 1240A may be disposed outside the hollow (or the hole) of the first coil unit 1230A, and the second sensor 1240B may be disposed outside the hollow (or the hole) of the second coil unit 1230B.

For example, each of the first sensor 1240A and the second sensor 1240B may be a Hall sensor. For example, each of the first sensor 1240A and the second sensor 1240B may be a Hall sensor including first and second input terminals and first and second output terminals. For example, the first and second input terminals and the first and second output terminals of the first sensor 1240A may be conductively connected to the first substrate 1191, and the first and second input terminals and the first and second output terminals of the second sensor 1240B may be conductively connected to the second substrate 1192.

The camera device 1200 may include a controller 1835 disposed on the circuit board 1190. The controller 1835 may be conductively connected to the circuit board 1190. For example, the controller 1835 may be a driver IC.

For example, the controller 1830 may be disposed on any one of the first substrate 1191 and the second substrate 1192 of the circuit board 1190 (e.g., 191). For example, the controller 1835 may be disposed on, coupled to, or fixed to a first surface of the circuit board 1800. The first surface may be a surface facing the magnet 1310 or the OIS moving unit, such as the lens module.

The controller 1835 may be conductively connected to the coil 1230, and may supply a drive signal to the coil 1230. For example, the controller 1835 may be conductively connected to the coil units 1230A and 1230B, may supply a first drive signal to the first coil unit 1230A, and may supply a second drive signal to the second coil unit 1230B.

The controller 1835 may be conductively connected to the position sensor 1240.

For example, the controller 1835 may supply power or a drive signal to the position sensor 1240. For example, the controller 1835 may supply power or a drive signal to each of the first sensor 1240A and the second sensor 1240B.

The controller 1835 may receive an output signal from the position sensor 1240, and may control a drive signal (e.g., drive current) that is supplied to the coil 1230 using the output signal from the position sensor 1240. For example, the controller 1835 may receive an output signal from the first sensor 1240A, and may control a first drive signal (e.g., first drive current) that is supplied to the first coil unit 1230A using the output signal from the first sensor 1240A. In addition, the controller 1835 may receive an output signal from the second sensor 1240B, and may control a second drive signal (e.g., second drive current) that is supplied to the second coil unit 1230B using the output signal from the second sensor 1240B.

In another embodiment, each of the first sensor 1240A and the second sensor 1240B may be a driver IC including a Hall sensor. A description of an embodiment in which the position sensor 1170 is a driver IC including a Hall sensor may be applied or analogically applied to an embodiment in which each of the first and second sensors 1240A and 1240B is a driver IC including a Hall sensor. For example, in an embodiment in which each of the first sensor 1240A and the second sensor 1240B is a driver IC including a Hall sensor, the controller 1835 may be omitted, the first sensor 1240A may supply a drive signal to the first coil unit 1230A, and the second sensor 1240B may include a drive signal to the second coil unit 1230B. In addition, each of the first sensor 1240A and the second sensor 1240B may include first and second terminals to which power or a drive signal is input, a third terminal for a clock signal, a fourth terminal for a data signal, and fifth and sixth terminals configured to supply a drive signal to the coil units 230A or 230B.

The circuit board 1190 may include a terminal unit 1085. The terminal unit 1085 may include a plurality of terminals P1 to Pn (n being a natural number greater than 1). For example, the plurality of terminals P1 to Pn may be disposed on at least one of the first substrate 1191 and the second substrate 1192 of the circuit board 1190. For example, the plurality of terminals P1 to Pn may be disposed on the lower portion of the first substrate 1191 of the circuit board 1190. For example, the plurality of terminals P1 to Pn may be exposed from the side plate 1302 of the cover member 1300.

At least one of the plurality of terminals P1 to Pn may be conductively connected to the controller 1835.

If each of the first and second sensors 1240A and 1240B of the position sensor 1240 is a driver IC including a Hall sensor, the first and second sensors 1240A and 1240B may be conductively connected to at least another of the plurality of terminals P1 to Pn.

In another embodiment, at least one of the plurality of terminals P1 to Pn may be conductively connected to the coil 1230, and at least one of the plurality of terminals P1 to Pn may be conductively connected to the position sensor 1240.

The camera device 1200 may include a separate circuit board (not shown) conductively connected to the plurality of terminals P1 to Pn. For example, the separate circuit board may be disposed under the housing 1210, and may include terminals conductively connected to the plurality of terminals P1 to Pn via a conductive adhesive. For example, the circuit board 1800 may be represented by any one of first to third circuit boards (e.g., a "first circuit board"), the circuit board 1190 may be represented by another of the first to third circuit boards (e.g., a "second circuit board"), and the separate circuit board may be represented by the other of the first to third circuit boards (e.g., a "third circuit board").

In the embodiment, since the separate controller 1835 and/or the circuit board 1190 configured to drive the coil 1230 and the position sensor 1240 is provided, wiring configured to drive the coil 1230 and the position sensor 1240 may be omitted from the second substrate 1802 of the circuit board 1800. This may reduce the width W1 of the second substrate 1802 of the circuit board 1800. Referring to FIGs. 23 and 31A, for example, the width W1 of the second substrate 1802 may be the length of the second substrate 1802 in the second direction (e.g., the X-axis direction). The width W1 of the second substrate 1802 may be perpendicular to the optical axis (or the optical-axis direction) and perpendicular to the longitudinal direction of the second substrate 1802.

In another embodiment, the controller 1835 may be disposed on the third circuit board, and the coil 1230 and the position sensor 1240 may be conductively connected to the terminals P1 to Pn of the second circuit board 1190, and may be conductively connected to the controller 1835 via the third circuit board (or terminals of the third circuit board) conductively connected to the terminals.

In the embodiment, since the width W1 of the second substrate 1802 may be reduced, the elastic modulus of the second substrate 1802 of the circuit board 1800 may be reduced, which may facilitate the movement of the OIS moving unit when OIS is performed. That is, since the width W1 of the second substrate 1802 may be designed to be small, the elastic force or elastic modulus of the second substrate 1802 of the circuit board 1800 that supports the OIS moving unit may be easily designed. For example, the width W1 of the second substrate 1802 may be designed to be small to reduce the elastic force or elastic modulus of the second substrate 1802, which may facilitate OIS operation with less drive force and reduce power consumption required for OIS operation. The drive force may be force generated by the interaction between the coil 1230 and the magnet 1310.

The camera device 1200 may include a movement inhibition portion 1080 coupled to at least a part of the housing 1210. The movement inhibition portion 1080 may inhibit movement or motion of at least a part of the fourth substrate 1804 to inhibit deformation of the shape of at least a part of the fourth substrate 1804.

Referring to FIGs. 27C, 28, and 31A, the fourth substrate 1804 of the circuit board 1800 may include a first portion 1804A (or a "first region") connected to the first substrate 1801, a second portion 1804B connected to the first portion 1804A and bent from the first portion 1804A, and a third portion 1804C connected to the second portion 1804B and bent from the second portion 1804B. In another embodiment, at least one of the first portion 1804A and the second portion 1804B may be omitted.

For example, the first portion 1804B may extend in a direction parallel to the first substrate 1801. For example, the second portion 1804B may be bent from the first portion 1804B and may extend from the first portion 1804B in the upward direction. For example, the third portion 1804C may extend from the second portion 1804B in a direction opposite the first portion 1804A.

For example, the fourth substrate 1804 may include a first bent portion 1804D connecting the first portion 1804A and the second portion 1804B to each other. In addition, the fourth substrate 1804 may include a second bent portion 1804E connecting the second portion 1804B and the third portion 1804C to each other. The first bent portion 1804D and the second bent portion 1804E may be angled, and for example, the first portion 1804A and the second portion 1804B may be perpendicular to each other. In another embodiment, the first bent portion 1804D and the second bent portion 1804E may be rounded. In another embodiment, the interior angle between the first portion 1804A and the second portion 1804B may be an acute angle or an obtuse angle.

The first bent portion 1804D and the second bent portion 1804E may prevent an increase in the length of the camera device 1200 in a direction perpendicular to the optical-axis direction. In addition, since the first bent portion 1804D and the second bent portion 1804E are located between the upper surface of the camera device 1200 (e.g., the upper surface of the cover member 1300) and the lower surface of the camera device 1200 (e.g., the lower surface of the housing 1210), an increase in the length of the camera device 1200 in the optical-axis direction may be prevented, whereby it is possible to implement miniaturization of the camera device.

For example, the third portion 1804C may be in the form of a plate or plane perpendicular to the optical axis. For example, the third portion 1804C may include a meandering shape or a serpentine shape. For example, the third portion 1804C may include at least one bent or curved region. For example, the bent or curved region of the third portion 1804C may be bent in the second direction or the third direction, which is perpendicular to the optical axis. Alternatively, the bent or curved region of the third portion 1804C may extend in a direction perpendicular to the optical axis. For example, when viewed from above, the third portion 1804C may include a region having a U shape or a V shape.

For example, the third portion 1804C may be spaced apart from the housing 1210. For example, the third portion 1804C may be spaced apart from the protrusion 1215 of the housing 1210. In another embodiment, for example, at least a part of the third portion 1804C may be in contact with the protrusion 1215 of the housing 1210.

At least a part of the second portion 1804B of the fourth substrate 1804 may be disposed in the protrusion 1215 of the housing 1210. At least a part of the second portion 1804B of the fourth substrate 1804 may be disposed in the recess 1016A of the protrusion 1215 of the housing 1210. For example, at least a part of the first portion 1804A of the fourth substrate 1804 may be disposed in the recess 1016A of the protrusion 1215. The third portion 1804B of the fourth substrate 1804 may be located outside the protrusion 1215 of the housing 1210. For example, the third portion 1804B of the fourth substrate 1804 may be located higher than the protrusion 1215 of the housing 1210. A lower surface of the third portion 1804B of the fourth substrate 1804 may be located higher than the upper surface of the protrusion 1215 of the housing 1210.

The connector 1805 may be coupled or connected to another external connector of the camera device 1200 or to an external device. The connector 1805 connected to the other external connector may correspond to a stationary unit that does not move when OIS is performed. Since the third portion 1804C of the fourth substrate 1804 includes at least one bent or curved region, it is possible to flexibly support the camera device 1200 or the OIS moving unit and to cushion external impact. That is, the third portion 1804C of the fourth substrate 1804 may serve as a spring configured to cushion impact. In addition, since the third portion 1804C of the fourth substrate 1804 may serve to flexibly support the OIS moving unit, it is possible to reduce drive force or drive power required to perform OIS.

The camera device 1200 may include a reinforcement member 1070 disposed on, coupled to, or attached to at least a part of the fourth substrate 1804. The reinforcement member 1070 may be disposed on, coupled to, or attached to at least one of the first portion 1804A and the second portion 1804B of the fourth substrate 1804. For example, the reinforcement member 1070 may be disposed on, coupled to, or attached to at least a part of the first portion 1804A of the fourth substrate 1804 and at least a part of the second portion 1804B of the fourth substrate 1804.

Referring to FIG. 31A, for example, the reinforcement member 1070 may be disposed on, coupled to, or attached to a lower surface of the first portion 1804A of the fourth substrate 1804 and a lower surface of the second portion 1804B of the fourth substrate 1804. For example, the reinforcement member 1070 may include a first region 1070A disposed on, coupled to, or attached to the first portion 1804A and a second region 1070B disposed on, coupled to, or attached to the second portion 1804B. The second region 1070B may be bent upward from the first region 1070A. For example, a bent portion may be formed between the first region 1070A and the second region 1070B.

For example, the area of the second region 1070B may be greater than the area of the first region 1070A. In another embodiment, both may be equal, or the area of the former 1070B may be less than the area of the latter 1070A.

For example, the reinforcement member 1070 may be spaced apart from the third portion 1804C of the fourth substrate 1804. For example, the second region 1070B of the reinforcement member 1070 may be spaced apart from the third portion 1804C of the fourth substrate 1804. In another embodiment, at least a part of the second region 1070B of the reinforcement member 1070 may be in contact with the third portion 1804C of the fourth substrate 1804.

In another embodiment, the reinforcement member 1070 may be disposed on, coupled to, or attached to an upper surface of the first portion 1804A of the fourth substrate 1804 and an upper surface of the second portion 1804B of the fourth substrate 1804. For example, in another embodiment, the reinforcement member 1070 may include a first region disposed on the upper surface of the first portion 1804A of the fourth substrate 1804 and a second region disposed on the upper surface of the second portion 1804B of the fourth substrate 1804.

In another embodiment, the reinforcement member 1070 may be disposed on, coupled to, or attached to at least a part of the second portion 1804B of the fourth substrate 1804 and at least a part of the third portion 1804C of the fourth substrate 1804. For example, in another embodiment, the reinforcement member 1070 may be disposed on, coupled to, or attached to the second portion 1804B and the third portion 1804C of the fourth substrate 1804. For example, the reinforcement member 1070 may include a first region disposed on, coupled to, or attached to the second portion 1804B of the fourth substrate 1804 and a second region disposed on, coupled to, or attached to the third portion 1804C, and a bent portion may be formed between the first region and the second region. The first region of the reinforcement member 1070 may be disposed on the lower surface (or the upper surface) of the second portion 1804B, and the second region of the reinforcement member 1070 may be disposed on the lower surface (or the upper surface) of the third portion 1804C.

The reinforcement member 1070 may prevent the fourth substrate 1804 from being damaged, deformed, or broken by impact or external force. In addition, the reinforcement member 1070 may serve to inhibit deformation and restoration of the shape of the fourth substrate 1804 as the fourth substrate 1804 is forced by tilting of the OIS moving unit 1100. For example, the reinforcement member 1070 may include at least one of a metal material and an injection-molded material.

For example, the reinforcement member 1070 may be disposed in the recess 1016A of the protrusion 1215 of the housing 1210. For example, at least a part of the reinforcement member 1070 may be in contact with the recess 1016A of the protrusion 1215 of the housing 1210. For example, the reinforcement member 1070 may not be coupled to the housing 1210 (e.g., the protrusion 1215). In another embodiment, for example, the reinforcement member 1070 may be coupled to the housing 1210 (e.g., the protrusion 1215) via an adhesive.

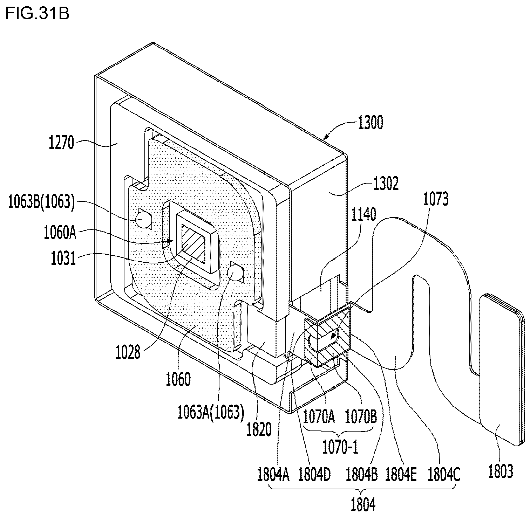

FIG. 31B shows another embodiment 1070-1 of the reinforcement member of FIG. 31A.

Referring to FIG. 31B, the reinforcement member 1070-1 may include an opening 1073. The opening 1073 of the reinforcement member 1070-1 may open or expose at least a part of the fourth substrate 1804 of the circuit board 1800. For example, the opening 1073 may open or expose at least a part of the first portion 1804A (or the "first region") and the second portion 1804B (or the "second region") of the fourth substrate 1804.

The opening 1073 of the reinforcement member 1070-1 may be a hole, a through-hole, or a hollow.

The opening 1073 may be formed in at least one of the first region 1070A and the second region 1070A of the reinforcement member 1070-1. For example, the opening 1073 may be formed in the first region 1070A and the second region 1070A of the reinforcement member 1070-1. In addition, the opening 1073 may open or expose at least a part of the first bent portion 1804D.

In another embodiment, the opening may be formed in only one of the first region 1070A and the second region 1070A of the reinforcement member 1070-1. In addition, the opening may not expose the first bent portion 1804D.

The elastic modulus of the second substrate 1802 of the circuit board 1800 coupled to the reinforcing member 1070-1 may be reduced by the opening 1073, which may facilitate movement of the OIS moving unit during OIS operation. That is, the elastic force of the circuit board 1800, such as the second substrate 1802, which supports the OIS moving unit may be reduced by the opening 1073, which may facilitate implementation of OIS operation with less drive force and may reduce power consumption. The drive force may be force generated by interaction between the coil 1230 and the magnet 1310.

Referring to FIGs. 30A and 30B, the movement inhibition portion 1080 may be coupled to the protrusion 1215 of the housing 1210. For example, the movement inhibition portion 1080 may be coupled to the coupling recesses 1215A and 1215B of the protrusion 1215 of the housing 1210.

At least a part of the second portion 1804B of the fourth substrate 1804 may be disposed between the movement inhibition portion 1080 and an inner surface of the protrusion 1215 of the housing 1210. For example, at least a part of the reinforcement member 1070 may be disposed between the movement inhibition portion 1080 and the inner surface of the protrusion 1215 of the housing 1210.

The movement inhibition portion 1080 may be spaced apart from the circuit board 1800 in the second direction (the X-axis direction) or the third direction (the Y-axis direction). For example, the movement inhibition portion 1080 may be disposed spaced apart from the circuit board 1800 in the optical-axis direction or in a direction perpendicular to the optical-axis direction. That is, the movement inhibition portion 1080 may serve to maintain the shape of the bent portions 1804D and 1804E of the fourth substrate 1804, which is a flexible substrate. For example, the movement inhibition portion 1080 may be formed by injection-molding a non-magnetic material or a resin. In another embodiment, the movement inhibition portion 1080 may be in contact with at least a part of the fourth substrate 1804 of the circuit board 1800.

Movement or motion of at least a part of the second portion 1804B of the fourth substrate 1804 disposed in the recess 1016A of the protrusion 1215 may be restricted by the movement inhibition portion 1080, and the second portion 1804B may be inhibited or prevented from moving out of the recess 1016A of the protrusion 1215. This may inhibit or prevent the OIS moving unit from being affected by restoring force of the fourth substrate 1804 when OIS is performed, thereby enabling OIS to be accurately performed and improving reliability of OIS operation. The movement inhibition portion 1080 may alternatively be referred to as a "clamp."

The cover member 1300 may form a receiving space with the housing 1210, and the OIS moving unit may be disposed in the receiving space. For example, the cover member 1300 may be in the form of a box having an open lower portion. For example, the cover member 1300 may include an upper plate 1301 and a side plate 1302 connected to the upper plate 1301.

A lower end of the side plate 1302 of the cover member 1300 may be coupled to the housing 1210. The shape of the upper plate 1302 of the cover member 1300 may be polygonal (e.g., quadrangular or octagonal) or circular. The upper plate 1302 of the cover member 1300 may include an opening 1303 configured to expose the lens (not shown) to external light. The opening 1303 may be a through-hole formed through the upper plate 1302 of the cover member 1300 in the optical-axis direction. For example, the cover member 1300 may include a plurality of side plates. The material of the cover member 1300 may be a non-magnetic material. In another embodiment, the cover member 1300 may be made of a magnetic material. For example, the material of the cover member 1300 may be an injection-molded material, such as a resin, or a metal material.

Referring to FIG. 22A, the cover member 1300 may include an opening 304 disposed or formed in the side plate 1302 to avoid spatial interference with the protrusion 1215 of the housing 1210. For example, the protrusion 1216 of the housing 1210 may extend through the opening 304 of the cover member 1300 and may protrude from the side plate 1302 of the cover member 1300.

The cover member 1300 may include a protrusion 1305 disposed above the opening 304 and protruding from the side plate 1302. The protrusion 1305 may be in the shape of a plate. For example, the protrusion 1305 of the cover member 1300 may be disposed on the protrusion 1215 of the housing 1210. For example, the protrusion 1305 may be disposed above the recess 1016A of the protrusion 1215 of the housing 1210. For example, the protrusion 1305 may be disposed above the movement inhibition portion 1080. For example, the protrusion 1305 may overlap the movement inhibition portion 1080 in the optical-axis direction. In addition, for example, the protrusion 1305 may overlap the first portion 1804A of the fourth substrate 1804 in the optical-axis direction. The protrusion 1305 may inhibit or prevent separation of the movement inhibition portion 1080, and may protect the movement inhibition portion 1080 and the fourth substrate 1804 from impact.

Referring to FIG. 24E, the cover member 1300 may include a boss 1311 protruding from the upper plate 1301. For example, the boss 1311 may project from an inner surface of the upper plate 1301 of the cover member 1300 toward the bobbin 1110 or the rolling member 1021. For example, the boss 1311 may be opposite or may overlap the receiving portion 1116 of the bobbin 1110 in the optical-axis direction. At least a part of the boss 1311 may be inserted or disposed in the receiving portion 1116 of the bobbin 1110. The boss 1311 may be disposed on the rolling member 1021.

For example, the cover member 1300 may include a first boss 1311A corresponding to, opposite, or overlapping the first rolling member 1021A or the first receiving portion 1116A of the bobbin 1110. For example, the cover member 1300 may include a second boss 1311B corresponding to, opposite, or overlapping the second rolling member 1021B or the second receiving portion 1116B of the bobbin 1110. For example, the boss 1311 may include a recess depressed from the upper surface of the upper plate 1301 of the cover member 330. In another embodiment, the boss 1311 may include no recess.

As the cover member 1300 is provided with the boss 1311, the embodiment may prevent the rolling member 1021 from being separated from the receiving portion 1116 of the bobbin 1110. In addition, the boss 1311 may serve as a stopper configured to prevent further movement of the bobbin 1110 within a limited range in the upward direction.

Next, the support unit will be described.

The support unit may be disposed between the stationary unit and the OIS moving unit. The support unit may support the OIS moving unit with respect to the stationary unit.

For example, the support unit may be disposed between the sensor base 1270 and the housing 1210, and may support the sensor base 1270 with respect to the housing 1210. The support unit may include a tilting guide member 1060 disposed between the sensor base 1270 and the housing 1210. In addition, the support unit may include a rolling member 1062 disposed between the tilting guide member 1060 and the sensor base 1270. In addition, the support unit may include a rolling member 1063 disposed between the tilting guide member 1060 and the housing 1210.

The tilting guide member 1060 may alternatively be referred to as a "moving plate," a "mover," a "mover plate," a "driving board," a "moving board," a "driving plate," a "plate," a "rotating board," a "tilting plate," a "movement plate," or a "support plate."

The tilting guide member 1060 may be tiltable about the first axis or the second axis or rotatable by a predetermined angle.

For example, the first axis may be formed between a first surface of the tilting guide member 1060 opposite the OIS moving unit (e.g., the sensor base 1270) and the OIS moving unit, and the second axis may be formed between a second surface of the tilting guide member 1060 opposite the stationary unit (e.g., the housing 1210) and the stationary unit.

For example, the tilting guide member 1060 may be disposed between the lower portion (or the lower surface) of the sensor base 1270 and the lower portion 1042 of the housing 1210. For example, at least a part of the tilting guide member 1060 may be disposed in the seating portion 1025A of the sensor base 1270. Since the tilting guide member 1060 is disposed in the seating portion 1025A, the length or height of the camera device 1200 in the optical-axis direction may be reduced.

Referring to FIGs. 24B, 29A, and 32, the tilting guide member 1060 may include a body or main body. The tilting guide member 1060 may be in the form of a plate. For example, the length of the tilting guide member 1060 in a horizontal direction perpendicular to the optical axis (e.g., in the transverse direction or the longitudinal direction) may be greater than the length of the tilting guide member 1060 in the optical-axis direction.

Referring to FIG. 29A, the tilting guide member 1060 may include a recess 1065 in which at least a part of the rolling member 1062 is disposed. The recess 1065 may be disposed or formed in a first surface 1006A of the tilting guide member 1060. The first surface 1006A may be a surface opposite or facing the sensor base 1270. The recess 1065 may be depressed from the first surface 1006A of the tilting guide member 1060.

For example, the tilting guide member 1060 may include a first recess 65A in which at least a part of the first ball member 1062A is disposed and a second recess 65B in which at least a part of the second ball member 1062B is disposed. For example, the recesses 1065A and 1065B may be disposed spaced apart from each other in the second direction (e.g., the X-axis direction). For example, the ball members 1062A and 1062B may be disposed spaced apart from each other in the second direction (e.g., the X-axis direction).

In another embodiment, the recesses of the tilting guide member 1060 in which the ball members 1062A and 1062B are disposed may be spaced apart from each other in the third direction (e.g., the Y-axis direction). That is, in another embodiment, the ball members of the rolling member 1062 may be disposed spaced apart from each other in the third direction.

The recess 1065 may contact the rolling member 1062 at at least one point. For example, the recess 1065 may include a bottom surface and at least one side surface connected to the bottom surface. The at least one side surface of the recess 1065 may be an inclined surface. For example, the recess 1065 may include a bottom surface and a plurality of inclined surfaces. The inclined surfaces of the recess 1065 may have the same shape. In another embodiment, at least one of the inclined surfaces of the recess 1065 may have a different shape from the others.

Referring to FIG. 29B, the tilting guide member 1060 may include a recess 1066 in which at least a part of the rolling member 1063 is disposed. The recess 1066 may be disposed or formed in the second surface 1006B of the tilting guide member 1060. The second surface 1006B may be a surface opposite or facing the housing 1210. In addition, the second surface 1006B may be a surface opposite the first surface 1006A of the tilting guide member 1060. The recess 1066 may be depressed from the second surface 1006B of the tilting guide member 1060.

For example, the tilting guide member 1060 may include a first recess 66A in which at least a part of the first ball member 1063A is disposed and a second recess 66B in which at least a part of the second ball member 1063B is disposed. For example, the recesses 1066A and 1066B may be disposed spaced apart from each other in the third direction (e.g., the Y-axis direction). For example, the ball members 1063A and 1063B may be disposed spaced apart from each other in the third direction (e.g., the Y-axis direction).

In another embodiment, the recesses of the tilting guide member 1060 in which the ball members 1063A and 1063B are disposed may be spaced apart from each other in the second direction (e.g., the X-axis direction). That is, in another embodiment, the ball members of the rolling member 1063 may be disposed spaced apart from each other in the second direction.

The recess 1066 may contact the rolling member 1063 at at least one point. For example, the recess 1066 may include a bottom surface and at least one side surface connected to the bottom surface. The at least one side surface of the recess 1066 may be an inclined surface. For example, the recess 1066 may include a bottom surface and a plurality of inclined surfaces. The inclined surfaces of the recess 1066 may have the same shape. In another embodiment, at least one of the inclined surfaces of the recess 1066 may have a different shape from the others.

The tilting guide member 1060 may include a first escape portion 1061A configured to avoid spatial interference with the gyro sensor 1820. In addition, the tilting guide member 1060 may include a second escape portion 1061B provided at a position corresponding to or symmetrical to the first escape portion 1061A. The second escape portion 1061B may be weight-balanced with the first escape portion 1061A to balance tilting or rotation of the tilting guide member 1060, thereby improving the reliability of the OIS operation.

For example, the first escape portion 1061A may be a recess depressed from a part of an outer surface of the tilting guide member 1060. The second escape portion 1061B may be a recess depressed from another part of the outer surface of the tilting guide member 1060. For example, the tilting guide member 1060 may include four corner portions (or corner regions), wherein the first escape portion 1061A may be formed at the first corner portion of the tilting guide member 1060, and the second escape portion 1061B may be formed at the second corner portion, which is located opposite the first corner portion. The third and fourth corner portions of the tilting guide member 1060 may be rounded, but in another embodiment, at least one of the first and fourth corner portions may be right-angled.

The tilting guide member 1060 may include an opening 1060A corresponding to, opposite, or overlapping the magnetic material 1031 and/or the magnetic material 1032. For example, the opening 1060A may correspond to, may be opposite, or may overlap the protrusion 1028 of the sensor base 1270. The weight of the tilting guide member 1060 may be reduced by the opening 1060A, which may result in a lighter camera device 1200.

For example, the opening 1060A of the tilting guide member 1060 may be disposed on a position corresponding to the protrusion 1028 of the sensor base 1270 in order to avoid spatial interference with the protrusion 1028. In addition, the opening 1060A may be formed to avoid spatial interference with the magnetic material 1031 and the protrusion 1028 of the sensor base 1270.

For example, the opening 1060A of the tilting guide member 1060 may be a through-hole. For example, the opening 1060A may be formed through the tilting guide member 1060 in the first direction (the Z-axis direction) or the optical-axis direction. For example, at least a part of the opening 1060A of the tilting guide member 1060 may include a shape corresponding to the protrusion 1028 of the sensor base 1270. For example, the opening 1060A may include a circular shape, an oval shape, and a polygonal shape, such as a quadrangular shape.

For example, the transverse length of the opening 1060A may be greater than the transverse length of the protrusion 1028 of the sensor base 1270. In another embodiment, the transverse length of the opening 1060A may be equal to the transverse length of the protrusion 1028 of the sensor base 1270. The longitudinal length of the opening 1060A may be greater than the longitudinal length of the protrusion 1028 of the sensor base 1270. In another embodiment, the longitudinal length of the opening 1060A may be equal to the longitudinal length of the protrusion 1028 of the sensor base 1270.

At least a part of the protrusion 1028 of the sensor base 1270 may be disposed in the opening 1060A of the tilting guide member 1060. For example, the protrusion 1028 of the sensor base 1270 may overlap the opening 1060A of the tilting guide member 1060 in the optical-axis direction. In addition, for example, the protrusion 1028 of the sensor base 1270 may overlap the tilting guide member 1060 in a direction perpendicular to the optical-axis direction. This may reduce the length or height of the camera device 1200 in the optical-axis direction.

For example, the opening 1060A may be disposed between the recesses 1065A and 1065B of the tilting guide member 1060. In addition, the opening 1060A may be disposed between the recesses 1066A and 1066B of the tilting guide member 1060.

For example, the tilting guide member 1060 may be made of an injection-molded material. For example, the tilting guide member 1060 may be made of a plastic, resin, or ceramic material. In another embodiment, the tilting guide member 1060 may comprise a metal, such as SUS. In addition, the tilting guide member 1060 may be made of a non-magnetic material. In another embodiment, the tilting guide member 1060 may be made of a magnetic material.

The rolling member 1062 and the rolling member 1063 may be disposed side by side in the direction in which the rolling members intersect or are perpendicular to each other. The OIS moving unit may be rotated, pivoted, or tilted relative to one of the second and third directions by the rolling member 1062. The OIS moving unit may be rotated, pivoted, or tilted relative to the other of the second and third directions by the rolling member 1063.

The rolling member 1062 may be disposed between the sensor base 1270 and the tilting guide member 1060. The rolling member 1062 may include one or more ball members. In FIG. 2A, the rolling member 1062 is shown as including two ball members, but in another embodiment, the rolling member 1062 may include three or more ball members. The ball members 1062A and 1062B of the rolling member 1062 may form the first axis.

For example, the rolling member 1062 may be disposed between the lower portion (or the lower surface) of the sensor base 1270 and the first surface 1006A of the tilting guide member 1060. For example, the rolling member 1062 may be disposed between the recess 1029 of the sensor base 1270 and the recess 1065 of the tilting guide member 1060. A lubricant may be disposed in at least one of the recess 1029 of the sensor base 1270 and the recess 1065 of the tilting guide member 1060 in order to reduce frictional force.

The rolling member 1063 may be disposed between the tilting guide member 1060 and the housing 1210.

The rolling member 1063 may include one or more ball members. In FIG. 22A, the rolling member 1063 is shown as including two ball members, but in another embodiment, the rolling member 1063 may include three or more ball members. The ball members 1063A and 1063B of the rolling member 1063 may form the second axis.

For example, the rolling member 1063 may be disposed between the second surface 1006B of the tilting guide member 1060 and the lower portion 1042 of the housing 1210. For example, the rolling member 1063 may be disposed between the recess 1066 of the tilting guide member 1060 and the recess 1055 of the housing 1210. A lubricant may be disposed in at least one of the recess 1066 of the tilting guide member 1060 and the recess 1055 of the housing 1210 in order to reduce frictional force.

The rolling members 1062 and 1063 may be members configured to perform rolling motion. For example, each of the rolling members 1062 and 1063 may be a "ball," a "ball member," or a "ball bearing." The number of each of the rolling member 1062 and the rolling member 1063 is shown as two, but may be one or three or more in another embodiment. Since the rolling members 1062 and 1063 perform rolling or sliding motion, frictional force therebetween may be relatively reduced, which may reduce current consumption or power consumption necessary for OIS operation.

Referring to FIG. 24D, the rolling member 1021 may not overlap the tilting guide member 1060 in the optical-axis direction. For example, as shown in FIG. 24C, the rolling member 1021 may not overlap the tilting guide member 1060 in a direction perpendicular to the optical axis.

For example, the direction in which the first rolling member 1021A and the second rolling member 1021B are spaced apart from each other may be perpendicular to or may intersect the direction in which the ball member 1062A and the ball member 1062B are spaced apart from each other. In another embodiment, the former and the latter may be parallel to each other.

For example, the direction in which the first rolling member 1021A and the second rolling member 1021B are spaced apart from each other may be parallel to or may intersect the direction in which the ball member 1063A and the ball member 1063B are spaced apart from each other. In another embodiment, the former and the latter may be perpendicular to each other.

For example, when viewed from above, the distance between the ball member 1063A and the ball member 1063B may be less than the distance between the first rolling member 1021A and the second rolling member 1021B. In another embodiment, the distance between the ball member 1063A and the ball member 1063B may be equal to or greater than the distance between the first rolling member 1021A and the second rolling member 1021B.

For example, when viewed from above, the distance between the ball member 1062A and the ball member 1062B may be less than the distance between the first rolling member 1021A and the second rolling member 1021B. In another embodiment, the distance between the ball member 1062A and the ball member 1062B may be equal to or greater than the distance between the first rolling member 1021A and the second rolling member 1021B.

Referring to FIGs. 24A to 24D, the tilting guide member 1060 may be disposed under the image sensor 1810. In addition, at least a part of the tilting guide member 1060 may overlap the image sensor 1810 in the optical-axis direction. At least a part of the tilting guide member 1060 may overlap the lens module 1400 (e.g., the lens) in the optical-axis direction. For example, at least a part of the opening 1060A of the tilting guide member 1060 may overlap the image sensor 1810 in the optical-axis direction. At least a part of the opening 1060A of the tilting guide member 1060 may overlap the lens module 1400 in the optical-axis direction.

For example, at least a part of the rolling members 1062 and 1063 may overlap the image sensor 1810 in the optical-axis direction. At least a part of the rolling members 1062 and 1063 may overlap the lens module 1400 in the optical-axis direction.

Since the image sensor 1810 is disposed above the tilting guide member 1060, the size or disposition of the image sensor 1810 (or the lens module 1400) may not be constrained by the shape or size of the tilting guide member 1060. Thus, the embodiment may enable mounting of a lens module 1400 with a large diameter, may enable mounting of an image sensor 1810 having a large size, and may enable implementation of a camera device with ultra-high resolution.

In addition, since at least a part of the tilting guide member 1060 may overlap the image sensor 1810 in the optical-axis direction, the tilting guide member 1060 may stably support the OIS moving unit when OIS is performed, and may improve the accuracy of tilting of the OIS moving unit, thereby improving the reliability of hand-tremor compensation (or shake compensation).

In addition, since at least a part of the ball members 1062A and 1062B or the ball members 1063A and 1063B may overlap the image sensor 1810 (or the lens module 1400) in the optical-axis direction, the OIS moving unit may be stably tilted about the first axis or the second axis when OIS is performed, which may improve the accuracy of tilting of the OIS moving unit and may improve the reliability of hand-tremor compensation (or shake compensation).

The support unit may include a magnetic material 1031 disposed on the OIS moving unit (e.g., the sensor base 1270) and a magnetic material 1032 disposed on the stationary unit (e.g., the housing 1210). Each of the magnetic material 1031 and the magnetic material 1032 may alternatively be referred to as a "magnet," a "yoke," or a "holding magnet."

For example, the magnetic material 1031 may be disposed in the recess 1028A of the protrusion 1028 of the sensor base 1270, or may be coupled to the recess 1028A. At least a part of the magnetic material 1031 may be disposed in the opening 1060A of the tilting guide member 1060. For example, the magnetic material 1031 may be opposite or may overlap the opening 1060A of the tilting guide member 1060 in the optical-axis direction. For example, the magnetic material 1031 may not overlap the tilting guide member 1060 in the optical-axis direction. In addition, for example, at least a part of the magnetic material 1031 may overlap the tilting guide member 1060 in a direction perpendicular to the optical axis.

The magnetic material 1031 may correspond to, may be opposite, or may overlap the magnetic material 1032 in the optical-axis direction. For example, the magnetic material 1031 may be a two-pole magnet including an N pole and an S pole. For example, the magnetic material 1031 may be a two-pole magnet with an N pole and an S pole separated or disposed in the optical-axis direction. In another embodiment, the magnetic material 1031 may be a two-pole magnet with an N pole and an S pole separated or disposed in a direction perpendicular to the optical-axis direction. In another embodiment, the magnetic material 1031 may be a four-pole magnet including two N poles and two S poles.

The magnetic material 1032 may be disposed under the magnetic material 1031. The magnetic material 1032 may be disposed in the recess 1046 of the housing 1210. For example, the magnetic material 1032 may be coupled to the recess 1046 of the housing 1210.

The magnetic material 1032 may overlap the opening 1060A of the tilting guide member 1060 in the optical-axis direction. The magnetic material 1032 may not overlap the tilting guide member 1060 in the optical-axis direction. The magnetic material 1032 may not overlap the tilting guide member 1060 in a direction perpendicular to the optical axis. In another embodiment, the magnetic material 1032 may overlap the tilting guide member 1060 in a direction perpendicular to the optical axis.

When viewed from above, the area of the opening 1060A of the tilting guide member 1060 may be greater than the area of the upper surface (or the lower surface) of the magnetic material 1031. In addition, when viewed from above, the area of the opening 1060A of the tilting guide member 1060 may be greater than the area of the upper surface (or the lower surface) of the magnetic material 1032.

For example, attractive force may act between the magnetic material 1032 and the magnetic material 1031 in the optical-axis direction (or the first direction). The magnetic material 1032 may be a material that sticks to the magnetic material 1031. For example, the magnetic material 1032 may be a metal material that sticks to a magnet. Alternatively, the magnetic material 1032 may be a metal material that is magnetic. Alternatively, for example, the magnetic material 1032 may be a magnet. The magnetic material 1032 may alternatively be referred to as a "yoke."

The attractive force between the magnetic material 1032 and the magnetic material 1031 may cause the sensor base 1270 and the housing 1210 to press the tilting guide member 1060, and the tilting guide member 1060 and the rolling members 1062 and 1063 may be brought into tight contact with the sensor base 1270 and/or the housing 1210. The tilting guide member 1060 and the rolling members 62 and 63 may stably support the OIS moving unit with respect to the stationary unit due to the attractive force between the magnetic material 1032 and the magnetic material 1031, whereby stable OIS operation may be performed.

In addition, since at least a part of the magnetic material 1031 is disposed in the opening 1060A of the tilting guide member 1060, the distance between the magnetic material 1031 and the magnetic material 1032 may be reduced, which may increase the attractive force between the magnetic material 1031 and the magnetic material 1032, and the OIS moving unit may be stably supported with respect to the stationary unit.

In addition, since the magnetic material 1031 is disposed on a central region of the lower surface of the sensor base 1270 and the magnetic material 1032 is disposed on the center of the lower portion 1042 of the housing 1210, the attractive force between the magnetic material 1031 and the magnetic material 1032 may be concentrated on the center of the sensor base 1270 and the center of the housing 1210, which may efficiently and reliably support the OIS moving unit.

In another embodiment, the protrusion of the sensor base 1270 may be omitted, the magnetic material 1031 may be disposed on the lower surface of the sensor base 1270, the housing 1210 may include a protrusion disposed on the lower portion 1042 of the housing 1210 so as to correspond to, be opposite, or overlap the opening 1060A of the tilting guide member 1060, and the magnetic material 1032 may be disposed on the protrusion of the housing 1210. In this case, the seating portion 1025A of the sensor base 1270 may be omitted, a seating portion corresponding to or identical to the seating portion 1025A of the sensor base 1270 may be formed on the upper surface of the lower portion 1042 of the housing 1210, the tilting guide member 1060 may be disposed in the seating portion of the housing 1210, the protrusion may protrude from the bottom surface of the seating portion of the housing 1210, a recess in which the magnetic material 1032 is disposed may be formed in the protrusion of the housing 1210, and a recess in which the magnetic material 1031 is disposed may be formed in the lower surface of the sensor base 1270. Also, in another embodiment, at least a part of the protrusion of the housing 1210 may be disposed in the opening 1060A of the tilting guide member 1060, and may overlap the tilting guide member 1060 in a direction perpendicular to the optical axis. Also, in another embodiment, the magnetic material 1032 may be disposed on the protrusion of housing 1210 (or the recess of the protrusion), and the magnetic material 1031 may be disposed on the sensor base 1270 (or the recess of sensor base 1270). Also, in another embodiment, the magnetic material 1032 may overlap the tilting guide member 1060 in a direction perpendicular to the optical axis.

FIG. 29C is a front perspective view of a tilting guide member 1060-1 according to another embodiment, and FIG. 29D is a rear perspective view of the tilting guide member 1060-1 of FIG. 29C.

In the embodiment of FIGs. 29C and 29D, the rolling members 1062 and 1063 of FIG. 2A may be omitted, and the tilting guide member 1060-1 may include at least one boss 1065-1 corresponding to the rolling member 1062 of FIG. 2A and at least one boss 1066-1 corresponding to the rolling member 1063 of FIG. 22A. For example, the boss 1065-1 may be provided in plural, and the boss 1066-1 may be provided in plural.

For example, the boss 1065-1 may include two first bosses 1065A1 and 1065B1 spaced apart from each other, and the boss 1066-1 may include two second bosses 1065A1 and 1065B1 spaced apart from each other.

The first bosses 1065A1 and 1065B1 may protrude from the first surface 1006A of the tilting guide member 1060-1, and the second bosses 1066A1 and 1066B1 may protrude from the second surface 1006B of the tilting guide member 1060-1. For example, each of the first bosses 1065A1 and 1065B1 may be hemispherical or dome-shaped, and each of the second bosses 1066A1 and 1066B1 may be hemispherical, semicircular, semi-elliptical, or dome-shaped.

For example, the tilting guide member 1060-1 may include a body and first bosses 1065A1 and 1065B1 and second bosses 1066A1 and 1066B1 protruding from the body. In this case, the body, the first bosses 1065A1 and 1065B1, and the second bosses 1066A1 and 1066B1 may be integrally formed.

At least a part of the boss 1065-1 of the tilting guide member 1060-1 may be disposed in the recess 1029 of the sensor base 1270. At least a part of the boss 1066-1 of the tilting guide member 1060-1 may be disposed in the recess 1055 of the housing 1210. The boss 1065-1 of the tilting guide member 1060-1 may slide in the recess 1029 of the sensor base 1270, and the boss 1066-1 of the tilting guide member 1060-1 may slide in the recess 1055 of the housing 1210. This may reduce the frictional force between the tilting guide member 1060-1 and the sensor base 1270 and/or the frictional force between the tilting guide member 1060-1 and the housing 1210, and may reduce current consumption or power consumption necessary for OIS operation.

The first bosses 1065A1 and 1065B1 may form a first axis, and the second protrusions 66A1, 66B2 may form a second axis. A description of the disposition of the ball members 1062A and 1062B in FIG. 2A may be applied, or applied mutatis mutandis, to the first bosses 1065A1 and 1065B1 of the tilting guide member 1060-1, and a description of the disposition of the ball members 1063A and 1063B in FIG. 2A may be applied, or applied mutatis mutandis, to the second bosses 1066A1 and 1066B1 of the tilting guide member 1060-1.

For example, at least a part of the first bosses 1065A1 and 1065B1 of the tilting guide member 1060-1 may overlap the image sensor 1810 in the optical-axis direction. For example, at least a part of the first bosses 1065A1 and 1065B1 of the tilting guide member 1060-1 may overlap the lens module 1400 in the optical-axis direction. For example, at least a part of the second bosses 66A1 and 66B2 of the tilting guide member 1060-1 may overlap the image sensor 1810 in the optical-axis direction. For example, at least a part of the second bosses 1066A1 and 1066B1 of the tilting guide member 1060-1 may overlap the lens module 1400 in the optical-axis direction.

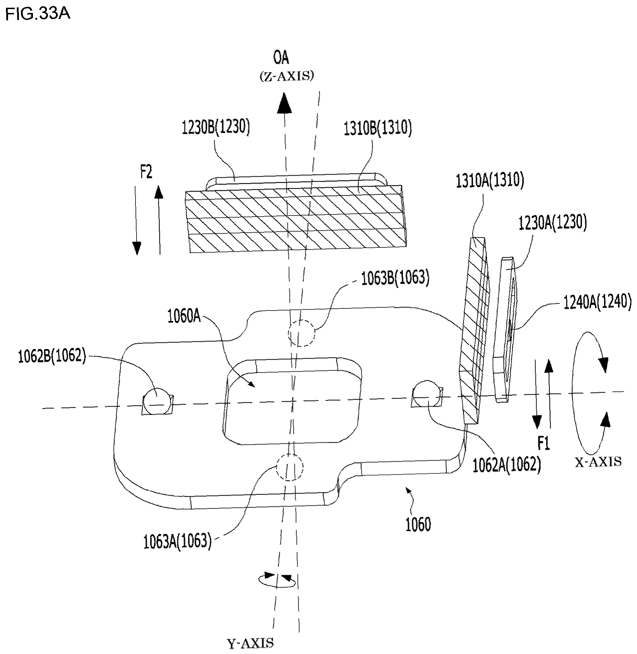

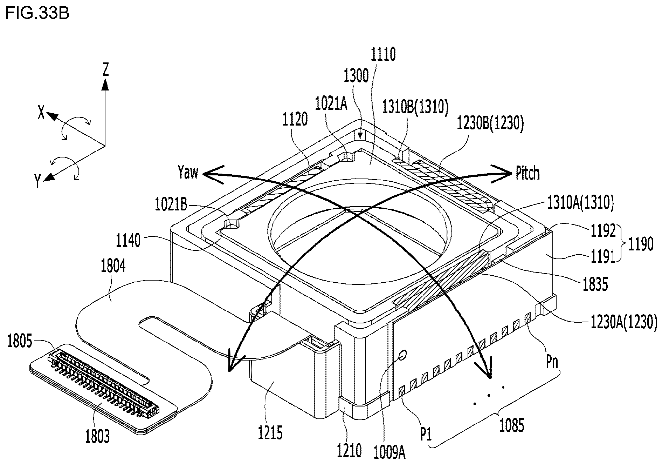

FIG. 33A is a view illustrating electromagnetic force due to interaction between the magnet units 310A and 310B and the coil units 1230A and 1230B and the motion of the OIS moving unit, and FIG. 33B shows the motion of the OIS moving unit 1100 due to the electromagnetic force of FIG. 33A.

The motion of the OIS moving unit by an OIS driving unit will be described with reference to FIGs. 33A and 33B. The "OIS driving unit" may be referred to as a driving unit. The OIS driving unit may tilt the OIS moving unit (e.g., the moving module) relative to the stationary unit (e.g., the housing 1210). The OIS driving unit may include a coil 1230 and a magnet 1310. In addition, the OIS driving unit may include a position sensor 1240.

First electromagnetic force F1 may be generated by interaction between the first magnet unit 1310A and the first coil unit 1230A. For example, the first electromagnetic force F1 may be exerted in the optical-axis direction, such as the upward direction or the downward direction.

The OIS moving unit may be tilted about the second axis (e.g., the Y-axis) (or the ball member 1063) by the first electromagnetic force F1. For example, the OIS moving unit may be second-axis tilted by the first electromagnetic force F1. Here, second-axis (Y-axis) tilting means that the OIS moving unit is tilted about the second axis (the Y-axis) or the OIS moving unit is rotated about the second axis (the Y-axis) by a predetermined angle.

For example, the tilting guide member 1060 may be tilted about the second axis (e.g., the Y-axis) (or the ball member 1063) by the first electromagnetic force F1. For example, the tilting guide member 1060 may be second-axis tilted by the first electromagnetic force F1.

Referring to FIG. 24B, a gap or space must be present between the tilting guide member 1060 and the OIS moving unit (e.g., the sensor base 1270) by the first ball members 1062A and 1062B in order for the OIS moving unit to be tilted about the second axis (or the ball member 63). For example, a gap or space in which the tilting guide member 1060 is movable may be present between the upper surface 1006A of the tilting guide member 1060 and the OIS moving unit (e.g., the sensor base 1270). For example, the upper surface 1006A of the tilting guide member 1060 may be spaced apart from the OIS moving unit (e.g., the sensor base 1270) or the lower surface of the sensor base 1270.

Second electromagnetic force F2 may be generated by interaction between the second magnet unit 1310B and the second coil unit 1230B. For example, the second electromagnetic force F2 may be exerted in the upward direction or the downward direction.

The OIS moving unit may be tilted about the first axis (e.g., the X-axis) (or the ball member 1062) by the second electromagnetic force F2. For example, the OIS moving unit may be first-axis tilted by the second electromagnetic force F2. Here, first-axis (X-axis) tilting means that the OIS moving unit is tilted about the first axis (the X-axis) or the OIS moving unit is rotated about the first axis (the X-axis) by a predetermined angle.

For example, the tilting guide member 1060 may be brought into contact with the stationary unit (e.g., the housing 1210) by first-axis or second-axis tilting. At this time, the stationary unit may serve as a stopper configured to inhibit tilting of the OIS moving unit.

In another embodiment, the first electromagnetic force due to the interaction between the first magnet unit and the first coil unit and the second electromagnetic force due to the interaction between the second magnet unit and the second coil unit may act in a direction different from the optical axis (e.g., a direction perpendicular to the optical axis, e.g., the X-axis direction or the Y-axis direction).

In a camera device configured such that an image sensor is stationary and a lens is moved in a direction perpendicular to the optical axis for hand-tremor compensation or shake compensation ("Comparative Example 1"), distortion of an image may occur. Also, in a camera device configured such that a lens is stationary and an image sensor is moved or tilted for hand-tremor compensation ("Comparative Example 2"), image distortion may occur at edges or corners of the image sensor. As such, in Comparative Example 1 and Comparative Example 2, the image sensor and the lens are separated and only one of the image sensor and the lens is moved or tilted, which may cause image distortion during hand-tremor compensation, and hand-tremor compensation at wide angles may be difficult.

In the embodiment, for hand-tremor compensation, the OIS driving unit may tilt the OIS moving unit about the first axis or the second axis or may rotate the OIS moving unit within a predetermined angular range. In the embodiment, since the OIS moving unit includes a lens module 1400 and an image sensor 1810, the tilting direction (or the rotating direction) and the tilting angle (or the rotating angle) of the lens module 1400 (e.g., a lens or a lens module) (or the bobbin 1110) may be the same or nearly the same as the tilting direction (or the rotating direction) and the tilting angle (or the rotating angle) of the image sensor 1810 when OIS is performed.

In the embodiment, the lens module 1400 (or the bobbin 1110) and the image sensor 1810 may be simultaneously tilted or rotated together when OIS is performed, 100% image resolution without image distortion may be obtained, and hand-tremor compensation or shake compensation at wide angles may be possible.

Also, in the embodiment, since the OIS moving unit including the lens module 1400 (or the bobbin 1110) and the image sensor 1810 is tilted or rotated, broadband shake compensation may be possible. Also, in the embodiment, since distortion-free image compensation is mechanically possible, load during image processing is low, whereby current consumption may be reduced, when compared to Comparative Example 1 and Comparative Example 2.

Also, in the embodiment, since the tilting guide member 1060 is used to tilt the OIS moving unit, the OIS moving unit may be stably, precisely, and accurately tilted, when compared to an example using only a ball member or a shaft member, thereby improving the reliability of OIS operation.

Also, in the embodiment, power consumption required to perform OIS may be reduced by the bent portions 1804D and 1804E and the third portion 1804C of the fourth substrate 1804, which is a flexible substrate, of the circuit board 1800.

Also, in the embodiment, since the tilting guide member 1060 is disposed in the seating portion 1025A of the sensor base 1270 and the protrusion 1028 of the sensor base 1270 overlaps the opening 1060A of the tilting guide member 1060, the height or length of the camera device 1200 in the optical-axis direction may be reduced.

Also, in the embodiment, since at least a part of the magnetic material 1031 is disposed in the opening 1060A of the tilting guide member 1060, the distance between the magnetic material 1031 and the magnetic material 1032 may be reduced, which may increase attractive force or retentive force necessary to support the OIS moving unit, whereby stable OIS operation may be performed.

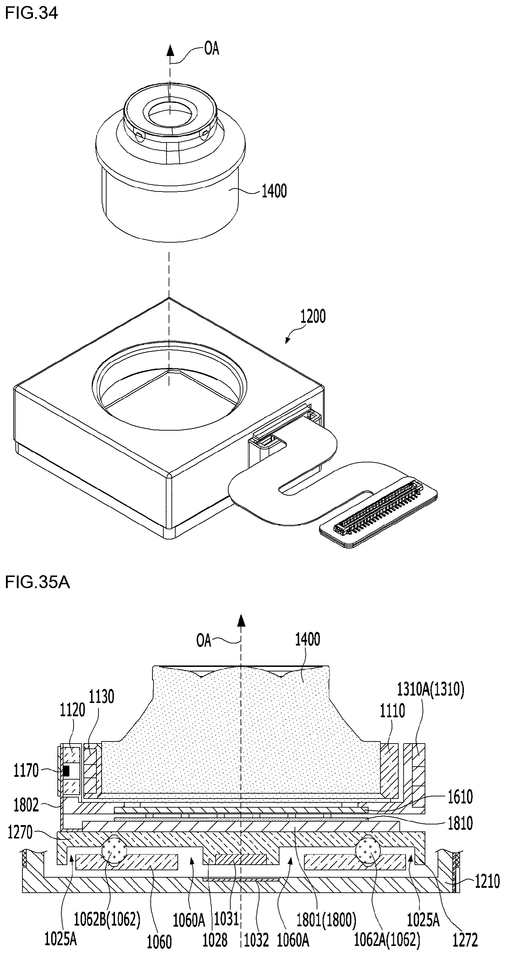

FIG. 34 is a perspective view of the lens module 1400 and the camera device 1200.

Referring to FIG. 34, the lens module 1400 may be coupled to the bobbin 100, and may be moved with the bobbin 1110 in the optical-axis direction. For example, the lens module 1400 may include at least one of a lens and a lens barrel.

In the embodiment, the lens module 1400 and image sensor 1810 may be simultaneously X-axis tilted or Y-axis tilted in the same direction and by the same angle during hand-tremor compensation or shake compensation.

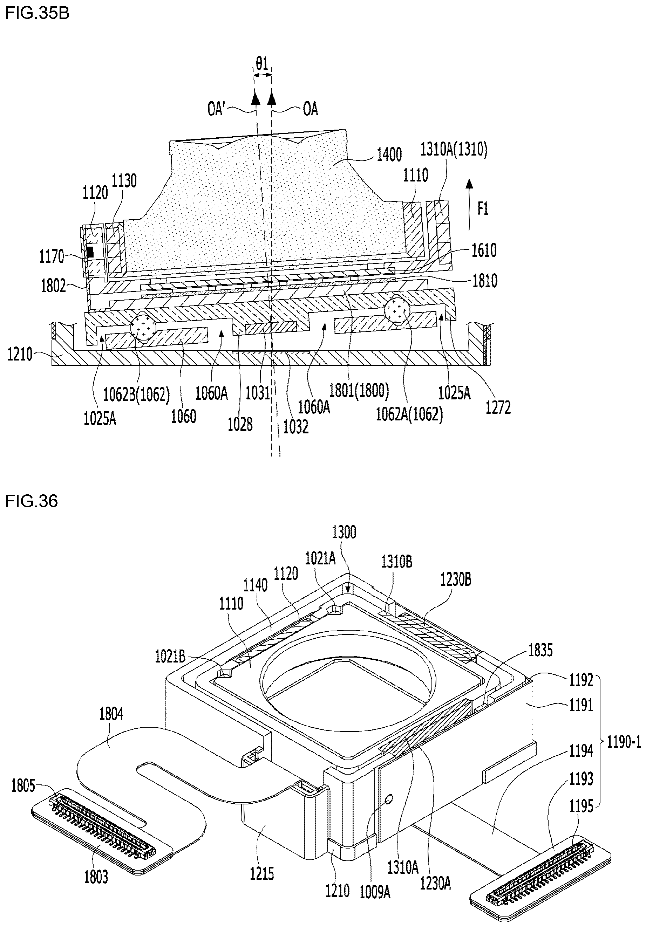

FIG. 35A shows a first position of the OIS moving unit 1100, and FIG. 35B shows a second position of the OIS moving unit 1100.

Referring to FIGs. 34, 35A, and 35B, the OIS moving unit 1100 may be tilted by a predetermined angle θ1 by force F1 due to interaction between the first magnet unit 1310A and the first coil unit 1230A.

That is, when the OIS moving unit 1100 is moved from the first position to the second position, both the image sensor 1810 and the lens module 1400 may be tilted simultaneously by the predetermined angle θ1. In addition, when the OIS moving unit 1100 is moved from the first position to the second position, the tilting guide member 1060 may be tilted relative to the second axis (e.g., the Y-axis) (or about the axis) by the predetermined angle θ1 together with the image sensor 1810 and the lens module 1400.

As a result, in the embodiment, it is possible to obtain 100% image resolution without image distortion and to perform hand-tremor compensation or shake compensation at wide angles. A description of FIGs. 35A and 35B may be applied or analogically applied to X-axis tilting of the OIS moving unit 1100.

FIG. 36 is a perspective view of a camera device including a circuit board 1190-1 according to another embodiment. Referring to FIG. 36, the circuit board 1190-1 may include a first substrate 1191, a second substrate 1192, and an extension substrate 1193 and 1194 extending from the first substrate 1191. The extension substrate 1193 and 1194 may be provided with a connector 1195. For example, the terminals P1 to Pn of the circuit board 1190 of FIG. 1 may be omitted from the circuit board 1190-1 of FIG. 36. The controller 1835 may be conductively connected to the connector 1195. Alternatively, in an embodiment where the controller 1835 is omitted, the coil 1230 or the position sensor 1240 may be conductively connected to the connector 1195.

The connector 1195 may be coupled or connected to another external connector of the camera device 1200 or to an external device. The connector 1195 connected to the other external connector may correspond to a stationary unit that does not move when OIS is performed.

The extension substrate may include a third substrate 1193 on which the connector 1195 is disposed and a fourth substrate 1194 connecting the third substrate 1193 to the first substrate 1191. In FIG. 36, the fourth substrate 1194 may be flat or plate-shaped, but in another embodiment, the fourth substrate 1194 may include at least one bent or curved region. For example, the fourth substrate 1194 may include at least one of the portions 1804A to 1804E of the fourth substrate 1804 of FIG. 28. A description of the fourth substrate 1804 of FIG. 28 may be applied or analogically applied to the fourth substrate 1194. The fourth substrate 1194 may flexibly support the camera device 1200 or the OIS moving unit and may serve to cushion external impact. That is, the fourth substrate 1194 may serve as a spring configured to cushion impact. In addition, since the fourth substrate 1194 may serve to flexibly support the OIS moving unit, it is possible to reduce drive force or drive power required to perform OIS.

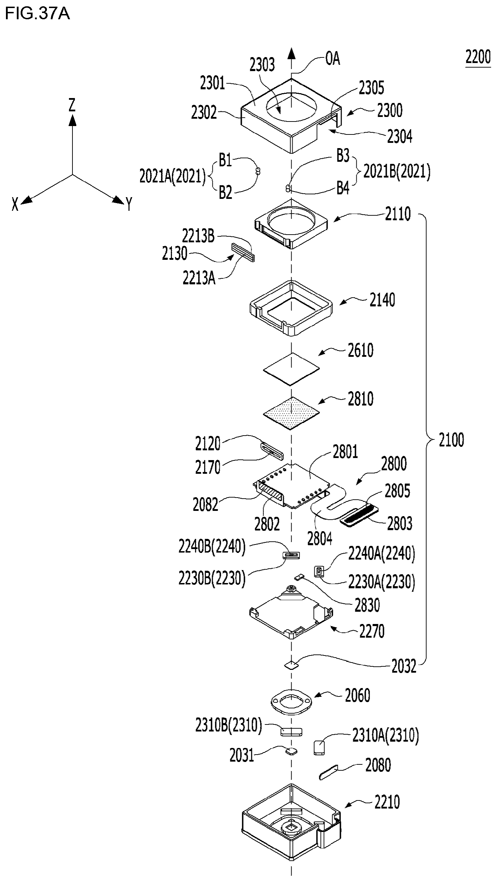

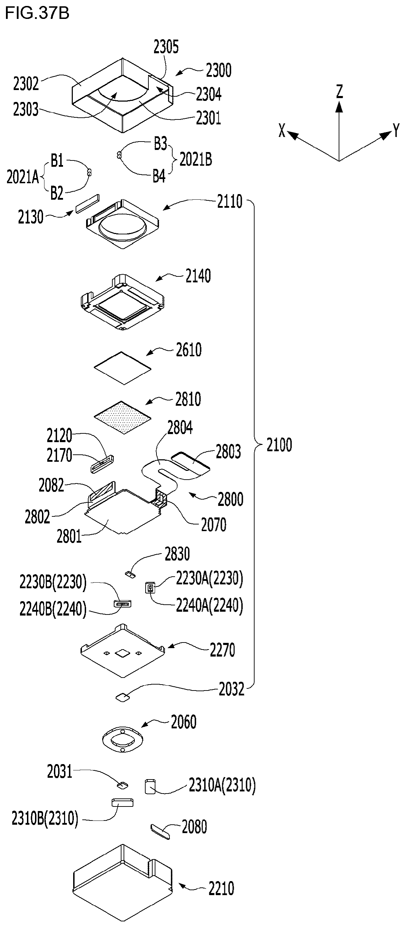

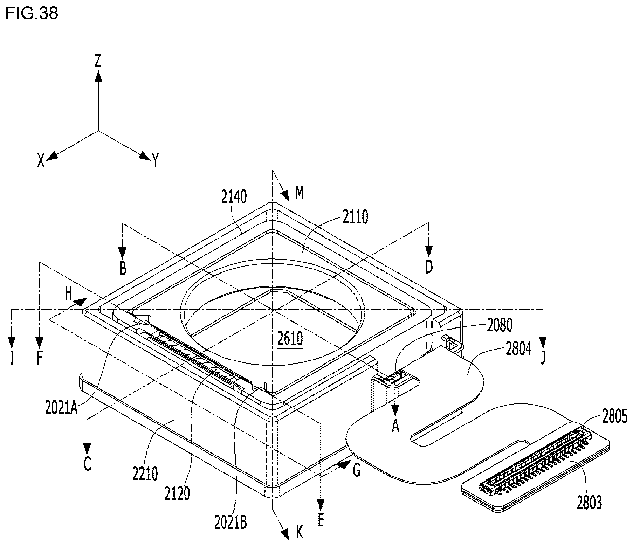

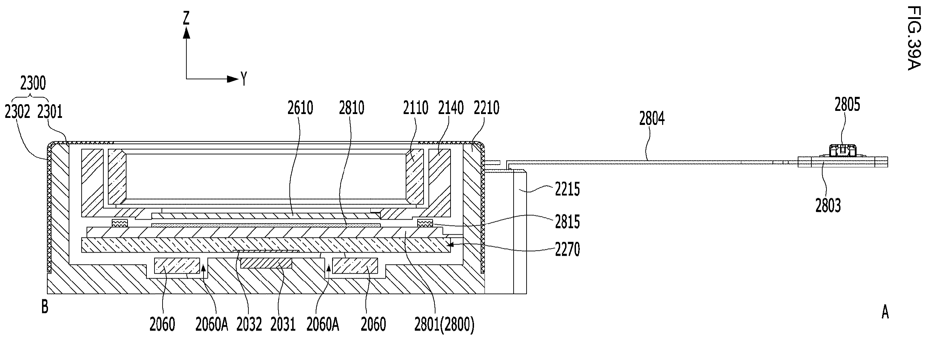

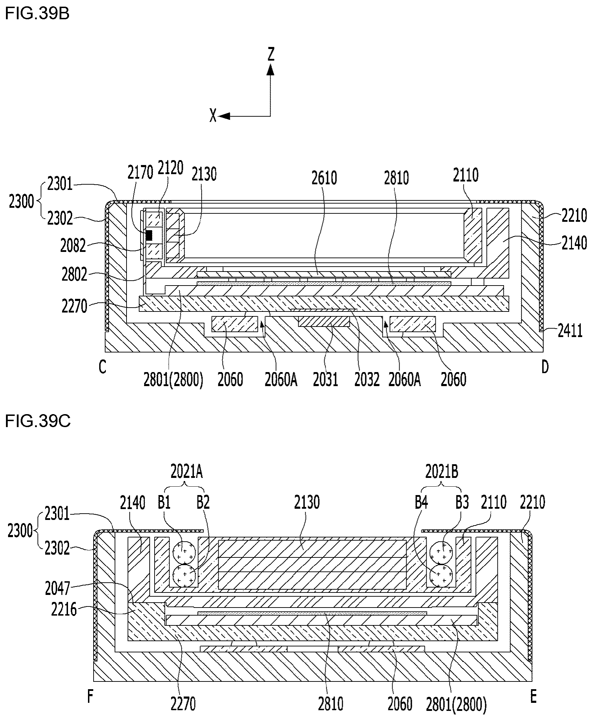

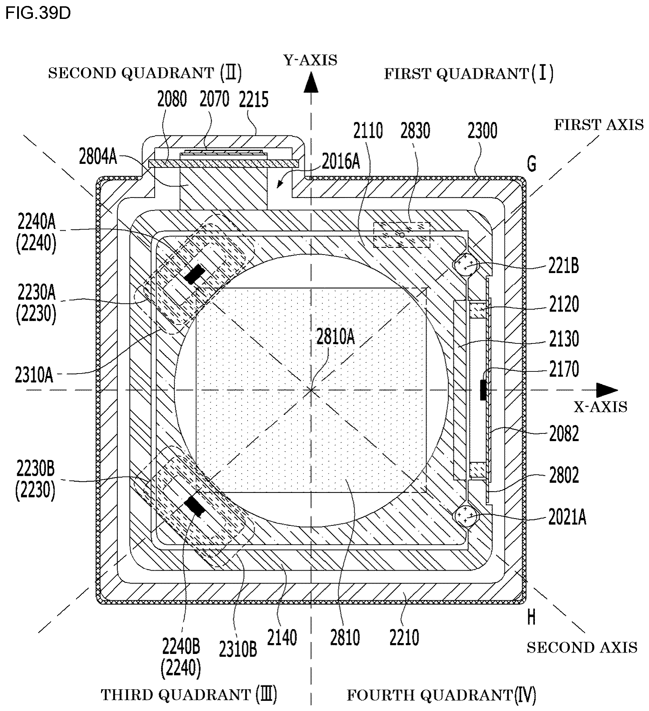

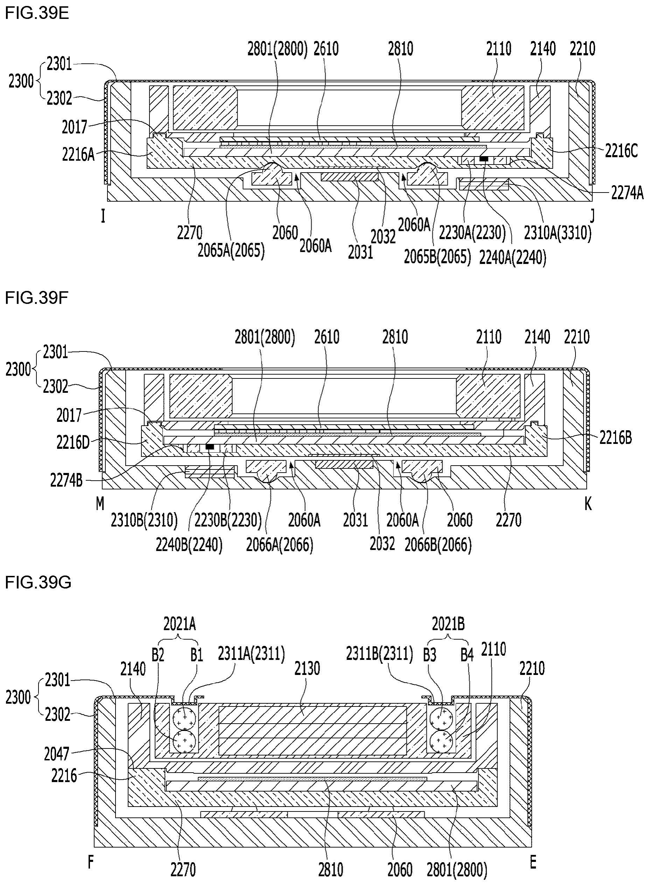

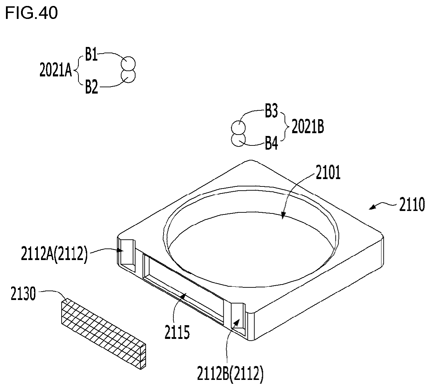

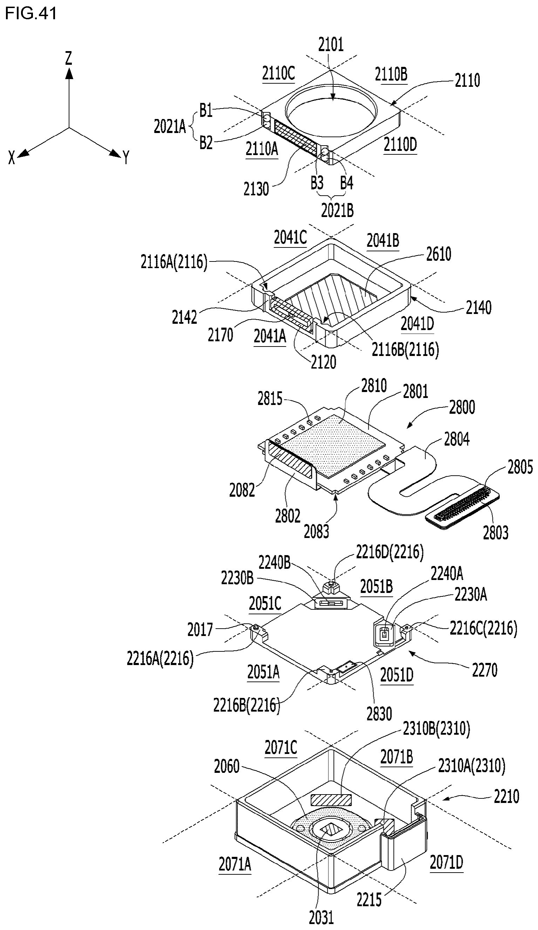

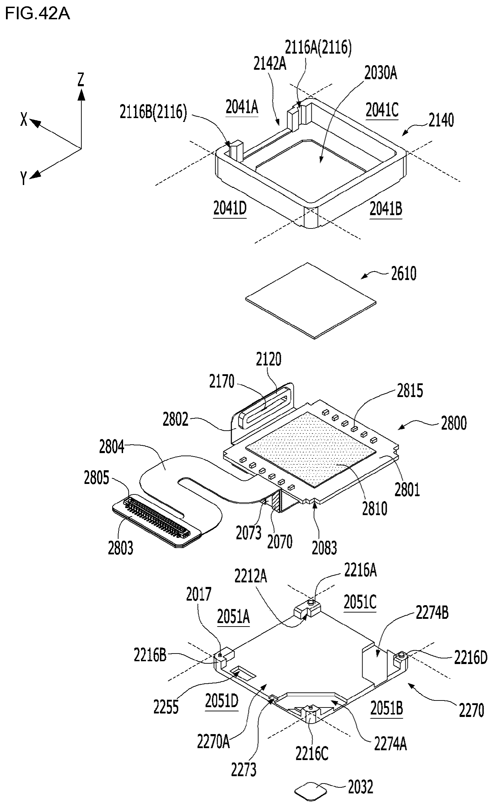

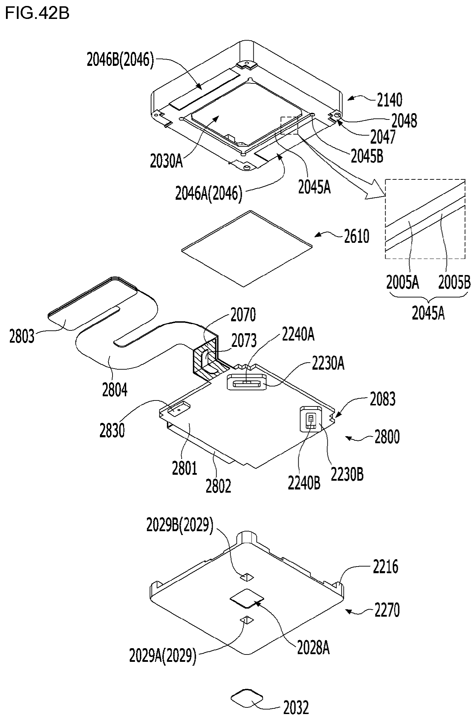

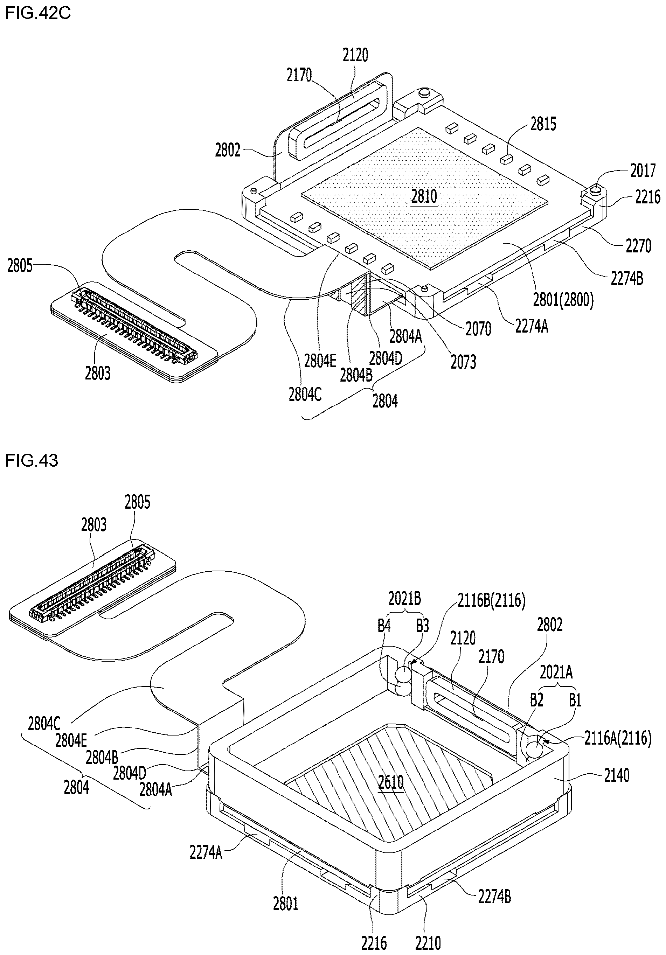

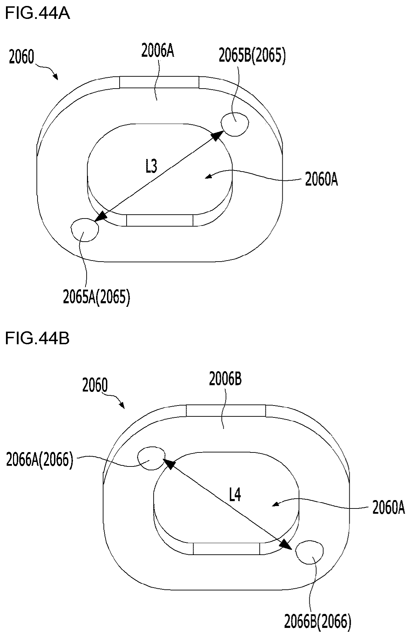

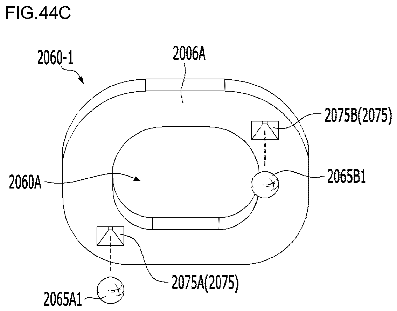

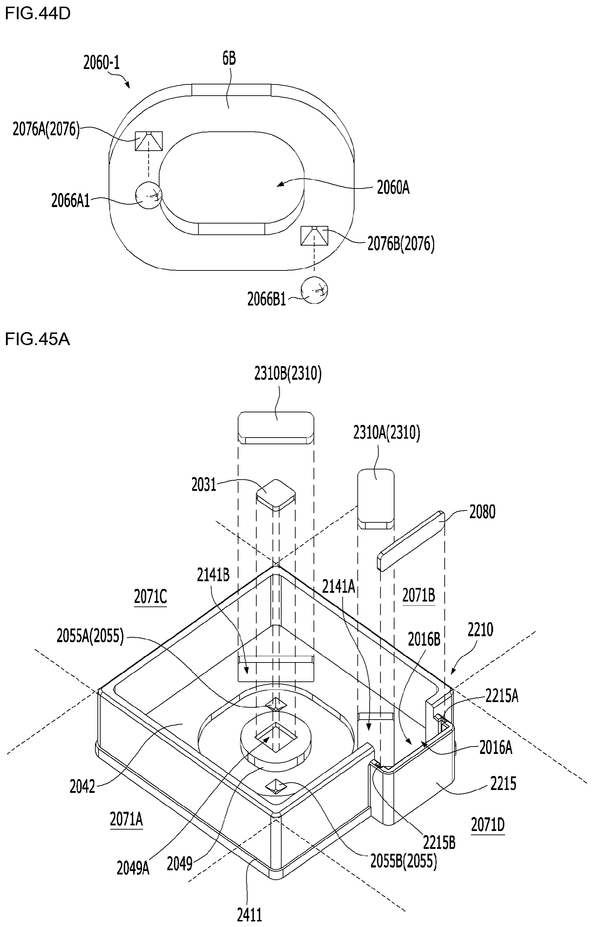

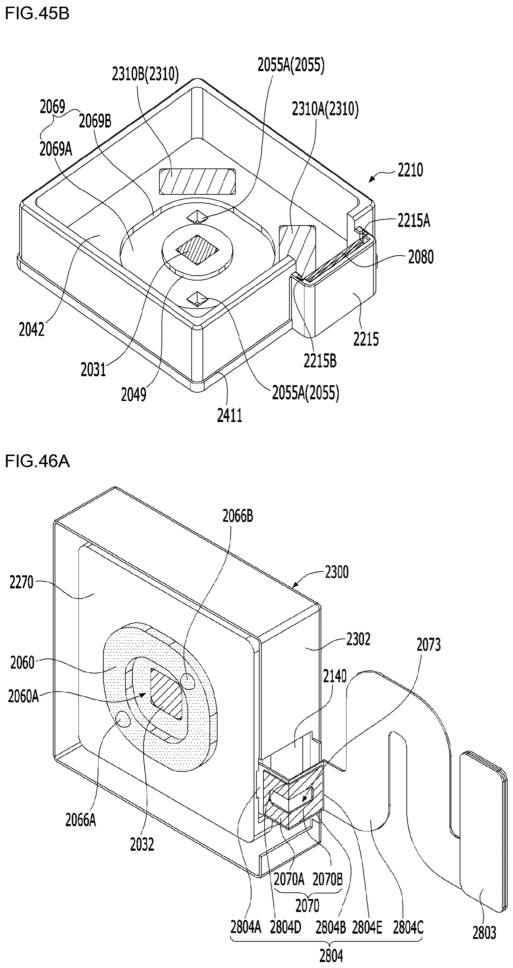

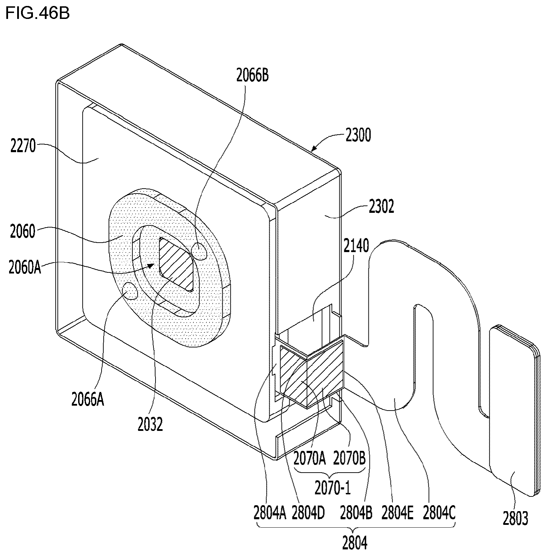

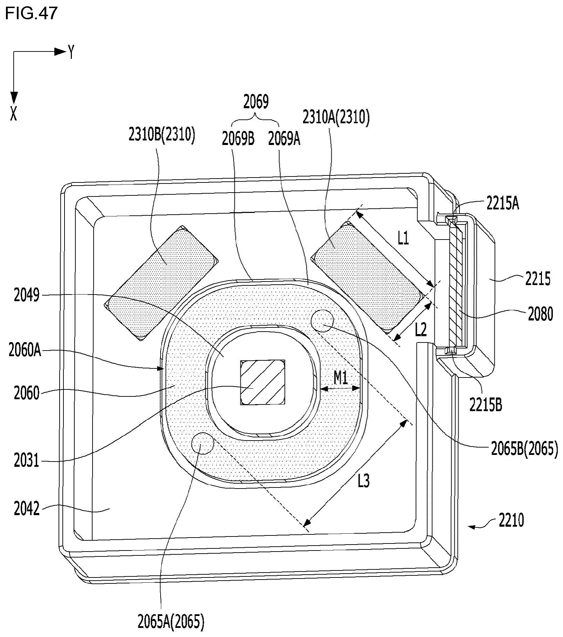

FIG. 37A is a first exploded perspective view of a camera device 2200 according to another embodiment, FIG. 37B is a second exploded perspective view of the camera device 2200 of FIG. 37A, FIG. 38 is a perspective view of the camera device 2200 excluding a cover member 2300, FIG. 39A is a sectional view of the camera device 2200 in direction AB of FIG. 38, FIG. 39B is a sectional view of the camera device 2200 in direction CD of FIG. 38, FIG. 39C is a sectional view of the camera device 2200 in direction EF of FIG. 38, FIG. 39D is a sectional view of the camera device 2200 in direction GH of FIG. 38, FIG. 39E is a sectional view of the camera device 2200 in direction IJ of FIG. 38, FIG. 39F is a sectional view of the camera device 2200 in direction KM of FIG. 38, FIG. 39G is a sectional view showing a boss 2311 of the cover member 2300, FIG. 40 is an exploded perspective view of a bobbin 2110, a rolling member 2021, and a magnet 2130, FIG. 41 is a separated perspective view of the bobbin 2110, a holder 2140, a sensor base 2270, and a housing 2210, FIG. 42A is a first separated perspective view of the holder 2140, a filter 2610, a circuit board 2800, the sensor base 2270, and a magnetic material 2032, FIG. 42B is a first separated perspective view of the holder 2140, the filter 2610, the circuit board 2800, the sensor base 2270, and the magnetic material 2032 of FIG. 42A, FIG. 42C is a coupled perspective view of the sensor base 2270 and the circuit board 2800, FIG. 43 is a perspective view of the holder 2140, the rolling member 2021, a coil 2120, a position sensor 2170, the circuit board 2800, and the sensor base 2270, FIG. 44A is a front perspective view of a tilting guide member 2060, FIG. 44B is a rear perspective view of the tilting guide member 2060, FIG. 44C is a front perspective view of a tilting guide member 2060-1 and first ball members 2065A1 and 2065B1 according to another embodiment, FIG. 44D is a rear perspective view of the tilting guide member 2060-1 and second ball members 2066A1 and 2066B1 of FIG. 44C, FIG. 45A is a separated perspective view of the housing 2210, magnets 2310A, 2310B, and 2031, a magnet material 2031, and a movement inhibition portion 2080, FIG. 45B is a coupled perspective view of the housing 2210, the magnets 2310A, 2310B, and 2031, the magnet material 2031, and the movement inhibition portion 2080, FIG. 46A is a coupled perspective view of the cover member 2300, the holder 2140, the sensor base 2270, the circuit board 2800, and the magnetic material 2032, the magnetic material 2031, the tilting guide member 2060, and a reinforcement 2070, FIG. 46B is a perspective view of a reinforcing member 70-1 according to another embodiment, and FIG. 47 is a perspective view of the housing 2210, the magnets 2310A, 2310B, and 2031, the movement inhibition portion 2080, the magnetic material 2031, and the tilting guide member 2060.

Referring to FIGs. 37A to 47, the camera device 2200 may include a stationary unit, an AF moving unit, an OIS moving unit 2100, and a support unit. The OIS moving unit 2100 may alternatively be referred to as a "moving unit," a "shaking unit," or a "motion unit."

The stationary unit may be a stationary element. That is, the stationary unit may not be moved in the optical-axis direction. Alternatively, the stationary unit may not be moved or tilted in a direction perpendicular to the optical axis. In addition, a configuration coupled to the stationary unit may be a stationary unit.

The stationary unit may include a housing 2210. The stationary unit may include a cover member 2300. For example, the stationary unit may include a configuration disposed on or coupled to the housing 2210 or the cover member 2300. For example, the stationary unit may include at least one of a magnet 2310, a magnetic material 2031, and a movement inhibition portion 2080 disposed on the housing 2210.

The AF moving unit may move relative to the stationary unit in the optical-axis direction. For example, the AF moving unit may include a bobbin 2110. In another embodiment, the AF moving unit may further comprise a configuration (e.g., a magnet 2130) coupled to the bobbin 2110. In another embodiment, the AF moving unit may further include a lens module 2400 (see FIG. 39) coupled to the bobbin 2110.

The OIS moving unit 2100 (see FIG. 37A) may be moved and/or tilted leftward or rightward about the first axis (e.g., pitch) that intersects the optical axis with respect to the stationary unit. In addition, the OIS moving unit may be moved and/or tilted leftward or rightward about the second axis (e.g., yaw) that intersects the optical axis with respect to the stationary unit. For example, the first axis may be perpendicular to the optical-axis direction, and the second axis may be perpendicular to the optical-axis direction and the first axis. For example, the first axis may intersect the X-axis or the Y-axis. For example, the second axis may intersect the X-axis or the Y-axis. For example, the first axis and the second axis may be perpendicular to each other.

For example, the OIS moving unit 2100 may include the AF moving unit. In addition, the OIS moving unit may include an image sensor 2810. The OIS moving unit 2100 may include a circuit board 2800 on which the image sensor 2810 is disposed. In addition, the OIS moving unit 2100 may include a sensor base 2270 on which at least a part of the circuit board 2800 is disposed. In addition, the OIS moving unit may include a holder 2140 coupled to the sensor base 2270.

The OIS moving unit may alternatively be referred to as a first moving unit (or a first motion unit), and the AF moving unit may alternatively be referred to as a second moving unit (or a second movement unit). For example, the first moving unit may include a sensor base 2270 and a circuit board 2800.

In addition, for example, the OIS moving unit 2100 may include a configuration disposed on or coupled to at least one of the holder 2140, the sensor base 2270, and the circuit board 2800. For example, the OIS moving unit 2100 may include a filter 2610 disposed on the holder 2140. For example, the OIS moving unit 2100 may include a magnetic material 2032 disposed on the sensor base 2270. For example, the OIS moving unit 2100 may include at least one of an image sensor 2810, sensors 2170 and 2240, coils 1220 and 2230, a circuit element 2815, and a controller 2830 disposed on the circuit board 2800.

The support unit may support the OIS moving unit with respect to the stationary unit. For example, the support unit may include a tilting guide member 2060. In another embodiment, for example, the support unit may further include a rolling member (e.g., a ball member) or a sliding member (e.g., a shaft).

The bobbin 2110 is configured to receive a lens or a lens barrel and may be disposed in the holder 2140. The bobbin 100 may be disposed in the cover member 2300. The bobbin 2110 may alternatively be referred to as a "lens holder" or a "lens carrier."

The bobbin 2110 may move in the optical-axis direction. For example, the bobbin 2110 may be moved in the first direction (e.g., the Z-axis direction) by electromagnetic interaction between the coil 2120 and the magnet 2130. The coil 2120 and the magnet 2130 may be an AF driving unit configured to move or drive the AF moving unit.

In addition, the bobbin 2110 may be included in the OIS moving unit 2100, and the bobbin 2110 may be tilted about the first axis or the second axis or may be rotated by a predetermined angle.

Referring to FIG. 40, the bobbin 2110 may include an opening 2101 for coupling to the lens module 2400. The shape of the opening 2101 of the bobbin 2110 may match the shape of the lens module 2400 mounted or coupled thereto, and may be, without being limited to, circular, oval, or polygonal.

Although not shown in FIG. 37A, the bobbin 2110 may include at least one stopper disposed on at least one of an upper surface and a lower surface thereof. The stopper of the bobbin 2110 may protrude from the upper surface (or the lower surface) of the bobbin 2110 in the first direction or the upward direction (or the downward direction), and may prevent the upper surface (or the lower surface) of the bobbin 2110 from directly colliding with an inner surface of an upper plate 2301 of the cover member 2300 (or a lower portion of the holder 2140).

The bobbin 2110 may include a seating portion 2115 configured to allow the magnet 2130 to be seated or disposed thereon. For example, the seating portion 2115 may be a recess depressed from an outer surface of the bobbin 2110.

Referring to FIG. 41, the bobbin 2110 may include a plurality of side surfaces 22110A to 22110D or outer surfaces. For example, the bobbin 2110 may include a first side surface 2110A, a second side surface 2110B, a third side surface 2110C, and a fourth side surface 2110D.

For example, the second side surface 2110B may face the first side surface 2110A or may be opposite the first side surface 2110A with respect to the optical axis OA. The third side surface 2110C and the fourth side surface 2110D may be located between the first side surface 2110A and the second side surface 2110B. For example, the fourth side surface 2110D may face the third side surface 2110C or may be opposite the third side surface 2110C with respect to the optical axis OA. In FIG. 6, the bobbin 2110 is shown as including four side surfaces, but in another embodiment, the bobbin may include three side surfaces or five or more side surfaces.

For example, the seating portion 2115 may be formed on the first side surface 2110A of the bobbin. For example, a lower portion of the seating portion 2115 may be closed rather than open to a lower surface of the bobbin 2110. In addition, an upper portion of the seating portion 2115 may be closed rather than open to the upper surface of the bobbin 2110. In another embodiment, for example, the seating portion 2115 may include an opening that opens to at least one of the upper surface and the lower surface of the bobbin 2110.

The bobbin 2110 may include a receiving portion 1112 configured to receive at least a part of the rolling member 2021. For example, at least a part of the receiving portion 1112 may be disposed on the first side surface 2110A of the bobbin 2110. The receiving portion 1112 may be a recess depressed from an outer surface (e.g., the first side surface 2110A) of the bobbin 2110. The receiving portion 1112 may alternatively be referred to as a "receiving recess," a "recess," or a "guide recess." A lubricant (e.g., grease) may be disposed in the receiving portion 1112 of the bobbin 2110 in order to reduce friction with the rolling member 2021.

For example, the bobbin 2110 may include a first receiving portion 2112A configured to receive a rolling member 2021A and a second receiving portion 12112B configured to receive a rolling member 2021B. For example, the seating portion 2115 may be disposed between the first receiving portion 2112A and the second receiving portion 12112B.

For example, the first receiving portion 2112A (or the second receiving portion 12112B) may include an opening that opens to the upper surface of the bobbin 2110. In another embodiment, upper portions of the receiving portions 1112A and 2112B may be closed rather than open to the upper surface of the bobbin 2110. For example, lower portions of the receiving portions 1112A and 2112B may be closed rather than open to the lower surface of the bobbin 2110.

For example, the receiving portion 1112 may be formed so as to extend in the optical-axis direction. For example, the receiving portion 1112 may extend in the optical-axis direction so as to be formed between the upper surface and the lower surface of the bobbin 2110.

For example, when viewed from above, the shape of the receiving portion 1112 may be, without being limited to, triangular, and the shape of the receiving portion may be polygonal (e.g., quadrangular or pentagonal). Alternatively, for example, when viewed from above, the receiving portion 1112 may have a "V" or "U" shape.

The magnet 2130 may be disposed on, coupled to, or fixed to the bobbin 2110. For example, the magnet 2130 may be disposed on or coupled to the first side surface 2110A of the bobbin 2110. For example, the magnet 2130 may be disposed in the seating portion 2115 of the bobbin 2110, or may be coupled to the seating portion 2115. For example, the magnet 2130 may be disposed between the first rolling member 2021A and the second rolling member 2021B.

The magnet 2130 may have a shape corresponding to the first side surface 2110A of the bobbin 2110, such as a cuboidal shape. In another embodiment, for example, at least one of opposite ends of the magnet 2130 may be tapered.

For example, the magnet 2130 may include a first side surface 2013A facing the coil 2120 and a second side surface 2013B opposite the first side surface 2013A. The first side surface 2013A of the magnet 2130 may be exposed from the first side surface 2110A of the bobbin 2110.

Also, in order to enhance electromagnetic force, the magnet 2130 may be a four-pole magnet. For example, the magnet 2130 may include two N poles and two S poles. For example, the magnet 2130 may include a first magnet including an N pole and an S pole, a second magnet including an S pole and an N pole, and a partition wall disposed between the first magnet and the second magnet. The partition wall, which is a substantially non-magnetic part, may include a section with almost no polarity, which may be filled with air or made of a non-magnetic material, and may be referred to as a "neutral zone." For example, the first magnet and the second magnet may face each other in the optical-axis direction, and the first magnet and the second magnet may be disposed so as to face different polarities in the optical-axis direction.

In another embodiment, the magnet 2130 may be a two-pole magnet with two different polarities and an interface naturally formed between the different polarities. For example, in another embodiment, the magnet 2130 may include one N pole and one S pole. For example, the magnet 2130 may be a magnet with an N pole and an S pole separated or disposed in the optical-axis direction. In another embodiment, the magnet 2130 may be a two-pole magnet with an N pole and an S pole separated in a direction perpendicular to the optical axis.

The holder 2140 may be disposed in the cover member 2300. The holder 2140 may include a cavity configured to receive the bobbin 2110. The holder 2140 may include an opening 2030A corresponding to the opening 2101 of the bobbin 2110. For example, the opening 2030A may be a through-hole or a hollow configured to expose at least a part of the bobbin 2110 (or the lens module 2400). In addition, for example, the opening 2030A of the holder 2140 may expose an image-capturing area of the image sensor 2810. The holder 2140 may alternatively be referred to as a "housing."

For example, the opening 2030A may be located in the center or a central region of the holder 2140. For example, the opening 2030A of the holder 2140 may be a through-hole or a hollow formed through the holder 2140 in the optical-axis direction. The opening 2030A of the holder 2140 may have a shape corresponding to the shape of the bobbin 2110, such as, but not limited to, a polygonal shape (e.g., a quadrangular shape or an octagonal shape) or a circular shape (or an oval shape), and may have a variety of shapes.

The holder 2140 may include a plurality of side portions 2041A to 2041D. The holder 2140 may include a corner located between two adjacent side portions and connecting the two adjacent side portions to each other.

The holder 2140 may include a first side portion 2041A corresponding to or opposite the first side surface 2110A of the bobbin 2110, a second side portion 1041B corresponding to or opposite the second side surface 2110B of the bobbin 2110, a third side portion 2041C corresponding to or opposite the third side surface 2110C of the bobbin 2110, and a fourth side portion 2041D corresponding to or opposite the fourth side surface 2110D of the bobbin 2110.

The first side portion 2041A (or a first side surface or a first outer surface) of the holder 2140 may be located opposite the second side portion 2041B (or a second side surface or a second outer surface) of the holder 2140 with respect to the optical axis, and the third side portion 2041C (or a third side surface or a third outer surface) of the holder 2140 may be located opposite the fourth side portion 2041D (or a fourth side surface or a fourth outer surface) of the holder 2140 with respect to the optical axis.

Each of the first to fourth side portions 2041A to 2041D of the holder 2140 may be disposed parallel to a corresponding one of side plates 2302 of the cover member 2300.

Referring to FIGs. 42A and 42B, the holder 2140 may include a seating portion 2142A on which the coil 2120 is disposed. For example, the seating portion 2142A may be disposed or formed on the first side portion 2041A of the holder 2140. For example, the seating portion 2142A may be a through-hole formed through the first side portion 2041A of the holder 2140. Since the seating portion 2142A is a through-hole, a part of the holder 2140 may not be interposed between the coil 2120 and the magnet 2130, which may increase electromagnetic force between the magnet 2130 and the coil 2120. In addition, since a part of the holder 2140 may not be interposed between the position sensor 2170 and the magnet 2130, the output of the position sensor 2170 may be increased, and sensitivity of the position sensor 2170 may be improved.

In another embodiment, the seating portion 2142A may be a recess depressed from an outer surface (or an inner surface) of the first side portion 2041A of the holder 2140.

The holder 2140 may include a recess 2142 in which at least a part of the circuit board 2800, e.g., at least a part of a second substrate 2802, is disposed. Since at least a part of the second substrate 2802 is disposed in the recess 2142 of the holder 2140, the second substrate 2802 and a magnetic material 2082 may not protrude from the outer surface of the first side portion 2041A of the holder 2140, or may not protrude excessively from the outer surface of the first side portion 2041A. That is, the second substrate 2802 and the magnetic material 2082 may protrude less than the sum of the thickness of the second substrate 2802 and the thickness of the magnetic material 2082 with respect to the outer surface of the first side portion 2041A of the holder 2140. This may prevent an increase in the size of the camera device 2200 in a direction perpendicular to the optical axis.

Referring to FIGs. 42A and 42B, the holder 2140 may include a receiving portion 2116 configured to allow at least another part of the rolling member 2021 to be disposed or received therein. For example, at least a part of the receiving portion 2116 may be disposed on the first side portion 2041A of the holder 2140. The receiving portion 2116 may be a recess depressed from the inner surface of the holder 2140 (e.g., the inner surface of the first side portion 2041A). The receiving portion 2116 may alternatively be referred to as a "receiving recess," a "recess," or a "guide recess."

At least a part of the receiving portion 2116 of the holder 2140 may correspond to, may be opposite, or may overlap the receiving portion 1112 of the bobbin 2110.

For example, the holder 2140 may include a first receiving portion 2116A configured to receive at least another part of a first rolling member 2021A (B1 and B2) and a second receiving portion 2116B configured to receive at least another part of a second rolling member 2021B (B3 and B4). For example, the seating portion 2142A of the holder 2140 may be disposed between the first receiving portion 2116A and the second receiving portion 2116B of the holder 2140.

For example, the first receiving portion 2116A (or the second receiving portion 2116B) may include an opening that opens to the upper surface of the holder 2140. In another embodiment, an upper portion of the receiving portion 2116 may be closed rather than open to the upper surface of the holder 2140. For example, a lower portion of the receiving portion 2116 may be closed rather than open to the lower surface of the holder 2140.

For example, the receiving portion 2116 may be formed so as to extend in the optical-axis direction. For example, the receiving portion 2116 may extend in the optical-axis direction so as to be formed between the upper surface and the lower surface of the holder 2140.

For example, when viewed from above, the shape of the receiving portion 2116 of the holder 2140 may be, without being limited to, triangular, and the shape of the receiving portion may be polygonal (e.g., quadrangular or pentagonal). Alternatively, for example, when viewed from above, the receiving portion 2116 may have a "V" or "U" shape.

For example, when viewed in the optical-axis direction or from above, the receiving portion 2116 may be opposite or may overlap the upper plate 2301 of the cover member 2300. For example, at least a part of the upper plate 2301 of the cover member 2300 may cover the receiving portion 2116.

The camera device 2200 may include a rolling member 2021 disposed between the bobbin 2110 and the holder 2140. The rolling member 2021 may alternatively be referred to as a "ball member," a "ball," or a "ball bearing."

At least a part of the rolling member 2021 may contact the bobbin 2110 and the holder 2140, and may be rolled or rotated between the bobbin 2110 and the holder 2140 to support movement of the bobbin 2110 in the optical-axis direction. When the bobbin 2110 is moved in the optical-axis direction, the rolling member 2021 may reduce friction between the bobbin 2110 and the holder 2140. Due to rolling or rotation of the rolling member 2021, the bobbin 2110 may slide in the optical-axis direction in contact with the rolling member 2021.

For example, the rolling member 2021 may be made of, but not limited to, a metal material, a plastic material, or a resin material. The rolling member 2021 may have a circular shape, and may have a diameter of sufficient size to support the movement of the bobbin 2110 in the optical-axis direction.

For example, the rolling member 2021 may be disposed between the outer surface of the bobbin 2110 and the inner surface of the holder 2140. For example, the rolling member 2021 may be disposed between the first side surface 2110A of the bobbin 2110 and the first side portion 2041A of the holder 2140. For example, the rolling member 2021 may be disposed between the receiving portion 1112 of the bobbin 2110 and the receiving portion 2116 of the holder 2140.

For example, at least a part of the rolling member 2021 may be in contact with the receiving portion 1112 of the bobbin 2110, and at least another part of the rolling member 2021 may be in contact with the receiving portion 2116 of the holder 2140.

The rolling member 2021 may include at least one ball member. For example, the rolling member 2021 may include two or more ball members B1 to B4.

For example, the rolling member 2021 may include a first rolling member 2021A disposed between the first receiving portion 2112A of the bobbin 2110 and the first receiving portion 2116A of the holder 2140 and a second rolling member 2021B disposed between the second receiving portion 2112B of the bobbin 2110 and the second receiving portion 2116B of the holder 2140. For example, the first rolling member 2021A may include at least one ball. For example, the first rolling member 2021A may include a plurality of balls B1 and B2.

The second rolling member 2021B may include at least one ball. For example, the second rolling member 2021B may include a plurality of balls B3 and B4. In another embodiment, each of the first rolling member 2021A and the second rolling member 2021B may include one ball.

For example, each of the first rolling member 2021A and the second rolling member 2021B may include three or more balls. For example, each of the first rolling member 2021A and the second rolling member 2021B may include a top ball located at the uppermost side, a bottom ball located at the lowermost side, and at least one intermediate ball located between the top ball and the bottom ball. For example, the diameter of the top ball may be greater than the diameter of the intermediate ball, and the diameter of the bottom ball may be greater than the diameter of the intermediate ball. In addition, for example, the diameter of the top ball and the diameter of the bottom ball may be equal to each other. In another embodiment, the diameter of the top ball, the diameter of the bottom ball, and the diameter of the intermediate ball may be equal to each other.

For example, each of the first rolling member 2021A and the second rolling member 2021B may include a first ball (a top ball), a second ball (a bottom ball), and a third ball (an intermediate ball) disposed in the optical-axis direction, wherein the diameter of the first ball may be greater than the diameter of the third ball. In addition, the diameter of the second ball may be greater than the diameter of the third ball. For example, the diameter of the first ball and the diameter of the third ball may be equal to each other. In another embodiment, the diameter of the first ball may be greater than the diameter of the second ball. In another embodiment, the diameter of the first ball may be less than the diameter of the second ball. In another embodiment, the diameter of the first ball, the diameter of the second ball, and the diameter of the third ball may be equal to each other.

For example, each of the diameter of the first ball and the diameter of the second ball may be 0.85 mm to 0.95 mm, and the diameter of the third ball may be 0.75 mm to 0.85 mm.

In another embodiment, each of the first rolling member 2021A and the second rolling member 2021B may include four balls, wherein each of the diameter of the top ball and the diameter of the bottom ball may be 0.85 mm to 0.95 mm, and the diameter of each of the two intermediate balls may be 0.75 mm to 0.85 mm.

When viewed from above, the coil 2120 and the magnet 2130 may be located between the first rolling member 2021A and the second rolling member 2021B. As a result, tilting and moving of the bobbin 2110 may be prevented when the bobbin 2110 moves in the optical-axis direction, the rolling member 2021 may stably support the bobbin 2110, and the reliability of autofocus may be improved.

In another embodiment, each of the first rolling member 2021A and the second rolling member 2021B may be in the form of a shaft or a roller. In another embodiment, sliding members (e.g., shafts) or rollers may be included instead of the ball members 21A and 21B.

The camera device 2200 may include a magnetic material 2082 configured such that attractive force acts between the magnet 2130 and the magnetic material. For example, attractive force may act between the magnetic material 2082 and the magnet 2130 in a direction perpendicular to the optical axis (or the second direction). For example, the magnetic material 2082 may be disposed on the holder 2140. In another embodiment, the magnetic material 2082 may be disposed on the housing 2210.

The magnetic material 2082 may be a material that sticks to a magnet. For example, the magnetic material 2082 may be a metal material that sticks to a magnet. Alternatively, for example, the magnetic material 2082 may be a metal material that is magnetic. Alternatively, for example, the magnetic material 2082 may be a magnet. The magnetic material 2082 may alternatively be referred to as a "yoke." The magnetic material 2082 may serve to enhance or increase electromagnetic force between the magnet 2130 and the coil 2120.

Since the magnet 2130 is disposed on the bobbin 2110 and the magnetic material 2082 is disposed on the holder 2140, the bobbin 2110 may be pulled in a direction toward the holder 2140 on which the magnetic material 2082 is disposed by attractive force acting between the magnetic material 2082 and the magnet 2130. Due to attractive force between the magnetic material 2082 and the magnet 2130, the bobbin 2110 and the holder 2140 may press the rolling member 2021, and the bobbin 2110 may be stably supported. The magnetic material 2082 and the magnet 2130 may be a "pressing unit" or a "pressing member." When the bobbin 2110 is moved in the optical-axis direction by the pressing unit, contact between the bobbin 2110 and the rolling member 2021 and between the holder 2140 and the rolling member 2021 may be maintained. That is, the rolling member 2021 may stably support the bobbin 2110 against the holder 2140 due to attractive force between the magnet 2130 and the magnetic material 2082.

In another embodiment, the magnet 2130 may be disposed on the holder 2140, and the coil 2120 may be disposed on the bobbin 2110. For example, the magnetic material 2082 may be disposed on the holder 2140 along with the magnet 2130. For example, the magnet 2130 may be disposed between the magnetic material 2082 and the coil 110. In another embodiment, the magnetic material 2082 may be disposed on the bobbin 2110 along with the coil 2120 while being opposite the magnet 2130 disposed on the holder 2140. In addition, the camera device 2200 according to the other embodiment may further include an energizing member, such as a conductive member, configured to conductively connect the coil 2120 disposed on the bobbin 2110 and the second substrate 2802 of the circuit board 2800 to each other.

Referring to FIG. 42B, the holder 2140 may include a seating portion 2045A on which the filter 2610 is seated or disposed. The seating portion 2045A may be disposed or formed on the lower surface of the holder 2140. For example, the seating portion 2045A may be a recess depressed from the lower surface of the holder 2140. For example, the seating portion 2045A may include a bottom surface 2005A having a step formed from the lower surface of the holder 2140 in the optical-axis direction and a side surface 2005B connecting the lower surface of the holder 2140 and the bottom surface 2005A of the seating portion 2045A to each other. For example, the opening 2030A may be formed through the bottom surface 2005A of the seating portion 2045A.

The holder 2140 may include a depressed portion 2045B disposed or formed on a corner region of an inner surface of the seating portion 2045A. The depressed portion 2045B may have a structure depressed in a direction from the optical axis toward the corner region of the inner surface of the seating portion 2045A. The depressed portion 2045B may prevent an adhesive (e.g., UV epoxy) configured to attach or couple the filter 2610 to the seating portion 2045A from overflowing out of the seating portion 2045A.

The holder 2140 may include an escape recess 2046 configured to avoid spatial interference with the circuit element 2815. For example, the escape recess 2046 may be disposed or formed on the lower surface of the holder 2140. For example, the escape recess 2046 may be depressed from the lower surface of the holder 2140.

The escape recess 2046 may correspond to, may be opposite, or may overlap the circuit element 2815 in the optical-axis direction. For example, the escape recess 2046 may be located between the seating portion 2045A and a side of the lower surface of the holder 2140. For example, the escape recess 2046 may include a first escape recess 2046A and a second escape recess 2046B located opposite each other with respect to the seating portion 2045A or the filter 2610. In another embodiment, the escape recess 2046 may include four escape recesses disposed between the opening 2030A and four sides of the holder 2140.

The holder 2140 may include a recess 2047 corresponding to a protrusion 2216 of the sensor base 2270. The protrusion 2216 of the sensor base 2270 and the recess 2047 of the holder 2140 may serve as a guide configured to facilitate assembly of the sensor base 2270 and the holder 2140, and may increase the coupling area between the sensor base 2270 and the holder 2140 to improve coupling force between the sensor base and the holder.

For example, the recess 2047 may be depressed from the lower surface of the holder 2140. For example, the recess 2047 may be disposed or formed on the corner or the corner region of the lower surface of the holder 2140. The recess 2047 of the holder 2140 may have a shape corresponding to the protrusion 2216 of the sensor base 2270. In addition, the holder 2140 may include a recess 2048 or a hole corresponding to a boss 2017 of the sensor base 2270. For example, the boss 2017 of the sensor base 2270 may be inserted into or coupled to the recess 2048 of the holder 2140. For example, the recess 2048 may be disposed or formed on a bottom surface of the recess 2047 of the holder 2140. For example, the recess 2048 may be depressed from the bottom surface of the recess 2047 of the holder 2140.

In another embodiment, the holder 2140 may include a protrusion protruding from the lower surface of the holder 2140 instead of the recess 2047, and the sensor base 2270 may include a recess depressed from an upper surface of the sensor base 2270 and coupled to the protrusion of the holder 2140 instead of the protrusion 2216. Also, in another embodiment, the boss 2017 may be formed on the holder 2140, and the recess 2048 may be formed in the sensor base 2270.

The camera device 2200 may include a filter 2610 disposed on or coupled to the holder 2140. For example, the filter 2610 may be disposed under the holder 2140. The filter 2610 may be disposed between the lens module 2400 and the image sensor 2810. For example, the filter 2610 may be coupled to the lower surface of the holder 2140. For example, the filter 2610 may be disposed on the seating portion 2045A of the holder 2140.

The filter 2610 may serve to block a specific frequency band component of light passing through the lens module 2400 from being incident on the image sensor 2810. For example, the filter 2610 may be an infrared cutoff filter. For example, the filter 2610 may be disposed parallel to a plane perpendicular to the optical axis OA.

The filter 2610 may be coupled to the holder 2140 (or the seating portion 2045A) via an adhesive (not shown). For example, an edge region of the filter 2610 may be coupled to the bottom surface of the seating portion 2045A.

For example, the adhesive may be epoxy, a thermohardening adhesive, or a UV hardening adhesive. For example, at least a part of the filter 2610 may correspond to, may be opposite, or may overlap the lens module 2400 and/or the image sensor 2810 in the optical-axis direction.

The sensor base 2270 may be disposed under the holder 2140. The sensor base 2270 may be disposed under the filter 2610. For example, the sensor base 2270 may be disposed under the image sensor 2810. For example, the sensor base 2270 may be disposed under the circuit board 2800.

The sensor base 2270 may be coupled to the holder 2140. The sensor base 2270 may alternatively be referred to as a "holder." In addition, the holder 2140 may be referred to as a "first housing" (or a "first holder"), and the sensor base 2270 may be referred to as a "second housing" (or a "second holder"). Alternatively, the holder 2140 and the sensor base 2270 may not be represented separately and may alternatively be referred to by a single term, e.g., a "housing" (or a holder). In another embodiment, the sensor base 2270 and the holder 2140 may be integrally formed.

For example, the sensor base 2270 may include a protrusion 2216 protruding from the upper surface thereof. The protrusion 2216 may alternatively be referred to as a "pillar portion."

For example, the protrusion 2216 may correspond to, may be opposite, or may overlap the recess 2047 of the holder 2140 in the optical-axis direction. At least a part of the protrusion 2216 of the sensor base 2270 may be inserted into the recess 2047 of the holder 2140. For example, at least a part of the protrusion 2216 may be coupled to the recess 2047 of the holder 2140. For example, at least a part of the protrusion 2216 may be coupled to the recess 2047 of the holder 2140 via an adhesive.

For example, the sensor base 2270 may include a body 2270A and a protrusion 2216 protruding from an upper surface of the body 2270A. For example, the body 2270A may have a shape corresponding to a first substrate 2801 of the circuit board 800. For example, the body 2270A may have a polyhedral shape, such as a hexahedral shape. For example, the protrusion 2216 may be disposed on a corner region of the upper surface of the body 2270A. For example, the protrusion 2216 may include four protrusions 2216A to 2216D disposed on four corner regions of the upper surface of the body 2270A. In addition, for example, the holder 2140 may include four recesses 2047 corresponding to the four protrusions 2216A to 2216D. In another embodiment, the housing 2210 may include at least one protrusion disposed on at least one of the four corner regions of the upper surface of the body 270, and the holder 2140 may include at least one recess 2048 corresponding to the at least one protrusion of the housing 2210.

The sensor base 2270 or the body 2270A may include side portions 2051A to 2051D corresponding to, opposite, or overlapping the side portions 2041A to 2041D of the holder 2140. The sensor base 2270 may include corners disposed between the side portions 2051A to 2051D. For example, the sensor base 2270 may include first to fourth corners.

The camera device 2200 may include a gyro sensor (not shown) disposed on the circuit board 2800. For example, the gyro sensor may be disposed on the first substrate 2801 of the circuit board 2800. For example, the gyro sensor may be disposed on, coupled to, or fixed to a lower surface of the first substrate 2801. For example, the gyro sensor may output rotational angular velocity information caused by movement of the camera device 2200. For example, the gyro sensor may be implemented as a 2-axis or 3-axis gyro sensor or an angular velocity sensor. For example, the gyro sensor may be conductively connected to the first substrate 2801.

In another embodiment, the sensor base 2270 may include a receiving portion configured to allow the gyro sensor to be disposed therein or to avoid spatial interference with the gyro sensor 820. For example, the receiving portion 56 may be a through-hole formed through the sensor base 2270 in the optical-axis direction or a recess depressed from the upper surface of the sensor base 2270 or the upper surface of the body 2270A. In this case, the receiving portion may include an opening that opens to an outer surface of the sensor base 2270.

The sensor base 2270 may include a receiving portion 2255 in which the controller 2830 is disposed or received. The receiving portion 2255 may be a recess depressed from the upper surface of the sensor base 2270 or the upper surface of the body 2270A. In another embodiment, the receiving portion 2255 may be a through-hole formed through the sensor base 2270 or the body 2270A in the optical-axis direction.

The sensor base 2270 may include seating portions 2274A and 2274B configured to allow the coil 2230 to be disposed thereon. The seating portions 2274A and 2274B may be disposed or formed on the upper surface of the sensor base 2270. For example, the seating portions 2274A and 2274B may be recesses depressed from the upper surface of the sensor base 2270.

For example, the sensor base 2270 may include a first seating portion 2274A configured to allow a first coil unit 2230A to be disposed or seated thereon and a second seating portion 2274B configured to allow a second coil unit 2230B to be disposed or seated thereon.

For example, the first seating portion 2274A may be formed adjacent to or abutting one (e.g., 2216C) of the protrusions 2216A to 2216D of the sensor base 2270. For example, the first seating portion 2274A may be a recess formed in the upper surface of the sensor base 2270 adjacent to the third protrusion 2216C of the sensor base 2270. For example, the first seating portion 2274A may include an opening that opens to outer surfaces of the side portions (e.g., 2051B and 2051D) adjacent to the third protrusion 2216C of the sensor base 2270. In another embodiment, the first seating portion 2274A may be spaced apart from the outer surfaces of the side portions (e.g., 2051B and 2051D) of the sensor base 2270, and may not include an opening that opens to the outer surfaces of the side portions 2051B and 2051D.

For example, the second seating portion 2274B may be formed adjacent to or abutting another (e.g., 2216D) of the protrusions 2216A to 2216D of the sensor base 2270. For example, the second seating portion 2274B may be a recess formed in the upper surface of the sensor base 2270 adjacent to the fourth protrusion 2216D of the sensor base 2270. For example, the second seating portion 2274B may include an opening that opens to outer surfaces of the side portions (e.g., 2051B and 2051C) adjacent to the fourth protrusion 2216D of the sensor base 2270. In another embodiment, the second seating portion 2274B may be spaced apart from the outer surfaces of the side portions (e.g., 2051B and 2051C) of the sensor base 2270, and may not include an opening that opens to the outer surfaces of the side portions 2051B and 2051C.

In another embodiment, each of the seating portions 2274A and 2274B may be in the form of a through-hole. For example, at least one of the first and second seating portions 2274A and 2274B may be a hole or through-hole formed through the sensor base 2270 in the optical-axis direction. In this case, a part of the sensor base 2270 may not be interposed between the coil 2230 and the magnet 2310, which may increase electromagnetic force between the magnet 2310 and the coil 2230. In addition, a part of the sensor base 2270 may not be interposed between the position sensor 2240 and the magnet 2310, which may increase the output of the position sensor 2240 and may improve the sensitivity of the position sensor 2240.

Referring to FIG. 42B, the sensor base 2270 may include a receiving portion 2028A configured to receive the magnetic material 2032. The receiving portion 2028A may be disposed or formed on a lower portion or a lower surface of the sensor base 2270. For example, the receiving portion 2028A may be a recess depressed from the lower portion or the lower surface of the sensor base 2270. For example, the receiving portion 2028A may be disposed or formed on the lower surface of the body 2270A. For example, the receiving portion 2028A may have a shape corresponding to the magnetic material 2032.

The sensor base 2270 may include a recess 2029 in which at least a part (e.g., a boss 2065) of the tilting guide member 2060 is disposed or received. The recess 2029 may be formed in the lower surface of the sensor base 2270. For example, the recess 2029 may be depressed from the lower surface of the sensor base 2270. The number of the recesses 2029 may be equal to the number of bosses 2065 of the tilting guide member 2060.

For example, the recess 2029 may include two recesses 2029A and 2029B spaced apart from each other. For example, the two recesses 2029A and 2029B may be disposed spaced apart from each other in the X-axis direction. For example, the receiving portion 2028A of the sensor base 2270 may be disposed between two recesses 2029A and 2029B of the sensor base 2270.

The recess 2029 may contact the boss 65 of the tilting guide member 2060 at at least one point. For example, the recess 2029 may include a bottom surface and at least one side surface connected to the bottom surface. The at least one side surface may be an inclined surface. For example, the recess 2029 may include a bottom surface and a plurality of inclined surfaces. The inclined surfaces of the recess 2029 may have the same shape. In another embodiment, at least one of the inclined surfaces of the recess 2029 may have a different shape from the others.

Referring to FIG. 42A, the protrusion 2216 of the sensor base 2270 may have a recess 2212A in which at least a part of the first substrate 2801 of the circuit board 2800 is inserted or disposed. For example, a corner of the first substrate 2801 may be inserted into or coupled to the recess 2212A of the protrusion 2216 of the sensor base 2270. For example, the recess 2212A may be formed in the side surface of the protrusion 2216 opposite the corner of the circuit board 2800. In addition, at least one corner of the circuit board 2800 may have a recess 83 configured to be inserted into or be coupled to the recess 2212A of the protrusion 2216. The recess 2212A of the protrusion 2216 of the sensor base 2270 may serve as a coupling guide for coupling between the first substrate 2801 and the sensor base 2270, and may serve to inhibit the first substrate 2801 from being rotated and/or separated from the sensor base 2270.

The circuit board 2800 may be disposed on, coupled to, or fixed to the sensor base 2270. For example, the circuit board 2800 may be coupled to the sensor base 2270 via an adhesive or a fixing member.

The circuit board 2800 may be disposed on, coupled to, or fixed to the body 2270A of the sensor base 2270. The circuit board 2800 may include at least one of a rigid printed circuit board (rigid PCB), a flexible printed circuit board (flexible PCB), and a rigid-flexible printed circuit board (rigid-flexible PCB). For example, the circuit board 2800 may include a rigid printed circuit board and a flexible printed circuit board. The circuit board 2800 may alternatively be referred to as a "substrate unit," a "substrate," or a "printed circuit board."

For example, the circuit board 2800 may include a first substrate 2801 (or a "first region") disposed on, coupled to, or fixed to sensor base 2270. For example, the first substrate 2801 may be disposed on, coupled to, or fixed to the body 2270A of the sensor base 2270. For example, a lower surface of the first substrate 2801 may be coupled to the upper surface of the sensor base 2270 or the upper surface of the body 2270A. For example, the lower surface of the first substrate 2801 may be coupled to the upper surface of the sensor base 2270 or the upper surface of the body 2270A via an adhesive.

The circuit board 2800 may include a second substrate 2802 (or a "second region") connected to first substrate 2801 and disposed on, coupled to, or fixed to the holder 2140. For example, the second substrate 2802 may be disposed on, coupled to, or fixed to the first side portion 2041A of the holder 2140.

In FIG. 42A, the circuit board 2800 includes one second substrate, but in another embodiment, the circuit board 2800 may include a plurality of second substrates disposed on at least one of the side portions of the holder 2140.

For example, the second substrate 2802 may be connected to a first side surface of the first substrate 2801. For example, the second substrate 2802 may be bent from the first side surface of the first substrate 2801 toward the first side portion 2041A of the holder 2140. For example, the second substrate 2802 may extend upward from the first substrate 2801.

The circuit board 2800 may include a third substrate 2803 on which a connector 2805 is disposed or provided and a fourth substrate 2804 connecting the first substrate 2802 and the third substrate 2803 to each other.

For example, the first substrate 2801 may be a rigid printed circuit board. For example, the second substrate 2802 may be a flexible printed circuit board. For example, the third substrate 2803 may be a rigid printed circuit board. For example, the fourth substrate 2804 may be a flexible printed circuit board.

For example, the rigid printed circuit board may include a plurality of conductive layers (or circuit patterns) disposed spaced apart from each other in the optical-axis direction and an insulating layer disposed between two neighboring ones of the plurality of conductive layers. For example, the flexible circuit board may include one conductive layer (or a circuit pattern), a first insulating layer disposed on the conductive layer, and a second insulating layer disposed under the conductive layer. In another embodiment, the flexible circuit board may include a first conductive layer, a second conductive layer, a first insulating layer disposed between the first and second conductive layers, a second insulating layer disposed on the first conductive layer, and a third insulating layer disposed under the second conductive layer.

The image sensor 2810 may be disposed on the first substrate 2801. The image sensor 2810 may be disposed so as to correspond to, to be opposite, or to overlap the lens module 2400 and/or the filter 2610 in the optical-axis direction.

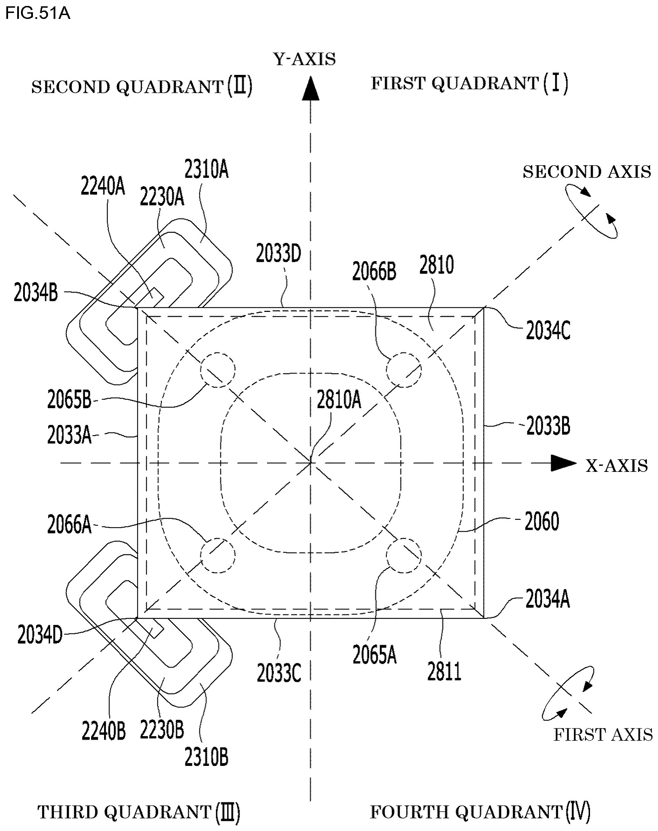

The image sensor 2810 may include a sensor surface 811 (see FIG. 16A) configured to detect light. The sensor surface 2811 may be an area within a square dotted line in FIG. 51A. For example, the sensor surface 2811 may include an image-capturing area. Here, the image-capturing area may alternatively be referred to as an effective area, a light receiving area, or an active area. For example, the image-capturing area may include a plurality of pixels via which an image is formed. The image sensor 2810 may be conductively connected to the first substrate 2801. The image-capturing area may correspond to, may be opposite, or may overlap the lens module 2400 and/or the filter 2610 in the optical-axis direction.

The camera device 2200 may include a circuit element 2815 disposed on the first substrate 2801. For example, the circuit element 2815 may include at least one of a passive element (e.g., a capacitor or a resistor), an active element (e.g., a sensor, a memory, or a driver IC), or a circuit pattern. For example, in order to avoid spatial interference with the image sensor 2810, the circuit element 2815 may be disposed between the image sensor 2810 and an edge (e.g., a side) of the first substrate 2801.

The camera device 2200 may include a controller 2830 disposed on the circuit board 2800. For example, the controller 2830 may be a driver IC. For example, the controller 2830 may be disposed on the first substrate 2801. For example, the controller 2830 may be disposed under the first substrate 2801. For example, the controller 2830 may be disposed on, coupled to, or fixed to the lower surface of the first substrate 2801. For example, the controller 2830 may be conductively connected to the first substrate 2801.

For example, the controller 2830 may be conductively connected to the coil 2120, and may supply a drive signal to the first coil 2120. The controller 2830 may be conductively connected to the coil units 2230A and 2230B, may supply a first drive signal to the first coil unit 2230A, and may supply a second drive signal to the second coil unit 2230B.

For example, the controller 2830 may be conductively connected to the position sensor 2170. In addition, the controller 2830 may be conductively connected to the position sensor 2240.

For example, the controller 2830 may receive an output signal of the position sensor 2170, and may control a drive signal (e.g., drive current) that is supplied to the coil 2120 using the output signal of the position sensor 2170.

For example, the controller 2830 may receive an output signal of the position sensor 2240, and may control a drive signal (e.g., drive current) that is supplied to the coil unit 2230 using the output signal of the position sensor 2240. For example, the controller 2830 may receive an output signal of the first sensor 2240A, and may control a first drive signal (e.g., first drive current) that is supplied to the first coil unit 2230A using the output signal of the first sensor 2240A. In addition, the controller 2830 may receive an output signal of the second sensor 2240B, and may control a second drive signal (e.g., second drive current) that is supplied to the second coil unit 2230B using the output signal of the second sensor 2240B.

The coils 2120 and 2230 may be disposed on, coupled to, or fixed to the circuit board 2800 (e.g., the second substrate 2802). For example, the coil 2120 may be conductively connected to circuit board 2800 (e.g., the second substrate 2802) via a conductive adhesive or a solder. For example, the coil 2230 may be conductively connected to the circuit board 2800 (e.g., the first substrate 2801) via a conductive adhesive or a solder.

The first coil unit 2230A and the second coil unit 2230B may be disposed on or coupled to the first substrate 2801, and may be conductively connected to the first substrate 2801. Referring to FIG. 42B, for example, the first coil unit 2230A and the second coil unit 2230B may be disposed on, coupled to, or fixed to the lower surface of the first substrate 2801. For example, the first coil unit 2230A and the second coil unit 2230B may be disposed between the first substrate 2801 and the sensor base 2270.

For example, the first and second coil units 2230A and 2230B may be disposed adjacent to two neighboring ones of the four corners of the first substrate 2801.

For example, for diagonal driving, the first coil unit 2230A may be disposed adjacent to one corner of the first substrate 2801 corresponding to the protrusion 2216C of the sensor base 2270 (or one corner of the sensor base 2270), and the second coil unit 2230B may be disposed adjacent to another corner of the first substrate 2801 corresponding to the protrusion 2216D of the sensor base 2270 (or another corner of the sensor base 2270). For example, the first coil unit 2230A may be disposed adjacent to the protrusion 2216C of the sensor base 2270, and the second coil unit 2230B may be disposed adjacent to the protrusion 2216D of the sensor base 2270.

The coil 2120 may move the AF moving unit (e.g., the bobbin) in the optical-axis direction by interaction with the magnet 2130. The coil 2120 may be disposed on the holder 2140.

The coil 2120 may be disposed so as to correspond to, to be opposite, or to overlap the magnet 2130 in a direction perpendicular to the optical axis. For example, the coil 2120 may be disposed on the holder 2140 so as to correspond to, to be opposite, or to overlap the magnet 2130 in the second direction (e.g., the X-axis direction) or in a direction from the first side portion 2041A to the second side portion 2041B of the holder 2140. For example, the coil 2120 may be disposed on the first side portion 2041A of the housing 130. The coil 2120 may be disposed in the seating portion 2142A of the holder 2140.

For example, the coil 2120 may include a hollow or a hole. For example, the coil 2120 may have a ring shape or a closed curved shape. For example, the coil 2120 may have a ring shape wound around a straight line perpendicular to the optical axis OA and perpendicular to the outer surface of the first side portion 2041A of the holder 2140 as an axis. For example, the coil 2120 may have a ring shape configured such that the length thereof in the transverse direction (or the third direction) is greater than the length thereof in the longitudinal direction (or the optical-axis direction).

A drive signal may be applied to the coil 2120 in order to generate electromagnetic force by electromagnetic interaction with the magnet 2130. For example, a drive signal from the circuit board 2800 or the controller 2830 may be applied to the coil 2120. The drive signal supplied to the coil 2120 may be direct current, and may be in the form of voltage or current. Alternatively, in another embodiment, for example, the drive signal provided to the coil 2120 may include at least one of a direct current signal and an alternating current signal.

The coil 2120, to which the drive signal has been supplied, may electromagnetically interact with the magnet 2130 disposed on the bobbin 2110, and the AF moving unit may be moved in the first direction by electromagnetic force due to electromagnetic interaction between the coil 2120 and the magnet 2130. The magnitude and/or the direction of the drive signal (e.g., drive current) may be adjusted by the controller 2830, whereby movement of the AF moving unit in the first direction may be controlled, and therefore the autofocus function may be performed.

For AF feedback driving, the camera device 2200 may include a position sensor 2170. The position sensor 2170 may detect the position or displacement of the bobbin 2110 in the optical-axis direction. For example, the position sensor 2170 may detect the magnet 2130 disposed on the bobbin 2110. In another embodiment, a sensing magnet separate from the magnet 2130 and opposite the position sensor 2170 may be disposed on the bobbin, and the position sensor 2170 may detect the sensing magnet or a magnetic field of the sensing magnet to detect the displacement of the bobbin.

For example, the position sensor 2170 may be disposed on the holder 2140. For example, the position sensor 2170 may be disposed on the first side portion 2041A of the holder 2140. For example, the position sensor 2170 may be disposed in the seating portion 2142A of the holder 2140. For example, the position sensor 2170 may be disposed in a hollow of the coil 2120. In another embodiment, the position sensor 2170 may be disposed outside the hollow of the coil 2120.

For example, the position sensor 2170 may be coupled to the circuit board 2800. For example, the position sensor 2170 may be coupled to the circuit board 2800 via a conductive adhesive or a solder. For example, the position sensor 2170 may be conductively connected to the second substrate 2802. For example, the position sensor 2170 may be conductively connected to the second substrate 2802 via a conductive adhesive or a solder.

For example, the position sensor 2170 may be disposed on, coupled to, or fixed to a first surface of the second substrate 2802. For example, the position sensor 2170 may correspond to, may be opposite, or may overlap the magnet 2130 in a direction perpendicular to the optical axis or in the second direction.

The position sensor 2170 may detect the displacement of the bobbin 2110 in the optical-axis direction.

For example, the position sensor 2170 may detect a magnetic field of the magnet 2130 mounted on the bobbin 2110 or the intensity of the magnetic field based on movement of the bobbin 2110, and may output an output signal.

For example, the position sensor 2170 may be a Hall sensor. In this case, the position sensor 2170 may include two input terminals to which a drive signal is applied and two output terminals from which an output signal is output. The circuit board 2800 may be conductively connected to the two input terminals and two output terminals of the position sensor 2170. The circuit board 2800 or the controller 2830 may supply a drive signal to the two input terminals of the position sensor 2170, and an output signal from the two output terminals of the position sensor 2170 may be transmitted to the circuit board 2800 or the controller 2830.

In another embodiment, the position sensor 2170 may be implemented in the form of a driver IC including a Hall sensor. For example, when the position sensor 2170 is a driver IC including a Hall sensor, the position sensor 2170 may transmit and receive data to and from the outside through data communication using a protocol, such as I2C communication.

For example, when the position sensor 2170 is a driver IC including a Hall sensor, the position sensor 2170 may include first and second terminals to which power or a drive signal is input, a third terminal for a clock signal, a fourth terminal for a data signal, and fifth and sixth terminals configured to supply a drive signal to the coil 2120. The first to sixth terminals of the position sensor 2170 may be conductively connected to the circuit board 2800.

The coil 2230 may tilt the OIS moving unit about the first axis or the second axis, or may rotate the OIS moving unit by a predetermined angle, due to interaction with the magnet 2310 disposed on the housing 2210, which is a stationary unit.

The coil 2230 may include a first coil unit 2230A that corresponds to, is opposite, or overlaps the first magnet unit 2310A in the optical-axis direction and a second coil unit 2230B that corresponds to, is opposite, or overlaps the second magnet unit 2310B in the optical-axis direction. For example, the coil 2230 may not overlap the magnet 2310 in a direction perpendicular to the optical axis.

For example, the coil 2230 may be disposed lower than the coil 2120. For example, the first coil unit 2230A may be disposed in the first seating portion 2274A of the sensor base 2270, and the second coil unit 2230B may be disposed in the second seating portion 2274B of the sensor base 2270.

For example, each of the first and second coil units 2230A and 2230B may include a hollow or a hole. For example, each of the first and second coil units 2230A and 2230B may have a ring shape or a closed curved shape. For example, each of the first coil unit 2230A and the second coil unit 2230B may have a ring shape wound around a straight line parallel to the optical axis OA and perpendicular to the upper surface of the sensor base 2270 or the upper surface of the body 2270A as an axis.

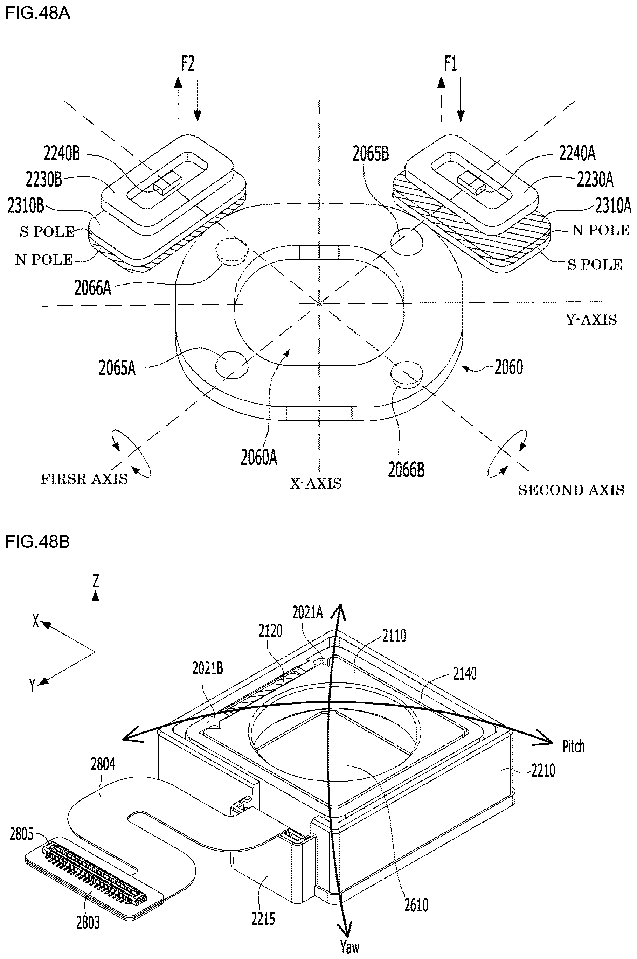

For example, referring to FIG. 48A, the first coil unit 2230A may have a ring shape configured such that the length thereof in the transverse direction (or the direction parallel to the second axis) is greater than the length thereof in the longitudinal direction (or the direction parallel to the first axis). For example, the second coil unit 2230B may have a ring shape configured such that the length thereof in the longitudinal direction (or the direction parallel to the first axis) is greater than the length thereof in the transverse direction (or the direction parallel to the second axis).

For OIS feedback driving, the camera device 2200 may include a position sensor 2240. The position sensor 2240 may detect displacement or angular displacement of the OIS moving unit 2100 due to tilting or rotation of the OIS moving unit 2100. The position sensor 2240 may detect a magnetic field of the magnet 2310.

For example, the position sensor 2240 may include a first sensor 2240A and a second sensor 2240B. For example, at least a part of the first sensor 2240A may correspond to, may be opposite, or may overlap the first magnet unit 2310A in the optical-axis direction. For example, the center of the first sensor 2240A may overlap the first magnet unit 2310A in the optical-axis direction. For example, the first sensor 2240A may detect the first magnet unit 2310A (or a magnetic field of the first magnet unit 2310A). For example, the first sensor 2240A may detect a tilted angle of the OIS moving unit 2100 relative to the second axis. In another embodiment, the first sensor 2240A may not overlap the first and second magnet units 2310A and 2310B in the optical-axis direction.

At least a part of the second sensor 2240B may correspond to, may be opposite, or may overlap the second magnet unit 2310B in the optical-axis direction. For example, the center of the second sensor 2240B may overlap the second magnet unit 2310B in the optical-axis direction. For example, the second sensor 2240B may detect the second magnet unit 2310B (or a magnetic field of the second magnet unit 2310B). For example, the second sensor 2240B may detect a tilted angle of the OIS moving unit 2100 relative to the first axis. In another embodiment, the second sensor 2240B may not overlap the second magnet unit 2310B in the optical-axis direction.

For example, the first and second sensors 2240A and 2240B may be disposed on, coupled to, or fixed to the first substrate 2801 of the circuit board 2800. For example, the first and second sensors 2240A and 2240B may be conductively connected to the first substrate 2801.

For example, the first sensor 2240A may be disposed in the hollow (or the hole) of the first coil unit 2230A, and the second sensor 2240B may be disposed in the hollow (or the hole) of the second coil unit 2230B. In another embodiment, the first sensor 2240A may be disposed outside the hollow (or the hole) of the first coil unit 2230A, and the second sensor 2240B may be disposed outside the hollow (or the hole) of the second coil unit 2230B.

For example, each of the first sensor 2240A and the second sensor 2240B may be a Hall sensor including first and second input terminals and first and second output terminals. For example, the first and second input terminals and the first and second output terminals of the first sensor 2240A may be conductively connected to the first substrate 2801, and the first and second input terminals and the first and second output terminals of the second sensor 2240B may be conductively connected to the first substrate 2801.

For example, the first substrate 2801 or the controller 2830 may supply or apply a first drive signal to the first and second input terminals of the first sensor 2240A. The first sensor 2240A may output a first output signal, and the first output signal may be transmitted to the first substrate 2801 or the controller 2830. The first output signal may be output to the first and second output terminals of the first sensor 2240A.

For example, the first substrate 2801 or the controller 2830 may supply or apply a second drive signal to the first and second input terminals of the second sensor 2240B. The second sensor 2240B may output a second output signal, and the second output signal may be transmitted to the first substrate 2801 or the controller 2830. The second output signal may be output to the first and second output terminals of the second sensor 2240B.

The controller 2830 may control a first drive signal that is supplied to the first coil unit 2230A and a second drive signal that is supplied to the second coil unit 2230B using the first output signal of the first sensor 2240A and the output signal of the second sensor 2240B.

In another embodiment, each of the first sensor 2240A and the second sensor 2240B may be a driver IC including a Hall sensor. A description of an embodiment in which the position sensor 2170 is a driver IC including a Hall sensor may be applied or analogically applied to an embodiment in which each of the first and second sensors 2240A and 2240B is a driver IC including a Hall sensor.

The camera device 2200 may include a magnetic material 2082 disposed opposite at least one of the coil 2120 and the magnet 2130. For example, the magnetic material 2082 may be disposed on the holder 2140 or on the second substrate 2802 of the circuit board 2800. For example, the magnetic material 2082 may be disposed so as to correspond to, to be opposite, or to overlap the magnet 2130 in the second direction. In addition, for example, the magnetic material 2082 may be disposed so as to correspond to, to be opposite, or to overlap the coil 2120 in the second direction. For example, the coil 2120 may be disposed on the first surface of the second substrate 2802 that faces the magnet 2130, and the magnetic material 2082 may be disposed on a second surface of the second substrate 2802, which is opposite the first surface of the second substrate 2802. The magnetic material 2082 may be coupled, attached, or fixed to the second substrate 2802 via an adhesive.

Referring to FIGs. 45A and 45B, the housing 2210 may include a cavity configured to receive the OIS moving unit 2100. For example, the housing 2210 may have a shape corresponding to the OIS moving unit 2100, e.g., the holder 2140 or the sensor base 2270, such as, but not limited to, a polygonal shape (e.g., a quadrangular shape or an octagonal shape) or a circular shape (or an oval shape), and may have a variety of shapes. The housing 2210 may alternatively be referred to as a "base."

The housing 2210 may include a plurality of side portions 2071A to 2071D corresponding to the side portions 2041A to 2041D of the holder 2140 or the side portions 2051A to 2051D of the sensor base 2270. The housing 2210 may include a corner located between two adjacent side portions.

In addition, the housing 2210 may include a lower portion 2042 (or a lower plate) located under the side portions 2071A to 2071D. The lower portion 2042 may be connected to a lower side of each of the side portions 2071A to 2071D. For example, the lower portion 2042 may alternatively be referred to as a "bottom portion," a "bottom surface," or a "body." For example, the side portions 2071A to 2071D may protrude upward from the lower portion 2042.

The housing 2210 has a first side portion 2071A corresponding to, opposite, or overlapping the first side portion 2041A of the holder 2140, a second side portion 2071B corresponding to, opposite, or overlapping the second side portion 2041B of the holder 2140, a third side portion 2071C corresponding to, opposite, or overlapping the third side portion 2041C of the holder 2140, and a fourth side portion 2071D corresponding to, opposite, or overlapping the fourth side portion 2041D of the holder 2140.

The first side portion 2071A (or a first side surface or a first outer surface) of the housing 2210 may be located opposite the second side portion 2071B (or a second side surface or a second outer surface) of the housing 2210, and the third side portion 2071C (or a third side surface or a third outer surface) of the housing 2210 may be located opposite the fourth side portion 2071D (or a fourth side surface or a fourth outer surface) of the housing 2210.

For example, each of the first to fourth side portions 2071A to 2071D of the housing 2210 may be disposed parallel to a corresponding one of the side plates 2302 of the cover member 2300.

The housing 2210 may include a step 2411 disposed on a lower portion of at least one of the side portions 2071A to 2071D. For example, the step 2411 may protrude from an outer surface of each of the side portions 2071A to 2071D of the housing 2210 in a direction perpendicular to the optical axis. For example, the step 2411 may be opposite or may overlap the side plate 2302 of the cover member 2300 in the optical-axis direction. For example, the step 2411 may be coupled to the side plate 2302 of the cover member 2300 via an adhesive.

The housing 2210 may include seating portions 2141A and 2141B on which the magnet 2310 is disposed. For example, each of the seating portions 2141A and 2141B may be a recess formed in the lower portion 2042 of the housing 2210. In another embodiment, each of the seating portions 2141A and 2141B may be a through-hole formed through the lower portion 2042 of the housing 2210.

The housing 2210 may include a first seating portion 2141A on which the first magnet unit 2310A is disposed and a second seating portion 2141B on which the second magnet unit 2310B is disposed. For example, the first seating portion 2141A may be disposed or formed in a first region of the lower portion 2042 of the housing 2210 adjacent to one of the four corners of the housing 2210. For example, the one corner of the housing 2210 may be a corner corresponding to or adjacent to the protrusion 2216C of the sensor base 2270.

For example, the second seating portion 2141B may be disposed or formed in a second region of the lower portion 2042 of the housing 2210 adjacent to another of the four corners of the housing 2210. For example, the another corner of the housing 2210 may be a corner corresponding to or adjacent to the protrusion 2216D of the sensor base 2270.

The magnet 2310 may include a first magnet unit 2310A and a second magnet unit 2310B disposed on the lower portion 2042 of the housing 2210. For example, the magnet 2310 may be disposed under the coil 2230.

For example, the first magnet unit 2310A may be disposed so as to correspond to, to be opposite, or to overlap the first coil unit 2230A in the optical-axis direction. The second magnet unit 2310B may be disposed so as to correspond to, to be opposite, or to overlap the second coil unit 2230B in the optical-axis direction.

For example, the first magnet unit 2310A and the second magnet unit 2310B may be disposed so as to be misaligned with each other in the first-axis direction (or the direction parallel to the first axis) or the second-axis direction (or the direction parallel to the second axis). For example, when viewed from above or in the optical-axis direction, the first magnet unit 2310A and the second magnet unit 2310B may be disposed on the housing 2210 so as not to overlap each other in the direction parallel to the first axis or in the direction parallel to the second axis. For example, the first magnet unit 2310A and the second magnet unit 2310B may be disposed on the lower portion 2042 of the housing 2210 so as not to overlap each other in the direction parallel to the first axis or in the direction parallel to the second axis.

In another embodiment, the magnet 2310 may be disposed on the moving unit 2100 (e.g., the sensor base 2270), and the coil 2230 may be disposed on the stationary unit (e.g., the housing 2210). For example, in FIG. 41, the magnet 2310 and the coil 2230 may be disposed such that the positions thereof are reversed. In this case, the camera device according to the other embodiment may include a circuit board (referred to as a "second circuit board") that is separate from the circuit board 2800 (referred to as a "first circuit board") and disposed on the stationary unit (e.g., the housing 2210). The coil 2230 may be disposed on or coupled to the second circuit board. The coil 2230 may be conductively connected to the second circuit board. For example, the second circuit board may be disposed under the housing 2210. The coil 2230 may be disposed on the seating portion 2141 of the housing 2210, in which case the seating portion 2141 may be a through-hole formed through the lower portion 2042 of the housing 140. The position sensor 2240 may be disposed on or coupled to the second circuit board. For example, the first sensor 2240A may be disposed in the hollow of the first coil unit 2230A, and the second sensor 2240B may be disposed in the hollow of the second coil unit 2230B. The position sensor 2240 may be conductively connected to the second circuit board. The camera device according to the other embodiment may include a controller (referred to as a "second controller") that is separate from the controller 2830 (referred to as a "first controller"). The second controller may be disposed on the second circuit board.

The second controller may be conductively connected to the second circuit board. For example, the second controller may be a driver IC. For example, the second controller may be disposed on, coupled to, or fixed to a first surface of the second circuit board. The first surface of the second circuit board may be a surface facing the magnet 2310 or the OIS moving unit, e.g., the lens module. The second coil 2230 may be disposed on the first surface of the second circuit board.

The second controller may be conductively connected to the coil 2230, and may supply a drive signal to the coil 2230. For example, the second controller may be conductively connected to the coil units 2230A and 2230B, and supply a first drive signal to the first coil unit 2230A, and may supply a second drive signal to the second coil unit 2230B. The second controller may be conductively connected to the position sensor 2240.

For example, the second controller may supply power or a drive signal to the position sensor 2240. For example, the second controller may supply power or a drive signal to each of the first sensor 2240A and the second sensor 2240B. The controller 835 may receive an output signal of the position sensor 2240, and may control a drive signal (e.g., drive current) that is supplied to the coil unit 2230 using the output signal of the position sensor 2240. For example, the second controller may receive an output signal of the first sensor 2240A, and may control a first drive signal (e.g., first drive current) that is supplied to the first coil unit 2230A using the output signal of the first sensor 2240A. In addition, the second controller may receive an output signal of the second sensor 2240B, and may control a second drive signal (e.g., second drive current) that is supplied to the second coil unit 2230B using the output signal of the second sensor 2240B.

The second circuit board may include a terminal unit. The terminal unit may include a plurality of terminals. For example, the plurality of terminals of the second circuit board may be exposed from the side plate 2302 of the cover member 2300. At least one of the plurality of terminals may be conductively connected to the second controller.

A second circuit board according to another embodiment may include a first substrate disposed on the housing 2210 and a second substrate (or an extension substrate) extending from the first substrate. The second substrate may be provided with a connector. In the second circuit board according to the other embodiment, the terminal unit may be omitted, and the second controller may be conductively connected to the connector of the second circuit board. Alternatively, in another embodiment, the second controller may be omitted, and the coil 2230 or the position sensor 2240 may be conductively connected to the connector of the second circuit board. The connector of the second circuit board may be coupled or connected to another external connector of the camera device 2200 or to an external device. The connector of the second circuit board connected to the other external connector may correspond to a stationary unit that does not move when OIS is performed.

Each of the first magnet unit 2310A and the second magnet unit 2310B may be a two-pole magnet including one N pole and one S pole. For example, each of the first magnet unit 2310A and the second magnet unit 2310B may be a magnet with an N pole and an S pole separated or disposed in the optical-axis direction. For example, the N pole (or the S pole) of each of the first magnet unit 2310A and the second magnet unit 2310B may be located above the S pole (or the N pole) thereof.

For example, a first surface of the magnet 2310 that faces or is opposite the coil 2230 in the optical-axis direction may have an S pole (or an N pole). A second surface of the magnet 2310, which is opposite the first surface, may have an N pole (or an S pole).

In another embodiment, each of the first magnet unit 2310A and the second magnet unit 2310B may be a magnet with one N pole and one S pole separated or disposed in a direction perpendicular to the optical-axis direction. In another embodiment, each of the first magnet unit 2310A and the second magnet unit 2310B may be a magnet including two N poles and two S poles. Electromagnetic force may be generated between the first and second magnet units 2310A and 2310B and the first and second coil units 2230A and 2230B, and the generated electromagnetic force may cause first-axis tilting or second-axis tilting of the OIS moving unit.

The housing 2210 may include a receiving portion 2049A configured to receive the magnetic material 2031. The receiving portion 2049A may be disposed or formed in the lower portion 2042 of the housing 2210. The receiving portion 2049A may be disposed or formed in an upper surface of the lower portion 2042 of the housing 2210. For example, the receiving portion 2049A may be a recess depressed from the upper surface of the lower portion 2042 of the housing 2210. The receiving portion 2049A may have a shape corresponding to the magnetic material 2031, such as a quadrangular shape or a circular shape. For example, the receiving portion 2049A of the housing 2210 may correspond to, may be opposite, or may overlap the receiving portion 2028A of the sensor base 2270 in the optical-axis direction.

Referring to FIG. 45B, the housing 2210 may include a seating portion 2069 in which at least a part of the tilting guide member 2060 is disposed or at least a part of the tilting guide member 2060 is received. For example, the seating portion 2069 may be a recess depressed from the bottom surface of the housing 2210 or the upper surface of the lower portion 2042.

For example, the seating portion 2069 may have a shape that corresponds to or coincides with the shape of the tilting guide member 2060. For example, the seating portion 2069 may include a bottom surface 2069A having a step formed from the upper surface of the lower portion 2042 of the housing 2210 in the optical-axis direction and a side surface 2069B connecting the bottom surface 2069A and the upper surface of the lower portion 2042 to each other. The side surface 2069B may be represented as a "partition wall." For example, the bottom surface 2069A of the seating portion 2069 may be located lower than the upper surface of the lower portion 2042 of the housing 2210. In another embodiment, the seating portion 2069 may be omitted.

Referring to FIGs. 39A and 39B, since the housing 2210 is provided at the upper surface of the lower portion 2042 thereof with a seating portion 2069 in which at least a part of the tilting guide member 2060 is inserted or disposed, the lower portion 2042 of the housing 2210 may include a partition wall 2069B (or a guide portion) disposed around the tilting guide member 2060. The tilting guide member 2060 may be spaced apart from the partition wall 2069B of the housing 2210, and the partition wall 2069B may be disposed so as to surround the tilting guide member 2060. The partition wall 2069B of the housing 2210 may prevent the tilting guide member 2060 from being separated or dislodged from the housing 2210.

The housing 2210 may include a protrusion 2049 (or a boss) protruding from the lower portion 2042. For example, the protrusion 2049 may protrude from the upper surface of the lower portion 2042 of the housing 2210. For example, the protrusion 2049 may protrude from the bottom surface 2069A of the seating portion 2069 of the housing 2210. For example, the protruding length of the protrusion 2049 of the housing 2210 may be greater than the depth of the seating portion 60 of the housing 2210. For example, the protruding length of the protrusion 2049 may be the distance (or the shortest distance) from the bottom surface 2069A of the seating portion 2069 to a lower surface (or the lowermost end) of the protrusion 2049. In addition, the depth of the seating portion 2069 may be the distance (or the shortest distance) from the upper surface of the lower portion 2042 of the housing 2210 to the bottom surface 2069A of the seating portion 2069. In another embodiment, for example, the protruding length of the protrusion 2049 may be less than or equal to the depth of the seating portion 2069. For example, the protrusion 2049 may have a shape that corresponds to or coincides with an opening 2060A of the tilting guide member 2060.

For example, the protrusion 2049 of the housing 2210 may correspond to, may be opposite, or may overlap the opening 2060A of the tilting guide member 2060 in the optical-axis direction. For example, at least a part of the protrusion 2049 of the housing 2210 may be disposed in the opening 2060A of the tilting guide member 2060.

For example, the receiving portion 2049A may be disposed or formed in the protrusion 2049 of the housing 2210. For example, the receiving portion 2049A may be a recess depressed from the upper surface of the protrusion 2049 of the housing 2210.

For example, the protrusion 2049 may be disposed between recesses 2055A and 2055B of the housing 2210. For example, the protrusion 2049 may be disposed between bosses 2066A and 2066B of the tilting guide member 2060. For example, the protrusion 2049 (or the magnetic material 2031) may overlap the bosses 2066A and 2066B of the tilting guide member 2060 in a direction perpendicular to the optical axis, e.g., the third direction.

For example, at least a part of the first magnet unit 2310A may correspond to, may be opposite, or may overlap the tilting guide member 2060 in a direction parallel to the first axis. In addition, at least a part of the second magnet unit 2310B may correspond to, may be opposite, or may overlap the tilting guide member 2060 in a direction parallel to the second axis.

The housing 2210 may include a recess 2055 in which at least a part of the boss 2066 of the tilting guide member 2060 is disposed or in which at least a part of the boss 2066 is received. The recess 2055 of the housing 2210 may be formed in the upper surface of the lower portion 2042 of the housing 2210. For example, the recess 2055 may be depressed from the upper surface of the lower portion 2042 of the housing 2210. For example, the recess 2055 may be formed in the bottom surface 2069A of the seating portion 2069 of the housing 2210. For example, the recess 2055 may be depressed from the bottom surface 2069A of the seating portion 2069 of the housing 2210. The number of the recesses 2055 of the housing 2210 may be equal to the number of the bosses 2066 of the tilting guide member 2060.

For example, the recess 2055 may include two recesses 2055A and 2055B spaced apart from each other. For example, the two recesses 2055A and 2055B may be disposed spaced apart from each other in the second-axis direction. For example, the direction in which the recesses 2055A and 2055B of the housing 2210 are spaced apart from each other and the direction in which the two recesses 2029A and 2029B of the sensor base 2270 are spaced apart from each other may intersect or be perpendicular to each other. For example, the receiving portion 2049A may be disposed between the two recesses 2055A and 2055B of the housing 2210.

The recess 2055 of the housing 2210 may contact the boss 2066 of the tilting guide member 2060 at at least one point. For example, the recess 2055 may include a bottom surface and at least one side surface connected to the bottom surface. The at least one side surface of the recess 2055 may be an inclined surface. For example, the recess 2055 may include a bottom surface and a plurality of inclined surfaces. The inclined surfaces of the recess 2055 may have the same shape. In another embodiment, at least one of the inclined surfaces of the recess 2055 may have a different shape from the others.

The housing 2210 may include a protrusion 2215 protruding in a direction perpendicular to the optical axis. For example, the protrusion 2215 may protrude from the side portion of the housing 2210.

For example, the protrusion 2215 may protrude from an outer surface of the fourth side portion 2071D of the housing 2210. For example, the protrusion 2215 may be formed by at least a part of the fourth side portion 2071D protruding in a direction parallel to a straight line that passes through the optical axis and is perpendicular to the optical axis. For example, the protrusion 2215 may include a recess 2016A (or a cavity) in which at least a part of the fourth substrate 2804 is disposed or received. For example, the recess 2016A of the protrusion 2215 may include an opening that opens upward.

Referring to FIG. 45A, the recess 2016A of the protrusion 2215 may be provided with coupling recesses 2215A and 2215B for insertion, coupling, or fixing of the movement inhibition portion 2080. For example, the coupling recesses 2215A and 2215B may be formed in two facing inner surfaces of the recess 2016A of the protrusion 2215. For example, the coupling recesses 2215A and 2215B may extend in the optical-axis direction. For example, for easy insertion or coupling of the movement inhibition portion 2080 from above, each of the coupling recesses 2215A and 2215B may include an opening that opens to an upper surface of the protrusion 2215.

The maximum length of the protrusion 2215 in the optical-axis direction may be less than the maximum length of the housing 2210 in the optical-axis direction. In this configuration, space for the circuit board 2800 to extend outward may be easily secured, and a compact camera device may be implemented.

The camera device 2200 may include a movement inhibition portion 2080 coupled to at least a part of the housing 2210. The movement inhibition portion 2080 may inhibit movement or motion of at least a part of the fourth substrate 2804 to inhibit deformation of at least a part of the fourth substrate 2804.

Referring to FIGs. 42C, 43, and 46A, the fourth substrate 2804 of the circuit board 2800 may include a first portion 2804A (or a "first region") connected to the first substrate 2801, a second portion 2804B connected to the first portion 2804A and bent from the first portion 2804A, and a third portion 2804C connected to the second portion 2804B and bent from the second portion 2804B. In another embodiment, at least one of the first portion 2804A and the second portion 2804B may be omitted.

For example, the first portion 2804B may extend in a direction parallel to the first substrate 2801. For example, the second portion 2804B may be bent from the first portion 2804B and may extend from the first portion 2804B in the upward direction. For example, the third portion 2804C may extend from the second portion 2804B in a direction opposite the first portion 2804A.

For example, the fourth substrate 2804 may include a first bent portion 2804D connecting the first portion 2804A and the second portion 2804B to each other. In addition, the fourth substrate 2804 may include a second bent portion 2804E connecting the second portion 2804B and the third portion 2804C to each other. The first bent portion 2804D and the second bent portion 2804E may be angled, and for example, the first portion 2804A and the second portion 2804B may be perpendicular to each other. In another embodiment, the first bent portion 2804D and the second bent portion 2804E may be rounded. In another embodiment, the interior angle between the first portion 2804A and the second portion 2804B may be an acute angle or an obtuse angle.

The first bent portion 2804D and the second bent portion 2804E may prevent an increase in the length of the camera device 2200 in a direction perpendicular to the optical-axis direction. In addition, since the first bent portion 2804D and the second bent portion 2804E are located between the upper surface of the camera device 2200 (e.g., the upper surface of the cover member 2300) and the lower surface of the camera device 2200 (e.g., the lower surface of the housing 2210), an increase in the length of the camera device 2200 in the optical-axis direction may be prevented, whereby it is possible to implement miniaturization of the camera device.

For example, the third portion 2804C may be in the form of a plate or plane perpendicular to the optical axis. For example, the third portion 2804C may include a meandering shape or a serpentine shape. For example, the third portion 2804C may include at least one bent or curved region. For example, the bent or curved region of the third portion 2804C may be bent in the second direction or the third direction, which is perpendicular to the optical axis. Alternatively, the bent or curved region of the third portion 2804C may extend in a direction perpendicular to the optical axis. For example, when viewed from above, the third portion 2804C may include a region having a U shape or a V shape.

For example, the third portion 2804C may be spaced apart from the housing 2210. For example, the third portion 2804C may be spaced apart from the protrusion 2215 of the housing 2210. In another embodiment, for example, at least a part of the third portion 2804C may be in contact with the protrusion 2215 of the housing 2210.

At least a part of the second portion 2804B of the fourth substrate 2804 may be disposed in the protrusion 2215 of the housing 2210. At least a part of the second portion 2804B of the fourth substrate 2804 may be disposed in the recess 2016A of the protrusion 2215 of the housing 2210. For example, at least a part of the first portion 2804A of the fourth substrate 2804 may be disposed in the recess 2016A of the protrusion 2215 of the housing 140. The third portion 2804B of the fourth substrate 2804 may be located outside the protrusion 2215 of the housing 2210. For example, the third portion 2804B of the fourth substrate 2804 may be located higher than the protrusion 2215 of the housing 2210. A lower surface of the third portion 2804B of the fourth substrate 2804 may be located higher than the upper surface of the protrusion 2215 of the housing 2210.

Referring to FIG. 42A, the sensor base 2270 may include a recess 273 formed in the part at which the fourth substrate 2804 and the first substrate 2801 are joined or connected to each other, e.g., at the position corresponding to the first portion 2804A of the fourth substrate 2804. The recess 273 may be disposed adjacent to or abutting an outer surface of the fourth side portion 51D of the sensor base 2270 on which the fourth substrate 2804 is disposed. The recess 273 may serve to prevent the first portion 2804A of the fourth substrate 2804 from being damaged by friction with the sensor base 2270.

The connector 2805 may be coupled or connected to another external connector of the camera device 2200 or to an external device. The connector 2805 connected to the other external connector may correspond to a stationary unit that does not move when OIS is performed. Since the third portion 2804C of the fourth substrate 2804 includes at least one bent or curved region, it is possible to flexibly support the camera device 2200 or the OIS moving unit and to cushion external impact. That is, the third portion 2804C of the fourth substrate 2804 may serve as a spring configured to cushion impact. In addition, since the third portion 2804C of the fourth substrate 2804 may serve to flexibly support the OIS moving unit 2100, it is possible to reduce drive force or drive power required to perform OIS.

Referring to FIGs. 46A and 46B, the camera device 2200 may include a reinforcement member 2070 or 2070-1 disposed on, coupled to, or attached to at least a part of the fourth substrate 2804. The reinforcement member 2070 or 2070-1 may be disposed on, coupled to, or attached to at least one of the first portion 2804A and the second portion 2804B of the fourth substrate 2804. For example, the reinforcement member 2070 or 2070-1 may be disposed on, coupled to, or attached to at least a part of the first portion 2804A of the fourth substrate 2804 and at least a part of the second portion 2804B of the fourth substrate 2804.

For example, the reinforcement member 2070 or 2070-1 may be disposed on, coupled to, or attached to a lower surface of the first portion 2804A of the fourth substrate 2804 and a lower surface of the second portion 2804B of the fourth substrate 2804. For example, the reinforcement member 2070 or 2070-1 may include a first region 2070A disposed on, coupled to, or attached to the first portion 2804A and a second region 2070B disposed on, coupled to, or attached to the second portion 2804B. The second region 2070B may be bent upward from the first region 2070A. For example, a bent portion may be formed between the first region 2070A and the second region 2070B.

For example, the area of the second region 2070B may be greater than the area of the first region 2070A. In another embodiment, both may be equal, or the area of the former 70B may be less than the area of the latter 70A.

For example, the reinforcement member 2070 or 2070-1 may be spaced apart from the third portion 2804C of the fourth substrate 2804. For example, the second region 2070B of the reinforcement member 2070 or 2070-1 may be spaced apart from the third portion 2804C of the fourth substrate 2804. In another embodiment, at least a part of the second region 2070B of the reinforcement member 2070 or 2070-1 may be in contact with the third portion 2804C of the fourth substrate 2804.

In another embodiment, the reinforcement member 2070 or 2070-1 may be disposed on, coupled to, or attached to an upper surface of the first portion 2804A of the fourth substrate 2804 and an upper surface of the second portion 2804B of the fourth substrate 2804. For example, in another embodiment, the reinforcement member 2070 or 2070-1 may include a first region disposed on the upper surface of the first portion 2804A of the fourth substrate 2804 and a second region disposed on the upper surface of the second portion 2804B of the fourth substrate 2804.

In another embodiment, the reinforcement member 2070 or 2070-1 may be disposed on, coupled to, or attached to at least a part of the second portion 2804B of the fourth substrate 2804 and at least a part of the third portion 2804C of the fourth substrate 2804. For example, in another embodiment, the reinforcement member 2070 or 2070-1 may be disposed on, coupled to, or attached to the second portion 2804B and the third portion 2804C of the fourth substrate 2804. For example, the reinforcement member 2070 or 2070-1 may include a first region disposed on, coupled to, or attached to the second portion 2804B of the fourth substrate 2804 and a second region disposed on, coupled to, or attached to the third portion 2804C, and a bent portion may be formed between the first region and the second region. The first region of the reinforcement member 2070 or 2070-1 may be disposed on the lower surface (or the upper surface) of the second portion 2804B, and the second region of the reinforcement member 2070 or 2070-1 may be disposed on the lower surface (or the upper surface) of the third portion 2804C.

The reinforcement member 2070 or 2070-1 may prevent the fourth substrate 2804 from being damaged, deformed, or broken by impact or external force. In addition, the reinforcement member 2070 or 2070-1 may serve to inhibit deformation and restoration of the shape of the fourth substrate 2804 as the fourth substrate 2804 is forced by tilting of the OIS moving unit 2100. For example, the reinforcement member 2070 or 2070-1 may include at least one of a metal material and an injection-molded material.

For example, the reinforcement member 2070 or 2070-1 may be disposed in the recess 2016A of the protrusion 2215 of the housing 2210. For example, at least a part of the reinforcement member 2070 or 2070-1 may be in contact with the recess 2016A of the protrusion 2215 of the housing 2210. For example, the reinforcement member 2070 or 2070-1 may not be coupled to the housing 2210 (e.g., the protrusion 2215). In another embodiment, for example, the reinforcement member 2070 or 2070-1 may be coupled to the housing 2210 (e.g., the protrusion 2215) via an adhesive.

The reinforcement member 2070 of FIG. 46A may include an opening 2073. The opening 2073 of the reinforcement member 2070 may open or expose at least a part of the fourth substrate 2804 of the circuit board 2800. For example, the opening 2073 may open or expose at least a part of the first portion 2804A (or the "first region") and the second portion 2804B (or the "second region") of the fourth substrate 2804. The opening 2073 of the reinforcement member 2070 may be a hole, a through-hole, or a hollow.

The opening 2073 may be formed in at least one of the first region 2070A and the second region 2070A of the reinforcement member 2070. For example, the opening 2073 may be formed in the first region 2070A and the second region 2070A of the reinforcement member 2070. In addition, the opening 2073 may open or expose at least a part of the first bent portion 2804D.

In another embodiment, the opening 2073 may be formed in only one of the first region 2070A and the second region 2070A of the reinforcement member 2070. In addition, the opening 2073 may not expose the first bent portion 2804D.

The elastic modulus of the second substrate 2802 of the circuit board 2800 coupled to the reinforcing member 2070 may be reduced by the opening 2073, which may facilitate movement of the OIS moving unit during OIS operation. That is, the elastic force of the circuit board 2800, such as the second substrate 2802, which supports the OIS moving unit may be reduced by the opening 2073, which may facilitate implementation of OIS operation with less drive force and may reduce power consumption. The drive force may be force generated by interaction between the coil 2230 and the magnet 2310.

Referring to FIGs. 45A and 45B, the movement inhibition portion 2080 may be coupled to the protrusion 2215 of the housing 2210. For example, the movement inhibition portion 2080 may be coupled to the coupling recesses 2215A and 2215B of the protrusion 2215 of the housing 2210.

At least a part of the second portion 2804B of the fourth substrate 2804 may be disposed between the movement inhibition portion 2080 and an inner surface of the protrusion 2215 of the housing 2210. For example, at least a part of the reinforcement member 2070 may be disposed between the movement inhibition portion 2080 and the inner surface of the protrusion 2215 of the housing 2210.

The movement inhibition portion 2080 may be spaced apart from the circuit board 2800 in the second direction (the X-axis direction) or the third direction (the Y-axis direction). For example, the movement inhibition portion 2080 may be disposed spaced apart from the circuit board 2800 in the optical-axis direction or in a direction perpendicular to the optical-axis direction. That is, the movement inhibition portion 2080 may serve to maintain the shape of the bent portions 2804D and 2804E of the fourth substrate 2804, which is a flexible substrate. For example, the movement inhibition portion 2080 may be formed by injection-molding a non-magnetic material or a resin. In another embodiment, the movement inhibition portion 2080 may be in contact with at least a part of the fourth substrate 2804 of the circuit board 2800.

Movement or motion of at least a part of the second portion 2804B of the fourth substrate 2804 disposed in the recess 2016A of the protrusion 2215 may be restricted by the movement inhibition portion 2080, and the second portion 2804B may be inhibited or prevented from moving out of the recess 2016A of the protrusion 2215. This may inhibit or prevent the OIS moving unit from being affected by restoring force of the fourth substrate 2804 when OIS is performed, thereby enabling OIS to be accurately performed and improving reliability of OIS operation. The movement inhibition portion 2080 may alternatively be referred to as a "clamp."

The cover member 2300 may form a receiving space with the housing 2210, and the OIS moving unit may be disposed in the receiving space. For example, the cover member 2300 may be in the form of a box having an open lower portion. For example, the cover member 2300 may include an upper plate 2301 and a side plate 2302 connected to the upper plate 2301.

A lower end of the side plate 2302 of the cover member 2300 may be coupled to the housing 2210. The shape of the upper plate 2302 of the cover member 2300 may be polygonal (e.g., quadrangular or octagonal) or circular. The upper plate 2302 of the cover member 2300 may include an opening 2303 configured to expose the lens (not shown) to external light. The opening 2303 may be a through-hole formed through the upper plate 2302 of the cover member 2300 in the optical-axis direction. For example, the cover member 2300 may include a plurality of side plates. The material of the cover member 2300 may be a non-magnetic material. In another embodiment, the cover member 2300 may be made of a magnetic material. For example, the material of the cover member 2300 may be an injection-molded material, such as a resin, or a metal material.

The cover member 2300 may include an opening 2304 disposed or formed in the side plate 2302 to avoid spatial interference with the protrusion 2215 of the housing 2210. For example, the protrusion 2216 of the housing 2210 may extend through the opening 2304 of the cover member 2300 and may protrude from the side plate 2302 of the cover member 2300.

The cover member 2300 may include a protrusion 2305 disposed above the opening 2304 and protruding from the side plate 2302. For example, the protrusion 2305 may be in the shape of a plate. For example, the protrusion 2305 of the cover member 2300 may be disposed on the protrusion 2215 of the housing 2210. For example, the protrusion 2305 may be disposed above the recess 2016A of the protrusion 2215 of the housing 2210. For example, the protrusion 2305 may be disposed above the movement inhibition portion 1080. For example, the protrusion 2305 may overlap the movement inhibition portion 2080 in the optical-axis direction. In addition, for example, the protrusion 2305 may overlap the first portion 2804A of the fourth substrate 2804 in the optical-axis direction. The protrusion 2305 may inhibit or prevent separation of the movement inhibition portion 2080, and may protect the movement inhibition portion 2080 and the fourth substrate 2804 from impact.

Referring to FIG. 39G, the cover member 2300 may include a boss 2311 protruding from the upper plate 2301. In this case, the boss 2311 of the cover member 2300 may project from an inner surface of the upper plate 2301 of the cover member 2300 toward the bobbin 2110 or the rolling member 2021. For example, the boss 2311 of the cover member 2300 may be opposite or may overlap the receiving portion 2116 of the bobbin 2110 in the optical-axis direction. At least a part of the boss 2311 of the cover member 2300 may be inserted or disposed in the receiving portion 2116 of the bobbin 2110. The boss 2311 of the cover member 2300 may be disposed on the rolling member 2021.

For example, the cover member 2300 may include a first boss 2311A corresponding to, opposite, or overlapping the first rolling member 2021A or the first receiving portion 2116A of the bobbin 2110. For example, the cover member 2300 may include a second boss 2311B corresponding to, opposite, or overlapping the second rolling member 2021B or the second receiving portion 2116B of the bobbin 2110. For example, the boss 2311 of the cover member 2300 may include a recess depressed from the upper surface of the upper plate 2301 of the cover member 330. In another embodiment, the boss of the cover member 2300 may not include a recess. As the cover member 2300 is provided with the boss 2311, the embodiment may prevent the rolling member 2021 from being separated from the receiving portion 2116 of the bobbin 2110. In addition, the boss 2311 of the cover member 2300 may serve as a stopper configured to prevent further movement of the bobbin 2110 within a limited range in the upward direction.

Next, the support unit will be described.

The support unit may be disposed between the stationary unit and the moving unit 2100. The support unit may be disposed between the sensor base 2270 and the housing 221, and may support the sensor base 2270 with respect to the housing 2210. The support unit may include a tilting guide member 2060 disposed between the OIS moving unit (e.g., the sensor base 2270) and the stationary unit (e.g., the housing 2210).

The tilting guide member 2060 may alternatively be referred to as a "driving plate," a "mover," a "mover plate," a "driving board," a "plate," a "rotating board," a "tilting plate," a "moving plate," or a "support plate."

The tilting guide member 2060 may be tiltable about the first axis or the second axis or rotatable by a predetermined angle.

For example, the tilting guide member 2060 may be disposed between the lower portion (or the lower surface) of the sensor base 2270 and the lower portion 2042 of the housing 2210. For example, at least a part of the tilting guide member 2060 may be disposed in the seating portion 2069 of the housing 2210. Since the tilting guide member 2060 is disposed in the seating portion 2069 of the housing 2210, the length or height of the camera device 2200 in the optical-axis direction may be reduced.

The tilting guide member 2060 may be in the form of a plate. The tilting guide member 60 may include a body or main body. When viewed from above, the shape of the body of the tilting guide member 2060 may be polygonal (e.g., quadrangular), circular, or oval. When viewed from above, the shape of the body of the tilting guide member 2060 may be quadrangular, and a corner (or an edge) portion of the body may be rounded.

For example, the length of the tilting guide member 2060 in a horizontal direction perpendicular to the optical axis (e.g., in the transverse direction or the longitudinal direction) may be greater than the length of the tilting guide member 2060 in the optical-axis direction.

The tilting guide member 2060 may include a first guide member disposed on a first surface (or an upper surface) 6A opposite the OIS moving unit (e.g., the sensor base 2270) and a second guide member disposed on a second surface (or a lower surface) 6B opposite the stationary unit (e.g., the housing 2210).

At least one first guide member may be provided, and at least one second guide member may be provided. For example, a first axis may be formed by the first guide member, and a second axis may be formed by the second guide member. For example, the first guide member may include a plurality of first guide members spaced apart in a direction parallel to the first axis. The second guide member may include a plurality of second guide members spaced apart in a direction parallel to the second axis. For example, the first axis may be formed by the plurality of first guide members, and the second axis may be formed by the plurality of second guide members.

The first guide member may be a "boss," a "protrusion," a "ball member," or a "ball," and the second guide member may be a "boss," a "protrusion," a "ball member," or a "ball."

Referring to FIGs. 44A and 44B, the tilting guide member 2060 may include a first boss 2065 that is coupled to or in contact with the sensor base 2270 and a second boss 2066 that is coupled to or in contact with the housing 2210. The first boss 2065 may be disposed on a first surface 2006A (e.g., an upper surface) of the tilting guide member 2060, and the second boss 2066 may be disposed on a second surface 2006B (or a lower surface) of the tilting guide member 2060, which is opposite the first surface 2006A. For example, the first boss 2065 may protrude from the first surface 2006A (e.g., the upper surface) of the tilting guide member 2060, and the second boss 2066 may protrude from the second surface 2006B (e.g., the lower surface) of the tilting guide member 2060.

The first boss 2065 may alternatively be referred to as an "upper boss (or a front boss)" or a "first protrusion," and the second boss 2066 may alternatively be referred to as a "lower boss (or a rear boss)" or a "second protrusion." The number of each of the first boss 2065 and the second boss 2066 may be one, two, or three or more.

At least a part of the first boss 2065 may be disposed in the recess 2029 of the sensor base 2270. The first boss 2065 may include at least two bosses 2065A and 2065B. For example, a 1-1 boss 2065A and a 1-2 boss 2065B may be disposed spaced apart from each other in the first-axis direction. Each of the two bosses 2065A and 2065B may be inserted into and disposed in a corresponding one of the first and second recesses 2029A and 2029B of the sensor base 2270.

At least a part of the second boss 2066 may be disposed in the recess 2055 of the housing 2210.

The second boss 2066 may include at least two bosses 2066A and 2066B. For example, a 2-1 boss 2066A and a 2-2 boss 2066B may be disposed spaced apart from each other in the second-axis direction. Each of the two bosses 2066A and 2066B may be inserted into and disposed in a corresponding one of the first and second recesses 2055A and 2055B of the housing 210.

In another embodiment, the two bosses 2065A and 2065B of the tilting guide member 2060 may be disposed spaced apart from each other in the second-axis direction, the first and second recesses 2029A and 2029B of the sensor base 2270 may be disposed spaced apart from each other in the second-axis direction, the two bosses 2066A and 2066B of the tilting guide member 2060 may be disposed spaced apart from each other in the first-axis direction, and the first and second recesses 2055A and 2055B of the housing 2210 may be disposed spaced apart from each other in the first-axis direction.

For example, each of the first boss 2065 and the second boss 2066 may have a curved shape, a hemispherical shape, a dome shape, or a polyhedral shape, but the present disclosure is not limited thereto. For example, the shape of the first boss 2065 when viewed from the front or above and the shape of the second boss 2066 when viewed from the rear or below may be circular, oval, or polygonal.

The tilting guide member 2060 may include an opening 2060A corresponding to, opposite, or overlapping the magnetic material 2031 and/or the magnetic material 2032. For example, the opening 2060A may correspond to, may be opposite, or may overlap the protrusion 2049 of the housing 2210. The weight of the tilting guide member 2060 may be reduced by the opening 2060A, which may result in a lighter camera device 2200.

For example, the opening 2060A of the tilting guide member 2060 may be disposed at the position corresponding to the protrusion 2049 of the housing 2210 in order to avoid spatial interference with the protrusion 2049. In addition, the opening 2060A of the tilting guide member 2060 may be formed to avoid spatial interference with the magnetic material 2031 and the protrusion 2049 of the housing 2210.

For example, the opening 2060A of the tilting guide member 2060 may be a through-hole or a hollow. For example, the opening 2060A may be formed through the tilting guide member 2060 in the first direction (the Z-axis direction) or the optical-axis direction. For example, at least a part of the opening 2060A of the tilting guide member 2060 may include a shape corresponding to the protrusion 2049 of the housing 2210. For example, the opening 2060A may include a circular shape, an oval shape, and a polygonal shape, such as a quadrangular shape.

For example, the transverse length of the opening 2060A of the tilting guide member 2060 may be greater than the transverse length of the protrusion 2049 of the housing 2210. In another embodiment, the transverse length of the opening 2060A may be equal to the transverse length of the protrusion 2049 of the housing 2210. The longitudinal length of the opening 2060A may be greater than the longitudinal length of the protrusion 2049 of the housing 2210. In another embodiment, the longitudinal length of the opening 2060A may be equal to the longitudinal length of the protrusion 2049 of the housing 2210.

At least a part of the protrusion 2049 of the housing 2210 may be disposed in the opening 2060A of the tilting guide member 2060. For example, the protrusion 2049 of the housing 2210 may overlap the opening 2060A of the tilting guide member 2060 in the optical-axis direction. In addition, for example, the protrusion 2049 of the housing 2210 may overlap the tilting guide member 2060 in a direction perpendicular to the optical-axis direction. This may reduce the length or height of the camera device 2200 in the optical-axis direction.

For example, at least a part of the opening 2060A may be disposed between the two bosses 2065A and 2065B of the first boss 2065 of the tilting guide member 2060. In addition, at least a part of the opening 2060A may be disposed between the bosses 2066A and 2066B of the second boss 2066 of the tilting guide member 2060.

For example, the tilting guide member 2060 may be made of an injection-molded material. For example, the tilting guide member 2060 may be made of a plastic, resin, or ceramic material. In another embodiment, the tilting guide member 2060 may include a metal, such as SUS. In addition, the tilting guide member 2060 may be made of a non-magnetic material. In another embodiment, the tilting guide member 2060 may be made of a magnetic material.

The bosses 2065A and 2065B of the first boss 2065 and the bosses 2066A and 2066B of the second boss 2066 may be disposed side by side in directions that intersect or are perpendicular to each other. The first boss 2065 of the tilting guide member 2060 may rotate, pivot, or tilt the OIS moving unit about the first axis by a predetermined angle. The second boss 2066 of the tilting guide member 2060 may rotate, pivot, or tilt the OIS moving unit about the second axis.

In another embodiment, at least one of the first boss 2065 and the second boss 2066 of the tilting guide member 2060 may be omitted, and a rolling member or a ball member may be disposed in place of the omitted boss.

Referring to FIGs. 44C and 44D, a tilting guide member 2060-1 according to another embodiment may include a first recess 2075 with the first boss 2065 omitted, and may include a second recess 2076 with the second boss 2066 omitted. In addition, the support unit may include a first ball member in place of the first boss 2065, and may include a second ball member in place of the second boss 2066. For example, the first ball member may include two or more first ball members 2065A1 and 2065B1, and the second ball member may include two or more ball members 2066A1 and 2066B1.

The first recess 2075 may be disposed or formed in a first surface 2006A of the tilting guide member 2060-1. The first surface 2006A may be a surface opposite or facing the sensor base 2270. The recess 2075 may be depressed from the first surface 2006A of the tilting guide member 2060. For example, the tilting guide member 2060-1 may include first recesses 2075A and 2075B in which at least a part of the first ball members 2065A1 and at least a part of the first ball members 2065B1 are disposed. For example, the first recesses 2075A and 2075B may be disposed spaced apart in the first-axis direction. For example, the first ball members 2065A1 and 2065B1 may be disposed spaced apart in the first-axis direction.

In another embodiment, the first ball members 2065A1 and 2065B1 may be disposed spaced apart in the second-axis direction, and the first recesses 2075A and 2075B may be disposed spaced apart in the second-axis direction.

In addition, the second recess 2076 of the tilting guide member 2060-1 may be disposed or formed in a second surface 2006B of the tilting guide member 2060-1. The second surface 2006B may be a surface opposite or facing the housing 2210. In addition, the second surface 2006B may be a surface opposite the first surface 2006A of the tilting guide member 2060-1. The second recess 2076 may be depressed from the second surface 2006B of the tilting guide member 2060.

For example, the tilting guide member 2060-1 may include second recesses 2076A and 2076B in which at least a part of the second ball members 2066A1 and at least a part of the second ball members 2066B1 are disposed. For example, the second recesses 2076A and 2076B may be disposed spaced apart in the second-axis direction. For example, the second ball members 2066A1 and 2066B1 may be disposed spaced apart in the second-axis direction. In another embodiment, the second ball members 2066A1 and 2066B1 may be disposed spaced apart in the first-axis direction, and the second recesses 2076A and 2076B may be disposed spaced apart in the first-axis direction.

A description of the shape of the recess 2029 of the sensor base 2270 or the recess 2055 of the housing 2210 may be applied or analogically applied to the shape of the first recess 2075 and the second recess 2076 of the tilting guide member 2060-1.

A lubricant may be disposed on the first boss 2066 of the tilting guide member 2060 and in the recess 2029 of the sensor base 2270 or the second boss 2066 of the tilting guide member 2060 and in the recess 2055 of the housing 2210 in order to reduce frictional force and to protect the tilting guide member 2060.

The first boss 2065 of the tilting guide member 2060 may slide in the recess 2029 of the sensor base 2270, and the second boss 2066 may slide in the recess 2055 of the housing 2210. As a result, it is possible to reduce frictional force between the tilting guide member 2060 and the sensor base 2270 and/or frictional force between the tilting guide member 2060 and the housing 2210 and to reduce current consumption or power consumption necessary for OIS operation.

Referring to FIGs. 39D and 47, the ball member 2021 may not overlap the tilting guide member 2060 in the optical-axis direction. For example, as shown in FIG. 39C, the ball member 2021 may not overlap the tilting guide member 2060 in a direction perpendicular to the optical axis.

For example, the direction in which the first rolling member 2021A and the second rolling member 2021B are spaced apart from each other may intersect the direction in which the boss 2065A and the boss 2065B of the tilting guide member 2060 are spaced apart from each other. For example, the direction in which the first rolling member 2021A and the second rolling member 2021B are spaced apart from each other may not be parallel or perpendicular to the direction in which the boss 2065A and the boss 2065B of the tilting guide member 2060 are spaced apart from each other.

For example, the direction in which the first rolling member 2021A and the second rolling member 2021B are spaced apart from each other may intersect the direction in which the boss 2066A and the boss 2066B of the tilting guide member 2060 are spaced apart from each other. For example, the direction in which the first rolling member 2021A and the second rolling member 2021B are spaced apart from each other may not be parallel or perpendicular to the direction in which the boss 2066A and the boss 2066B of the tilting guide member 2060 are spaced apart from each other.

For example, when viewed from above, the distance between the boss 2065A and the boss 2065B of the tilting guide member 2060 may be less than the distance between the first rolling member 2021A and the second rolling member 2021B. In another embodiment, the distance between the boss 2065A and the boss 2065B of the tilting guide member 2060 may be equal to or greater than the distance between the first rolling member 2021A and the second rolling member 2021B.

For example, when viewed from above, the distance between the boss 2066A and the boss 2066B of the tilting guide member 2060 may be less than the distance between the first rolling member 2021A and the second rolling member 2021B. In another embodiment, the distance between the boss 2066A and the boss 2066B of the tilting guide member 2060 may be equal to or greater than the distance between the first rolling member 2021A and the second rolling member 2021B.

The support unit may include a magnetic material 2032 disposed on the OIS moving unit (e.g., the sensor base 2270) and a magnetic material 2031 disposed on the stationary unit (e.g., the housing 2210). In another embodiment, the magnetic material 2032 may be disposed on the stationary unit (e.g., the housing 2210), and the magnetic material 2031 may be disposed on the OIS moving unit (e.g., the sensor base 2270). Each of the magnetic materials 2031 and 32 may alternatively be referred to as a "magnet," a "yoke," or a "holding magnet."

For example, the magnetic material 2031 may be disposed in the recess 2049A of the protrusion 2049 of the housing 2210, or may be coupled to the recess 2049A. At least a part of the magnetic material 2031 may be disposed in the opening 2060A of the tilting guide member 2060. For example, the magnetic material 2031 may be opposite or may overlap the opening 2060A of the tilting guide member 2060 in the optical-axis direction. For example, the magnetic material 2031 may not overlap the tilting guide member 2060 in the optical-axis direction. In addition, for example, at least a part of the magnetic material 2031 may overlap the tilting guide member 2060 in a direction perpendicular to the optical axis.

The magnetic material 2031 may correspond to, may be opposite, or may overlap the magnetic material 2032 in the optical-axis direction. The magnetic material 2031 may be a two-pole magnet including an N pole and an S pole. For example, the magnetic material 2031 may be a two-pole magnet with an N pole and an S pole separated or disposed in the optical-axis direction. In another embodiment, the magnetic material 2031 may be a two-pole magnet with an N pole and an S pole separated or disposed in a direction perpendicular to the optical-axis direction. In another embodiment, the magnetic material 2031 may be a four-pole magnet including two N poles and two S poles.

The magnetic material 2032 may be disposed above the magnetic material 2031. The magnetic material 2032 may be disposed in the recess 2028A of the sensor base 2270. For example, the magnetic material 2032 may be coupled to the recess 2028A of the sensor base 2270.

The magnetic material 2032 may overlap the opening 2060A of the tilting guide member 2060 in the optical-axis direction. The magnetic material 2032 may not overlap the tilting guide member 2060 in the optical-axis direction. The magnetic material 2032 may not overlap the tilting guide member 2060 in a direction perpendicular to the optical axis. In another embodiment, the magnetic material 2032 may overlap the tilting guide member 2060 in a direction perpendicular to the optical axis.

When viewed from above, the area of the opening 2060A of the tilting guide member 2060 may be greater than the area of the upper surface (or the lower surface) of the magnetic material 2031. In addition, when viewed from above, the area of the opening 2060A of the tilting guide member 2060 may be greater than the area of the upper surface (or the lower surface) of the magnetic material 2032.

For example, attractive force may act between the magnetic material 2032 and the magnetic material 2031 in the optical-axis direction (or the first direction). The magnetic material 2032 and the magnetic material 2031 may be disposed such that attractive force acts therebetween. The magnetic material 2032 may be a material that is magnetic. For example, the magnetic material 2032 may be a metal material that is magnetic. Alternatively, for example, the magnetic material 2032 may be a metal material that has magnetism. Alternatively, for example, the magnetic material 2032 may be a magnet. The magnetic material 2032 may alternatively be referred to as a "yoke."

For example, each of the magnetic material 2032 and the magnetic material 2031 may be a magnet, and a first surface (e.g., a lower surface) of the magnetic material 2032 may be opposite a first surface (e.g., an upper surface) of the magnetic material 2031 in the optical-axis direction. The first surface (e.g., the lower surface) of the magnetic material 2032 and the first surface (e.g., the upper surface) of the magnetic material 2031 may have opposite polarities. For example, the first surface (e.g., the lower surface) of the magnetic material 2032 may have an N pole (or an S pole), and the first surface (e.g., the upper surface) of the magnetic material 2031 may have an S pole (or an N pole). In addition, a second surface (e.g., an upper surface) of the magnetic material 2032 and a second surface (e.g., a lower surface) of the magnetic material 2031 may have opposite polarities. The second surface of the magnetic material 2032 may be a surface opposite the first surface of the magnetic material 2032, and the second surface of the magnetic material 2031 may be a surface opposite the first surface of the magnetic material 2031.

The attractive force between the magnetic material 2032 and the magnetic material 2031 may cause the sensor base 2270 and the housing 2210 to press the tilting guide member 2060, and the first boss 2065 and the second boss 2066 of the tilting guide member 2060 may be brought into tight contact with the sensor base 2270 and/or the housing 2210. The tilting guide member 2060 may stably support the OIS moving unit with respect to the stationary unit due to the attractive force between the magnetic material 2032 and the magnetic material 2031, whereby stable OIS operation may be performed.

In addition, since at least a part of the magnetic material 2031 is disposed in the opening 2060A of the tilting guide member 2060, the distance between the magnetic material 2031 and the magnetic material 2032 may be reduced, which may increase the attractive force between the magnetic material 2031 and the magnetic material 2032, and the OIS moving unit may be stably supported with respect to the stationary unit.

In addition, since the magnetic material 2031 is disposed on a central region of the lower portion 2042 of the housing 2210 and the magnetic material 2032 is disposed on the center of the lower surface of the sensor base 2270, the attractive force between the magnetic material 2031 and the magnetic material 2032 may be concentrated on the center of the sensor base 2270 and the center of the housing 2210, which may efficiently and reliably support the OIS moving unit.

In another embodiment, the protrusion 2049 of the housing 2210 may be omitted, the magnetic material 2031 may be disposed on the upper surface of the lower portion 2042 of the housing 2210, and the sensor base 2270 may include a protrusion protruding from the lower surface of the sensor base 2270 so as to correspond to, to be opposite, or to overlap the opening 2060A of the tilting guide member 2060, and the magnetic material 2032 may be disposed on the protrusion of the sensor base 2270. In this case, the seating portion 2069 of the housing 2210 may be omitted, and a seating portion corresponding to or identical to the seating portion 2069 of the housing 2210 may be formed on the lower surface of the sensor base 2270, the tilting guide member 2060 may be disposed in the seating portion of the sensor base 2270, the protrusion may protrude from the bottom surface of the seating portion of the sensor base 2270, a recess in which the magnetic material 2032 is disposed may be formed in the protrusion of the sensor base 2270, and a recess in which the magnetic material 2031 is disposed may be formed in the lower portion 2042 of the housing 2210. Also, in another embodiment, at least a part of the protrusion of the sensor base 2270 may be disposed in the opening 2060A of the tilting guide member 2060, and may overlap the tilting guide member 2060 in a direction perpendicular to the optical axis. Also, in another embodiment, the magnetic material 2031 may be disposed on the protrusion (or the recess of the protrusion) of the sensor base 2270, and the magnetic material 2032 may be disposed on the lower portion 2042 (or the recess of the lower portion 2042) of housing 2210.

In another embodiment, the magnetic material 2031 may be disposed on the stationary unit and the magnetic material 2032 may be disposed on the OIS moving unit such that repulsive force acts between the magnetic material 2031 and the magnetic material 2032, the sensor base 2270 and the housing 2210 may press the tilting guide member 2060 due to the repulsive force, and the first boss 2065 and the second boss 2066 of the tilting guide member 2060 may be brought into tight contact with the sensor base 2270 and/or the housing 2210. That is, in another embodiment, the tilting guide member 2060 may stably support the OIS moving unit with respect to the stationary unit due to the repulsive force between the magnetic material 2032 and the magnetic material 2031, whereby stable OIS operation may be performed.

In another embodiment, the tilting guide member 2060 may be omitted, and the support unit may include a rolling member, e.g., a ball member, disposed between the sensor base 2270 and the housing 2210. In this case, the rolling member may include two first ball members disposed in a direction parallel to the first axis and two second ball members disposed in a direction parallel to the second axis, and the OIS moving unit may be tilted about the first ball members as an axis or may be rotated by a predetermined angle, and may be tilted about the second ball members as an axis or may be rotated by a predetermined angle, whereby hand-tremor compensation may be performed.

Referring to FIGs. 47 and 48A, the first magnet unit 2310A may overlap the bosses 2065A and 2065B of the tilting guide member 2060 in the direction in which the bosses 2065A and 2065B face each other or in the first-axis direction. In addition, the second magnet unit 2310B may overlap the bosses 2066A and 2066B of the tilting guide member 2060 in the direction in which the bosses 2065A and 2065B face each other or in the second-axis direction.

Referring to FIGs. 39E and 39F, the tilting guide member 2060 may overlap the magnet 2310 in a direction perpendicular to the optical axis. For example, the first magnet unit 2310A may overlap the tilting guide member 2060 in the first-axis direction, and the second magnet unit 2310B may overlap the tilting guide member 2060 in the second-axis direction.

For example, the magnet 2310 may be disposed under the image sensor 2810. For example, the magnet 2310 may be disposed under the filter 2610. In addition, the magnet 2310 may be disposed under the magnetic material 2032. For example, the magnet 2310 may be located lower than the holder 2140. For example, the magnet 2310 may be disposed under the sensor base 2270. For example, the upper surface of the magnet 2310 may be located lower than the lower surface of the sensor base 2270. The upper surface of the magnet 2310 may be located lower than the lower surface of the holder 2140. The upper surface of the magnet 2310 may be located lower than the lower surface of the magnetic material 2032. For example, the magnet 2310 may be located lower than the rolling member 2021.

For example, the upper surface of the magnet 2310, e.g., the upper surfaces of the magnet units 22310A and 2310B, may be located lower than the upper surface of the magnetic material 2031. In another embodiment, the upper surface of the magnet 2310 may be located higher than the upper surface of the magnetic material 2031 or may be flush with the upper surface of the magnetic material 2031.

For example, the upper surface of the magnet 2310, e.g., the upper surfaces of the magnet units 22310A and 2310B, may be located lower than the lower surface of the magnetic material 2031. In another embodiment, the upper surface of the magnet 2310 may be located higher than the lower surface of the magnetic material 2031 or may be flush with the lower surface of the magnetic material 2031.

Referring to FIGs. 47 and 48A, for example, the first magnet unit 2310A and the second magnet unit 2310B may have the same shape and size.

The first length L1 of the first magnet unit 2310A in the second-axis direction may be less than the second length L2 of the first magnet unit 2310A in the first-axis direction. In addition, the first length of the second magnet unit 2310B in the first-axis direction may be less than the second length of the second magnet unit 2310B in the second-axis direction.

The length of the first magnet unit 2310A in the optical-axis direction may be less than the second length L2 of the first magnet unit 2310A. In addition, the length of the second magnet unit 2310B in the optical-axis direction may be less than the second length of the second magnet unit 2310B. In another embodiment, the length of the first magnet unit 2310A (or the second magnet unit 2310B) in the optical-axis direction may be equal to or greater than the second length L2 of the first magnet unit 2310A (or the second magnet unit 2310B).

For example, the first length L1 of the first magnet unit 2310A (or the second magnet unit 2310B) may be less than the length of the tilting guide member 2060 in the second direction (the X-axis direction) or the third direction (the Y-axis direction). For example, the first length L1 of the first magnet unit 2310A (or the second magnet unit 2310B) may be greater than the length M1 between an outer circumferential surface and an inner circumferential surface of the tilting guide member 2060. For example, M1 may be the shortest distance between an outer surface of the tilting guide member 2060 and the opening 2060A of the tilting guide member 2060. In another embodiment, L1 may be equal to or less than M1.

For example, the first length L1 of the first magnet unit 2310A (or the second magnet unit 2310B) may be less than the length of the opening 2060A of the tilting guide member 2060 in the first-axis direction or the second-axis direction. The first length L1 of the first magnet unit 2310A (or the second magnet unit 2310B) may be less than the length of the opening 2060A of the tilting guide member 2060 in the second direction or the third direction.

Referring to FIGs. 44A, 44B, and 47, the shortest distance L3 between the first bosses 2065A and 2065B may be greater than the first length L1. The shortest distance L4 between the second bosses 2066A and 2066B may be greater than the first length L1. For example, L3 and L4 may be the same. In another embodiment, L3 and L4 may be different.

A description of L3 and L4 may be applied or analogically applied to the first ball members 2065A1 and 2065B1 and the second ball members 2066A1 and 2066B1 of FIGs. 9C and 9D.

For example, the upper surface of the magnet 2310 may be located lower than the upper surface of the protrusion 2049 of the housing 2210. This serves to ensure sufficient space to avoid spatial interference between the magnet 2310 and the lower surface of the sensor base 2270.

In another embodiment, the upper surface of the magnet 2310 may be located higher than the upper surface of the protrusion 2049 of the housing 2210. In another embodiment, the upper surface of the magnet 2310 and the upper surface of the protrusion 2049 of the housing 2210 may be flush with each other.

For example, the upper surface of the magnet 2310 may be located lower than the highest point of the first boss 2065 of the tilting guide member 2060.

When viewed from above or in the optical-axis direction, the bosses 2065A and 2065B, the magnetic material 2031, and the first magnet unit 2310A may overlap each other in the first-axis direction. When viewed from above or in the optical-axis direction, the bosses 2066A and 2066B, the magnetic material 2031, and the second magnet unit 2310B may overlap each other in the second-axis direction.

When viewed from above or in the optical-axis direction, the magnet 2310 may not overlap the magnetic material 2031 in the second direction (the X-axis direction) or the third direction (the Y-axis direction).

FIG. 48A is a view illustrating electromagnetic forces F1 and F2 due to interaction between the magnet units 2310A and 2310B and the coil units 2230A and 2230B and the motion of the OIS moving unit, and FIG. 48B shows the motion of the OIS moving unit 2100 due to the electromagnetic forces of FIG. 48A. FIG. 48A shows the electromagnetic force when each of the first and second magnet units 2310A and 2310B is a two-pole magnet having an N pole and an S pole.

The motion of the OIS moving unit by the OIS driving unit will be described with reference to FIGs. 48A and 48B. The OIS driving unit may include a coil 2230 and a magnet 2310. In addition, the OIS driving unit may include a position sensor 2240. The AF driving unit may be represented by one of a "first driving unit" and a "second driving unit," and the OIS driving unit may be represented by the other of the "first driving unit" and the "second driving unit."

For example, the first surface (e.g., the upper surface) of the first magnet unit 2310A facing or opposite the first coil unit 2230A in the optical-axis direction and the first surface (e.g., the upper surface) of the second magnet unit 2310B facing or opposite the second coil unit 2230B in the optical-axis direction may have opposite polarities. As the first surface (e.g., the upper surface) of the first magnet unit 2310A and the first surface (e.g., the upper surface) of the second magnet unit 2310B have opposite polarities, the influence of a magnetic field of the first magnet unit 2310A on the second coil unit 2230B and the influence of a magnetic field of the second magnet unit on the first coil unit 2230A may be offset, whereby magnetic field balancing may be implemented. As a result, the influence of unnecessary magnetic fields caused by two neighboring magnet units 2310A and 2310B on the coil units 2230A and 2230B may be suppressed or reduced, whereby the performance and reliability of OIS driving of the camera apparatus 2200 may be improved.

In addition, as the first surface (e.g., the upper surface) of the first magnet unit 2310A and the first surface (e.g., the upper surface) of the second magnet unit 2310B have opposite polarities, the influence of the magnetic field of the first magnet unit 2310A on the second sensor 2240B and the influence of the magnetic field of the second magnet unit on the first sensor 2240A may be offset, whereby magnetic field balancing may be implemented. As a result, the influence of unnecessary magnetic fields caused by neighboring magnet units 2310A and 2310B on the sensors 2240A and 2240B may be suppressed or reduced, whereby the reliability of the output of the sensors 2240A and 2240B may be improved and the performance and reliability of OIS driving may be improved.

In addition, for example, the second surface (e.g., the lower surface) of the first magnet unit 2310A and the second surface (e.g., the lower surface) of the second magnet unit 2310B may have opposite polarities. The second surface (e.g., the lower surface) of the first magnet unit 2310A may be a surface opposite the first surface (e.g., the upper surface) of the first magnet unit 2310A, and may have a polarity opposite the polarity of the first surface (e.g., the upper surface) of the first magnet unit 2310A. The second surface (e.g., the lower surface) of the second magnet unit 2310B may be a surface opposite the first surface (e.g., the upper surface) of the second magnet unit 2310B, and may have a polarity opposite the polarity of the first surface (e.g., the upper surface) of the second magnet unit 2310B. For example, the first surface of the first magnet unit 2310A may have an N pole (or an S pole), and the first surface of the second magnet unit 2310B may have an S pole (or an N pole).

First electromagnetic force F1 may be generated by interaction between the first magnet unit 2310A and the first coil unit 2230A. For example, the first electromagnetic force F1 may be exerted in the optical-axis direction, such as the upward direction or the downward direction.

The OIS moving unit 2100 may be tilted about the second axis (or the second boss 2066) by the first electromagnetic force F1. For example, the OIS moving unit 2100 may be second-axis tilted by the first electromagnetic force F1. Here, second-axis tilting means that the OIS moving unit is tilted about the second axis or the OIS moving unit is rotated about the second axis by a predetermined angle.

For example, the tilting guide member 2060 may be tilted about the second axis (or the bosses 2066A and 2066B of the second boss 2066) by the first electromagnetic force F1. For example, the tilting guide member 2060 may be second-axis tilted by the first electromagnetic force F1. For example, in an embodiment in which the bosses 2066A and 2066B are disposed in the first-axis direction, the tilting guide member 2060 may be first-axis tilted.

Referring to FIG. 39B, a gap or space must be present between the tilting guide member 2060 and the OIS moving unit (e.g., the sensor base 2270) by the first boss 2065 of the tilting guide member 2060 in order for the OIS moving unit to be tilted about the second axis (or the second boss 2066 of the tilting guide member 2060). For example, a gap or space in which the tilting guide member 2060 is movable may be present between the upper surface 2006A of the tilting guide member 2060 and the OIS moving unit (e.g., the sensor base 2270). For example, the upper surface 2006A of the tilting guide member 2060 may be spaced apart from the OIS moving unit (e.g., the sensor base 2270) or the lower surface of the sensor base 2270.

Second electromagnetic force F2 may be generated by interaction between the second magnet unit 2310B and the second coil unit 2230B. For example, the second electromagnetic force F2 may be exerted in the upward direction or the downward direction.

The OIS moving unit may be tilted about the first axis (or the first boss 2065) by the second electromagnetic force F2. For example, the OIS moving unit may be first-axis tilted by the second electromagnetic force F2. Here, first-axis tilting means that the OIS moving unit is tilted about the first axis or the OIS moving unit is rotated about the first axis by a predetermined angle.

For example, the tilting guide member 2060 may be brought into contact with the stationary unit (e.g., the housing 2210) by first-axis or second-axis tilting. At this time, the stationary unit may serve as a stopper configured to inhibit tilting of the OIS moving unit.

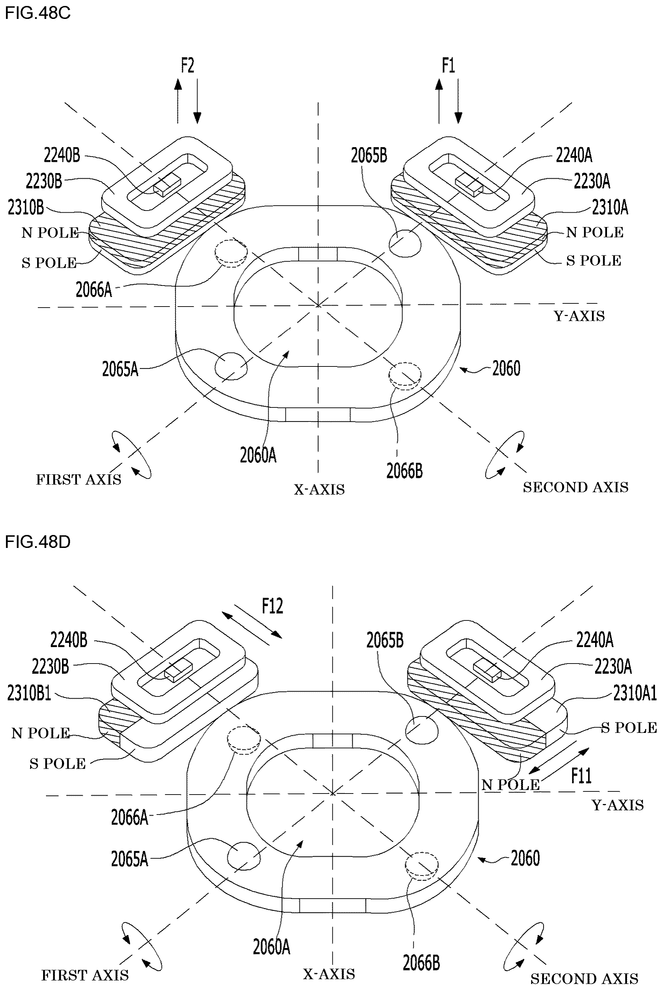

FIG. 48C shows the disposition of magnet units 2310A and 2310B according to a modification of FIG. 48A. Referring to FIG. 48C, the first surface (e.g., the upper surface) of the first magnet unit 2310A facing or opposite the first coil unit 2230A in the optical-axis direction and the first surface (e.g., the upper surface) of the second magnet unit 2310B facing or opposite the second coil unit 2230B in the optical-axis direction may have the same polarity. For example, each of the first surface of the first magnet unit 2310A and the first surface of the second magnet unit 2310B may have an N pole (or an S pole), and each of the second surface of the first magnet unit 2310A and the second surface of the second magnet unit 2310B may have an S pole (or an N pole).

FIG. 48D is a view illustrating electromagnetic forces F1 and F2 due to interaction between magnet units 310A1 and 310B1 according to another embodiment and the coil units 2230A and 2230B and the motion of the tilting guide member 2060.

Referring to FIG. 48D, the first magnet unit 2310A1 may be a magnet with an N pole and an S pole separated or disposed in the first-axis direction. The second magnet unit 2310B1 may be a magnet with an N pole and an S pole separated or disposed in the second-axis direction. For example, the first surface of the first magnet unit 2310A1 may include an N pole and an S pole, and the first surface of the second magnet unit 2310B1 may include an N pole and an S pole.

First electromagnetic force F11 due to the interaction between the first magnet unit 2310A1 and the first coil unit 2230A may act in a direction different from the optical axis (e.g., the first-axis direction). Second electromagnetic force F12 due to the interaction between the second magnet unit 2310B1 and the second coil unit 230 may act in a direction different from the optical axis (e.g., the second-axis direction).

For example, the first electromagnetic force F11 due to the interaction between the first magnet unit 2310A1 and the first coil unit 2230A may act in a direction perpendicular to the optical axis. In addition, the second electromagnetic force F12 due to the interaction between the second magnet unit 2310B1 and the second coil unit 230 may act in a direction perpendicular to the optical axis. For example, F11 and F12 may act in directions that intersect each other (e.g., directions that are perpendicular to each other).

In FIG. 48D, the first pole of the first magnet unit 2310A1 may be disposed closer to the tilting guide member 2060 than the second pole of the first magnet unit 2310A1. In addition, the second pole of the second magnet unit 2310B1 may be disposed closer to the tilting guide member 2060 than the first pole of the second magnet unit 2310B1. For example, the first pole may be an N pole (or an S pole), and the second pole may be an S pole (or an N pole). The first magnet unit 2310A1 and the second magnet unit 2310B1 may be disposed such that their opposite polarities are close to the tilting guide member 2060. A description of the magnetic field balancing of the embodiment of FIG. 48A may be applied or analogically applied to the embodiment of FIG. 48D.

In another embodiment, the first magnet unit 2310A1 and the second magnet unit 2310B1 may be disposed such that the same polarity (e.g., the N pole or the S pole) is close to the tilting guide member 2060.

A description of FIGs. 48C and 48D may be applied or analogically applied to the embodiment of FIG. 18A.

In a camera device configured such that an image sensor is stationary and a lens is moved in a direction perpendicular to the optical axis for hand-tremor compensation or shake compensation ("Comparative Example 1"), distortion of an image may occur. Also, in a camera device configured such that a lens is stationary and an image sensor is moved or tilted for hand-tremor compensation or shake compensation ("Comparative Example 2"), image distortion may occur at edges or corners of the image sensor. As such, in Comparative Example 1 and Comparative Example 2, the image sensor and the lens are separated and only one of the image sensor and the lens is moved or tilted, which may cause image distortion during hand-tremor compensation, and hand-tremor compensation at wide angles may be difficult.

In the embodiment, for hand-tremor compensation, the OIS driving unit may tilt the OIS moving unit 2100 about the first axis or the second axis or may rotate the OIS moving unit within a predetermined angular range. In the embodiment, since the OIS moving unit 2100 includes a lens module 2400 and an image sensor 2810, the tilting direction (or the rotating direction) and the tilting angle (or the rotating angle) of the lens module 2400 (e.g., a lens or a lens module) (or the bobbin 2110) may be the same or nearly the same as the tilting direction (or the rotating direction) and the tilting angle (or the rotating angle) of the image sensor 2810 when OIS is performed.

In the embodiment, since the lens module 2400 (or the bobbin 2110) and the image sensor 2810 may be simultaneously tilted or rotated together when OIS is performed, 100% image resolution without image distortion may be obtained, and hand-tremor compensation or shake compensation at wide angles may be possible.

Also, in the embodiment, since the OIS moving unit including the lens module 2400 (or the bobbin 2110) and the image sensor 2810 is tilted or rotated, shaking of the camera device may not cause degradation of an image in the central part of the image sensor and the peripheral part of the image sensor (e.g., corners or corner regions of the image sensor). As a result, broadband shake compensation may be possible. Also, in the embodiment, since distortion-free image compensation is mechanically possible, load during image processing is low, whereby current consumption may be reduced, when compared to Comparative Example 1 and Comparative Example 2.

Also, in the embodiment, since the tilting guide member 2060 is used to tilt the OIS moving unit, the OIS moving unit may be stably, precisely, and accurately tilted, when compared to an example using only a ball member or a shaft member, thereby improving the reliability of OIS operation.

Also, in the embodiment, power consumption required to perform OIS may be reduced by the bent portions 2804D and 2804E and the third portion 2804C of the fourth substrate 2804, which is a flexible substrate, of the circuit board 2800.

Also, in the embodiment, since the tilting guide member 2060 is disposed in the seating portion 2069 of the housing 2210 and the protrusion 2049 of the housing 2210 overlaps the opening 2060A of the tilting guide member 2060, the height or length of the camera device 2200 in the optical-axis direction may be reduced.

Also, in the embodiment, since at least a part of the magnetic material 2031 is disposed in the opening 2060A of the tilting guide member 2060, the distance between the magnetic material 2031 and the magnetic material 2032 may be reduced, which may increase attractive force or retentive force necessary to support the OIS moving unit, whereby stable OIS operation may be performed.

Also, in the embodiment, since the first magnet unit 2310A and the second magnet unit 2310B, which are driving magnets for hand-tremor compensation, are disposed on the lower portion 2042 of the housing 2210 rather than on the side portions 2071A to 2071D of the housing 2210, the thickness of the side portions 2071A to 2071D of the housing 2210 (or the length thereof in a direction perpendicular to the optical axis) may be reduced, thereby enabling the camera device to be designed for mounting of a large-aperture lens thereto.

For example, each of the transverse length and the longitudinal length of the camera device 2200 according to the embodiment may be 12 mm to 23 mm, and the height of the camera device 2200 may be 4 mm to 12 mm. For example, the transverse length and the longitudinal length of the camera device 2200 may be the transverse length and the longitudinal length of the cover member 2300, and the height of the camera device 2200 may be the distance from the lower surface of the housing 2210 to the upper surface of the upper plate of the cover member 2300. The lens mounted in the camera device 2200 may have an aperture of 9 mm to 19 mm. In another embodiment, the lens mounted in the camera device 200 may have an aperture of 9 mm to 15 mm. If the lens has an aperture greater than 19 mm, the size of the coil 2120 and the magnet 2130 may be constrained to the extent that the coil 2120 and the magnet 2130 cannot be disposed or are not sufficient to perform AF.

Furthermore, if the driving magnet for hand-tremor compensation is disposed on the side portion of the housing 2210, the length of the camera device 2200 in the optical-axis direction may be constrained due to the length of the driving magnet in the optical-axis direction. In the embodiment, however, the driving magnet 2310 is disposed on the lower portion 2042 of the housing 2210, whereby it is possible to design the camera device 200 such that the length of the camera device 2200 in the optical-axis direction is reduced without being constrained by the length of the driving magnet in the optical-axis direction. Also, in the embodiment, the driving magnet 2310 is disposed on the seating portions 2141A and 2141B of the housing 2210, whereby it is possible to further reduce the length of the camera device 2200 in the optical-axis direction.

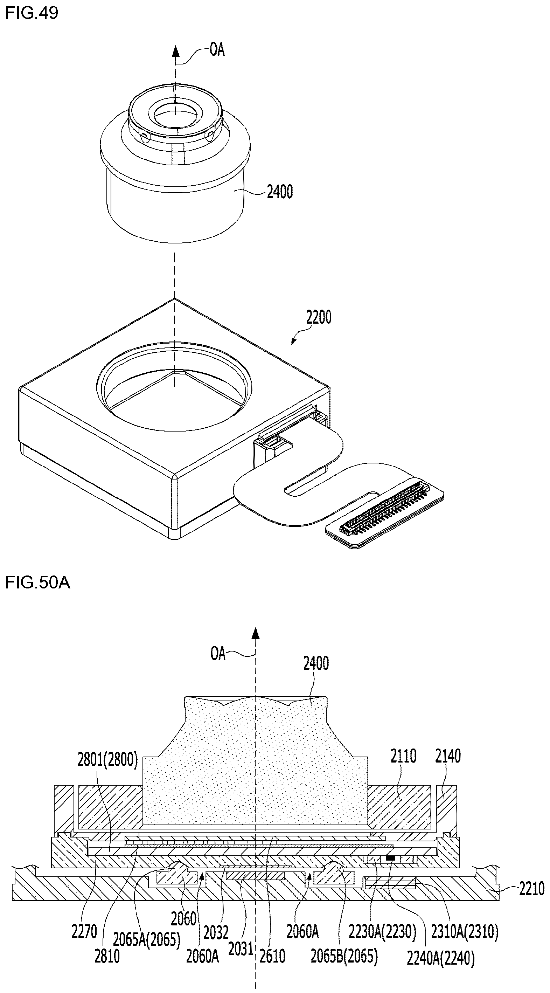

FIG. 49 is a perspective view of the camera device 2200 of FIG. 37A and the lens module 2400.

Referring to FIG. 49, the lens module 2400 may be coupled to the bobbin 100, and may be moved with the bobbin 2110 in the optical-axis direction. For example, the lens module 2400 may include at least one of a lens and a lens barrel.

In the embodiment, the lens module 2400 and image sensor 2810 may be simultaneously first-axis tilted or second-axis tilted in the same direction and by the same angle during hand-tremor compensation or shake compensation.

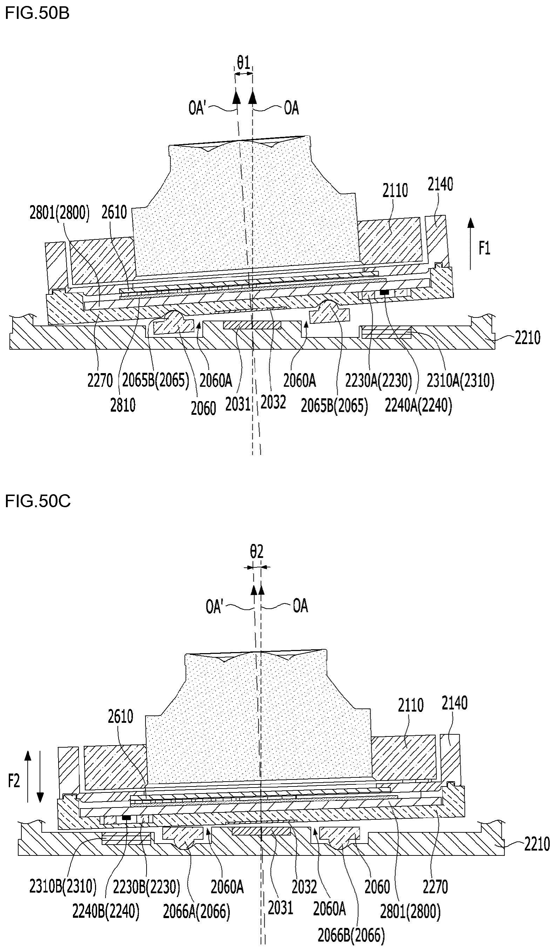

FIG. 50A shows a first position of the OIS moving unit 2100, and FIG. 50B shows a second position of the OIS moving unit 2100.

Referring to FIGs. 48A, 50A, and 50B, the OIS moving unit 2100 may be second-axis tilted about the second axis by a predetermined angle θ1 by force F1 due to interaction between the first magnet unit 2310A and the first coil unit 2310A. That is, when the OIS moving unit 2100 is moved from the first position to the second position, both the image sensor 2810 and the lens module 2400 may be tilted simultaneously by the predetermined angle θ1. In addition, when the OIS moving unit 2100 is moved from the first position to the second position, the tilting guide member 2060 may be tilted by the predetermined angle θ1 together with the image sensor 2810 and the lens module 2400.

FIG. 50C shows a third position of the OIS moving unit 2100.

Referring to FIG. 50C, the OIS moving unit 2100 may be first-axis tilted about the first axis by a predetermined angle θ2 by force F2 due to interaction between the second magnet unit 2310B and the first coil unit 2310B. For example, when the OIS moving unit 2100 is moved from the first position to the second position, the image sensor 2810 and the lens module 2400 may be simultaneously tilted by the predetermined angle θ1.

The image sensor 2810 and the lens module 2400 are simultaneously tilted about the first axis or the second axis by the force F1 or the force F2. In the embodiment, therefore, it is possible to obtain 100% image resolution without image distortion and to perform hand-tremor compensation or shake compensation at wide angles.

For example, when viewed from above or in the optical-axis direction, the first axis may be a first diagonal direction of the OIS moving unit 2100, and the second axis may be a second diagonal direction of the OIS moving unit 2100. For example, the first diagonal direction of the OIS moving unit may be a first diagonal direction of any one of the holder 2140, the sensor base 2270, or the first substrate 2801 of the circuit board 900. In addition, the second diagonal direction of the OIS moving unit may be a second diagonal direction of any one of the holder 2140, the sensor base 2270, or the first substrate 2801 of the circuit board 900.

In another embodiment, when viewed from above or in the optical-axis direction, the first axis may be a first diagonal direction of the stationary unit and the second axis may be a second diagonal direction of the stationary unit. For example, the first diagonal direction of the stationary unit may be a first diagonal direction of the housing 2210 or the cover member 2300. In addition, the second diagonal direction of the stationary unit may be a second diagonal direction of the housing 2210 or the cover member 2300.

For example, the first diagonal direction of the OIS moving unit 2100 (or the stationary unit) may be a direction intersecting the second direction (e.g., the X-axis direction) or the third direction, and the second diagonal direction of the OIS moving unit 2100 (or the stationary unit) may be a direction intersecting the second direction (e.g., the X-axis direction) or the third direction. The first diagonal direction of the OIS moving unit 2100 and the second diagonal direction of the OIS moving unit 2100 may intersect each other. For example, the first diagonal direction of the OIS moving unit 2100 and the second diagonal direction of the OIS moving unit 2100 may be perpendicular to each other.

FIG. 51A is a plan view of the image sensor 2810, the tilting guide member 2060, the magnet 2310, the coil 2230, and the position sensor 2240 of FIG. 37A.

Referring to FIG. 51A, the image sensor 2810 may include a polygonal (e.g., quadrangular) upper surface. For example, the upper surface of the image sensor 2810 may be a surface facing the lens module 2400 in the optical-axis direction. For example, the upper surface of the image sensor 2810 may be a physical surface of the image sensor.

For example, the image sensor 2810 may include a quadrangular sensor surface 2811. As shown in FIG. 51A, the sensor surface 2811 may be located inwardly of the upper surface of the image sensor 2810.

The upper surface of the image sensor 2810 or the sensor surface 811 of the image sensor 2810 may be represented as an XY coordinate plane that includes an X-axis and a Y-axis. For example, the center 810A of the upper surface of the image sensor 2810 or the sensor surface 2811 of the image sensor 2810 may be the origin of the XY coordinate plane.

For example, the upper surface (or the sensor surface 2811) of the image sensor 2810 may include two sides 2033A and 2033B that face each other in the first horizontal direction (e.g., the X-axis direction) and two sides 2033C and 2033D that face each other in the second horizontal direction (e.g., the Y-axis direction).

For example, the first axis may correspond to one diagonal direction (e.g., a first diagonal direction) of the image sensor 2810, and the second axis may correspond to another diagonal direction (e.g., a second diagonal direction) of the image sensor 2810. For example, the first axis may be the one diagonal direction (e.g., the first diagonal direction) of the image sensor 2810, and the second axis may be the other diagonal direction (e.g., the second diagonal direction) of the image sensor 2810. For example, the first axis may be parallel to the one diagonal direction (e.g., the first diagonal direction) of the image sensor 2810, and the second axis may be parallel to the other diagonal direction (e.g., the second diagonal direction) of the image sensor 2810.

For example, the first axis may correspond to one diagonal direction (e.g., a first diagonal direction) of the upper surface of the image sensor 2810, and the second axis may correspond to another diagonal direction (e.g., a second diagonal direction) of the upper surface of the image sensor 2810.

For example, the first axis may be the one diagonal direction (e.g., the first diagonal direction) of the upper surface of the image sensor 2810, and the second axis may be the other diagonal direction (e.g., the second diagonal direction) of the upper surface of the image sensor 2810.

For example, the first axis may be parallel to the one diagonal direction (e.g., the first diagonal direction) of the upper surface of the image sensor 2810, and the second axis may be parallel to the other diagonal direction (e.g., the second diagonal direction) of the upper surface of the image sensor 2810.

For example, the first axis may be a first diagonal line of the upper surface or the sensor surface 811 of the image sensor 2810 or may be an axis parallel to the first diagonal line.

For example, the first diagonal line may be a straight line passing through two opposite ones 2034A and 2034B of four corners 2034A to 2034D of the upper surface or the sensor surface 2811 of the image sensor 2810.

For example, the second axis may be a second diagonal line of the upper surface or the sensor surface 2811 of the image sensor 2810 or may be an axis parallel to the second diagonal line. The second diagonal line may be a straight line passing through two opposite corners 2034C and 2034D of the four corners 2034A to 2034D of the upper surface or the sensor surface 2811 of the image sensor 2810. For example, the first diagonal line and the second diagonal line may be perpendicular to each other.

For example, the first axis may pass through the center 2810A of the upper surface (or the sensor surface 2811) of the image sensor 2810. For example, the second axis may pass through the center 2810A of the upper surface (or the sensor surface 2811) of the image sensor 2810.

The first axis and the second axis may intersect the X-axis and the Y-axis of the XY coordinate plane, respectively. For example, the first axis may be an axis that is tilted by a predetermined first angle relative to the X-axis (or the Y-axis). For example, the first angle may be 30 degrees to 60 degrees. For example, the first angle may be 45 degrees.

For example, the second axis may be an axis tilted by a predetermined second angle relative to the Y-axis (or the X-axis). For example, the second angle may be 30 degrees to 60 degrees. For example, the second angle may be 45 degrees. The first axis and the second axis may be perpendicular to each other.

When viewed in the optical-axis direction or from above, the first axis may pass through at least one of a second quadrant II and a fourth quadrant IV of the upper surface (or the sensor surface 2811) of the image sensor 2810. When viewed in the optical-axis direction or from above, the first axis may be located in the second quadrant II and the fourth quadrant IV of the upper surface (or the sensor surface 2811) of the image sensor 2810.

When viewed in the optical-axis direction or from above, the first axis may overlap at least one of the second quadrant II and the fourth quadrant IV of the upper surface (or the sensor surface 2811) of the image sensor 2810. For example, when viewed in the optical-axis direction or from above, the first axis may not overlap a first quadrant I and a third quadrant III of the upper surface (or the sensor surface 2811) of the image sensor 2810.

When viewed in the optical-axis direction or from above, the second axis may pass through at least one of the first quadrant I and the third quadrant III of the upper surface (or the sensor surface 2811) of the image sensor 2810. When viewed in the optical-axis direction or from above, the second axis may be located in the first quadrant I and the third quadrant III of the upper surface (or the sensor surface 2811) of the image sensor 2810. When viewed in the optical-axis direction or from above, the second axis may overlap at least one of the first quadrant I and the third quadrant III of the upper surface (or the sensor surface 2811) of the image sensor 2810. For example, when viewed in the optical-axis direction or from above, the second axis may not overlap the second quadrant II and the fourth quadrant IV of the upper surface (or the sensor surface 2811) of the image sensor 2810.

When viewed from above or in the optical-axis direction, the first axis may pass through the first boss 2065 (2065A and 2065B) of the tilting guide member 2060. When viewed from above or in the optical-axis direction, the first axis may overlap the first boss 2065 (2065A and 2065B) of the tilting guide member 2060.

For example, when viewed from above or in the optical-axis direction, the first axis may overlap at least a part of the first magnet unit 2310A. In another embodiment, when viewed from above or in the optical-axis direction, the first axis may not overlap the first magnet unit 2310A.

For example, when viewed from above or in the optical-axis direction, the first axis may overlap at least a part of the first coil unit 2230A. In another embodiment, when viewed from above or in the optical-axis direction, the first axis may not overlap at least a part of the first coil unit 2230A.

For example, when viewed from above or in the optical-axis direction, the first axis may overlap at least a part of the first sensor 2240A. In another embodiment, when viewed from above or in the optical-axis direction, the first axis may not overlap at least a part of the first sensor 2240A.

When viewed from above or in the optical-axis direction, the second axis may pass through the second boss 2066 (2066A and 2066B) of the tilting guide member 2060. When viewed from above or in the optical-axis direction, the second axis may overlap the second boss 2066 (2066A and 2066B) of the tilting guide member 2060.

For example, when viewed from above or in the optical-axis direction, the second axis may overlap at least a part of the second magnet unit 2310B. In another embodiment, when viewed from above or in the optical-axis direction, the second axis may not overlap the second magnet unit 2310B.

For example, when viewed from above or in the optical-axis direction, the second axis may overlap at least a part of the second coil unit 2230B. In another embodiment, when viewed from above or in the optical-axis direction, the second axis may not overlap the second coil unit 2230B.

For example, when viewed from above or in the optical-axis direction, the second axis may overlap at least a part of the second sensor 2240B. In another embodiment, when viewed from above or in the optical-axis direction, the second axis may not overlap the second sensor 2240B.

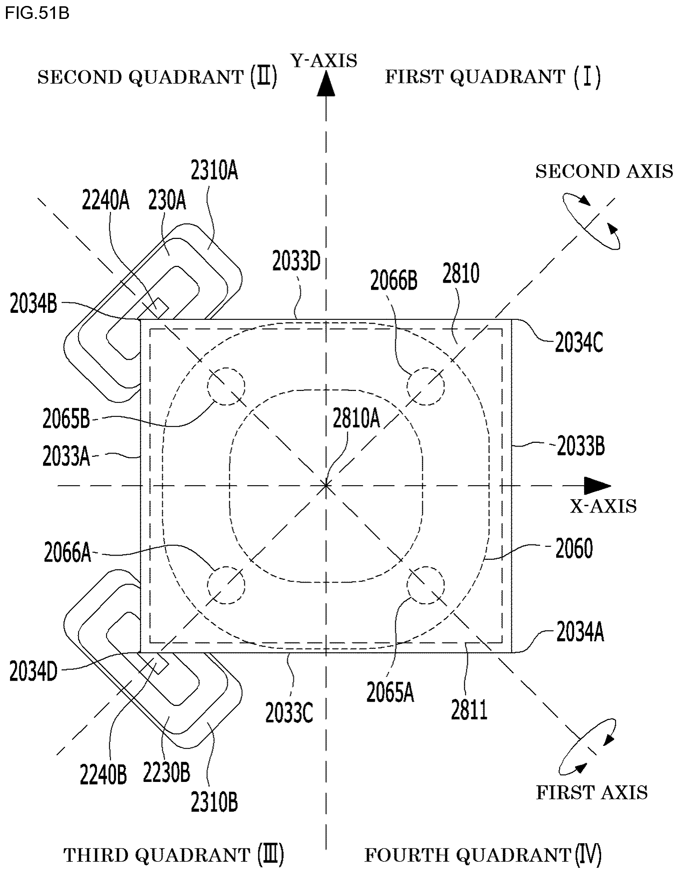

FIG. 51B shows a first axis and a second axis according to another embodiment.

Referring to FIG. 51B, when viewed from above or in the optical-axis direction, the first axis may be a straight line passing through the first bosses (e.g., 2065A and 2065B). When viewed from above or in the optical-axis direction, the second axis may overlap the second bosses (e.g., 2066A and 2066B).

When viewed from above or in the optical-axis direction, the first axis may be a straight line passing through the centers of the two first bosses 2065A and 2065B. For example, when viewed from above or in the optical-axis direction, the first axis may overlap the centers of the two first bosses 2065A and 2065B.

When viewed from above or in the optical-axis direction, the second axis may be a straight line passing through the centers of the two second bosses 2066A and 2066B. When viewed from above or in the optical-axis direction, the second axis may overlap the centers of the two second bosses 2066A and 2066B.

Alternatively, when viewed from above or in the optical-axis direction, the first axis of FIG. 51B may be a straight line passing through the highest points of the first bosses 2065A and 2065B. When viewed from above or in the optical-axis direction, the first axis may overlap the highest points of the first bosses 2065A and 2065B.

When viewed from above or in the optical-axis direction, the second axis may be a straight line passing through the lowest points of the second bosses 2066A and 2066B. When viewed from above or in the optical-axis direction, the second axis may overlap the lowest points of the second bosses 2066A and 2066B.

In FIG. 51B, when viewed from above or in the optical-axis direction, the first axis may not pass through the two corners 2034A and 2034B of the upper surface (or the sensor surface 2811) of the image sensor 2810. Alternatively, when viewed from above or in the optical-axis direction, the first axis may not overlap the two corners 2034A and 2034B of the upper surface (or the sensor surface 2811) of the image sensor 2810. Also, in FIG. 51B, when viewed from above or in the optical-axis direction, the first axis may not be parallel to the first diagonal line of the upper surface (or the sensor surface 2811) of the image sensor 2810.

In FIG. 51B, when viewed from above or in the optical-axis direction, the second axis may not pass through the two corners 2034C and 2034D of the upper surface (or the sensor surface 2811) of the image sensor 2810. In FIG. 51B, when viewed from above or in the optical-axis direction, the second axis may not overlap the two corners 2034C and 2034D of the upper surface (or the sensor surface 2811) of the image sensor 2810. In FIG. 51B, when viewed from above or in the optical-axis direction, the second axis may not be parallel to the second diagonal line of the upper surface (or the sensor surface 2811) of the image sensor 2810.

However, in another embodiment, when viewed from above or in the optical-axis direction in FIG. 51B, the first axis may overlap the two corners 2034A and 2034B of the upper surface (or the sensor surface 2811) of the image sensor 2810. In addition, when viewed from above or in the optical-axis direction, the first axis may be parallel to the first diagonal line of the upper surface (or the sensor surface 2811) of the image sensor 2810.

Also, in another embodiment, when viewed from above or in the optical-axis direction in FIG. 51B, the second axis may overlap the two corners 2034C and 2034D of the upper surface (or the sensor surface 2811) of the image sensor 2810. In addition, when viewed from above or in the optical-axis direction, the second axis may be parallel to the second diagonal line of the upper surface (or the sensor surface 2811) of the image sensor 2810.

Referring to FIGs. 39D, 51A, and 51B, when viewed from above, the OIS driving unit (or the second driving unit) may be disposed in two adjacent ones (e.g. II and III) of four quadrants I to IV of an XY coordinate plane of FIG. 39D, 51A, or 51B, and the AF driving unit (or the first driving unit) may be disposed in the other two ones (e.g., I and IV) of the four quadrants I to IV of the XY coordinate plane when viewed from above.

When viewed from above or in the optical-axis direction, the coil 2120 and the magnet 2130 may be disposed in at least one of the other two quadrants (e.g., I and IV). When viewed from above or optical-axis direction, the coil 2120 and the magnet 2130 may be disposed so as to overlap at least one of the other two quadrants (e.g., I and IV). For example, when viewed from above or in the optical-axis direction, the coil 2120 and the magnet 2130 may be disposed so as to overlap the other two quadrants (e.g., I and IV). For example, when viewed from above or in the optical-axis direction, the position sensor 2170 may be disposed in at least one of the other two quadrants (e.g., I and IV). When viewed from above or in the optical-axis direction, the position sensor 2170 may overlap at least one of the other two quadrants (e.g., I and IV).

When viewed from above side or in the optical-axis direction, the first magnet unit 2310A and the first coil unit 2230A may be located in the second quadrant II of the XY coordinate plane defined in FIGs. 51A and 51B. In addition, when viewed from above or in the optical-axis direction, the first sensor 2240A may be located in the second quadrant II of the XY coordinate plane.

When viewed from above or in the optical-axis direction, the first magnet unit 2310A, the first coil unit 2230A, and the first sensor 2240A may not overlap the first quadrant I and the fourth quadrant IV of the XY coordinate plane.

When viewed from above or in the optical-axis direction, the second magnet unit 2310B and the second coil unit 2230B may be located in the third quadrant III of the XY coordinate plane. When viewed from above or in the optical-axis direction, the second sensor 2240B may be located in the third quadrant III of the XY coordinate plane.

When viewed from above or in the optical-axis direction, the second magnet unit 2310B, the second coil unit 2230B, and the second sensor 2240B may not overlap the first quadrant I and the fourth quadrant IV of the XY coordinate plane.

The first and second magnet units 2310A and 2310B may not overlap the X-axis or the Y-axis of the XY coordinate plane as defined in FIGs. 51A and 51B. The coil units 2230A and 2230B may not overlap the X-axis or the Y-axis of the XY coordinate plane. In addition, the first and second sensors 2240A and 2240B may not overlap the X-axis or the Y-axis of the XY coordinate plane.

Diagonal driving of the OIS moving units may mean tilting or rotating the OIS moving units 2100 about the first or the second axis in the XY coordinate plane of FIGs. 51A and 51B for hand-tremor compensation.

A description of FIGs. 51A and 51B may be applied or analogically applied to the embodiment including the first ball members 2065A1 and 2065B1 and the second ball members 2066A1 and 2066B1 of FIGs. 44C and 44D.

In diagonal driving of FIGs. 51A and 51B, the first bosses 2065A and 2065B may be disposed spaced apart from each other in a direction parallel to the first diagonal line, and the second bosses 2066A and 2066B may be disposed spaced apart from each other in a direction parallel to the second diagonal line.

In a comparative example, the first bosses of the tilting guide member may be disposed spaced apart from each other in the first horizontal direction (the X-axis direction) (or the second horizontal direction (the Y-axis direction)), and the second bosses of the tilting guide member may be disposed spaced apart from each other in the second horizontal direction (the Y-axis direction) (or the first horizontal direction (the X-axis direction)). In the comparative example, the OIS moving unit may be tilted relative to the X-axis or the Y-axis, which may be expressed as "X-axis or Y-axis driving".

Under the condition that the tilting guide members of the embodiment and the comparative example have the same size, the distance between the first bosses 2065A and 2065B (or the second bosses 2066A and 2066B) according to the embodiment of FIGs. 51A and 51B may be designed so as to be greater than the distance between the first bosses (or the second bosses) of the comparative example.

If the distance between the bosses 2065A and 2065B or 2066A and 2066B of the tilting guide member 2060 is large, the support distance (or area) for supporting the OIS moving unit may be increased, which may allow for stable support of the OIS moving unit and stable OIS operation. This may be applied or analogically applied to the embodiment including the first ball members 2065A1 and 2065B1 and the second ball members 2066A1 and 2066B1 of FIGs. 44C and 44D.

In addition, the camera device 200 according to the embodiment may be included in an optical instrument for the purpose of forming an image of an object present in a space using reflection, refraction, absorption, interference, and diffraction, which are characteristics of light, for the purpose of increasing visibility, for the purpose of recording and reproduction of an image using a lens, or for the purpose of optical measurement or image propagation or transmission. For example, the optical instrument according to the embodiment may be a cellular phone, a mobile phone, a smartphone, a portable smart device, a digital camera, a laptop computer, a digital broadcasting terminal, a personal digital assistant (PDA), a portable multimedia player (PMP), a navigation device, etc., without being limited thereto, and may also be any of devices for capturing images or pictures.

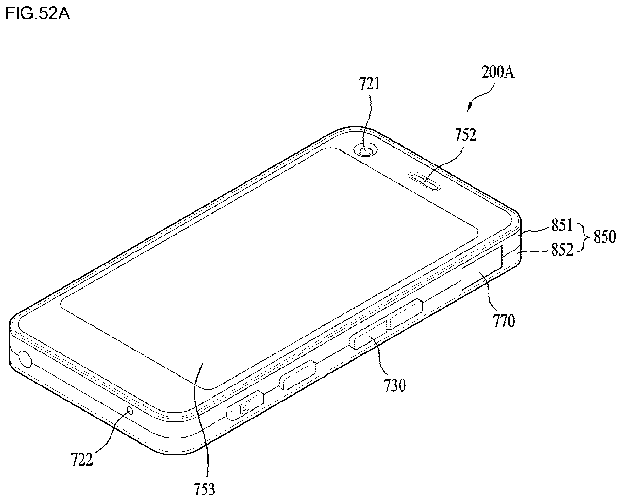

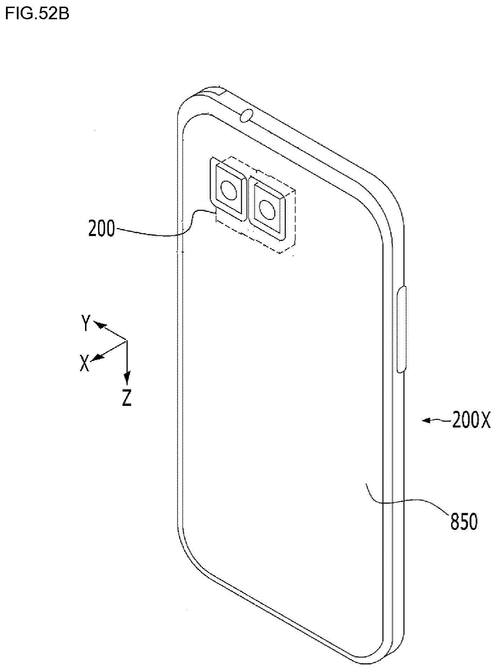

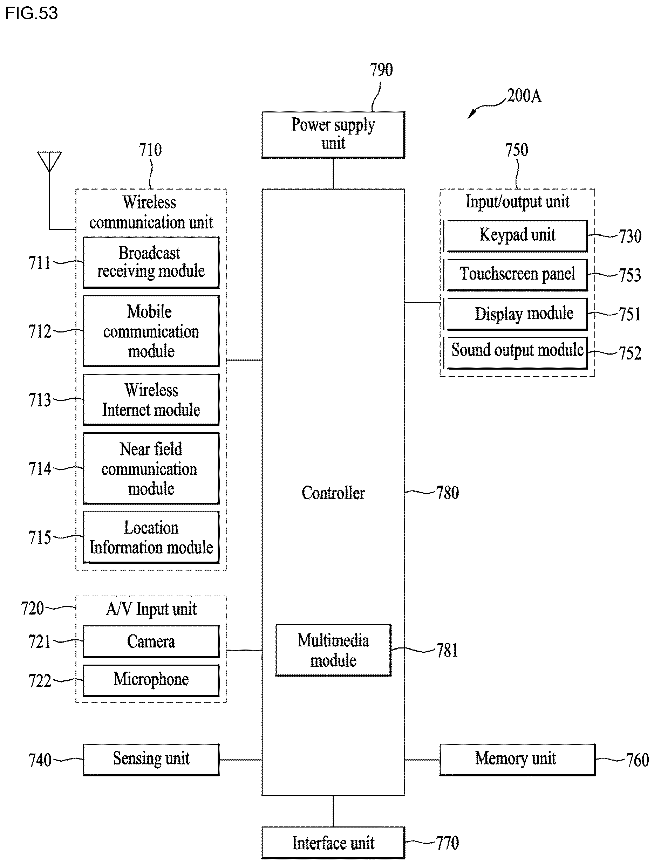

FIG. 52A is a perspective view of an optical instrument 200A according to an embodiment, FIG. 52B is a perspective view of an optical instrument 200X according to another embodiment, and FIG. 53 is a block diagram of the optical instrument 200A shown in FIGs. 52A and 52B.

For example, the embodiment of FIG. 52A may include a front camera in which a lens module 400 of a camera module 200 is disposed so as to face the front of a body 850, and the embodiment of FIG. 52B may include a rear camera in which a lens module 400 of a camera module 200 is disposed so as to face the rear of a body 850 of the optical instrument 200A. FIG. 52B shows an example in which two rear cameras are disposed, but in another embodiment, one or more rear cameras may be disposed.

In another embodiment, the camera module 200 may be used in both the front camera and the rear camera.

Referring to FIGs. 52A, 52B, and 53, the optical instrument 200A (hereinafter referred to as a portable "terminal") may include a body 850, a wireless communication unit 710, an A/V input unit 720, a sensing unit 740, an input/output unit 750, a memory unit 760, an interface unit 770, a controller 780, and a power supply unit 790.

The body 850 may have a bar shape, without being limited thereto, and may be any of various types such as, for example, a slide type, a folder type, a swing type, or a swivel type, in which two or more sub-bodies are coupled so as to be movable relative to each other.

The wireless communication unit 710 may include one or more modules, which enable wireless communication between the terminal 200A and a wireless communication system or between the terminal 200A and a network in which the terminal 200A is located. For example, the wireless communication unit 710 may include a broadcast receiving module 711, a mobile communication module 712, a wireless Internet module 713, a nearfield communication module 714, and a location information module 715.

The audio/video (A/V) input unit 720 serves to input audio signals or video signals, and may include a camera 721 and a microphone 722.

The camera 721 may include the camera device 200 according to the embodiment.

The sensing unit 740 may sense the current state of the terminal 200A, such as the open or closed state of the terminal 200A, the position of the terminal 200A, the presence or absence of a user's touch, the orientation of the terminal 200A, or the acceleration/deceleration of the terminal 200A, and may generate a sensing signal to control the operation of the terminal 200A. For example, when the terminal 200A is a slide-type phone, whether the slide-type phone is open or closed may be detected. In addition, the sensor serves to sense whether power is supplied from the power supply unit 790 or whether the interface unit 770 is coupled to an external device.

The input/output unit 750 serves to generate visual, audible, or tactile input or output. The input/output unit 750 may generate input data to control the operation of the terminal 200A, and may display information processed in the terminal 200A.

The input/output unit 750 may include a keypad unit 730, a display module 751, a sound output module 752, and a touchscreen panel 753. The keypad unit 730 may generate input data in response to input to a keypad.

The display module 751 may include a plurality of pixels, the color of which varies in response to electrical signals. For example, the display module 751 may include at least one of a liquid crystal display, a thin-film transistor liquid crystal display, an organic light-emitting diode, a flexible display, or a 3D display.

The sound output module 752 may output audio data received from the wireless communication unit 710 in a call-signal reception mode, a call mode, a recording mode, a voice recognition mode, or a broadcast reception mode, or may output audio data stored in the memory unit 760.

The touchscreen panel 753 may convert variation in capacitance, caused by a user's touch on a specific region of a touchscreen, into electrical input signals.

The memory unit 760 may store programs for processing and control of the controller 780, and may temporarily store input/output data (e.g., a phone book, messages, audio, still images, pictures, and moving images). For example, the memory unit 760 may store images captured by the camera 721, for example, pictures or moving images.

The interface unit 770 serves as a passage for connection between the terminal 200A and an external device. The interface unit 770 may receive data or power from the external device, and may transmit the same to respective components in the terminal 200A, or may transmit data in the terminal 200A to the external device. For example, the interface unit 770 may include a wired/wireless headset port, an external charger port, a wired/wireless data port, a memory card port, a port for connection of a device having an identification module, an audio input/output (I/O) port, a video input/output (I/O) port, and an earphone port.

The controller 780 may control the overall operation of the terminal 200A. For example, the controller 780 may perform control and processing related to voice calls, data communication, and video calls.

The controller 780 may include a multimedia module 781 for multimedia playback. The multimedia module 781 may be provided in the controller 780, or may be provided separately from the controller 780.

The controller 780 may perform pattern recognition processing, by which writing or drawing input to the touchscreen is perceived as characters or images.

The power supply unit 790 may supply power required to operate the respective components upon receiving external power or internal power under the control of the controller 780.

The features, structures, effects, and the like described above in the embodiments are included in at least one embodiment of the present disclosure, but are not necessarily limited to only one embodiment. Furthermore, the features, structures, effects, and the like exemplified in the respective embodiments may be combined with other embodiments or modified by those skilled in the art. Therefore, content related to such combinations and modifications should be construed as falling within the scope of the present disclosure.

### [Industrial Applicability]

Embodiments may be used in a camera device 1200 capable of obtaining 100% image resolution without image distortion and performing hand-tremor compensation or shake compensation at wide angles and an optical instrument including the same.

## Claims

1. A camera device comprising:
a stationary unit;
a moving unit comprising an image sensor and a lens disposed on the image sensor;
a tilting guide member disposed between the stationary unit and the moving unit;
a first magnetic material disposed on the stationary unit; and
a second magnetic material disposed on the moving unit, repulsive force acting between the first magnetic material and the second magnetic material, wherein
the tilting guide member is brought into tight contact with the moving unit and the stationary unit by the repulsive force.

2. The camera device according to claim 1, wherein the moving unit comprises:
a moving module comprising the lens and the image sensor; and
a support member coupled to the moving module.

3. The camera device according to claim 1, comprising a driving unit configured to tilt the moving module relative to a first axis intersecting an optical-axis direction or a second axis intersecting the optical-axis direction and the first axis.

4. The camera device according to claim 2, wherein at least a part of the support member is coupled to the moving module through the stationary unit.

5. The camera device according to claim 1, wherein
each of the first magnetic material and the second magnetic material is a magnet comprising an N pole and an S pole, and
the first magnetic material and the second magnetic material are disposed such that like polarities thereof face each other in the optical-axis direction.

6. The camera device according to claim 1, wherein
the tilting guide member comprises a through-hole, and
at least a part of the first magnetic material is disposed in the through-hole of the tilting guide member.

7. The camera device according to claim 6, wherein
the stationary unit comprises a protrusion, at least part of the protrusion being disposed in the through-hole of the tilting guide member, and
the first magnetic material is disposed in the protrusion of the stationary unit.

8. The camera device according to claim 1, wherein
the moving unit is disposed above the stationary unit, and
the support member is disposed under the stationary unit.

9. The camera device according to claim 3, wherein the driving unit comprises a coil disposed on the moving unit and a magnet disposed on the stationary unit.

10. The camera device according to claim 2, wherein
the support member comprises a body disposed on the stationary unit and an extension portion extending from the body, the extension portion being coupled to the moving module through the stationary unit, and
the second magnetic material is disposed on the body.
